(19) Europäisches Patentamt
European Patent Office
Office européen des brevets

(11) EP 0 467 260 B1

(12) **EUROPEAN PATENT SPECIFICATION**

(45) Date of publication and mention of the grant of the patent:
**16.10.1996 Bulletin 1996/42**

(51) Int Cl.[6]: **C09K 19/34**, C09K 19/46, C09K 19/42, C09K 19/44, G02F 1/1337

(21) Application number: **91111755.4**

(22) Date of filing: **15.07.1991**

(54) **Mesomorphic compound and liquid crystal composition containing same for use in liquid crystal device and display apparatus**

Mesomorphe Verbindung, deren enthaltende Flüssigkristallzusammensetzung zur Verwendung in Flüssigkristallvorrichtung und Anzeigevorrichtung

Composé mésomorphe et composition liquide cristalline le contenant, utilisation dans un dispositif à cristaux liquides et dispositif d'affichage

(84) Designated Contracting States:
**AT BE CH DE DK ES FR GB GR IT LI LU NL SE**

(30) Priority: **16.07.1990 JP 188490/90**
**27.11.1990 JP 326454/90**

(43) Date of publication of application:
**22.01.1992 Bulletin 1992/04**

(73) Proprietor: **CANON KABUSHIKI KAISHA**
**Tokyo (JP)**

(72) Inventors:
- **Yamada, Yoko, c/o Canon Kabushiki Kaisha Ohta-ku, Tokyo (JP)**
- **Takiguchi, Takao c/o Canon Kabushiki Kaisha Ohta-ku, Tokyo (JP)**
- **Iwaki, Takashi, c/o Canon Kabushiki Kaisha Ohta-ku, Tokyo (JP)**
- **Togano, Takeshi, c/o Canon Kabushiki Kaisha Ohta-ku, Tokyo (JP)**
- **Nakamura, Shinichi, c/o Canon Kabushiki Kaisha Ohta-ku, Tokyo (JP)**

(74) Representative: **Bühling, Gerhard, Dipl.-Chem.**
**Patentanwaltsbüro**
**Tiedtke-Bühling-Kinne & Partner**
**Bavariaring 4**
**80336 München (DE)**

(56) References cited:
**EP-A- 0 364 923**

- **MOLECULAR CRYSTALS AND LIQUID CRYSTALS, LETTERS - SERIES 2. vol. 7, no. 3, July 1990, LONDON GB pages 75 - 77; J. L. BUTCHER, J. D. BUNNING ET AL.: '"unusual smectic polymorphism of 3-fluoro-4-octyloxypheny l-4-(5-octyl-2-thienyl)benzoate"'**
- **PATENT ABSTRACTS OF JAPAN vol. 15, no. 1 (C-793)7 January 1991**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 467 260 B1

**Description**

BACKGROUND OF THE INVENTION

Field of the Invention

The present invention relates to a novel mesomorphic compound, a liquid crystal composition containing the compound. The present invention also relates to a liquid crystal device using the composition and a display apparatus. In particular, the present invention relates to a liquid crystal which provides a liquid crystal composition with improved responsiveness to an electric field, as well as to a liquid crystal device for use in a liquid crystal display apparatus, a liquid crystal-optical shutter, etc.

Related Background Art

Hitherto, liquid crystal materials have been used in various fields as an electro-optical device. Most liquid crystal devices which have been put into practical use have employed twisted nematic (TN) type liquid crystals, as shown in "Voltage-Dependent optical Activity of a Twisted Nematic Liquid Crystal" by M. Schadt and W. Helfrich "Applied Physics Letters" Vol. 18, No. 4 (Feb. 15, 1971) pp. 127-128.

These TN devices are based on the dielectric alignment effect of a liquid crystal in which the average molecular axis direction of the liquid crystal molecule is directed to a specific direction in response to an applied electric field because of its dielectric anisotropy. However, the accepted lower limit of response speed of such TN materials is on the order of milli-seconds, which is too slow for many uses. Additionally, while a simple matrix system of driving is considered to be the most promising for use as a large-area flat display considering such cost, productivity, etc. The matrix system uses an electrode arrangement for multiplex driving wherein an address signal is sequentially, periodically and selectively applied to scanning electrodes in synchronism with prescribed data signals which are selectively applied in parallel to signal electrodes the address signal.

However, when the TN liquid crystal is used with a matrix driving system, an electric field is applied to certain regions called "half-selected points", i.e., those regions where a scanning electrode is selected and signal electrodes are not selected, or regions where a scanning electrode is not selected and a signal electrode is selected. TN display devices operate normally when the difference between a voltage applied to the selected points versus a voltage applied to the half-selected points is sufficiently large, and the threshold voltage level required for aligning liquid crystal molecules perpendicularly to an electric field is between the values of the voltages of the selected and half selected pants. However, as the number (N) of scanning lines increases, a time (duty ratio) during which an effective electric field is applied to one selected point decreases with a ratio of 1/N when an image area (corresponding to one frame) is scanned. Accordingly, as the number of scanning lines increases, the voltage difference of an effective value applied to selected and non-selected points when scanning is effected repeatedly decreases. As a result, drawbacks such as lowered image contrast or occurrence of interference (or crosstalk) occur. These phenomena are regarded as essentially unavoidable when driving liquid crystals which are not bistabile, i.e. liquid crystal molecules which are horizontally or vertically oriented with respect to the electrode surface only when an electric field is effectively applied using a time storage effect. To overcome these drawbacks, the voltage averaging and multiple matrix methods, etc. have been proposed. However, since no method is sufficient to overcome the duty ratio problem, development of display devices with large image areas or high packaging densities is delayed because it is difficult to sufficiently increase the number of scanning lines.

To overcome drawbacks with such prior art liquid crystal devices, display devices using liquid crystal materials having bistability has been proposed by Clark and Lagerwall (e.g. Japanese Laid-Open Patent Appln. No. 56-107216, U.S. Patent No. 4,367,924, etc.). In this instance, as the liquid crystals having bistability, ferroelectric liquid crystals (FLC) having chiral smectic C (SmC*) or smectic H ($SmH^*$) phase are generally used. These liquid crystals are bistable, e.g., exhibit first and second stable states with respect to an electric filed applied thereto. Accordingly, as different from optical modulation devices in which TN liquid crystals are used, the bistable FLC molecules are oriented to first and second optically stable states with respect to one and the other electric field vectors and retain the resultant state even in the absence of an electric field.

In addition to the above-described characteristic of bistability, FLC also exhibit an excellent high-speed responsiveness because the spontaneous polarization of the FLC and an applied electric field directly interact with each other to induce transition of orientation states. The resultant response speed is faster than the response speed due to the interaction between dielectric anisotropy and an electric field of TN materials by 3 to 4 magnitudes.

Thus, a ferroelectric liquid crystal potentially has excellent characteristics which make possible essential improvements to many of the problems with conventional TN devices. Particularly, the application to a high-speed optical shutter and a display of high density and a large picture is expected. For this reason, there has been made extensive

research with respect to liquid crystal materials showing ferroelectricity. However, ferroelectric liquid crystal materials developed heretofore may not sufficiently satisfy necessary characteristics required for a liquid crystal device including low-temperature operation characteristic, high-speed responsiveness, etc. For instance, among response time ($\tau$), magnitude of spontaneous polarization (Ps) and viscosity $\eta$, the following relationship exists: $\tau=\eta/(Ps\cdot E)$, where E is an applied voltage. Accordingly, a high response speed can be obtained by (a) increasing the spontaneous polarization (b) lowering the viscosity or (c) increasing the applied voltage. However, the driving voltage has a maximum acceptable upper limit since it is driven with an IC, etc., and actually should desirably be as low as possible. Accordingly, it is necessary either to lower the viscosity or increase the spontaneous polarization.

Generally, a ferroelectric chiral smectic liquid crystal having a large spontaneous polarization provides a large internal electric field in a cell and is liable to pose many constraints on the device construction of the device. Further, an excessively large spontaneous polarization is liable to accompany an increase in viscosity, so that a noticeable increase in response speed may not necessarily be attained as a result.

Further, since the actual operation temperature of a display device is generally from about 5 - 40°C, over which the response speed changes by a factor of about 20, the change in response speed actually exceeds the range controllable by driving voltage and frequency.

As described hereinabove, commercialization of a FLC device requires a liquid crystal composition assuming a chiral smectic phase which has not only a large spontaneous polarization but also a low viscosity, a high-speed responsiveness and a minimal temperature-dependence of response speed.

## Summary of The Invention

An object of the present invention is to provide a mesomorphic compound and a liquid crystal composition, particularly a chiral smectic liquid crystal composition, containing the mesomorphic compound for providing a ferroelectric liquid crystal device and apparatus having a high response speed with a smaller temperature-dependence of the response speed.

According to the present invention, there is provided a mesomorphic compound represented by the following formula (I):

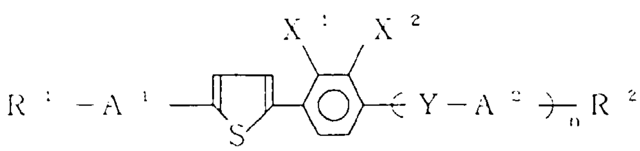 (I)

wherein $R^1$ and $R^2$ independently denote a straight chain or branch chain alkyl group having 1-18 carbon atoms, wherein $-CH_2-$ in the alkyl group may be substituted by

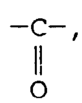, −O−, 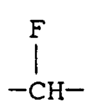, 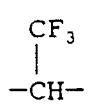, 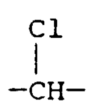, 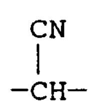 or 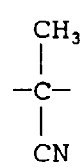

on the condition that hetero atoms are not adjacent each other, $R^2$ may be replaced by hydrogen atom, halogen atom, cyano group or trifluoromethyl group; n is 0 or 1, with the provisos that (1) $A^1$ denotes a single bond,

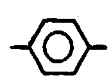 , 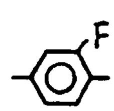 or 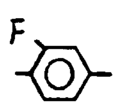

when n is 0, and (2) $A^1$ denotes a single bond when n is 1: $A^2$ denotes any one of

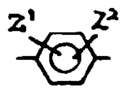, 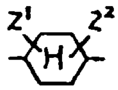, 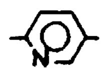, 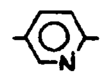 and 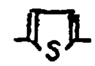

; $X^1$, $X^2$, $Z^1$ and $Z^2$ denotes independently any one of hydrogen atom, cyano group and trifluoromethyl group (with the proviso that $X^1$, $X^2$, $Z^1$ and $Z^2$ may not all be hydrogen atoms); Y denotes any one of

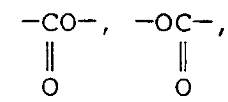

$-CH_2O-$, $-OCH_2-$ and a single bond.

The present invention further provides a liquid crystal composition comprising at least one of the mesomorphic compound represented by the above general formula (I) and preferably another mesomorphic compound.

Further according to the present invention, there is provided a liquid crystal device comprising a pair of electrode substrates having the liquid crystal composition described above disposed between the electrode substrates and a display apparatus comprising the liquid crystal device.

These and other objects, features and advantages of the present invention will become more apparent upon consideration of the following description of the preferred embodiments of the present invention taken in conjunction with the accompanying drawings.

Brief Description of the Drawings

Figure 1 is a sectional view of a liquid crystal display device using a liquid crystal composition of the present invention; and

Figures 2 and 3 are perspective views of a device cell embodiment for illustrating the operation of the present invention.

Figure 4 is a block diagram showing a display apparatus comprising a liquid crystal device utilizing the liquid crystal cell of Figure 1; and

Figure 5 is a time chart of image data communication showing time correlation between signal transfer and driving with respect to the liquid crystal display apparatus of Figure 4 and a graphic controller.

Detailed Description of The Preferred Embodiments

We have found that the liquid crystal composition of the present invention provides a liquid crystal device with improved properties such as high speed responsiveness and decreased temperature-dependence of response speed to provide a display apparatus having a good display characteristic.

The present invention is described in detail as follows.

In the mesomorphic compound represented by the general formula (I), $R^1$ and $R^2$ independently denote a straight or branched chain alkyl group having 1-18 and preferably 2-16 carbon atoms.

At least one of $-CH_2-$ in the alkyl group may be substituted by

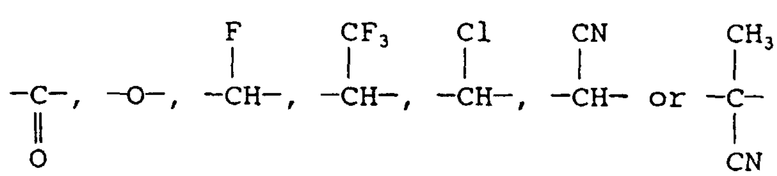

on the condition that hetero atoms are not adjacent each other.

Preferred examples of $R^1$ and $R^2$ may include the following groups (i) to (v).

(i)

$$-Y(CH_2)_nCH_3$$

wherein Y denotes any one of a single bond,

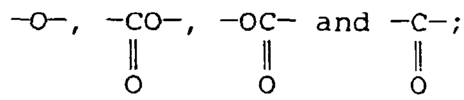

n is an integer of 0-17, preferably 4-16;

(ii)

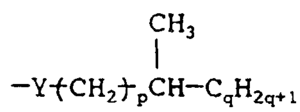

wherein Y denotes any one of a single bond,

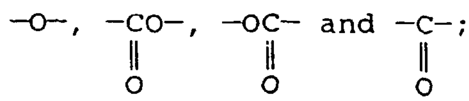

p is an integer of 0-7; q is an integer of 1-10 (optically active or inactive);

(iii)

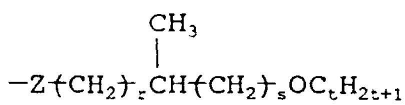

wherein Z denotes any one of

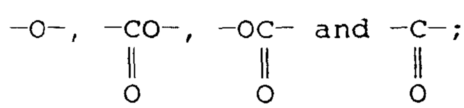

r is an integer of 0-7; s is an integer of 0 or 1; t is an integer of 1-14 (optically active or inactive);

(iv)

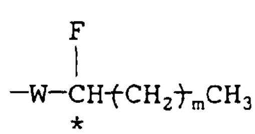

wherein W denotes any one of

$-OCH_2-$, 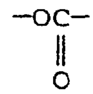 and 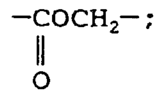

m is an integer of 0-14; and

(v)

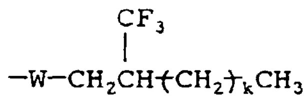

wherein w denotes any one of

$-OCH_2-$, 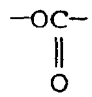 and 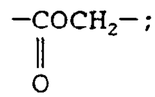

k is an integer of 0-12.

Preferred examples of $R^2$ may include hydrogen atom, halogen atom, cyano group and trifluoromethyl group, more preferably hydrogen atom, fluorine atom, cyano group and trifluoromethyl group, n is 0 or 1, with the provisos that (1) $A^1$ denotes a single bond,

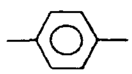 , 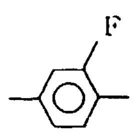 or 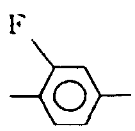

when n is 0 and (2) $A^1$ denotes a single bond when n is 1. Thus, the mesomorphic compound represented by the general formula (I) has a structure with 2 or 3 cyclic groups.

$A^2$ denotes

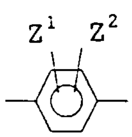 , 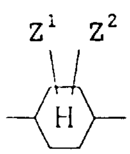 , 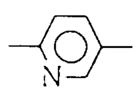 , 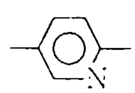 ,

or

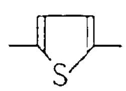

; $X^1$, $X^2$, $Z^1$ and $Z^2$ independently denotes hydrogen atom, halogen atom, cyano group and trifluoromethyl group, preferably hydrogen atom, fluorine atom, cyano group and trifluoromethyl group, more preferably hydrogen atom or fluorine atom (with the proviso that $X^1$, $X^2$, $Z^1$ and $Z^2$ cannot all be hydrogen atoms);

Y denotes

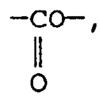, 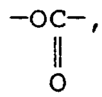,

$-CH_2O-$, $-OCH_2-$
or a single bond.

Further preferred examples of the compound represented by the general formula (I) may include those denoted by the following formulas (Ia) to (Id).

(Ia) 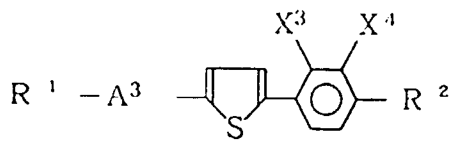

(Ib) 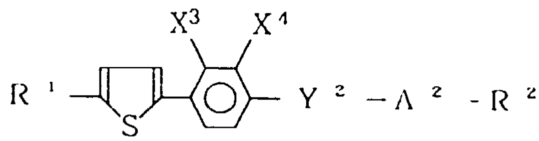

(Ic) 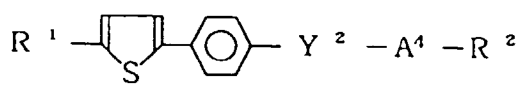

(Id) 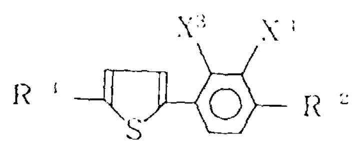

wherein $R^1$, $R^2$ and $A^2$ are the same as defined above; $A^3$ denotes

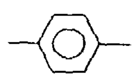, 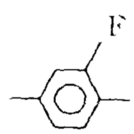 or 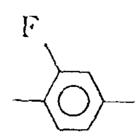,

; $A^4$ denotes

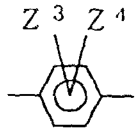 or 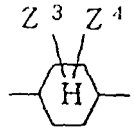

; $X^3$ and $X^4$ denote fluorine atom, cyano group, trifluoromethyl group or hydrogen atom, preferably fluorine atom (with the proviso that both $X^3$ and $X^4$ are not hydrogen atoms);
$Y^2$ denotes

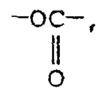

-$OCH_2$-
or a single bond, preferably

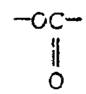

or a single bond; $Z^3$ and $Z^4$ denote fluorine atom, cyano group, trifluoromethyl group or hydrogen atom, preferably fluorine atom, trifluoromethyl group or hydrogen atom, with the proviso that both $Z^3$ and $Z^4$ are not hydrogen atoms.

The mesomorphic compound represented by the general formula (I) may be synthesized through the following reaction scheme.

(i) In the case where n is 0.

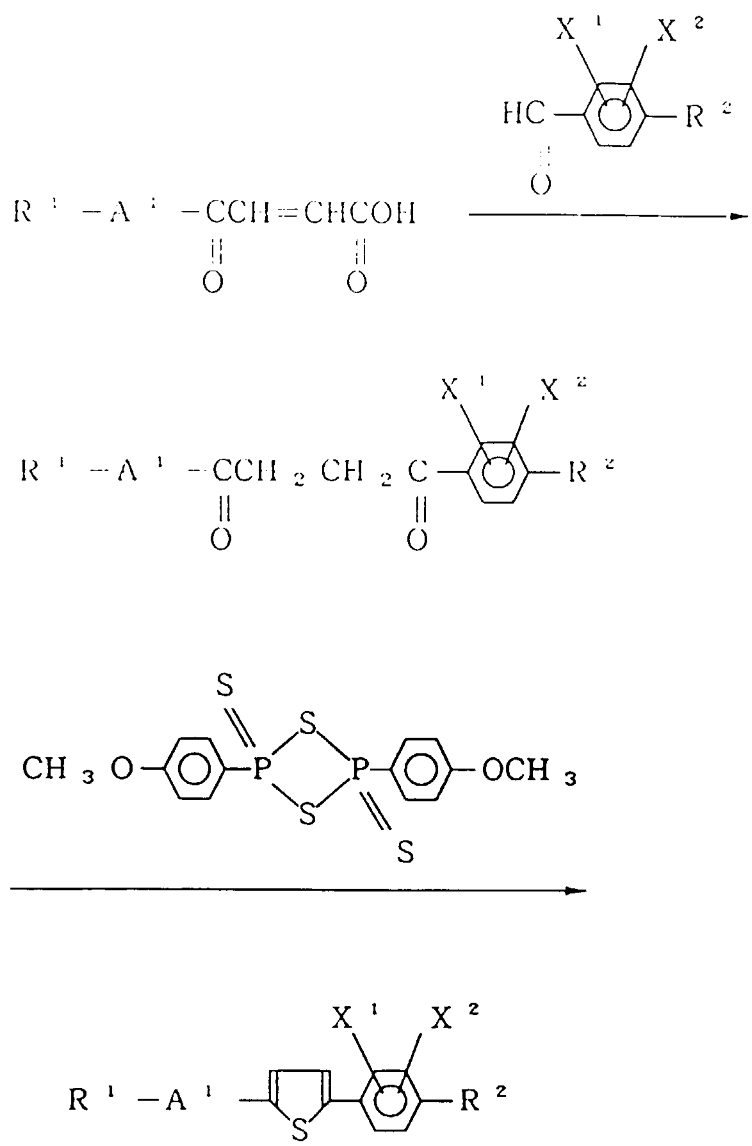

(ii) (a) In the case where n is 1 and Y is not a single bond:

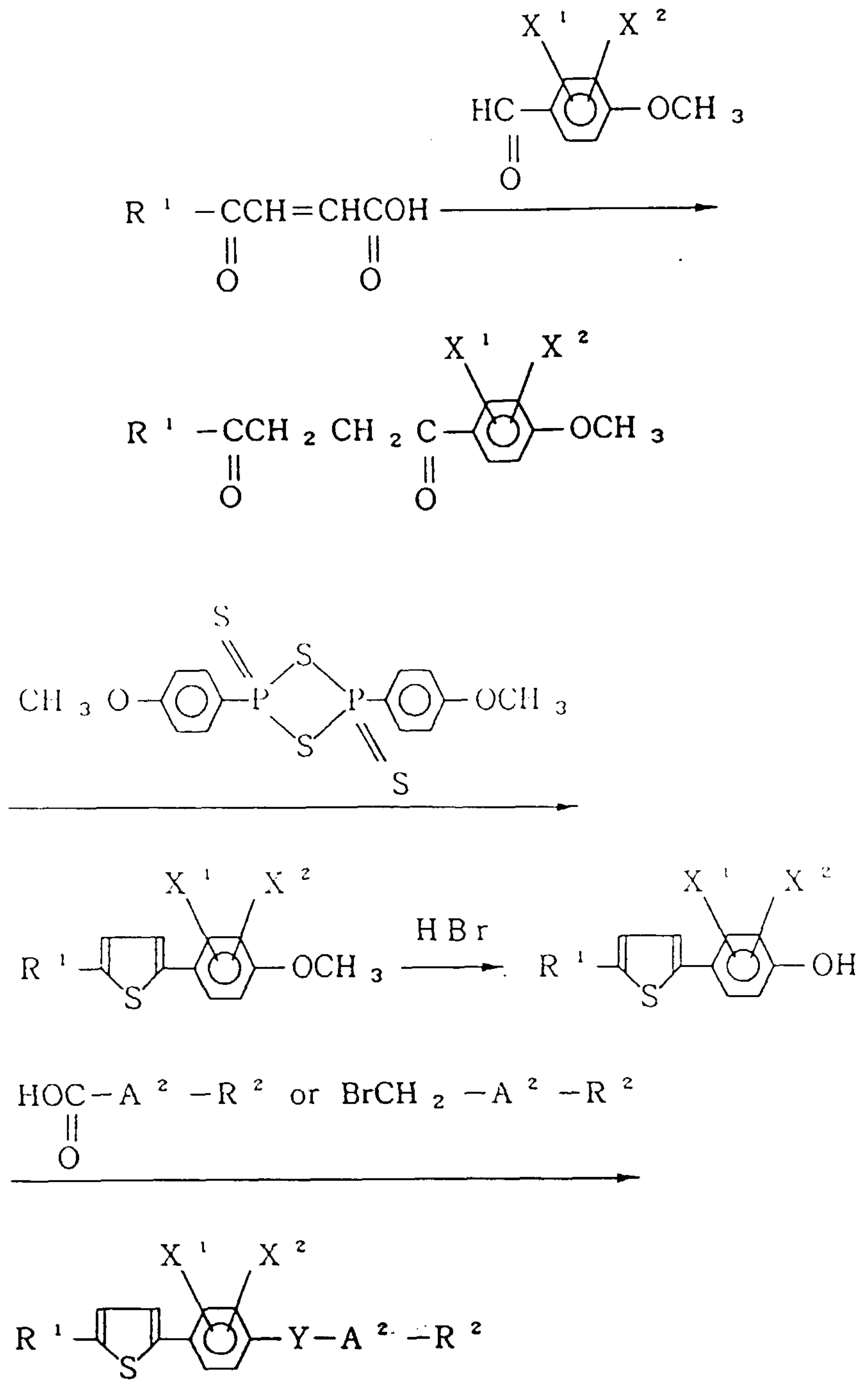


(ii) (b) In the case where n is 1 and Y is a single bond:

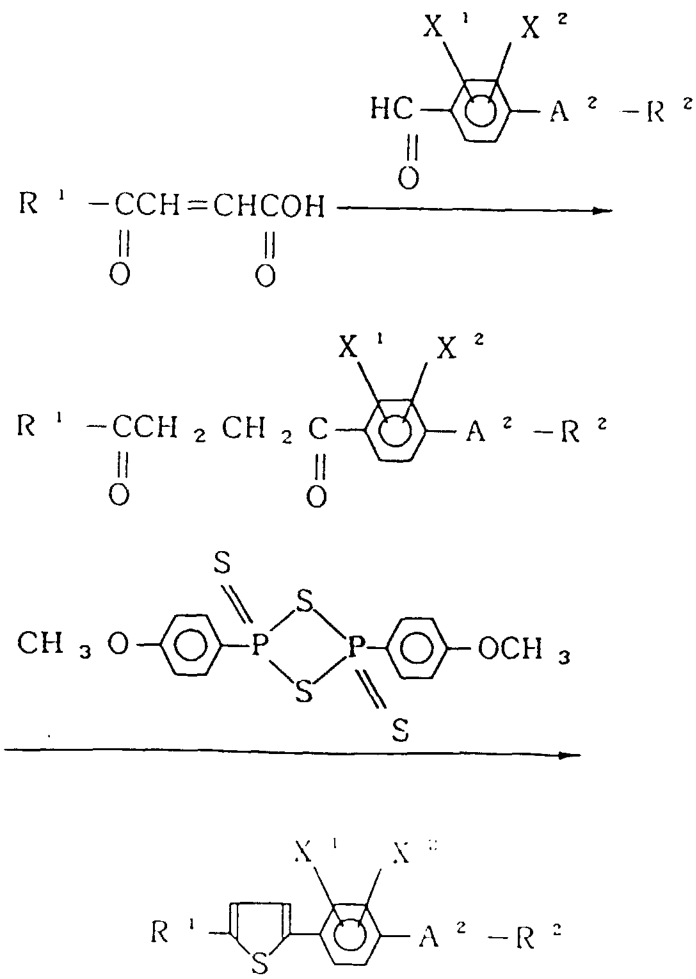

wherein $R^1$, $R^2$, $A^1$, $A^2$, $X^1$, $X^2$ and Y are the same as defined above; in a case where a group $-CH_2CH_2-$ adjacent to a cyclic group in $R^1$ or $R^2$ is replaced with

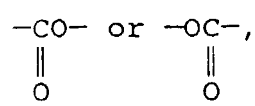

or

or a group $-CH_2-$ adjacent to a cyclic group is replaced with -O-, it is possible to obtain an objective by attaching hydrogen group or carboxylic group connected to a cyclic group with a detachable protective group, followed by eliminating the protective group after ring closure is effected to form a thiophene ring.

Specific examples of the mesomorphic compounds represented by the general formula (I) may include those shown by the following structural formulae.

(I -1)

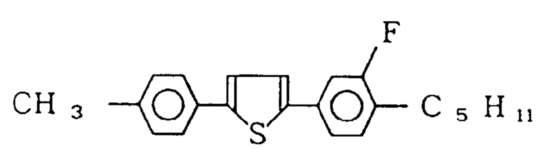

(I -2)

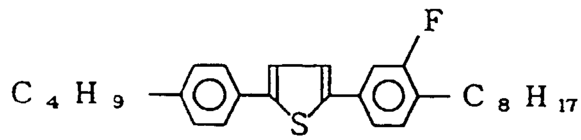

(I -3)

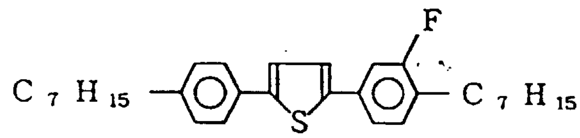

(I -4)

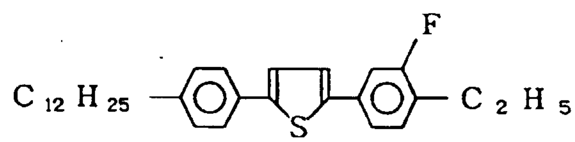

(I -5)

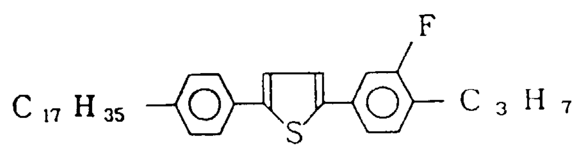

(I -6)

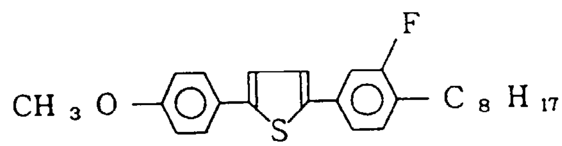

(I -7)

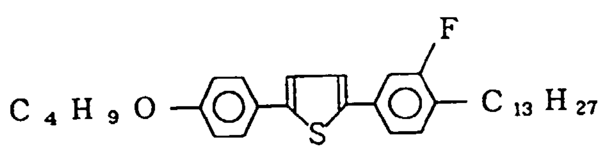

(I -8)

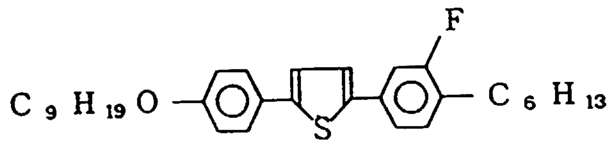

(I -9)

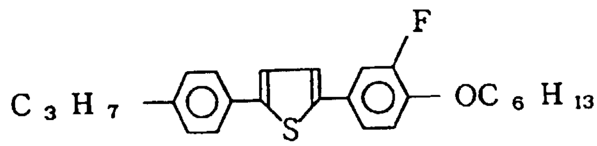

(I -10)

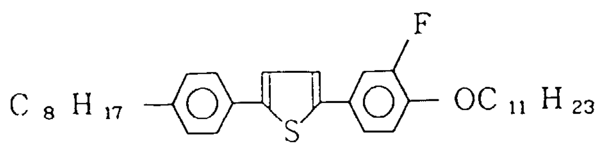

(I -11)

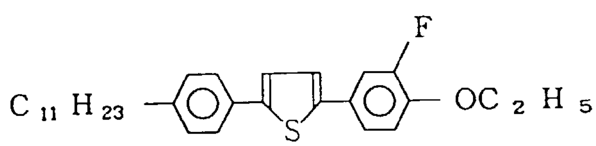

(I -12)

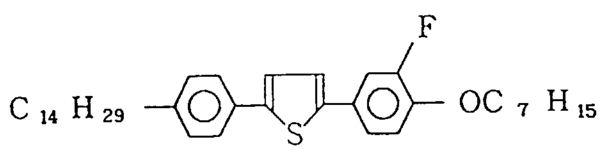

(I -13)

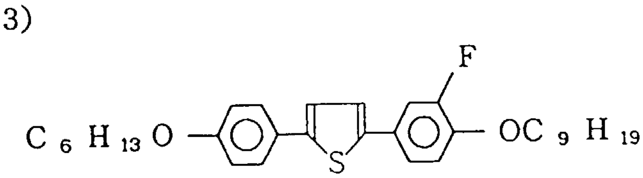

(I -14)

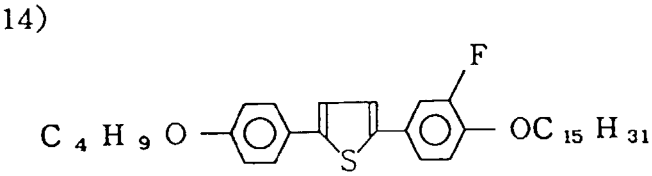

(I -15)

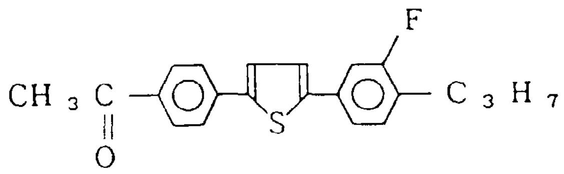

(I -16)

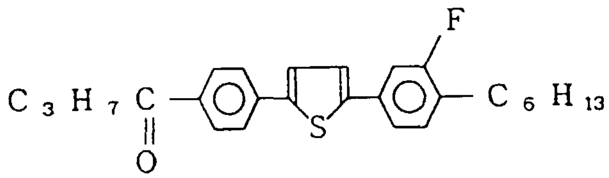

(I -17)

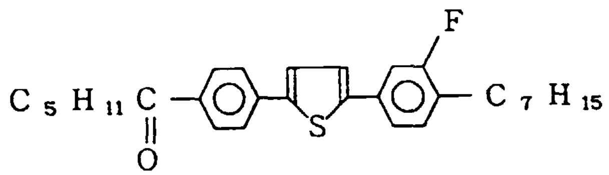

(I -18)

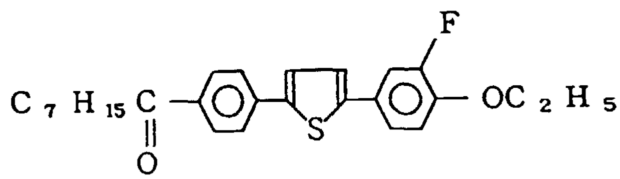

(I -19)

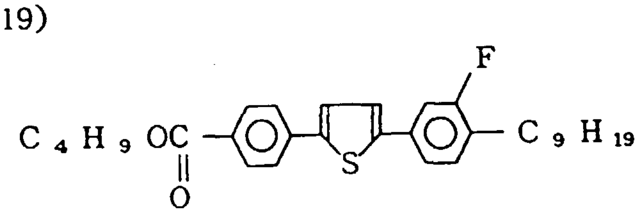

(I -20)

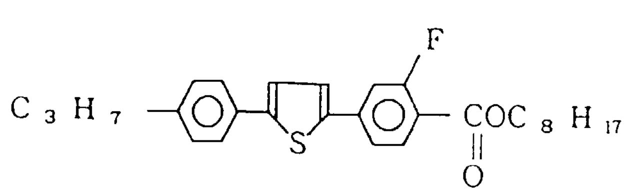

(I -21)

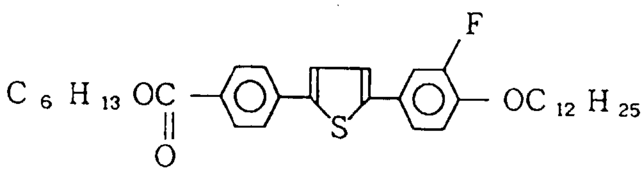

(I -22)

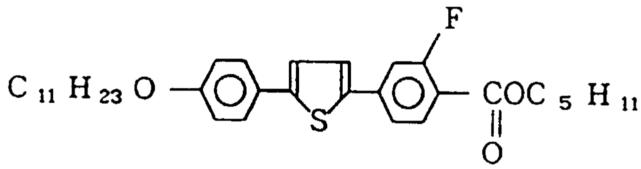

(I -23)

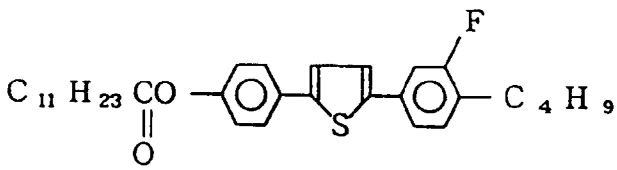

(I -24)

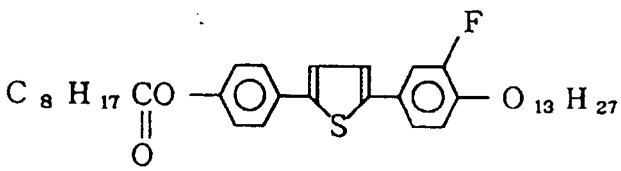

(I -25)

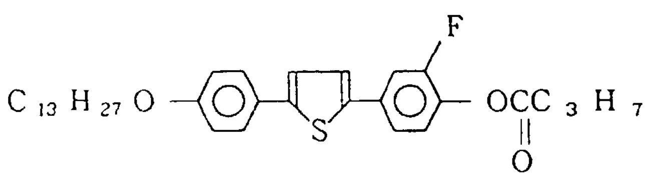

(I -26)

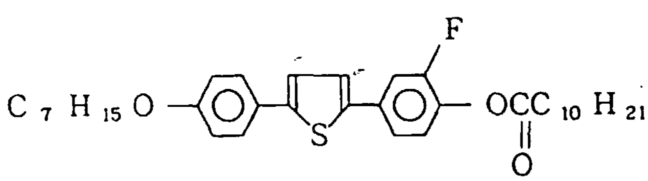

( I −27)

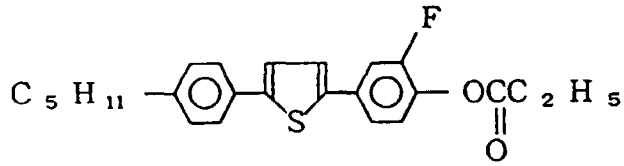

( I −28)

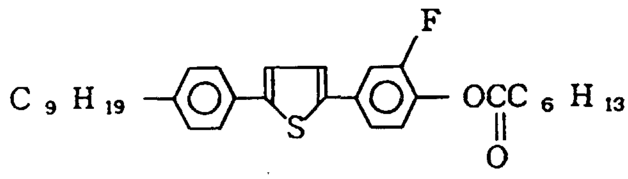

( I −29)

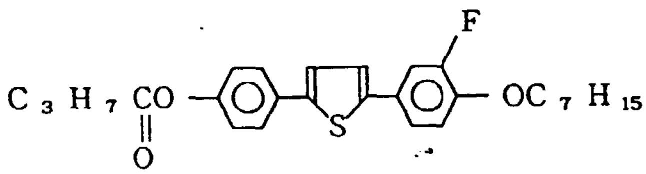

( I −30)

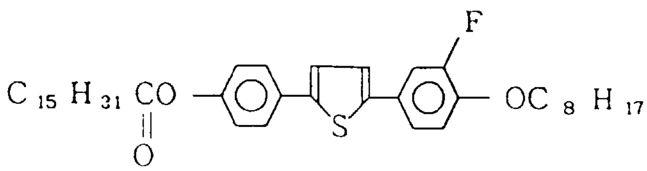

( I −31)

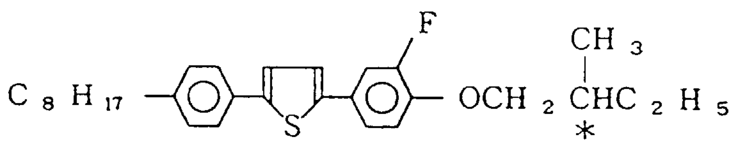

( I −32)

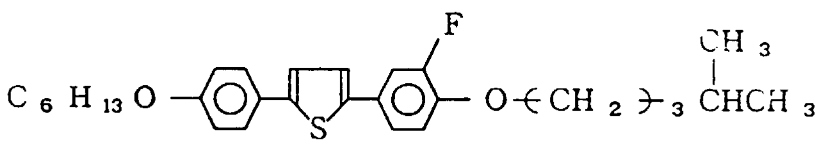

(I −33)

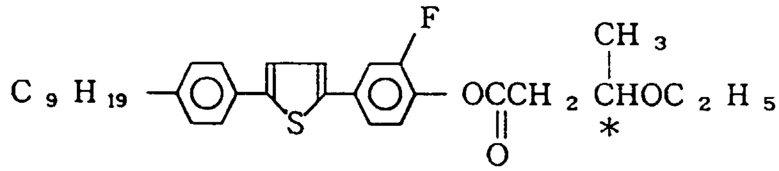

(I −34)

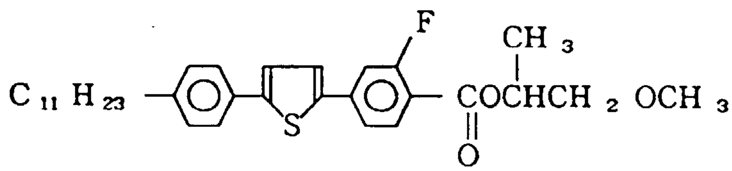

(I −35)

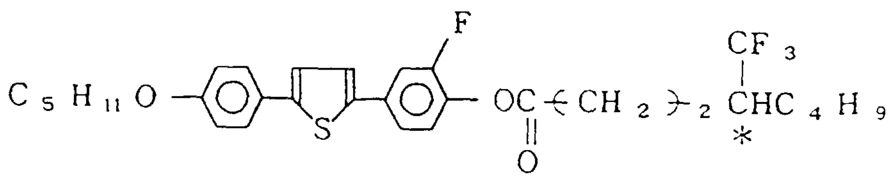

(I −36)

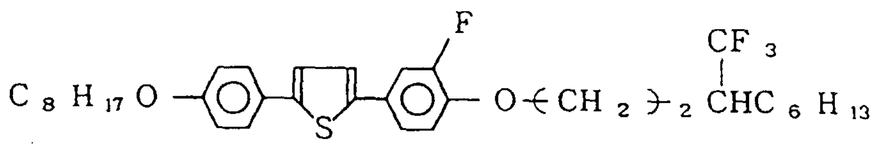

(I −37)

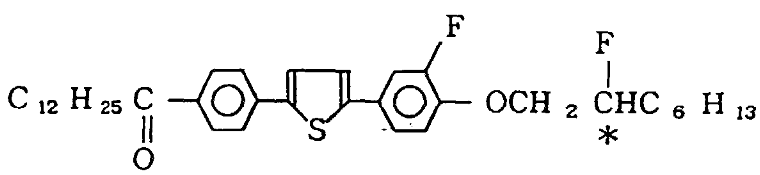

(I −38)

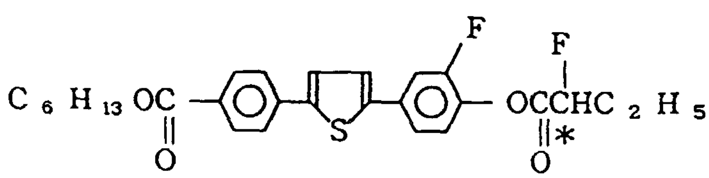

(I −39)

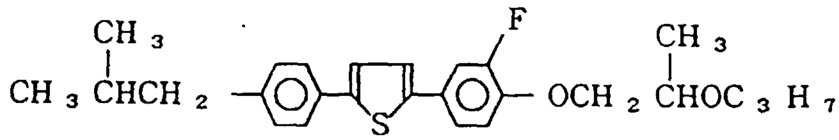

(I −40)

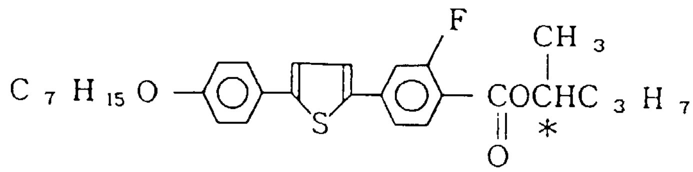

(I −41)

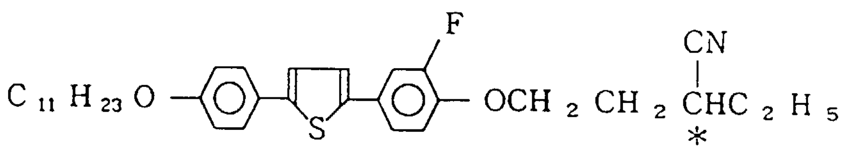

(I −42)

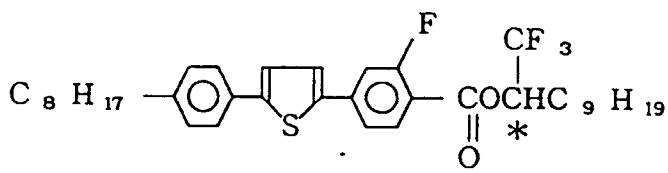

(I −43)

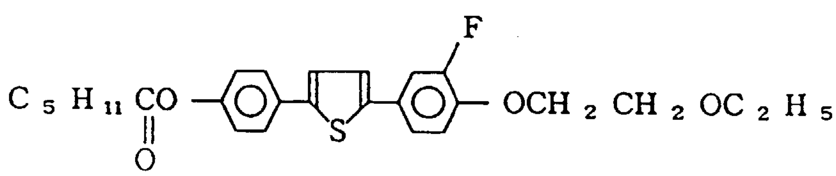

(I −44)

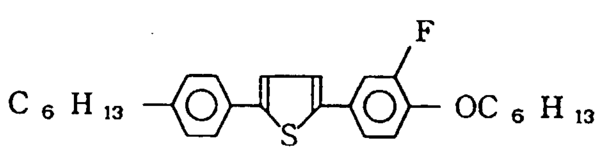

(I −45)

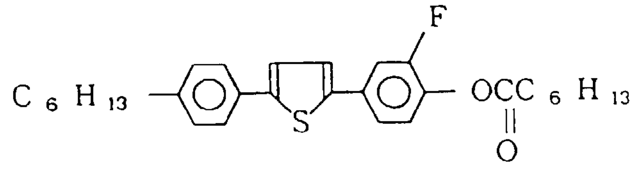

(I −46)

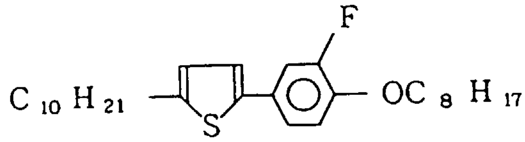

(I −47)

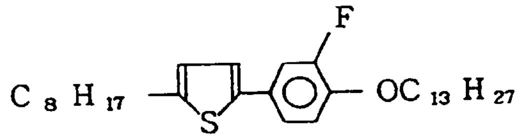

(I −48)

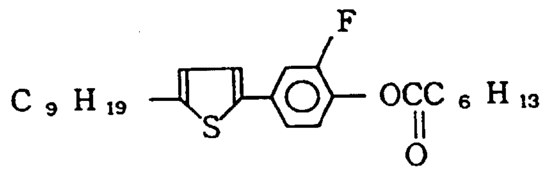

(I −49)

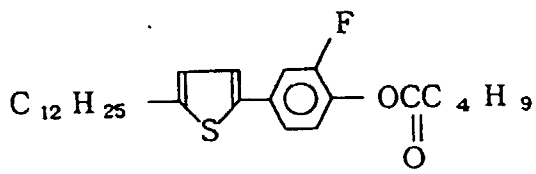

(I −50)

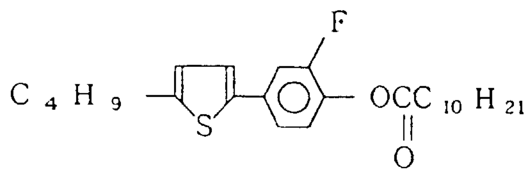

(I -51)

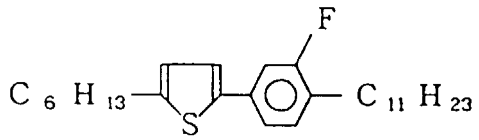

(I -52)

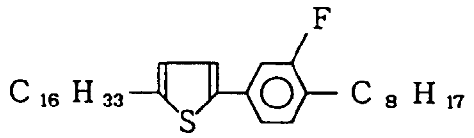

(I -53)

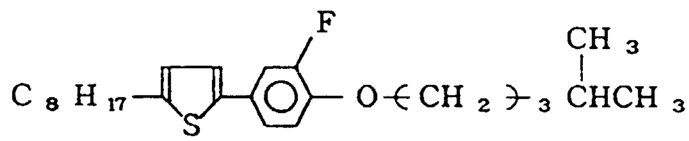

(I -54)

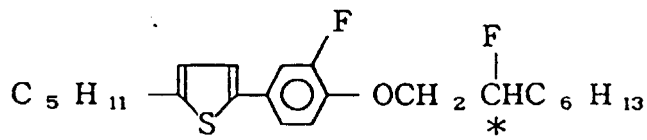

(I -55)

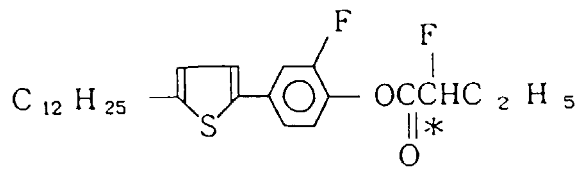

(I -56)

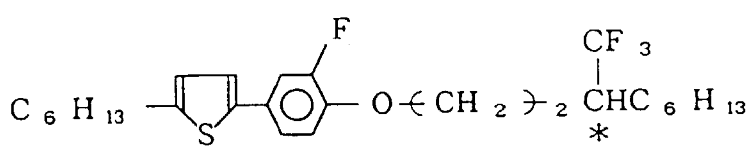

(I -57)

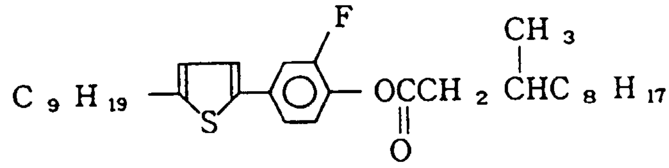

(I -58)

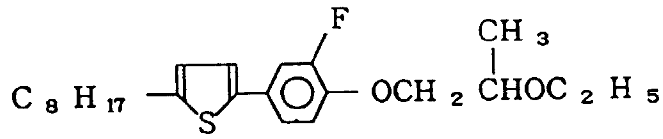

(I -59)

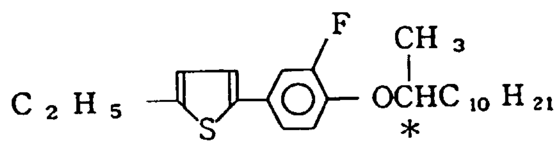

(I -60)

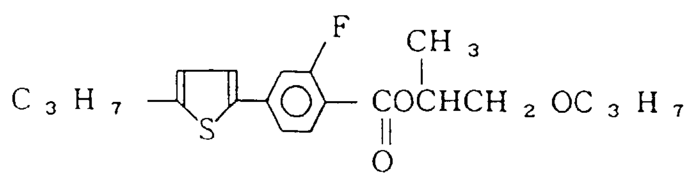

(I -61)

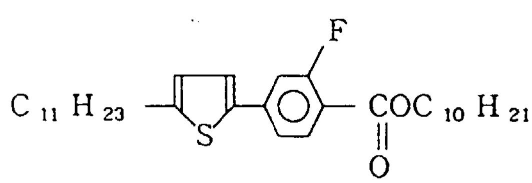

(I -62)

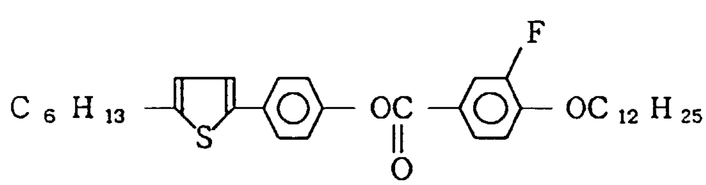

(I -63)

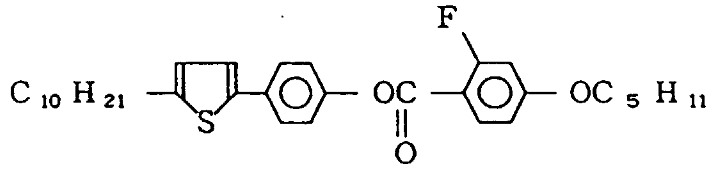

(I -64)

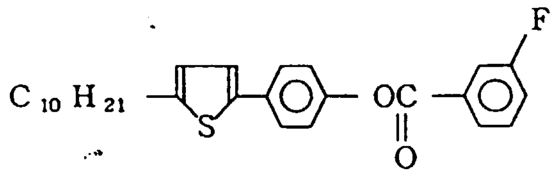

(I -65)

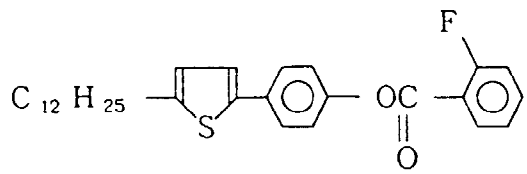

(I -66)

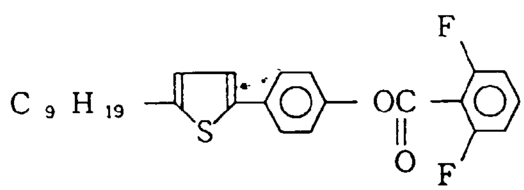

(I -67)

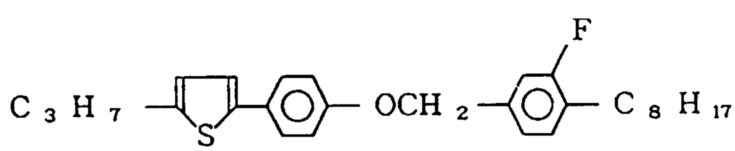

(I -68)

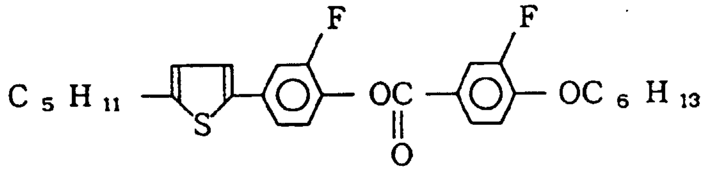

(I -69)

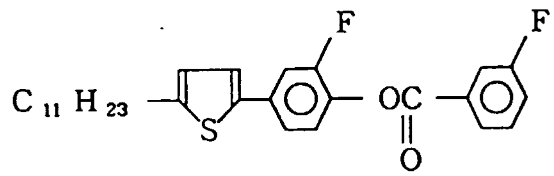

(I -70)

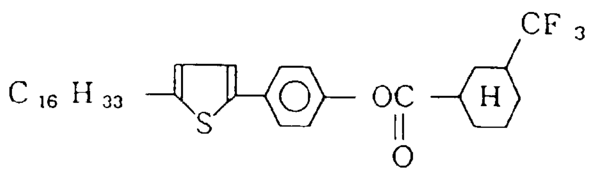

(I -71)

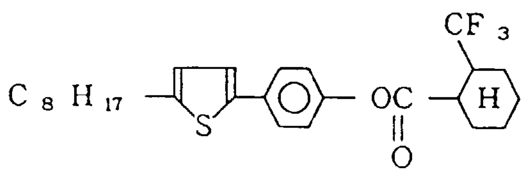

(I -72)

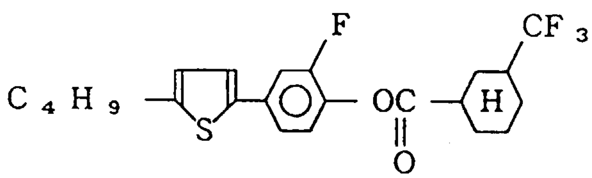

(I -73)

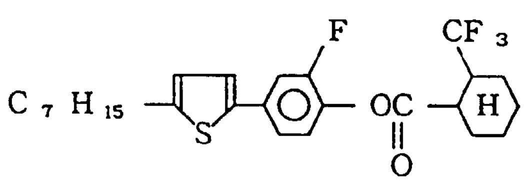

(I -74)

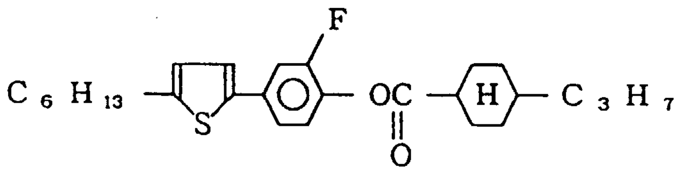

(I -75)

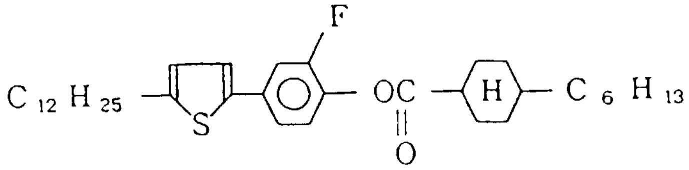

(I -76)

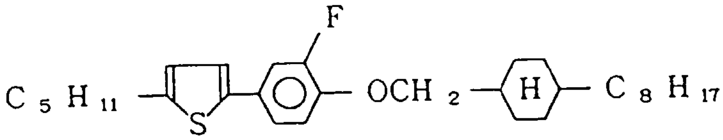

(I -77)

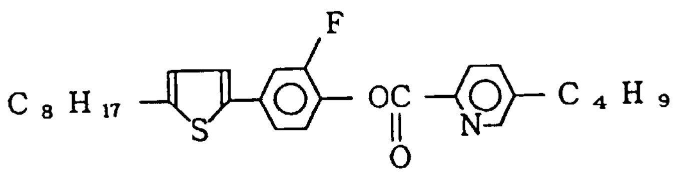

(I -78)

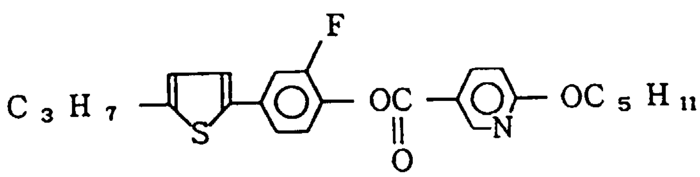

(I -79)

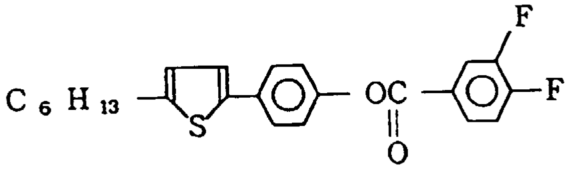

(I -80)

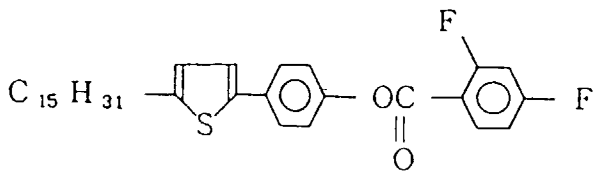

(I -81)

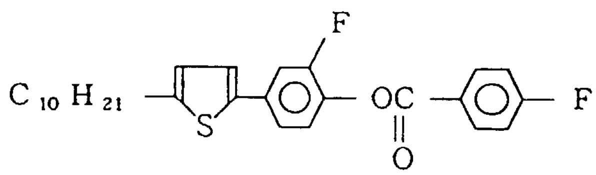

(I -82)

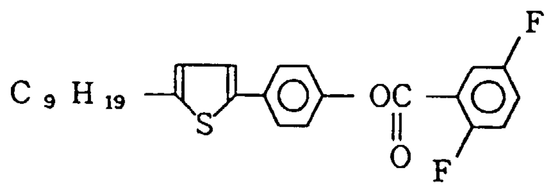

(I -83)

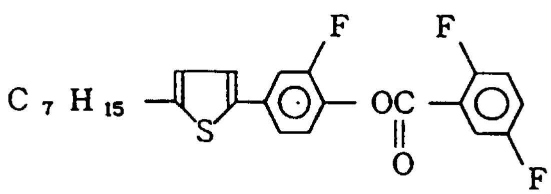

(I -84)

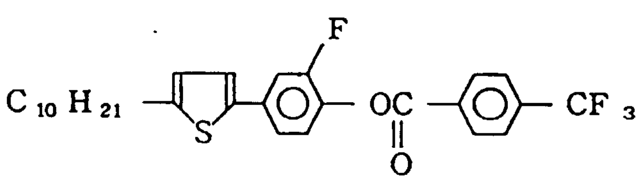

(I −85)

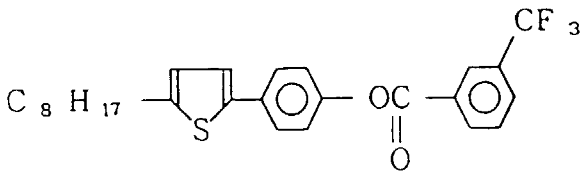

(I −86)

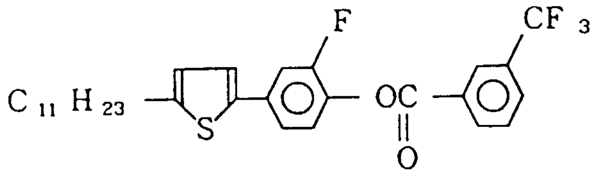

(I −87)

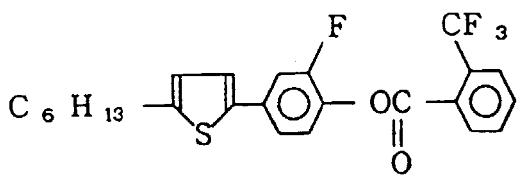

(I −89)

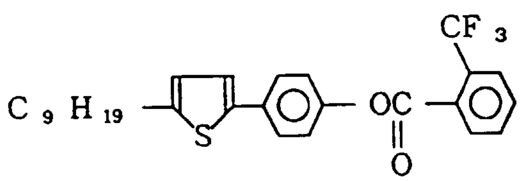

(I −90)

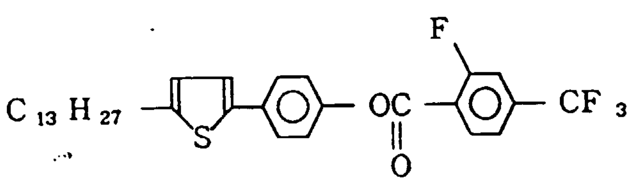

(I −91)

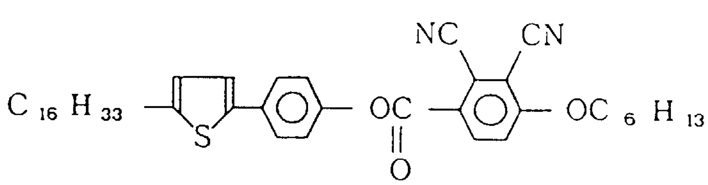

(I −92)

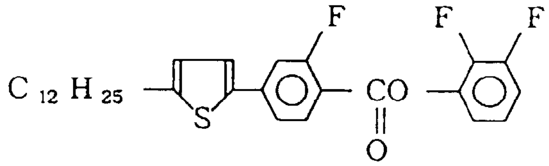

(I −93)

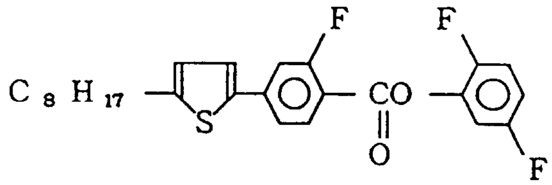

(I −94)

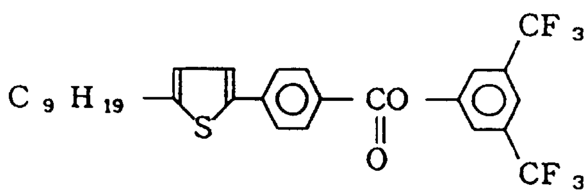

(I −95)

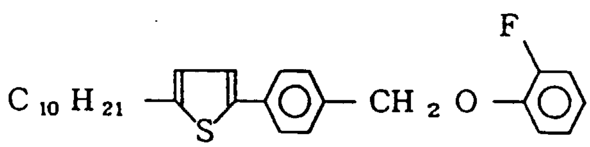

(I −96)

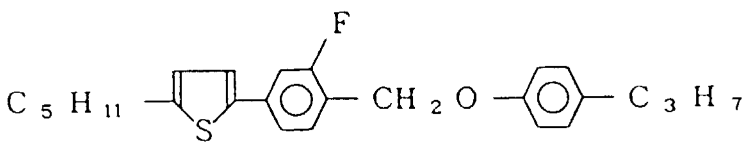

(I −97)

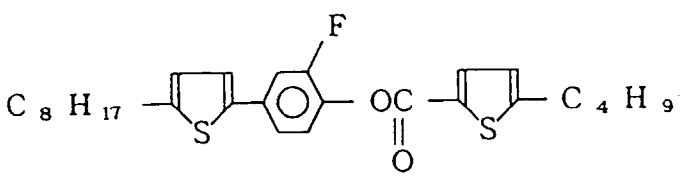

(I −98)

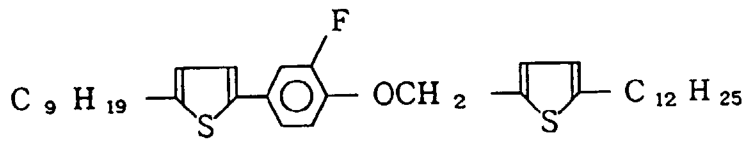

(I −99)

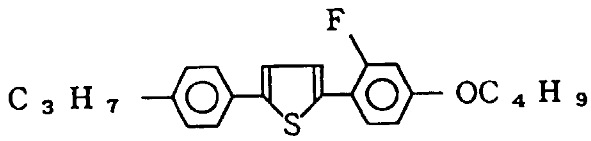

(I −100)

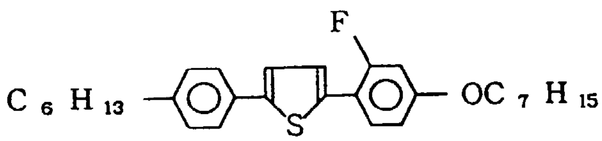

(I −101)

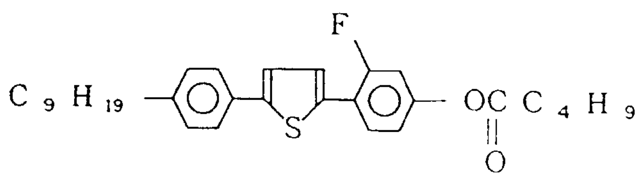

(I −102)

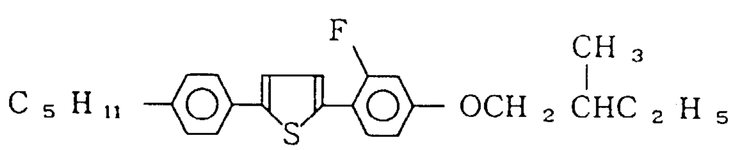

(I −103)

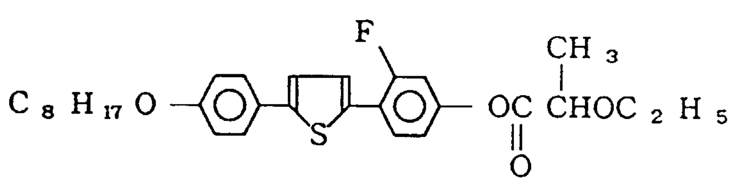

(I −104)

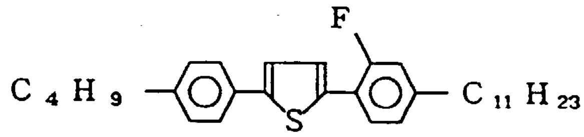

(I −105)

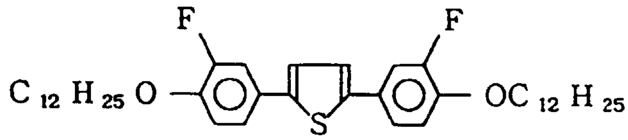

(I −106)

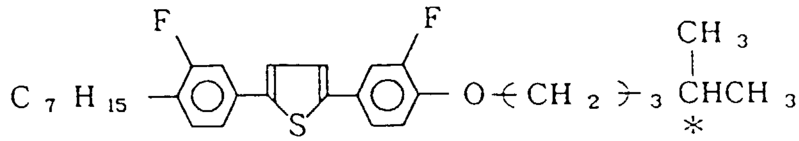

(I −107)

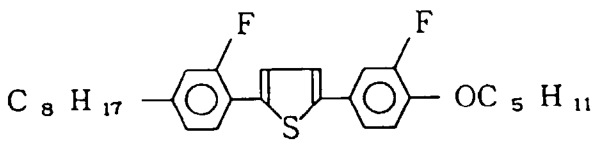

(I −108)

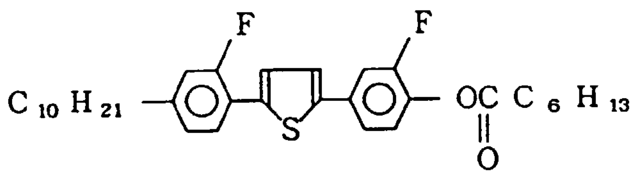

(I −109)

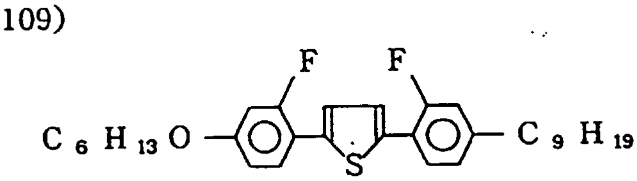

(I −110)

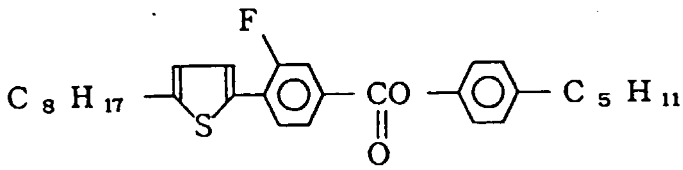

(I −111)

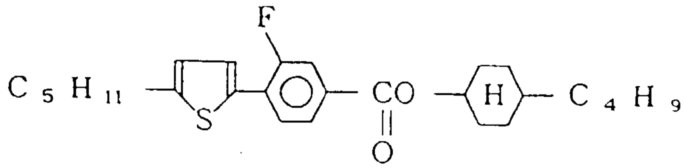

(I −112)

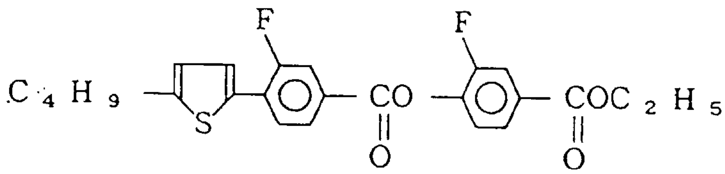

(I −113)

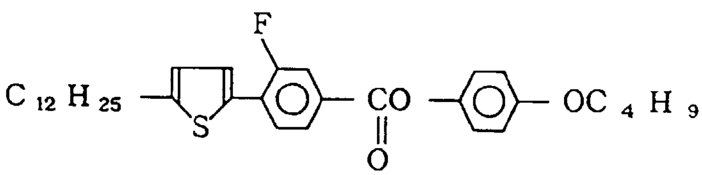

(I −114)

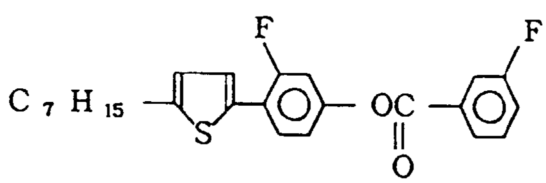

(I −115)

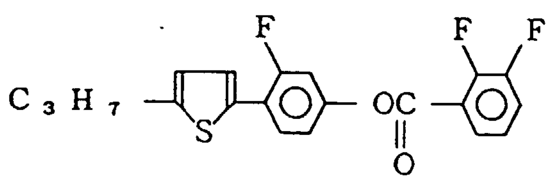

(I −116)

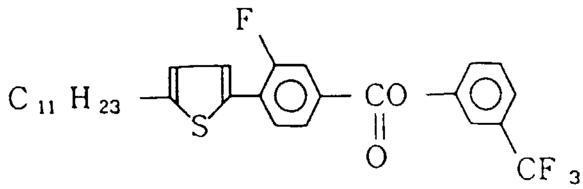

(I −117)

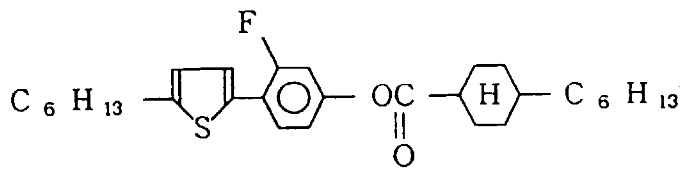

(I −118)

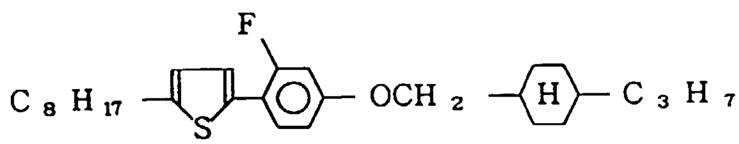

(I −119)

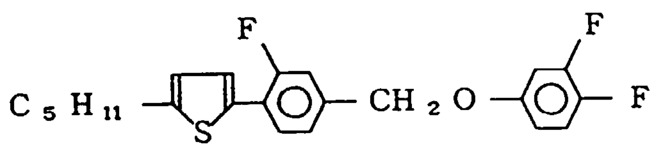

(I −120)

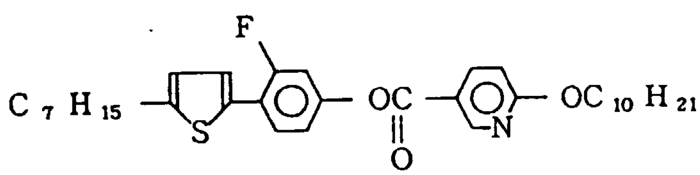

(I −121)

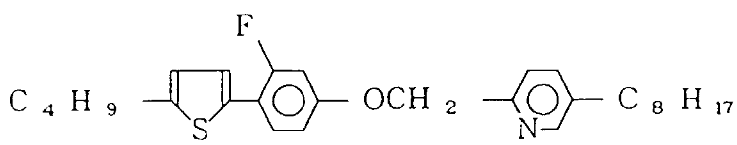

(I −122)

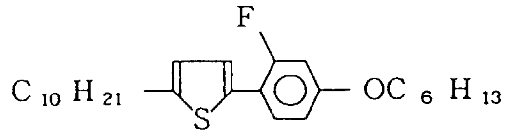

(I −123)

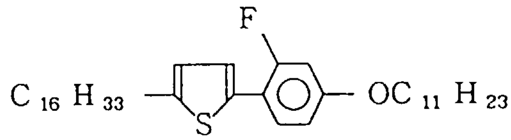

(I −124)

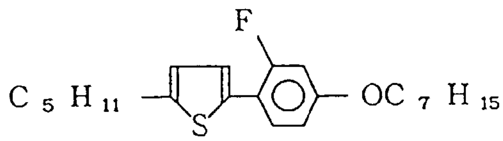

(I −125)

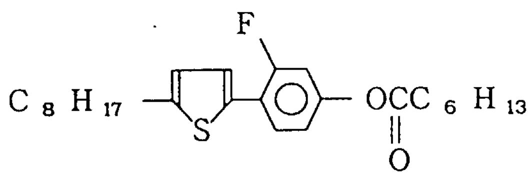

(I −126)

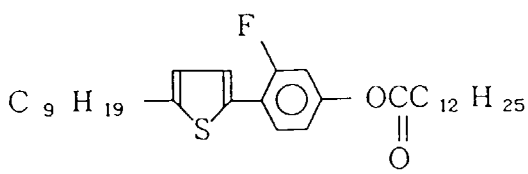

(I −127)

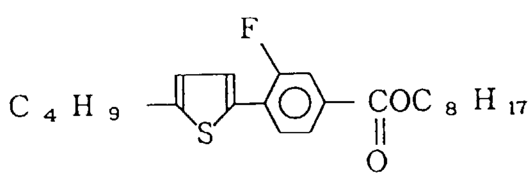

( I -128 )

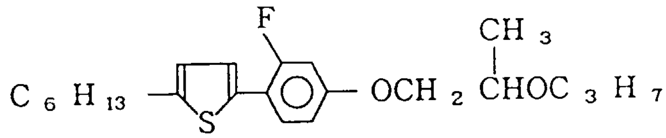

( I -129 )

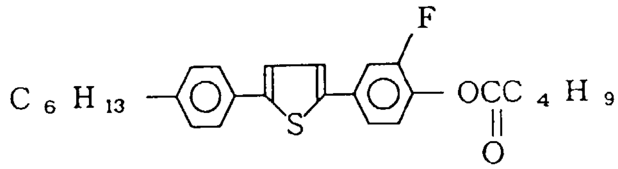

( I -130 )

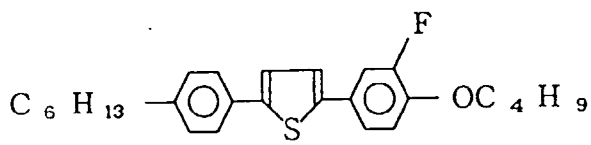

( I -131 )

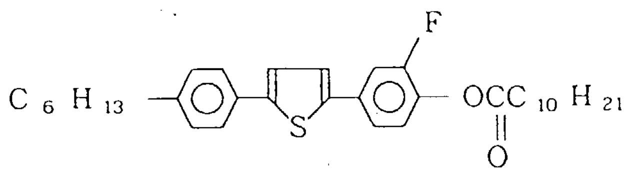

( I -132 )

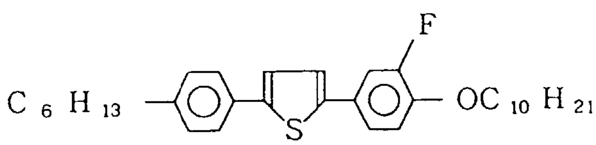

( I -133 )

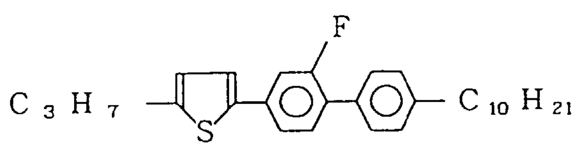

(I -134)

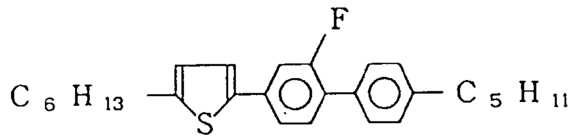

(I -135)

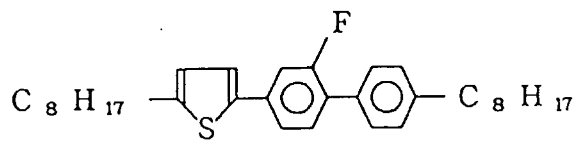

(I -136)

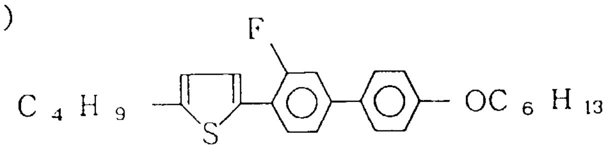

(I -137)

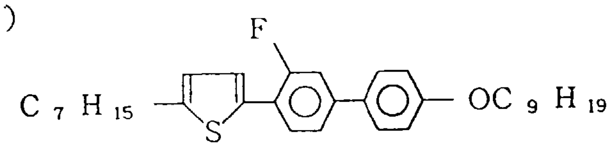

(I -138)

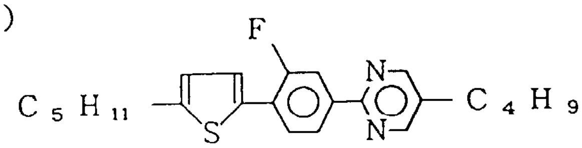

(I -139)

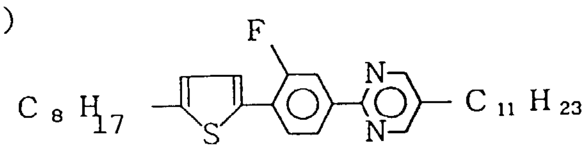

(I − 140)

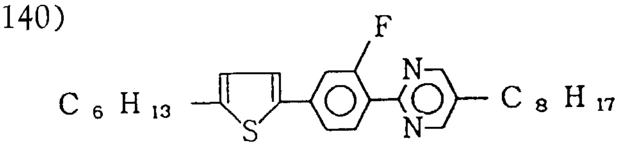

(I −141)

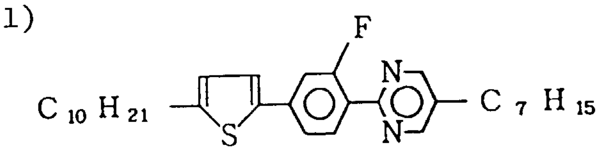

The liquid crystal composition according to the present invention may be obtained by mixing at least one species of the compound represented by the formula (I) and another mesomorphic compound in appropriate proportions. In formulating the liquid crystal composition by mixing the mesomorphic compound according to the present invention with at least one species of an above-mentioned mesomorphic compound or a liquid crystal composition, the resultant liquid crystal composition may desirably contain 1 to 80 wt. %, preferably 1 to 60 wt. %, more preferably 1 to 40 wt. % of the mesomorphic compound according to the present invention.

Further, when two or more species of the compound according to Formula I are used, the resultant liquid crystal composition may desirably contain 1 to 80 total wt. %, preferably 1 to 60 total wt. %, more preferably 1 to 40 total wt. % of the two or more species of the compounds according to Formula I.

The liquid crystal composition according to the present invention may preferably be formulated as a liquid crystal composition capable of utilizing ferroelectricity, particularly a liquid crystal composition showing a chiral smectic phase.

Specific examples of the other mesomorphic compound for use in the composition with the compound of Formula I may include those denoted by the following formulae (II) to (XI).

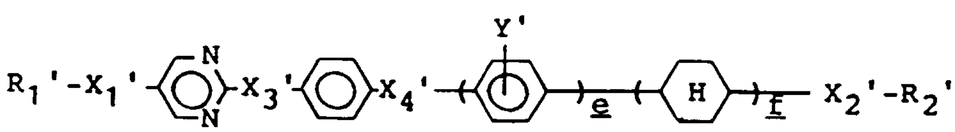

(II)

wherein e denotes 0 or 1 and f denotes 0 or 1 with proviso that e + f = 0 or 1; Y' denotes H, halogen, $CH_3$ or $CF_3$; $X_1$' and $X_2$' denote a single bond,

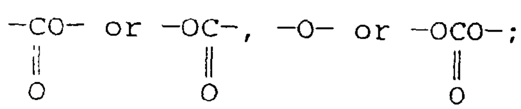

and $X_3$' and $X_4$' denote a single bond,

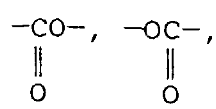

$-OCH_2-$ or $-CH_2O-$.

In Formula (II), preferred compounds thereof include those represented by the following Formulae (IIa) to (IId):

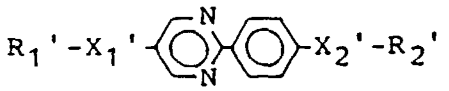

(II a),

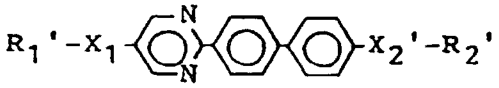

(II b),

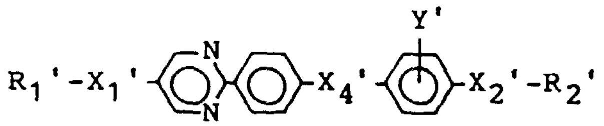

(II c),

and

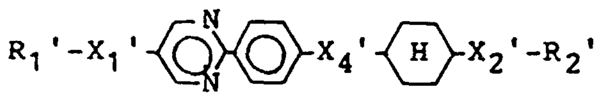

(II d).

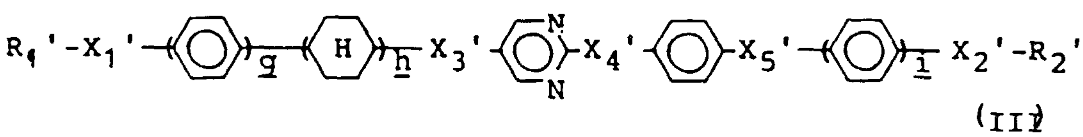

(III)

wherein g and h denote 0 or 1 with the proviso that g + h = 1; i denotes 0 or 1; $X_1$' and $X_2$' denote a single bond,

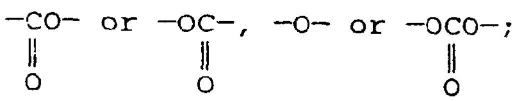

and $X_3$', $X_4$', and $X_5$' denote a single bond,

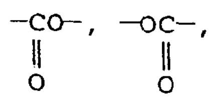

$-CH_2O-$ or $-OCH_2-$.

In the formula (III), preferred compounds thereof include those represented by the following Formulae (IIIa) to (IIIc):

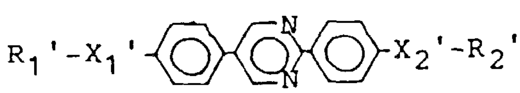

(IIIa),

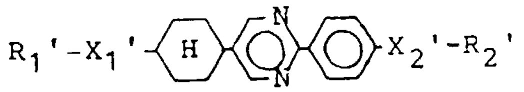 (IIIb),

and

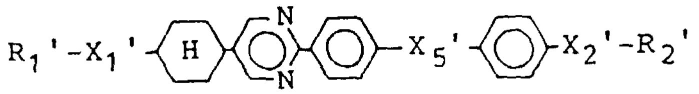 (IIIc).

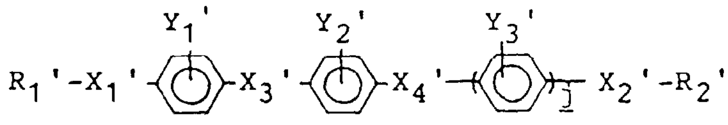 (IV)

wherein i denotes 0 or 1; $Y_1$', $Y_2$' and $Y_3$' denote H, halogen, $CH_3$ or or $CF_3$; $X_1$' and $X_2$' denote a single bond,

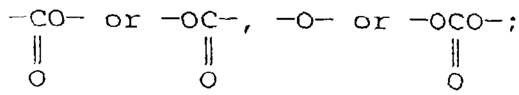

and $X_3$', $X_4$' and $X'_5$ denote a single bond,

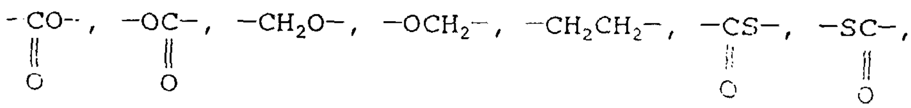

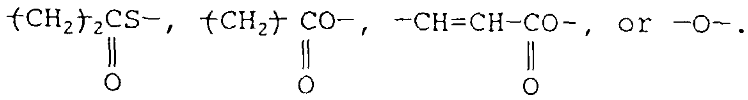

In Formula (IV), preferred compounds thereof may include those represented by the following Formulae (IVa) to (IVb):

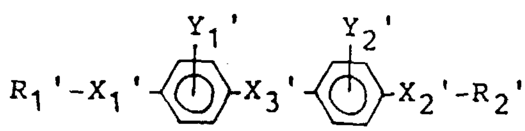 (IVa),

and

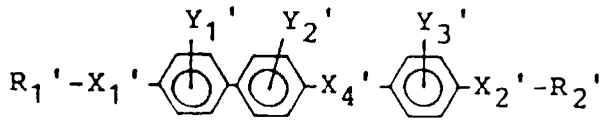

( b).
IV

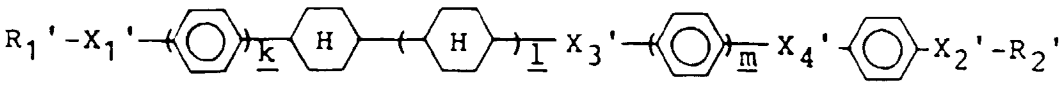

( V )

wherein k, l, and m denote 0 or 1 with the proviso that k + l + m = 0, 1 or 2; $X_1$' and $X_2$' denote a single bond,

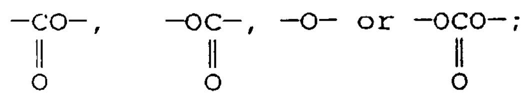

and $X_3$' and $X_4$' denote a single bond,

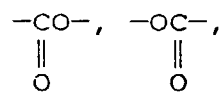

$-CH_2O-$ or $-OCH_2-$.

In the formula (V), preferred compounds thereof may include those represented by the following Formulae (Va) to (Vf):

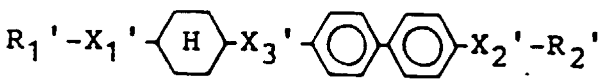

(V a),

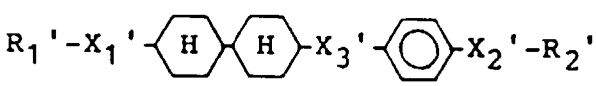

(V b),

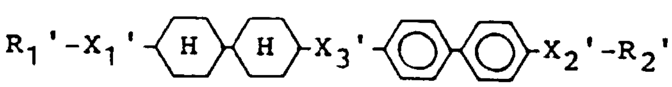

(V c),

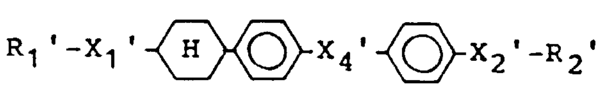

(V d),

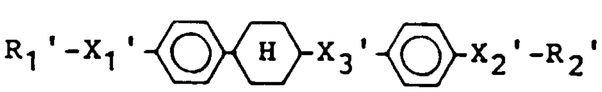

(V e),

and

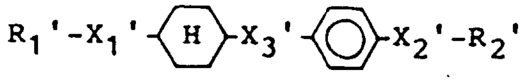 (vf).

Herein, $R_1$ and R2' denote a linear or branched alkyl group having 1 - 18 carbon atoms capable of including one or two or more non-neighboring methylene groups which can be replaced with -CHX- (wherein X is halogen) and capable of further including one or two or more non-neighboring methylene groups other than those directly connected to $X_1$' or $X_2$' which can be replaced with at least one species of

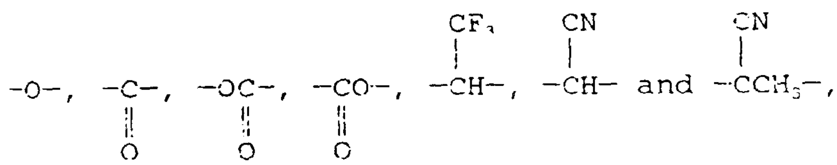

and

with proviso that $R_1$' and $R_2$' do not connect to a ring structure when $R_1$' and $R_2$' denote a halogenated alkyl group containing one methylene group replaced with

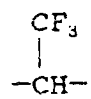

or -CHX- (wherein X is halogen)

Preferred examples of $R_1$' and $R_2$' include those represented by the following groups (i) to (ix):

i) a linear alkyl group having 1 - 15 carbon atoms;

ii)

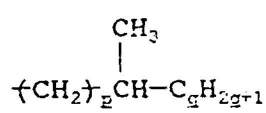

(optically active or inactive) wherein p denotes an integer of 0 - 5 and q denotes an integer of 1 - 11;

iii)

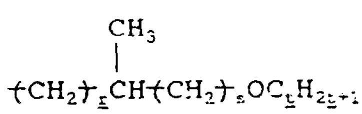

(optically active or inactive) wherein r denotes an integer of 0 - 6, s denotes 0 or 1, and t denotes an integer of 1 - 14;

iv)

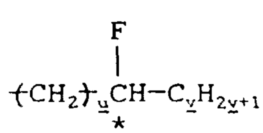

wherein u denotes 0 or 1 and v denotes an integer of 1 - 16;

v)

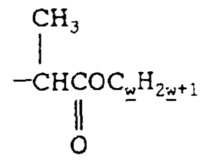

(optically active or inactive) wherein w denotes an integer of 1 - 15;

vi)

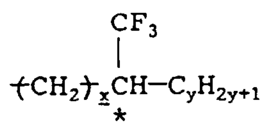

wherein x denotes an integer of 0 - 2 and y denotes an integer of 1 - 15;

vii)

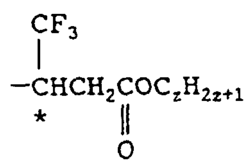

wherein z denotes an integer of 1 - 15;

viii)

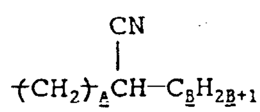

(optically active or inactive) wherein A denotes an integer of 0 - 2 and B denotes an integer of 1 - 15; and

ix)

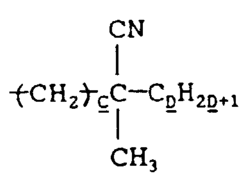

(optically active or inactive) wherein C denotes an integer of 0 - 2 and D denotes an integer of 1 - 15

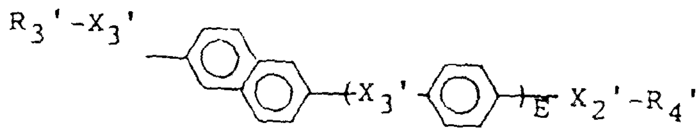 (VI )

wherein E denotes 0 or 1; $X_2$' denotes a single bond,

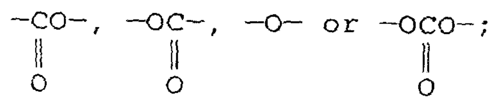

and $X_3$' denotes a single bond,

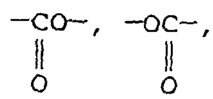

$-CH_2O-$ or $-OCH_2-$.

In the formula (VI), preferred compounds thereof include those represented by the following Formulae (VIa) to (VIb):

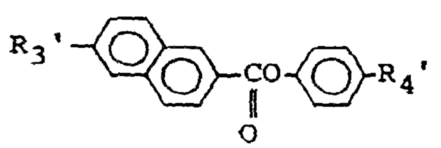 ( VI a),

and

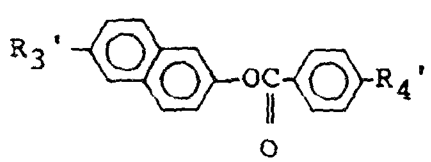 (VI b).

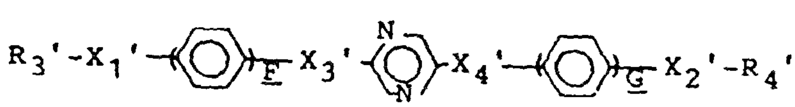

( VII )

wherein F and G denote 0 or 1; $X_1$' and $X_2$' denote a single bond,

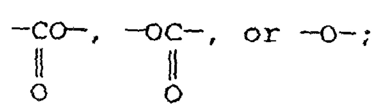

and $X_3$' and $X_4$' denote a single bond,

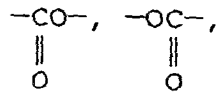

$-CH_2O-$ or $-OCH_2-$.

In the above Formula (VII), preferred compounds thereof include those represented by the following Formulae (VIIa) and (VIIb).

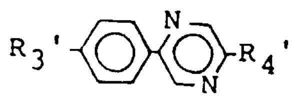

(VIIa),

and

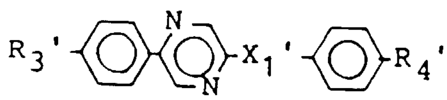

(VII b).

Herein, $R_3$' and $R_4$' denote a linear or branched alkyl group having 1 - 18 carbon atoms capable of including one or two or more non-neighboring methylene groups which can be replaced with -CHX- (wherein X is halogen) and capable of further including one or two or more non-neighboring methylene groups other than those directly connected to $X_1$' or $X_2$' which can be replaced with at least one species of

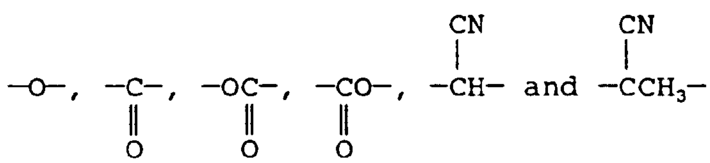

with proviso that $R_3$' and $R_4$' do not connect to a ring structure when $R_3$' and $R_4$' denote a halogenated alkyl group containing one methylene group replaced with -CHX- (wherein X is halogen).

Further, preferred examples of $R_3$' and $R_4$' include those represented by the following groups (i) to (vii):

i) a linear alkyl group having 1 - 15 carbon atoms;

ii)

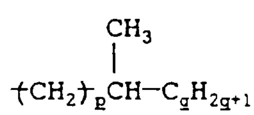

(optically active or inactive) wherein p denotes an integer of 0 - 5 and q denotes an integer of 1 - 11;

iii)

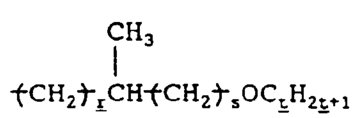

(optically active or inactive) wherein r denotes an integer of 0 - 6, s denotes 0 or 1, and t denotes an integer of 1 - 14;

iv)

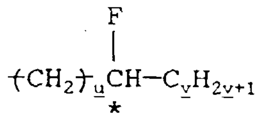

wherein u denotes an integer of 0 - 5 and v denotes an integer of 1 - 16;

v)

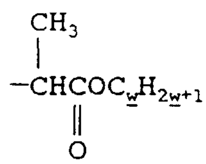

(optically active or inactive) wherein 2 denotes an integer of 1 - 15;

vi)

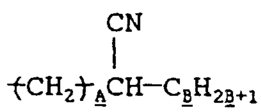

(optically active or inactive) wherein A denotes an integer of 0 - 2 and B denotes an integer of 1 - 15; and

vii)

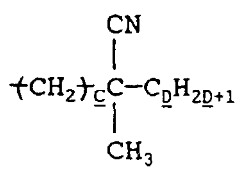

(optically active or inactive) wherein C denotes an integer of 0 - 2 and D denotes an integer of 1 - 15.

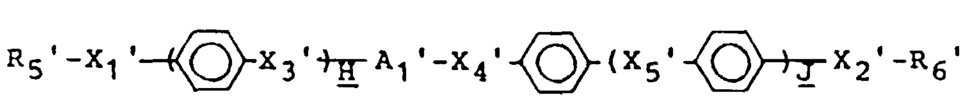

(VIII)

wherein H and J denote 0 or 1 with proviso that H + J = 0 or 1; $X_1'$ and $X_2'$ denote a single bond,

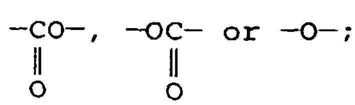

$A^{1'}$ denotes

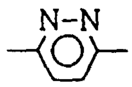 , 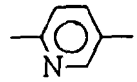

or

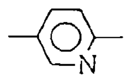

; and $X_3'$, $X_4'$ and $X'_5$ respectively denote a single bond,

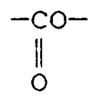, 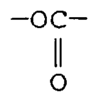,

$-CH_2O-$ or $-OCH_2-$.

In the above formula (VIII), preferred compounds thereof include those represented by the following Formulae (VIIIa) and (VIIIc):

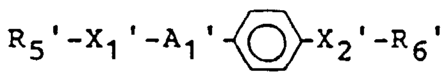 (VIII a),

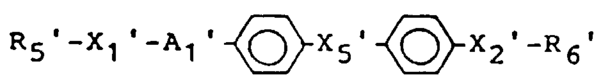 (VIII b),

and

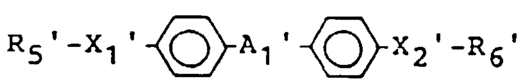 (VIII c).

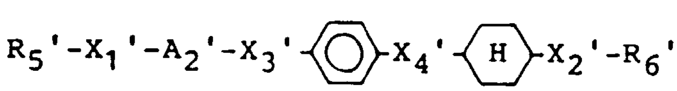 (IX)

wherein $X_1'$ and $X_2'$ denote a single bond,

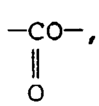, 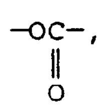, or $-O-$;

$A_2$' denotes;

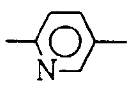 or 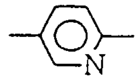

; and $X_3$', $X_4$' and $X'_5$ denote a single bond,

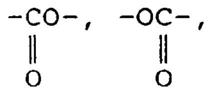

$-CH_2O-$ or $-OCH_2-$.

In the above Formula (IX), preferred compounds thereof include those represented by the following Formulae (IXa) to (IXb):

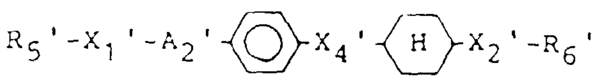 (IX a),

and

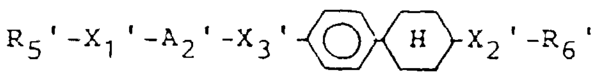 (IX b).

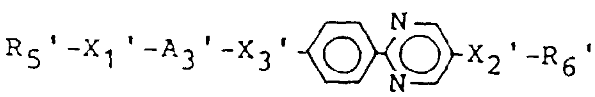

(X )

wherein $X_1$' and $X_2$' denote a single bond,

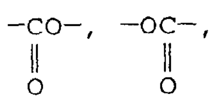 or -O-;

$A_3$' denotes

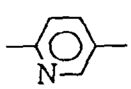 or 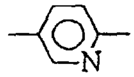 ;

and $X_3$' and $X'_4$ denote a single bond,

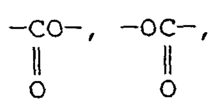

$-CH_2O-$ or $-OCH_2-$.

In the above formula (X), preferred compounds thereof include those represented by the following Formulae (Xa) and (Xg):

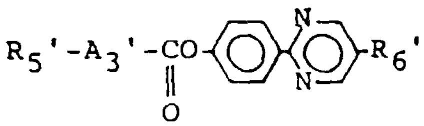

(Xa),

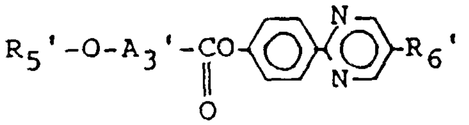

(Xb),

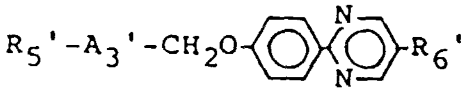

(Xc),

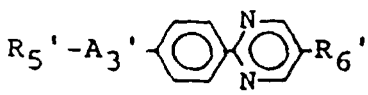

(Xd),

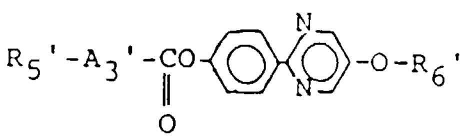

(Xe),

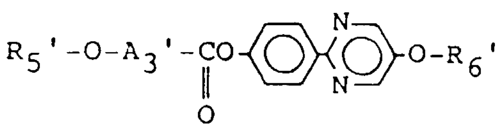

(Xf),

and

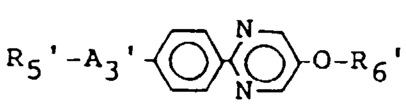

(Xg).

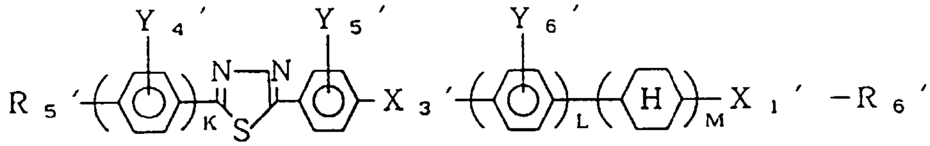

(XI)

wherein K, L and M independently denote 0 or 1 with proviso that K + L + M = 0 or 1; $Y_4'$, $Y_5'$ and $Y_6'$ denote H or F;

$X_1$' denotes a single bond,

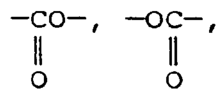, or $-O-$;

X3' denotes a single bond,

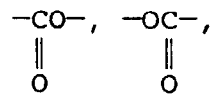

$-CH_2O-$ or $-OCH_2-$.

In the above-mentioned formula (XI), preferred compounds thereof may include those represented by the following formulas (XIa) and (XId):

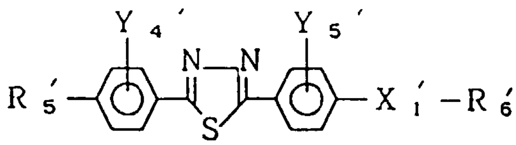

(XIa)

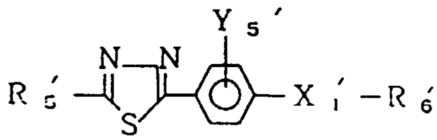

(XI b)

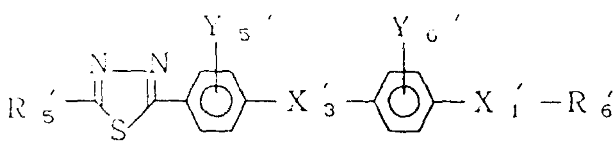

(XIc)

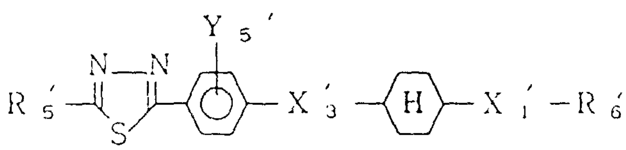

(XI d)

Herein, $R_5$' and $R_6$' denote a linear or branched alkyl group having 1 - 18 carbon atoms capable of including one or two or more non-neighboring methylene groups other than those directly connected to $X_1$' or $X_2$' which can be replaced with at least one species of

$-O-$, 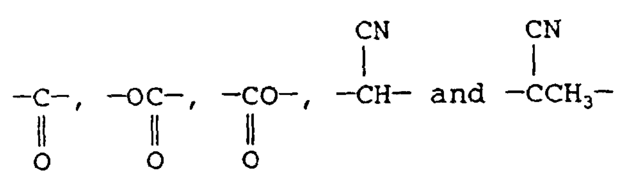 and

Further, preferred examples of $R_5'$ and $R_6'$ include those represented by the following groups (i) to (vi):

i) a linear alkyl group having 1 - 15 carbon atoms;

ii)

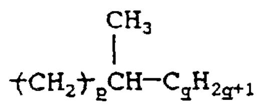

(optically active or inactive) wherein p denotes an integer of 0 - 5 and q denotes an integer of 1 - 11;

iii)

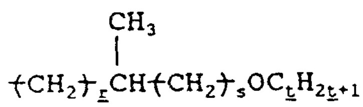

(optically active or inactive) wherein r denotes an integer of 0 - 6, s denotes 0 or 1, and t denotes an integer of 1 - 14;

iv)

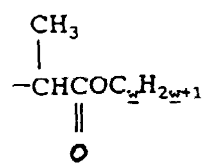

(optically active or inactive) wherein w denotes an integer of 1 - 15;

v)

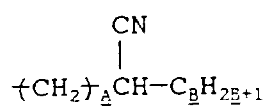

(optically active or inactive) wherein A denotes an integer of 0 - 2 and B denotes an integer of 1 - 15; and

vi)

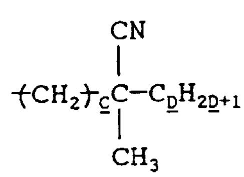

(optically active or inactive) wherein C denotes an integer of 0 - 2 and D denotes an integer of 1 - 15.

In the above-mentioned Formulae (IIa) to (IId), more preferred compounds thereof include those represented by the Formulae (IIaa) to (IIdc):

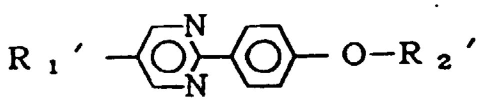

(IIaa) ,

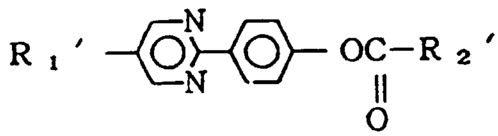

(II ab) ,

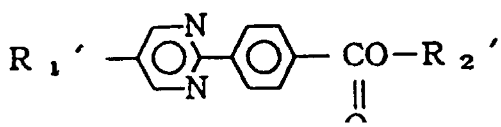

(II ac) ,

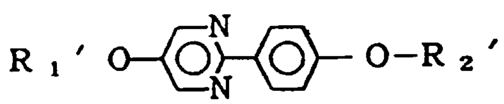

(II ad) ,

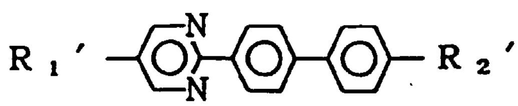

(IIba) ,

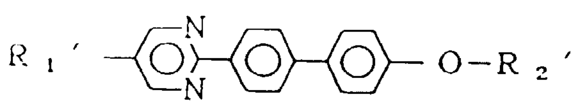

(II bb) ,

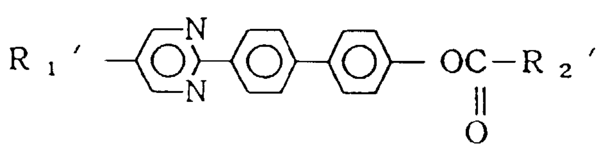

(II bc) ,

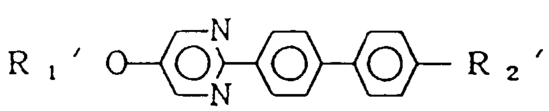

(II bd) ,

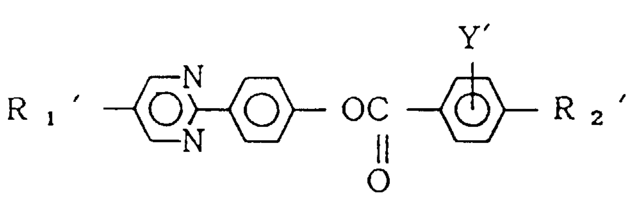

(II ca) ,

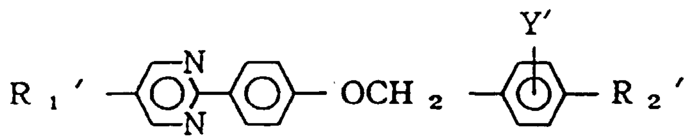

(II cb) ,

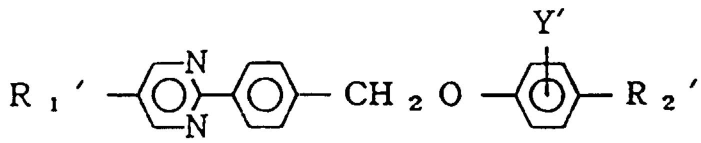

(II cc) ,

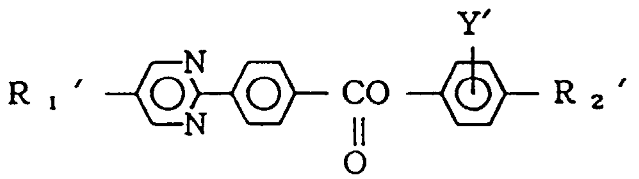

(II cd) ,

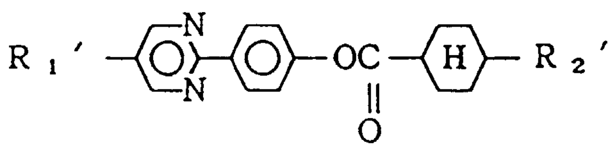

(II da) ,

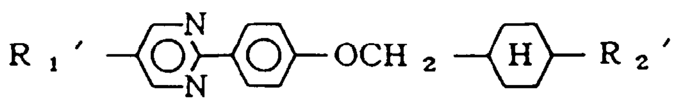

(II db) ,

and

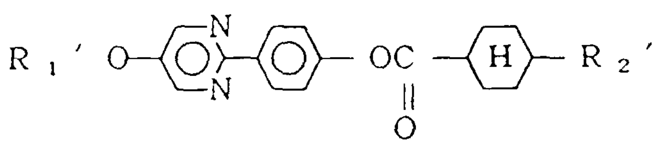

(II dc) .

In the above-metioned Formulae (IIIa) to (IIIc), more preferred compounds thereof include those represented by the Formulae (IIIaa) to (IIIIcb);

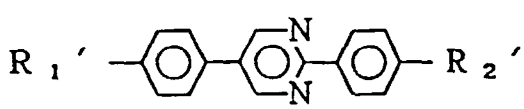

(III aa) ,

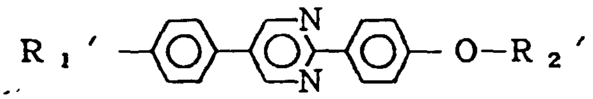 (IIIab)

,

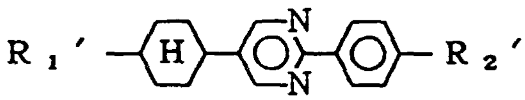 (IIIba)

,

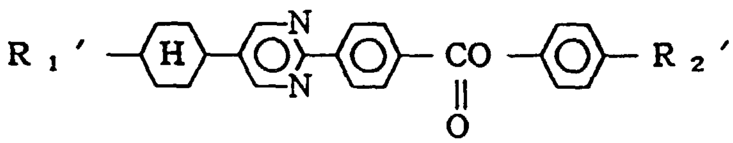 (IIIca)

,

and

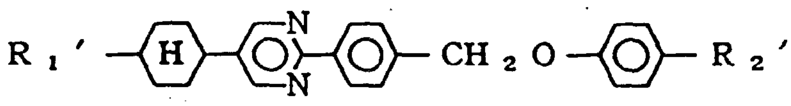 (IIIcb)

.

In the above-metioned Formulae (IVa) to (IVb), more preferred compounds thereof include those represented by the Formulae (IVaa) to (IVbf):

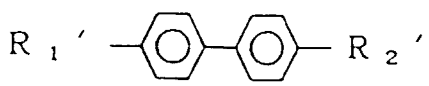 (IVaa)

,

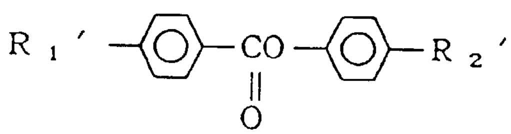 (IVab)

,

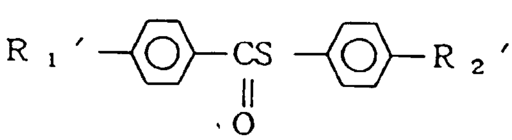 (IVac)

,

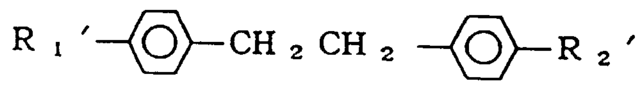

(IVad)
,

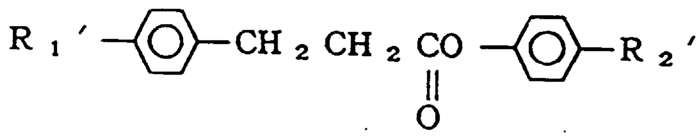

(IVae)
,

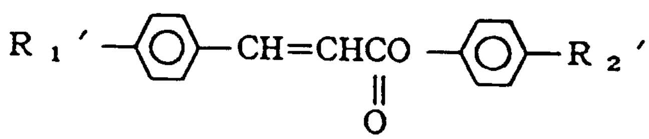

(IVaf)
,

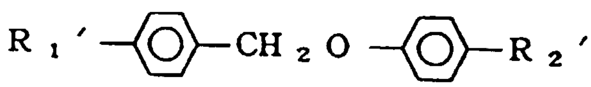

(IVag)
,

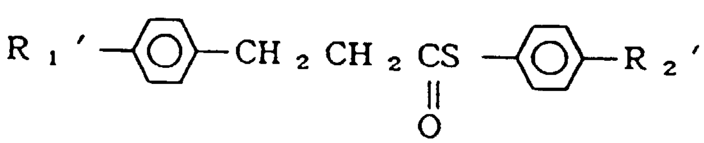

(IVah)
,

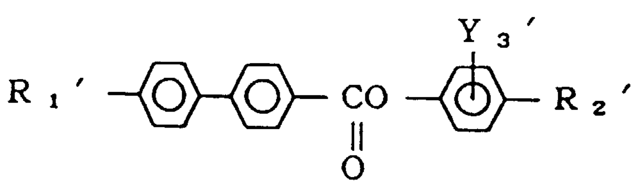

(IVba)
,

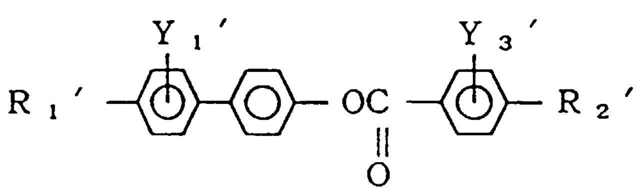

(IVbb)
,

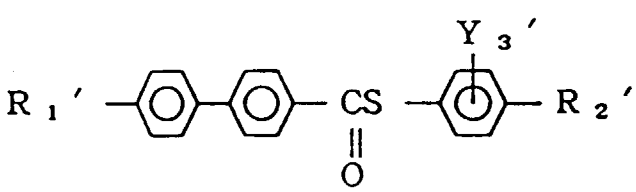

(IVbc)
,

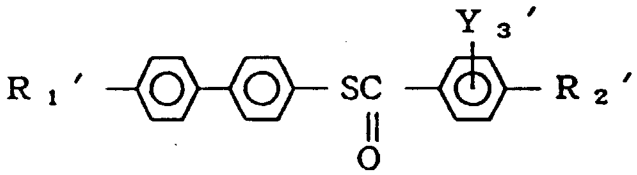

(IV bd)

,

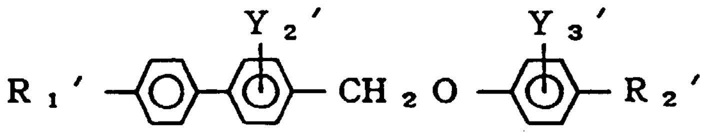

(IV be)

,

and

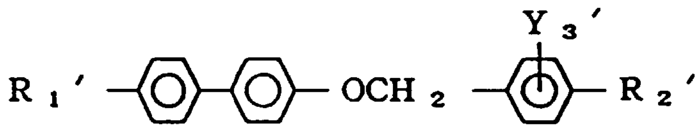

(IV bf)

In the above-mentioned Formulae (Va) to (Vf), more preferred compounds thereof include those represented by the Formulae (Vaa) to (Vfa):

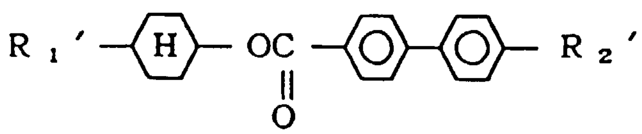

(Vaa)

,

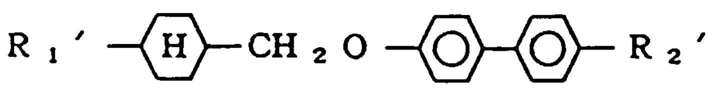

(V ab)

,

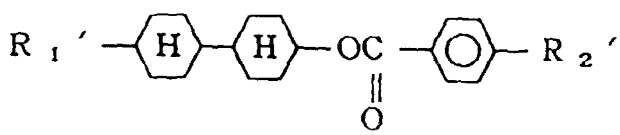

(V ba)

,

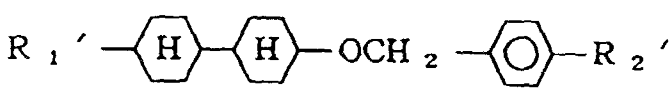

(V bb)

,

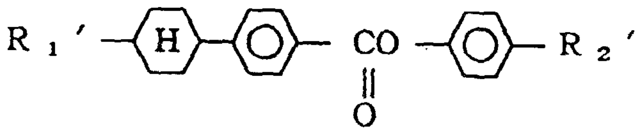

(Vda),

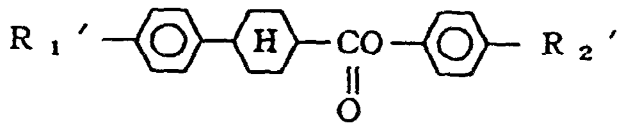

(Vea),

and

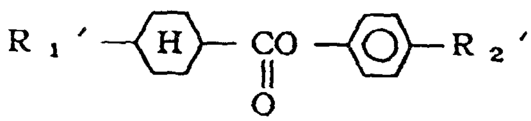

(Vfa).

More preferred compounds of Formula (VIIa) to (VIIb) may include those represented by the Formulae (VIIaa) to (VIIbb):

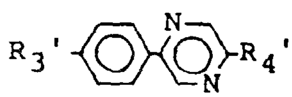

(VIIaa),

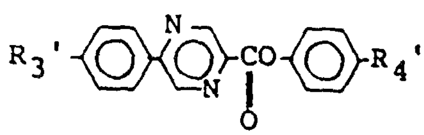

(VIIba),

and

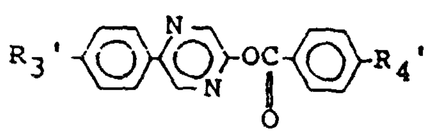

(VIIbb).

In the above-metioned Formula (VIIIa) to (VIIIc), more preferred compounds thereof include those represented by the Formulas (VIIIaa) to (VIIIcc):

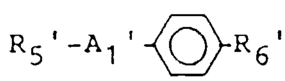

(VIIIaa),

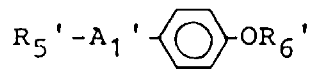

(VIIIab),

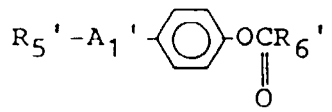

(VIIIac),

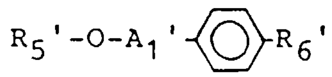

(VIIIad),

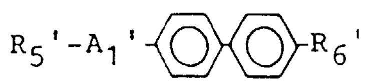

(VIIIba),

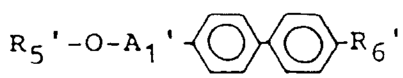

(VIIIbb),

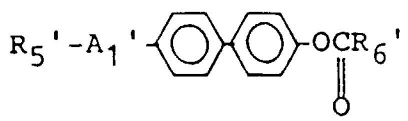

(VIIIbc),

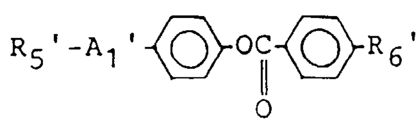

(VIIIbd),

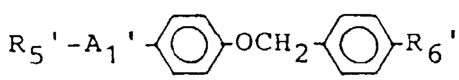

(VIIIbe),

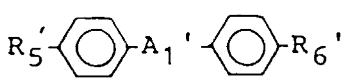

(VIIIca),

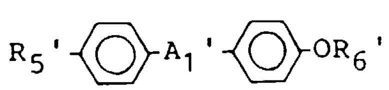

(VIIIcb),

and

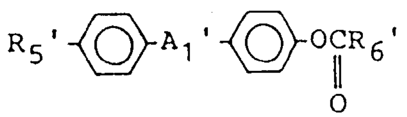

(VIIIcc).

In the above-mentioned Formula (IXa) to (IXb), more preferred compounds thereof include those represented by the Formulas (IXaa) and (IXbb):

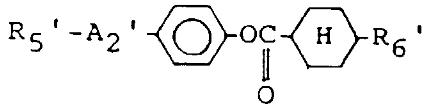

(IXaa),

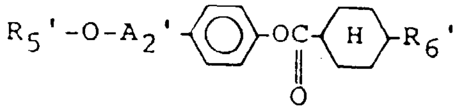

(IXab),

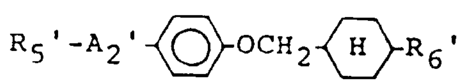

(IXac),

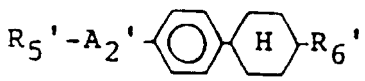

(IXba),

and

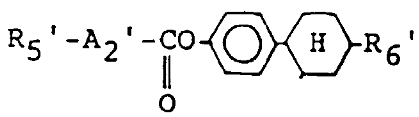

(IXbb).

In the above-mentioned formula (XIa) to (XId), more preferred compounds thereof may include those represented by the following formulas (XIaa) and (XIdb):

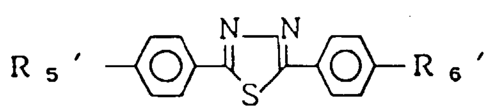

(XIaa)

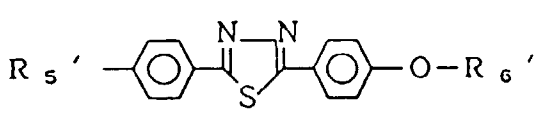

(XIab)

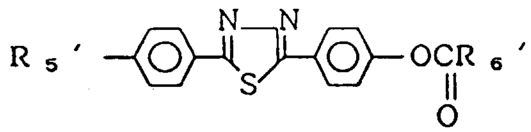

(XI ac)

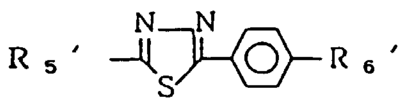

(XI ba)

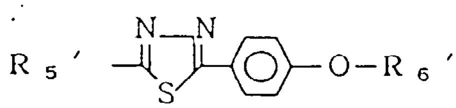

(XI bb)

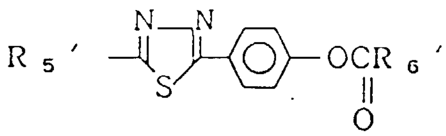

(XI bc)

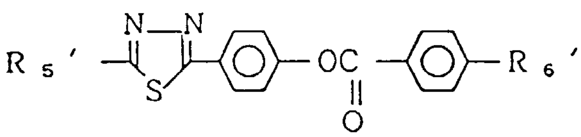

(XI ca)

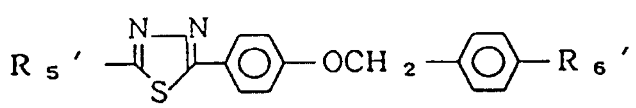

(XI cb)

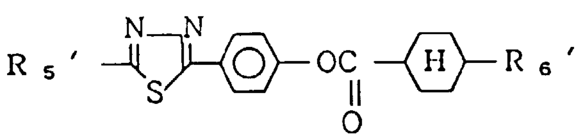

(XI da)

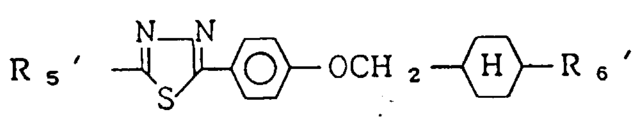

(XI db)

The liquid crystal device according to the present invention may preferably be prepared by heating the liquid crystal composition prepared as described above into an isotropic liquid under vacuum, filling a blank cell comprising a pair of oppositely spaced electrode plates with the composition, gradually cooling the cell to form a liquid crystal layer and restoring the normal pressure.

Figure 1 is a sectional view of an embodiment of the liquid crystal device utilizing ferroelectricity prepared as described above for explanation of the structure thereof.

Referring to Figure 1, the liquid crystal device includes a liquid crystal layer 1 assuming a chiral smectic phase disposed between a pair of glass substrates 2 each having thereon a plurality of transparent electrodes 3 of $In_2O_3$, $SnO_2$ or indium-tin-oxide (ITO) and an insulating alignment control layer 4. Lead wires 6 are connected to the electrodes 3 so as to apply a driving voltage to the liquid crystal layer 1 from a power supply 7. Outside the substrates 2, a pair of polarizers are 8 disposed so as to modulate incident light $I_0$ from a light source 9 in cooperation with the liquid crystal 1 to provide modulated light I. The liquid crystal device is thus of the transmission-type.

The insulating alignment control layer 4 is formed by rubbing a film of a polymer such as polyamide with gauze or acetate fiber-woven cloth so as to align the liquid crystal molecules in the rubbing direction. Further, it is also possible to compose the alignment control layer of two layers, e.g., by first forming an insulating layer of an inorganic material, such as silicon nitride, silicon nitride containing hydrogen, silicon carbide, silicon carbide containing hydrogen, silicon oxide, boron nitride, boron nitride containing hydrogen, cerium oxide, aluminum oxide, zirconium oxide, titanium oxide, or magnesium fluoride, and forming thereon an alignment control layer of an organic insulating material, such as polyvinyl alcohol, polyamide, polyamide-imide, polyester-imide, polyparaxylylene, polyester, polycarbonate, polyvinyl acetal, polyvinyl chloride, polyvinyl acetate, polyamide, polystyrene, cellulose resin, melamine resin, urea resin, acrylic resin, or photoresist resin. Alternatively, it is also possible to form an insulating alignment control layer of a single organic or inorganic layer. An inorganic insulating alignment control layer 4 may be formed by vapor deposition, while an organic insulating alignment control layer may be formed by applying a solution of an organic insulating material or a precursor thereof in a concentration of 0.1 to 20 wt. %, preferably 0.2 - 10 wt. %, by spinner coating, dip coating, screen printing, spray coating or roller coating, followed by curing or hardening under prescribed hardening condition (e.g., by heating). The insulating alignment control layer may have a thickness of ordinarily 30 Å - 1 micron, preferably 30 - 3000 Å, most preferably 50 - 1000 Å. The two glass substrates 2 having transparent electrodes 3 (which may be inclusively referred to herein as "electrode plates") and insulating alignment control layers 4 thereon are maintained at a prescribed arbitrary gap using spacer 5. For example, a cell structure with a desired gap may be formed by sandwiching spacers 5 of silica beads or alumina beads having a prescribed diameter between two glass plates and then sealing the periphery of the glass plates with, e.g., an epoxy adhesive. Alternatively, a polymer film or glass fibers may also be used as a spacer. Between the two glass plates, a ferroelectric liquid crystal is sealed up to provide a liquid crystal layer 1 in a thickness of generally 0.5 to 20 microns, preferably 1 to 5 microns.

Figure 2 is an illustration of a liquid crystal cell utilizing ferroelectricity for explaining operation thereof. Reference numerals 21a and 21b denote substrates (glass plates) on which a transparent electrode of, E.g., $In_2O_3$ $SnO_2$, ITO (indium-tin-oxide), etc., are disposed. A liquid crystal of an SmC*-phase (chiral smectic C phase) or SmH*-phase (chiral smectic H phase) in which liquid crystal molecular layers 22 are aligned perpendicular to surfaces of the glass plates is hermetically disposed therebetween. Full lines 23 show liquid crystal molecules. Each liquid crystal molecule 23 has a dipole moment ($P\perp$) 24 in a direction perpendicular to the axis thereof. The liquid crystal molecules 23 continuously form a helical structure in the direction of extension of the substrates. When a voltage higher than a certain threshold level is applied between electrodes formed on the substrates 21a and 21b, a helical structure of the liquid crystal molecule 23 is unwound or released to change the alignment direction of respective liquid crystal molecules 23 so that the dipole moments ($P\perp$) 24 are all directed in the direction of the electric field. The liquid crystal molecules 23 have an elongated shape and show refractive anisotropy between the long axis and the short axis thereof. Accordingly, it is easily understood that when, for instance, polarizers arranged in a cross nicol relationship, i.e., with their polarizing directions crossing each other, are disposed on the upper and the lower surfaces of the glass plates, the liquid crystal cell thus arrange functions as a liquid crystal optical modulation device of which optical characteristics vary depending upon the polarity of an applied voltage.

Further, when the liquid crystal cell is made sufficiently thin (e.g., less than about 10 microns), the helical structure of the liquid crystal molecules is unwound to provide a non-helical structure even in the absence of an electric field, whereby the dipole moment assumes either of the two states, i.e., Pa in an upper direction 34a or Pb in a lower direction 34b as shown in Figure 3, thus providing a bistable condition.

When an electric field Ea or Eb higher than a certain threshold level and different from each other in polarity as shown in Figure 3 is applied to a cell having the above-mentioned characteristics by using voltage applications means 31a and 31b, the dipole moment is directed either in the upper direction 34a or in the lower direction 34b depending on the vector of the electric field Ea or Eb. In correspondence with this, the liquid crystal molecules are oriented in either of a first stable state 33a and a second stable state 33b.

When the above-mentioned ferroelectric liquid crystal is used as an optical modulation element, it is possible to obtain two advantages. First is that the response speed is quite fast. Second is that the orientation of the liquid crystal shows bistability. The second advantage will be further explained, e.g., with reference to Figure 3. When the electric field Ea is applied to the liquid crystal molecules, they are oriented in the first stable state 33a. This state is stably retained even if the electric field is removed. On the other hand, when the electric field Eb of which direction is opposite to that of the electric field Ea is applied thereto, the liquid crystal molecules are oriented to the second stable state 33b, whereby the directions of molecules are change. This state is similarly stably retained even if the electric field is

removed. Further, as long as the magnitude of the electric field Ea or Eb being applied is not above a certain threshold value, the liquid crystal molecules are placed in the respective orientation states.

Based on the arrangement and data format comprising image data accompanied with scanning line address data and by adopting communication synchronization using a SYNC signal as shown in Figures 4 and 5, there is provided a liquid crystal display apparatus of the present invention which uses the liquid crystal device according to the present invention as a display panel portion.

Image data are generated in a graphic controller 102 in an apparatus body and transferred to a display panel 103 by signal transfer means shown in Figure 4 and 5. The graphic controller 102 principally comprises a CPU (central processing unit, hereinafter referred to as "GCPU") 112 and a VRAM (video-RAM, image data storage memory) 114 is in charge of management and communication of image data between a host CPU 113 and the liquid crystal display apparatus (FLCD) 101. The control method according to the present invention is principally realized in the graphic controller 102. A light source is disposed at the back of the display panel 103.

Hereinbelow, the present invention will be explained more specifically with reference to examples. It is however to be understood that the present invention is not restricted to these examples.

"Parts" indicates "Parts by Weight" in the following exampels.

Example 1

2-(3-fluoro-4-hexyloxyphenyl)-5-(4-hexylphenyl) thiophene was synthesized through the following steps (1) to (5):

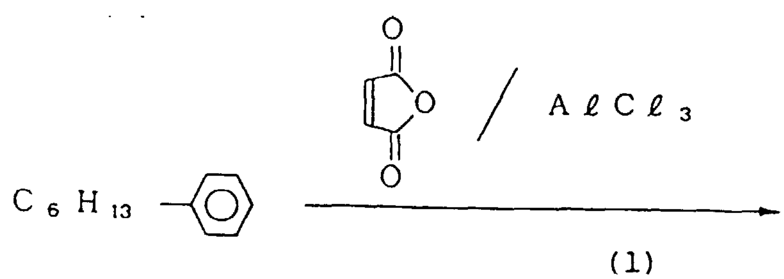

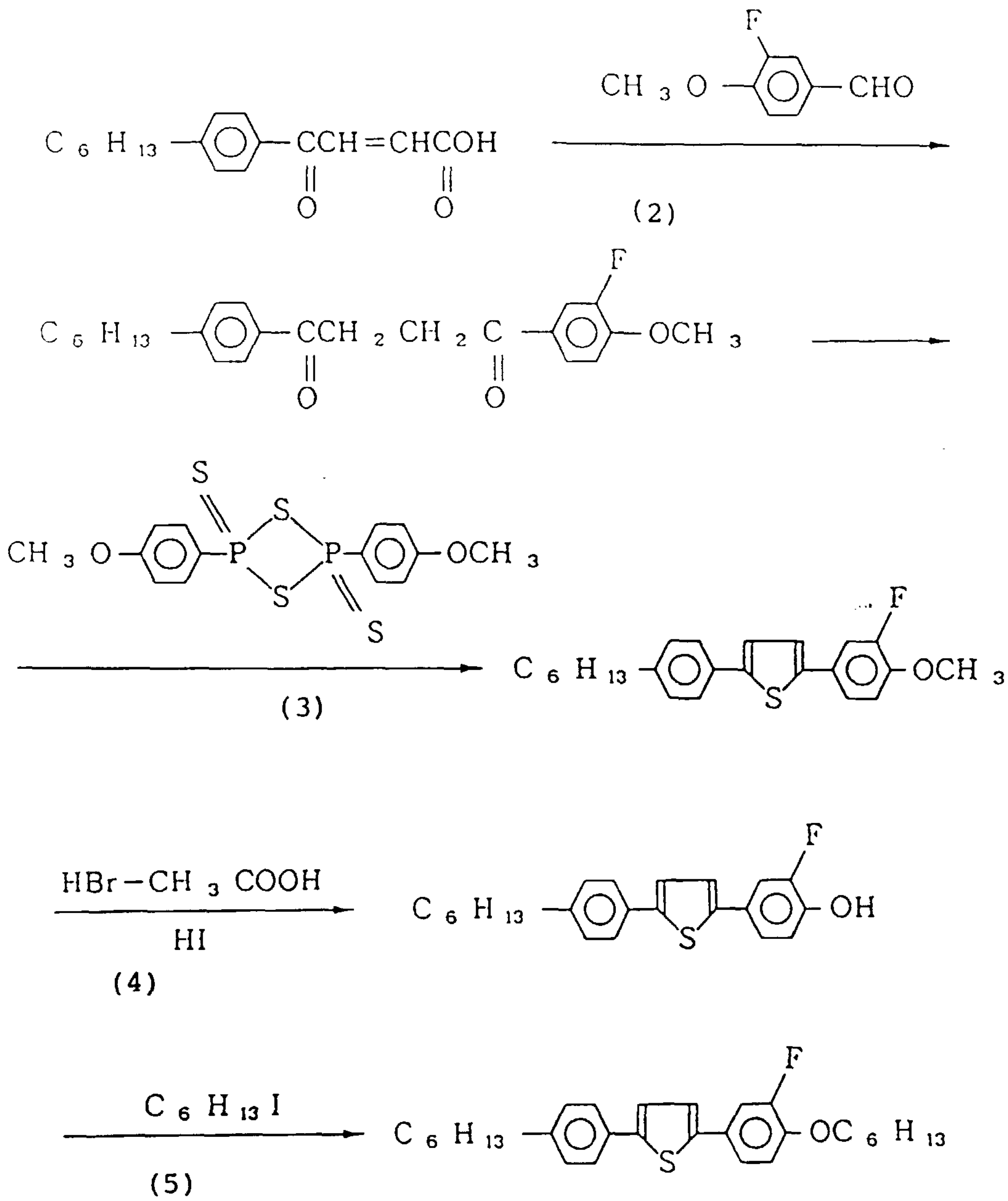


Step 1) Production of

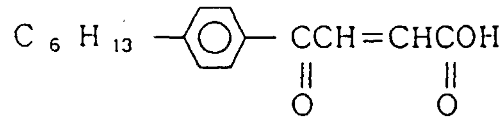

In a 200 ml-reaction vessel, 10 g (6.17 x $10^{-2}$ mol) of n-hexylbenzene, 6.65 g (6.79 x $10^{-2}$ mol) of maleic anhydride and 60 ml nitrobenzene were placed and cooled below 0°C. To the mixture, 18.3 g (1.37 x $10^{-1}$ mol) of anhydrous Aluminum chloride was slowly added under 0°C while stirring for 60 minutes, followed by reaction for 24 hours while the temperature was gradually raised to room temperature. To the reaction mixture, a mixture solution of 50 ml of water and 14 ml of concentrate chloric acid was added, followed by extraction with ethyl acetate, washing with water, drying and distilling-off of ethyl acetate to obtain an oil. The oil was dissolved in benzene, followed by filtration to remove an unsolved product. The filtrate was poured into 500 ml. of hexane to obtain a

crystal. The crystal was filtered and dried to obtain 2.7 g of a refined product. (Yield: 16.8%).

Step 2) Production of

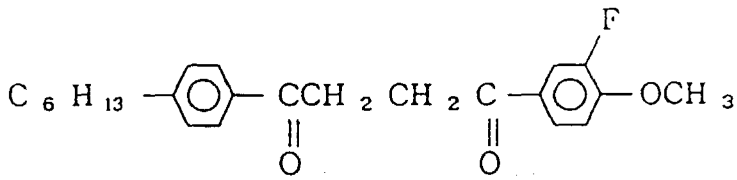

In a 200 ml-reaction vessel, 16.0 g ($6.15 \times 10^{-2}$ mol) of

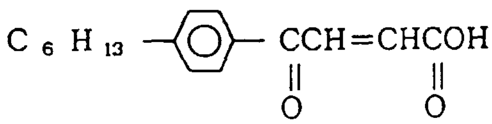

, 6.53 g ($6.16 \times 10^{-1}$ mol) of sodium carbonate and 65 ml of ethanol were placed, followed by stirring for 40 minutes at room temperature. The 9.48 g ($6.16 \times 10^{-1}$ mol) of 3-fluoro-4-methoxybenzaldehyde, 1.92 g of 3-ethyl-5-(2-hydroxymethyl)-4-methyl-1.3-thiazolium bromide and 6.24 g ($6.18 \times 10^{-1}$ mol) of triethylamine were added to the mixture, followed by heat-refluxing for 7 hours.

After the heat-refluxing, reaction solution was distilled off to obtain a resultant. To the resultant, 100 ml of water and 200 ml of chloroform were added, followed by extraction to obtain an organic layer. The organic layer was washed twice with 40 ml of a 10% sulfuric acid solution, 40 ml of a 5% sodium bicarbonate solution and 40 ml of water, dried with anhydrous sodium sulfate and distilled-off of the solvent to obtain a crude crystal. The crude crystal was recrystallized from ethanol to obtain a 15.0 g of a refined product. (Yield: 65.9%).

Step 3) Production of

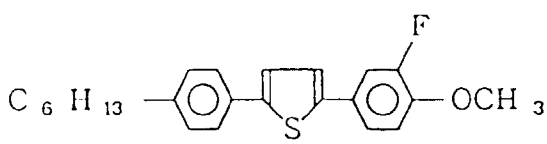

In a 200 ml-reaction vessel, 15.0 g ($4.05 \times 10^{-2}$ mol) of

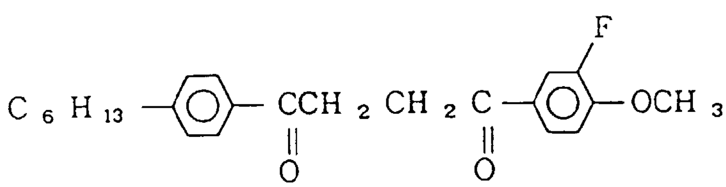

16.4 g ($4.05 \times 10^{-2}$ mol) of Lawesson's and 80 ml of toluene were placed followed by heat-refluxing for 3 hours, distilled-off of the solvent to obtain a resultant. The resultant was purified by column chromatography (eluent: n-hexane/ethylacetate = 6/1) to obtain 15.0 g of a refined product.

Step 4) Production of

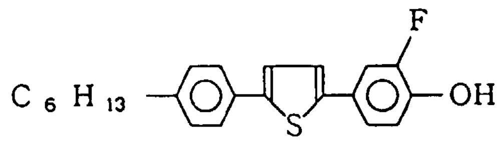

In a 300 ml-reaction vessel, 15.0 g (4.08 x $10^{-2}$ mol) of

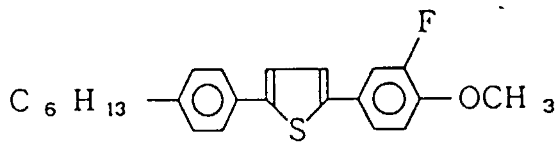

, 150 ml of a 25% acetic acid solution of hydrogen iodide and 7 ml of a 57% hydrogen iodide solution were placed, followed by heat-stirring for 26 hours at 100°C. The reaction solution was poured into 1 1 of water to obtain a crystal. The crystal was filtered, washed with water and dried, followed by purification by silica gel column chromatography (eluent: benzene/hexane = 2/1) to obtain 4.4 g of an objective product.

Step 5) Production of

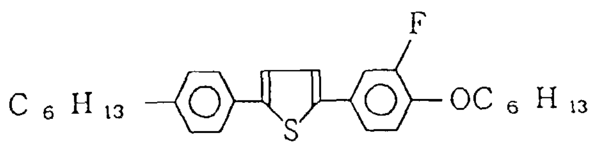

A solution was prepared by dissolving 0.19 g (2.8 x $10^{-3}$ mol) of potassium hydroxide and 0.71 g (2.0 x $10^{-3}$ mol) of

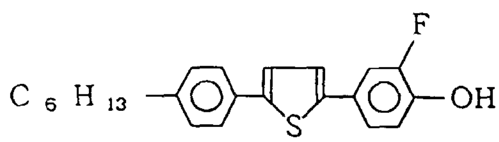

in 2 ml of butanol. To the solution, 0.47 g (2.2 x $10^{-3}$ mol) of hexane iodide and 1 ml of butanol were added followed by heat-refluxing for 3 hours.

After the reaction, the reaction solution was poured into water, followed by addition of chloric acid to make acidic and extraction with ethyl acetate to obtain an organic layer. The organic layer was dried with anhydrous sodium sulfate followed by distilling-off of the solvent, purification by silica gel column chromatography (eluent: toluene/hexane = 1/3) and recrystallizing from a mixture solvent of methanol and toluene to obtain 0.43 g of an objective product (Yield: 49%).

Phase Transition Temperature (°C)

$$\text{Cryst.} \underset{107}{\overset{110}{\rightleftarrows}} \text{SmC} \underset{118}{\overset{118}{\rightleftarrows}} \text{SmA} \underset{134}{\overset{135}{\rightleftarrows}} \text{Iso.}$$

Example 2

2-(3-fluoro-4-heptanoyloxyphenyl)-5-(4-hexylphenyl) thiophene was synthesized through the following steps (1) to (5):

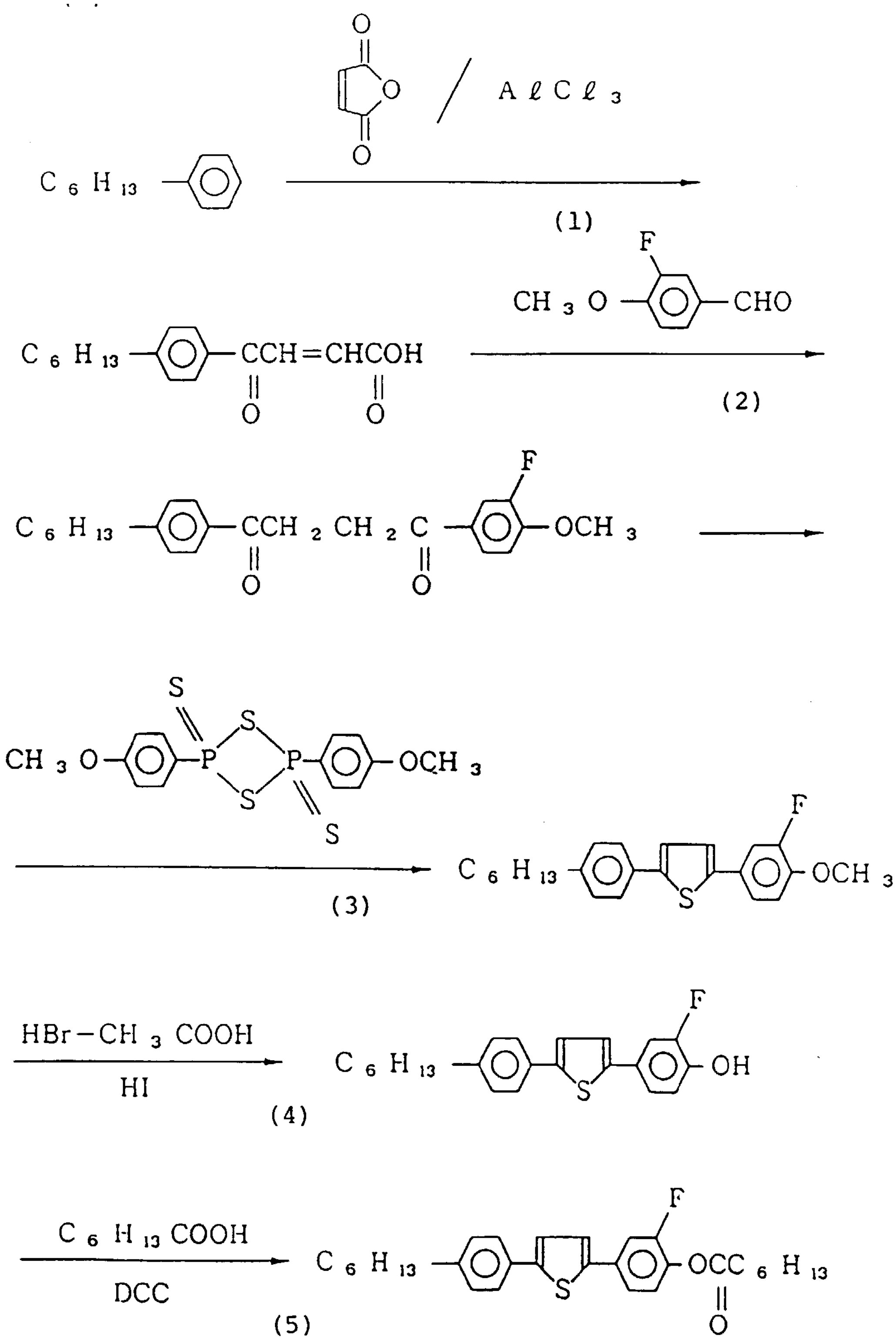


Step 1) to 4)

Production of

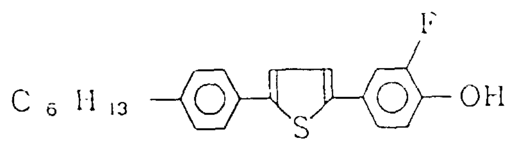

The above compound was synthesized in the same manner as Step (1) to (4) in Example 1.

Step 5)

Production of

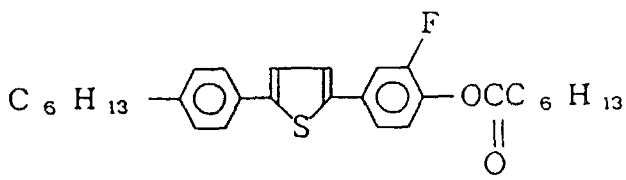

0.71 g (2.0 x $10^{-3}$ mol) of

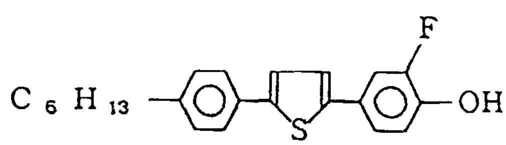

0.26 g (2.0 x $10^{-3}$ mol) of heptanoic acid, 0.42 g of N,N'-dicyclohexylcarbodiimide and 40 mg of 4-pyrrolidinopyridine were dissolved in 20 ml of dichloromethane, followed by reaction under stirring for a day at room temperature. An unsolved material was filtered off, followed by distilling-off of the solvent, purification by silica gel column chromatography (eluent: hexane/toluene = 1/1) and recrystallization from a mixture solvent of methanol and toluene to obtain 0.32 g of an objective product (Yield: 34%).

Phase Transition Temperature (°C)

$$\text{Cryst.} \underset{107}{\overset{110}{\rightleftarrows}} \text{SmC} \underset{118}{\overset{118}{\rightleftarrows}} \text{SmA} \underset{134}{\overset{135}{\rightleftarrows}} \text{Iso.}$$

Example 3

A liquid crystal composition A was prepared by mixing the following compounds in respectively indicated proportions.

| Structural formula | wt. parts |
|---|---|
| 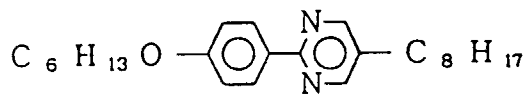 | 54.29 |
| 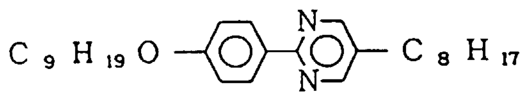 | 27.14 |
| 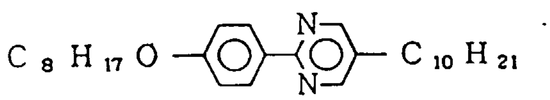 | 13.57 |
| 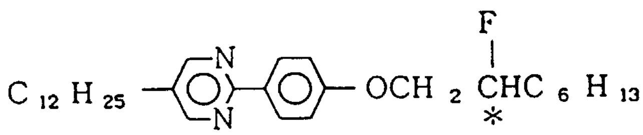 | 2.50 |
| 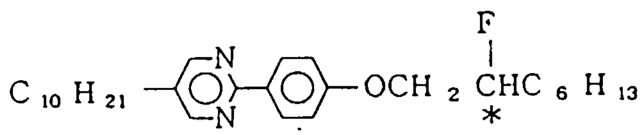 | 2.50 |

The liquid crystal composition A was further mixed with the following Example Compound No. I-4 in the proportions indicated below to provide a liquid crystal composition B.

| Ex. Comp. No. | Structural formula | wt. parts |
|---|---|---|
| I-4 | 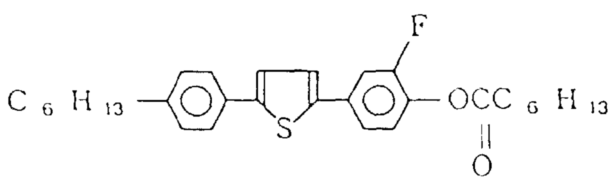 | 10 |

Composition A 90

Two 0.7 mm-thick glass plates were provided and respectively coated with an ITO file to form an electrode for voltage application, which was further coated with an insulating layer of vapor-deposited $SiO_2$. On the insulating layer, a 0.2%-solution of silane coupling agent (KBM-602, available from Shinetsu Kagaku K.K.) in isopropyl alcohol was applied by spinner coating at a speed of 2000 rpm for 15 seconds and subjected to hot curing treatment at 120°C for 20 min.

Further, each glass plate provided with an ITO film and treated in the above described manner was coated with a 1.5%-solution of polyimide resin precursor (SP-510, available from Toray K.K.) in dimethylacetoamide by a spinner coater rotating at 2000 rpm for 15 seconds. Thereafter, the coating film was subjected to heat curing at 300°C for 60 min. to obtain about 250 Å-thick film. The coating film was rubbed with acetate fiber-planted cloth. The thus treated two glass plates were washed with isopropyl alcohol. After alumina beads with an average particle size of 2.0 microns

were dispersed on one of the glass plates, the two glass plates were applied to each other with a bonding sealing agent (Lixon Bond, available from Chisso K.K.) so that their rubbed directions were parallel to each other and heated at 100°C for 60 min. to form a blank cell. The cell gap was found to be about 2 microns as measured by a Berek compensator.

Then, the liquid crystal composition B was heated into an isotropic liquid, and injected into the above prepared cell under vacuum and, after sealing, was gradually cooled at a rate of 20°C/hour to 25°C to prepare a ferroelectric liquid crystal device.

The ferroelectric liquid crystal device was subjected to measurement of the magnitude of spontaneous polarization Ps and an optical response time (time from voltage application until the transmittance change reaches 90% of the maximum under the application of a peak-to-peak voltage Vpp of 20V in combination with right-angle cross-nicol polarizers).

The results are shown below.

| | 10°C | 30°C | 45°C |
|---|---|---|---|
| Response time (μsec) | 488 | 202 | 95 |
| Ps ($nC/cm^2$) | 3.7 | 2.5 | 1.2 |

Example 4

A liquid crystal composition C was prepared by mixing the following compounds in respectively indicated proportions.

| Structural formula | wt. parts |
|---|---|
| 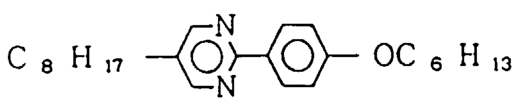 | 10 |
| 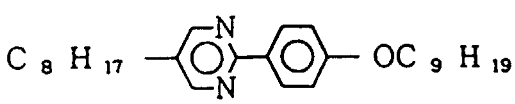 | 5 |

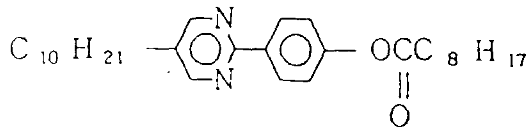 7

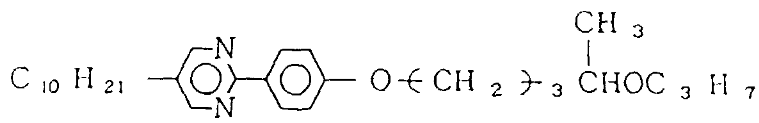 7

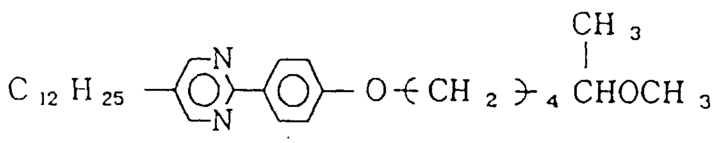 6

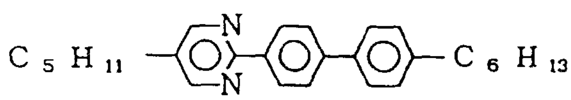 5

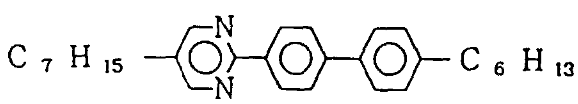 5

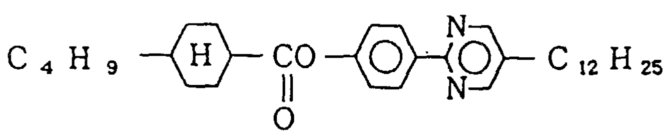 8

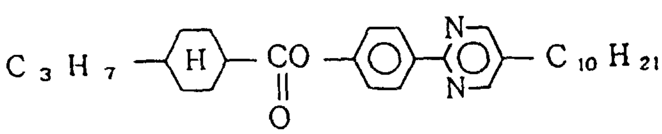 8

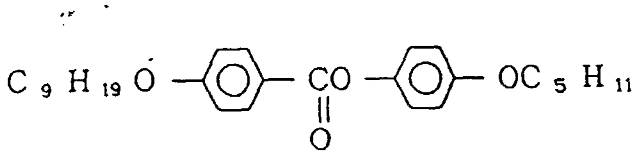 20

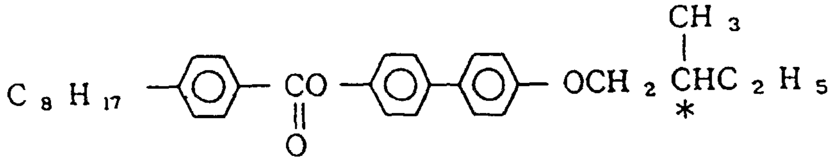 5

| | |
|---|---|
| 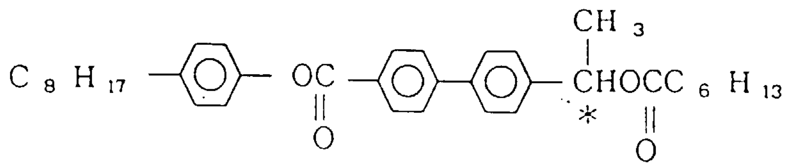 | 5 |
| 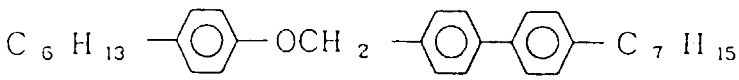 | 6 |
| 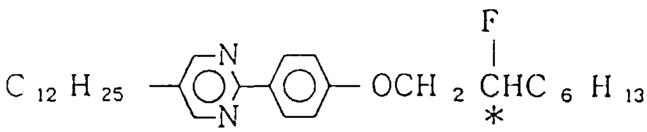 | 3 |

The liquid crystal composition C was further mixed with the following Example Compounds in the proportions indicated below to provide a liquid crystal composition D.

| Ex. Comp. No. | Structural formula | wt. parts |
|---|---|---|
| I-2 | 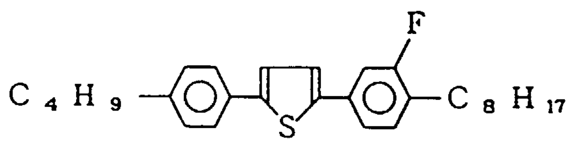 | 4 |
| I-49 | 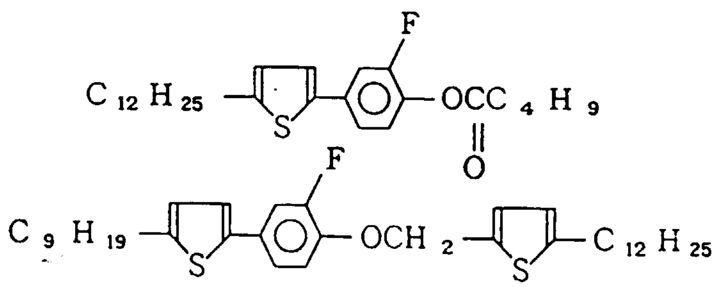 | 3 |
| I-98 | | 3 |

Composition C 90

A ferroelectric liquid crystal device was prepared in the same manner as in Example 3 except for using the composition D. The ferroelectric liquid crystal device was subjected to measurement of response time and observation of a switching state, etc. In the liquid crystal device, a monodomain with a good and uniform alignment characteristic was observed.

The following results were obtained.

| | 10°C | 25°C | 40°C |
|---|---|---|---|
| Response time (μsec) | 580 | 280 | 147 |

A clear switching motion was observed during driving and a good bistability was shown when the electric field was removed.

Comparative Example 1

A ferroelectric liquid crystal device was prepared in the same manner as in Example 3 except that the liquid crystal composition C prepared in Example 4 was injected into a cell. The measured values of the response time of the device were as follows:

| | 10°C | 25°C | 40°C |
|---|---|---|---|
| Response time (μsec) | 653 | 317 | 159 |

Example 5

A liquid crystal composition E was prepared by mixing the following compounds in place of Example Compounds (I-2), (I-49) and (I-98) used in Example 4, in respectively indicated proportions.

| Ex. Comp. No. | Structural formula | wt. parts |
|---|---|---|
| I-23 | 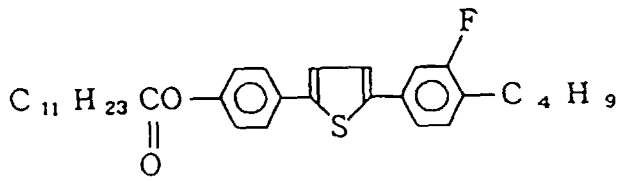 | 3 |
| I-74 | 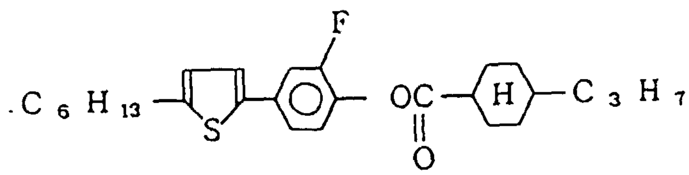 | 4 |
| I-85 | 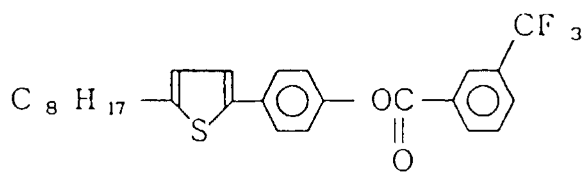 | 2 |
| I-107 | 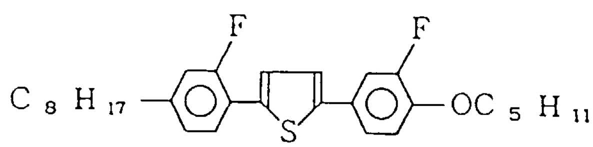 | 5 |

Composition C 86

A ferroelectric liquid crystal device was prepared in the same manner as in Example 3 except that the above liquid crystal composition E was used, and the device was subjected to measurement of optical response time and observation of a switching state, etc. In the liquid crystal device, a monodomain with a good and uniform alignment characteristic was observed.

The results of the measurement are shown below.

| | 10°C | 25°C | 40°C |
|---|---|---|---|
| Response time (μsec) | 615 | 294 | 156 |

Example 6

A liquid crystal composition F was prepared by mixing the following compounds in place of Example Compounds (I-2), (I-49) and (I-98) used in Example 3, in respectively indicated proportions.

Ex. Comp. No. Structural formula wt. parts

I-54 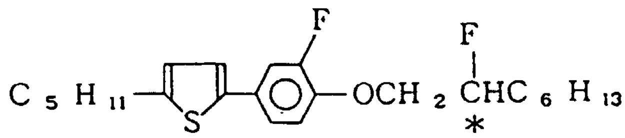 3

I-61 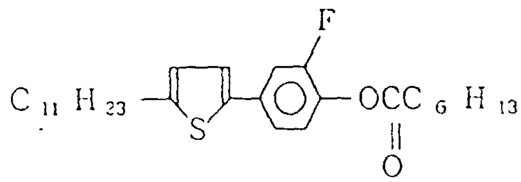 5

I-103 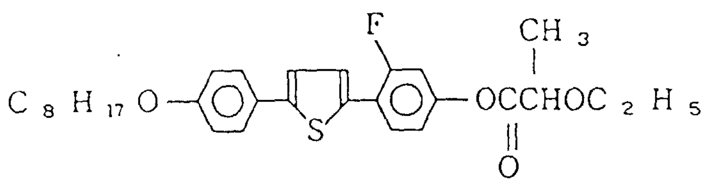 5

I-111 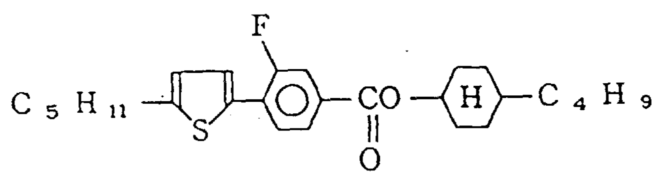 6

Composition C 81

A ferroelectric liquid crystal device was prepared in the same manner as in Example 3 except that the above liquid crystal composition F was used, and the device was subjected to measurement of optical response time and observation of a switching state, etc. In the liquid crystal device, a monodomain with a good and uniform alignment characteristic was observed.

The results of the measurement are shown below.

| | 10°C | 25°C | 40°C |
|---|---|---|---|
| Response time (μsec) | 606 | 309 | 158 |

Example 7

A liquid crystal composition G was prepared by mixing the following compounds in respectively indicated proportions.

Structural formula wt. parts

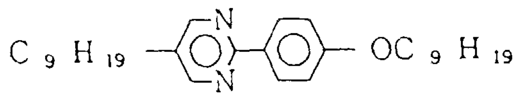

6

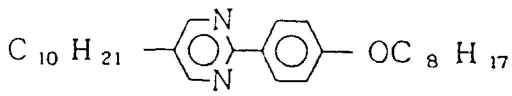

6

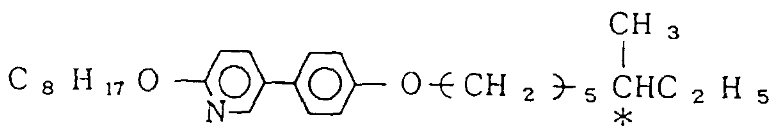

7

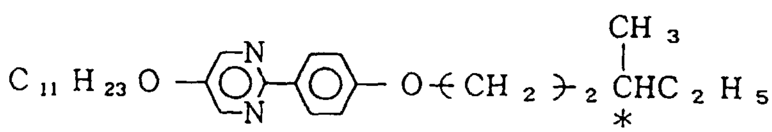

14

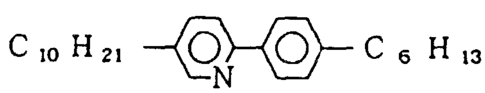

8

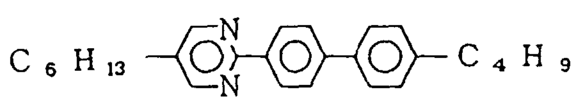

4

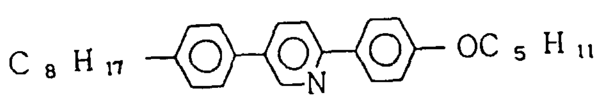

2

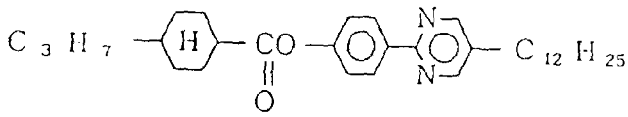

10

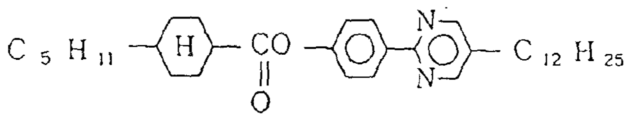

5

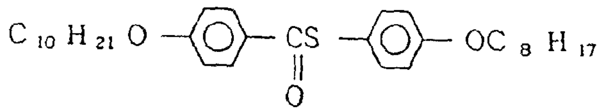

10

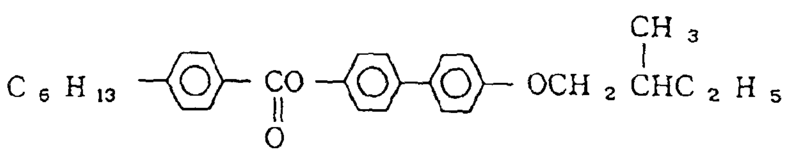

7

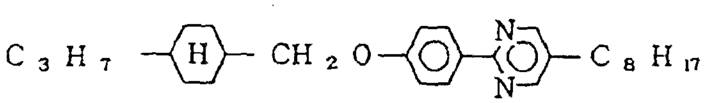

7

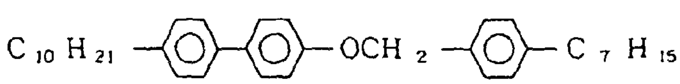

5

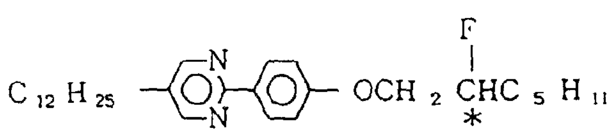

2

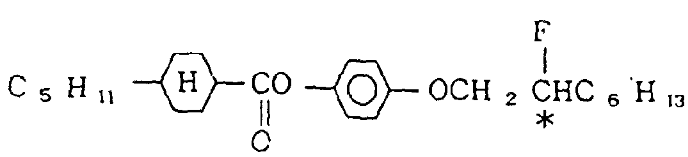

2

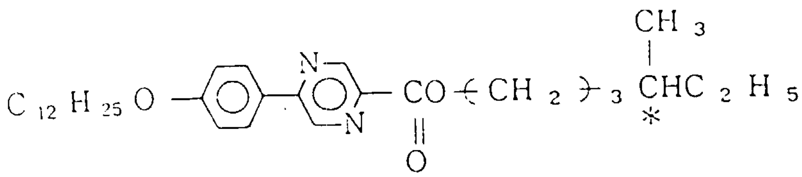 2

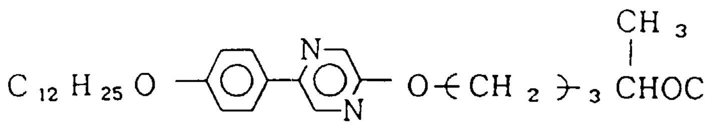 3

The liquid crystal composition G was further mixed with the following Example Compounds in the proportions indicated below to provide a liquid crystal composition H.

| Ex. Comp. No. | Structural formula | wt. parts |
|---|---|---|
| I-17 | 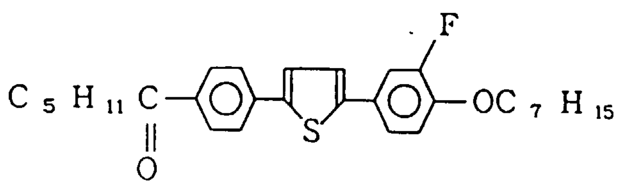 | 3 |
| I-35 | 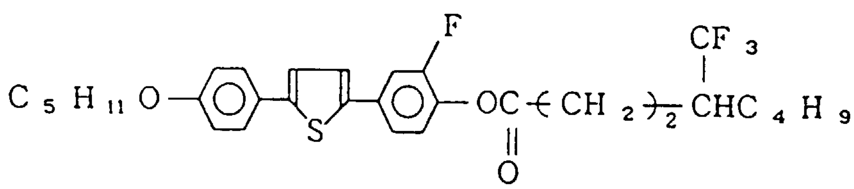 | 3 |
| I-61 | 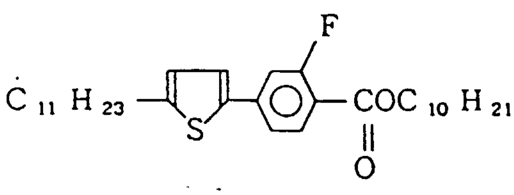 | 3 |
| I-79 | 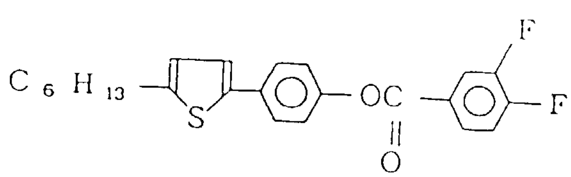 | 2 |

Composition G 89

A ferroelectric liquid crystal device was prepared in the same manner as in Example 3 except that the above liquid crystal composition H was used, and the device was subjected to measurement of optical response time and observation of a switching state, etc. In the liquid crystal device, a monodomain with a good and uniform alignment characteristic was observed.

The results of the measurement are shown below.

| | 10°C | 25°C | 40°C |
|---|---|---|---|
| Response time (μsec) | 556 | 295 | 163 |

Comparative Example 2

A ferroelectric liquid crystal device was prepared in the same manner as in Example 3 except that the liquid crystal composition G prepared in Example 7 was injected into a cell. The measured values of the response time of the device were as follows:

| | 10°C | 25°C | 40°C |
|---|---|---|---|
| Response time (μsec) | 668 | 340 | 182 |

Example 8

A liquid crystal composition J was prepared by mixing the following compounds in place of Example Compounds (I-17), (I-35), (I-61) and (I-79) used in Example 7, in the following indicated proportions.

| Ex. Comp. No. | Structural formula | wt. parts |
|---|---|---|
| I-53 | 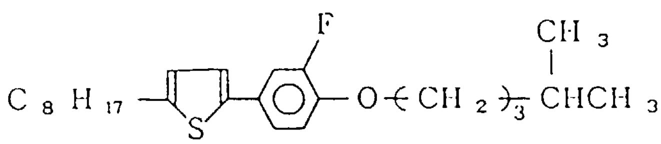 | 2 |
| I-77 | 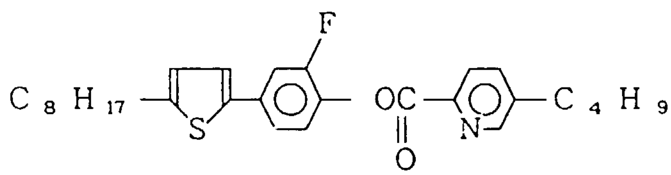 | 3 |
| I-128 | 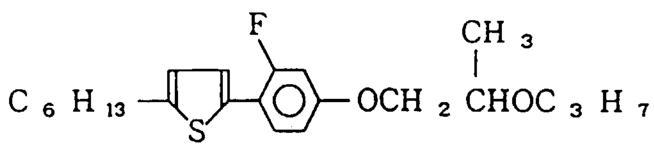 | 2 |

Composition G 93

A ferroelectric liquid crystal device was prepared in the same manner as in Example 3 except that the above liquid crystal composition J was used, and the device was subjected to measurement of optical response time and observation of a switching state, etc. In the liquid crystal device, a monodomain with a good and uniform alignment characteristic was observed.

The results of the measurement are shown below.

| | 10°C | 25°C | 40°C |
|---|---|---|---|
| Response time (μsec) | 595 | 306 | 173 |

Example 9

2-(3-fluoro-4-butyloxyphenyl)-5-(4-hexylphenyl) thiophene (Compound Example I-130) was prepared in the following manner.

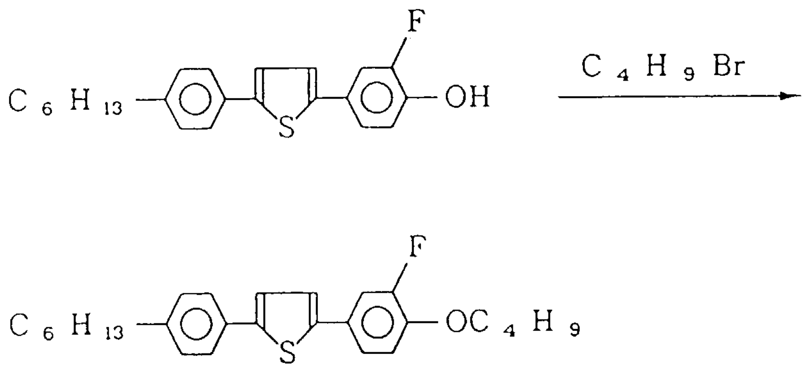


0.24 g of an objective product was prepared in the same manner as in Example 1 except that 0.28 g ($2.2 \times 10^{-3}$ mol) of butane bromide was used in place of 0.47 g ($2.2 \times 10^{-3}$ mol) of hexane iodide in Step 5 of Example 1. (Yield: 29%).

Example 10

2-(3-fluoro-4-decyloxyphenyl)-5-(4-hexylphenyl) thiophene (Compound Example I-132) was prepared in the following manner.

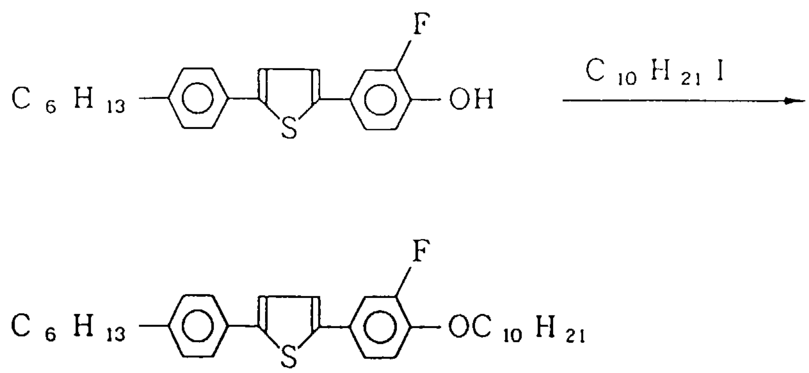


0.48 g of an objective product was prepared in the same manner as in Example 1 except that 0.54 g ($2.2 \times 10^{-3}$ mol) of decane iodine was used in place of 0.47 g ($2.2 \times 10^{-3}$ mol) of hexane iodide in Step 5 of Example 1. (Yield: 49%).

Example 11

2-(3-fluoro-4-butanoyloxyphenyl)-5-(4-hexylphenyl) thiophene (Compound Example I-129) was prepared in the following manner.

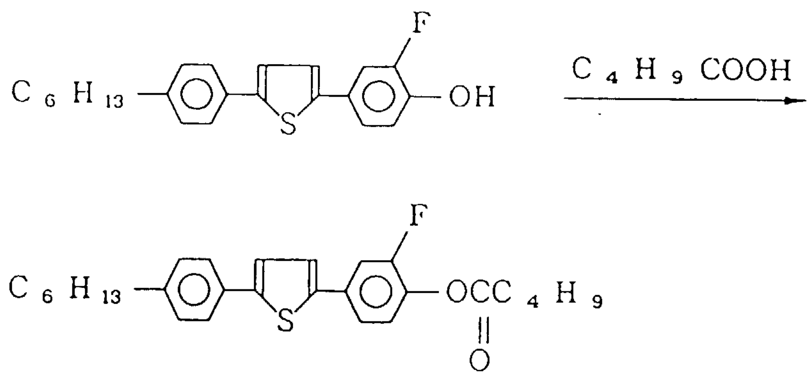


0.26 g of the above compound was prepared in the same manner as in Example 2 except that 0.21 g of pentanoic acid was used in place of 0.26 g (2.0 x $10^{-3}$ mol) of heptanoic acid in Step 2 of Example 2 (Yield: 30%).

Phase transition temperatures of compounds obtained in Example 9 to 11 are shown in Table 1.

Table 1

| Example | Structural formula | Phase transition temperature (°C) |
|---|---|---|
| 9 (I-130) | 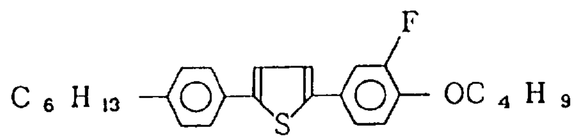 | 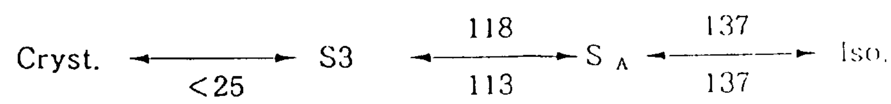 |
| 10 (I-132) | 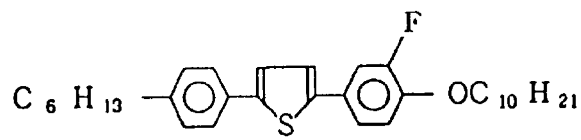 | 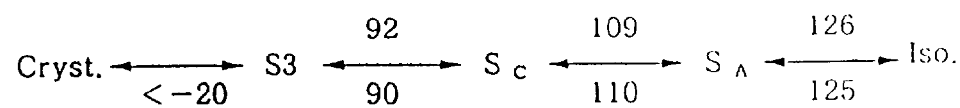 |
| 11 (I-129) | 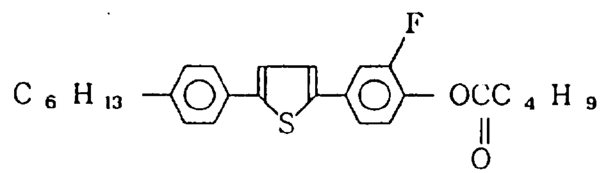 | 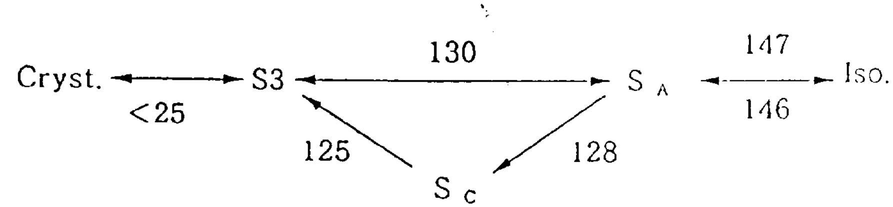 |

Example 12

A blank cell was prepared in the same manner as in Example 7 by using a 2% aqueous solution of polyvinyl alcohol resin (PVA-117, available from Kuraray K.K.) instead of the 1.5%-solution of polyimide resin precursor in dimethylacetoamide on each electrode plate. A ferroelectric liquid crystal device was prepared by filling the blank cell with the liquid crystal composition H prepared in Example 7. The liquid crystal device was subjected to measurement of optical response time in the same manner as in Example 7. The results are shown below.

| | 10°C | 25°C | 40°C |
|---|---|---|---|
| Response time (μsec) | 612 | 310 | 175 |

Example 13

A blank cell was prepared in the same manner as in Example 13 except for omitting the $SiO_2$ layer to form an alignment control layer composed of the polyimide resin layer alone on each electrode plate. A ferroelectric liquid crystal device was prepared by filling the blank cell with the liquid crystal composition H prepared in Example 7. The liquid crystal device was subjected to a measurement of optical response time in the same manner as in Example 7. The results are shown below.

| | 10°C | 25°C | 40°C |
|---|---|---|---|
| Response time (μsec) | 605 | 303 | 172 |

As is apparent from the above Examples 12 and 13, also in the cases of different device structures, the devices containing the ferroelectric liquid crystal composition H according to the present invention respectively provided a remarkably improved operation characteristic at a lower temperature and also a decreased temperature-dependent of the response speed similar to those in Example 7.

Example 14

A liquid crystal composition K was prepared by mixing the following example compounds in the indicated proportions.

| Structural formula | wt. parts |
|---|---|
| 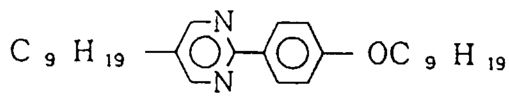 | 6 |
| 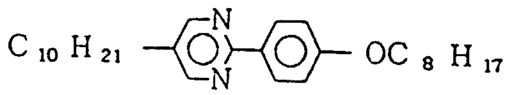 | 6 |
| 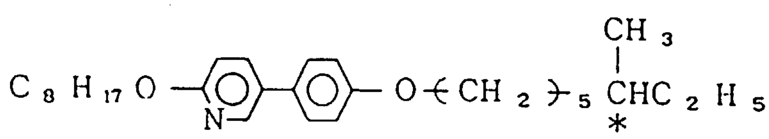 | 7 |
| 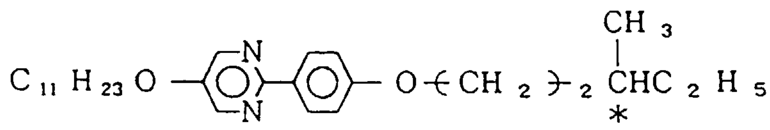 | 14 |
| 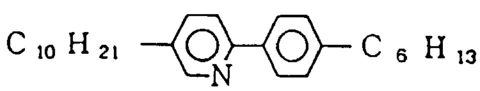 | 8 |
| 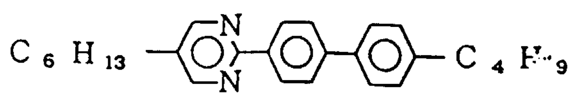 | 4 |

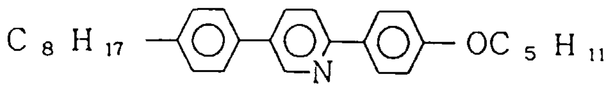

2

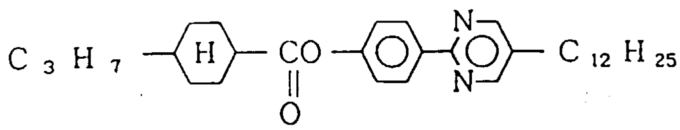

10

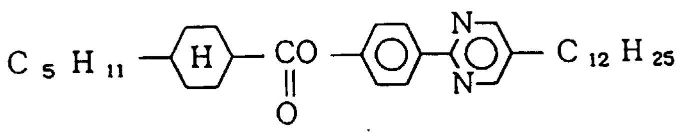

5

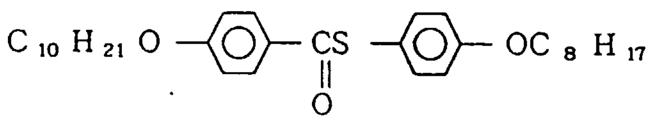

10

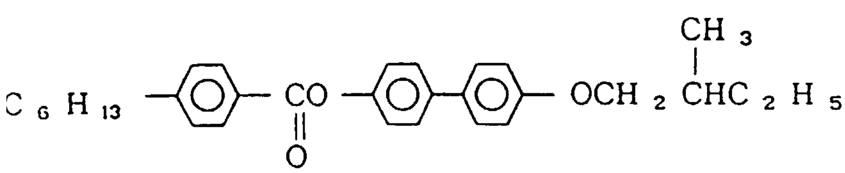

7

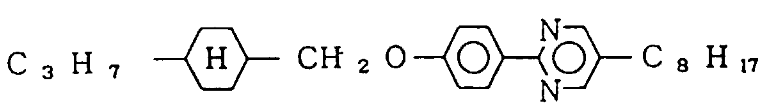

7

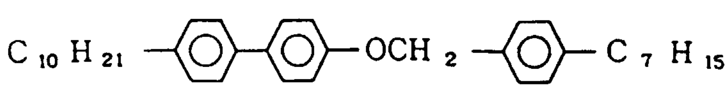

5

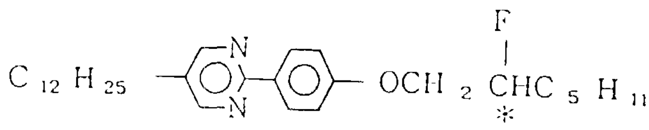 2

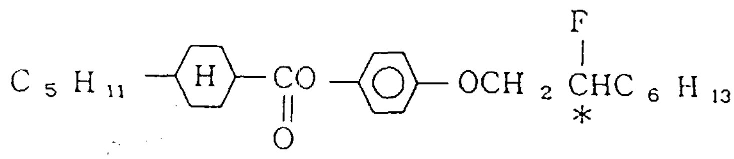 2

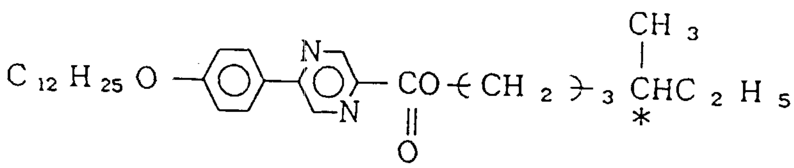 2

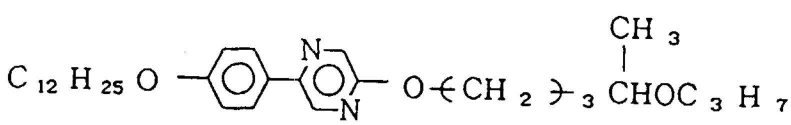 3

The liquid crystal composition K was further mixed with the following Example Compounds in the proportions indicated below to provide a liquid crystal composition L.

| Ex. Comp. No. | Structural formula | wt. parts |
|---|---|---|
| I-7 | 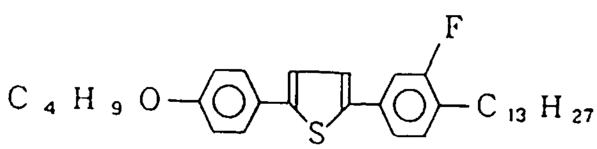 | 4 |
| I-8 | 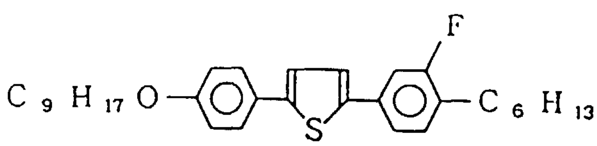 | 6 |
| I-93 | 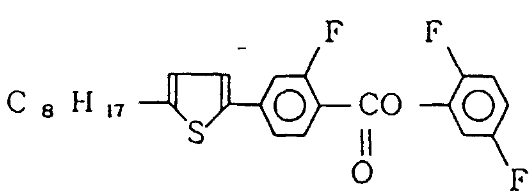 | 2 |

Composition K 88

A ferroelectric liquid crystal device was prepared in the same manner as in Example 3 except that the liquid crystal composition L was injected into a cell. The measured values of the response time of the device were as follows.

The following results were obtained.

| | 10°C | 25°C | 40°C |
|---|---|---|---|
| Response time (μsec) | 614 | 329 | 180 |

Comparative Example 3

A ferroelectric liquid crystal device was prepared in the same manner as in Example 3 except that the liquid crystal composition K prepared in Example 14 was injected into a cell. The measured values of the response time of the device were as follows.

| | 10°C | 25°C | 40°C |
|---|---|---|---|
| Response time (μsec) | 668 | 340 | 182 |

Example 15

A liquid crystal composition M was prepared by mixing the following Example Compounds in place of Example Compounds I-7, I-8 and I-93 used in Example 14, in respectively indicated proportions.

| Ex. Comp. No. | Structural formula | wt. parts |
|---|---|---|
| I-118 | 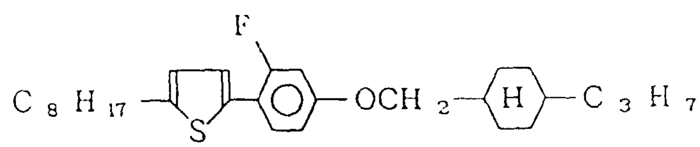 | 5 |
| I-46 | 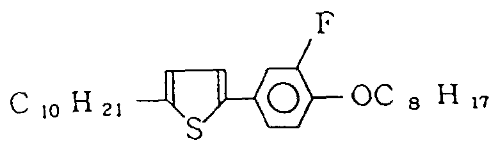 | 2 |
| I-13 7 | 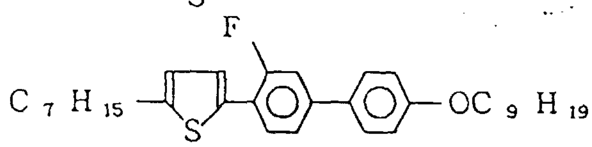 | 2 |

Composition K 91

A ferroelectric liquid crystal device was prepared in the same manner as in Example 3 except that the liquid crystal composition M was used, and the device was subjected to measurement of optical response time and observation of a switching state, etc. In the liquid crystal device, a monodomain with a good and uniform alignment characteristic was observed.

The following results were obtained.

| | 10°C | 25°C | 40°C |
|---|---|---|---|
| Response time (μsec) | 619 | 323 | 178 |

Example 16

A liquid crystal composition N was prepared by mixing the following Example Compounds in place of Example Compounds I-46, I-118 and I-13 7 used in Example 15, in respectively indicated proportions.

| Ex. Comp. No. | Structural formula | wt. parts |
|---|---|---|
| I-100 | 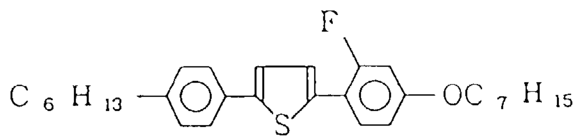 | 3 |
| I-124 | 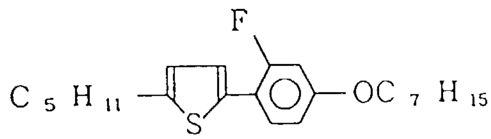 | 2 |
| I-139 | 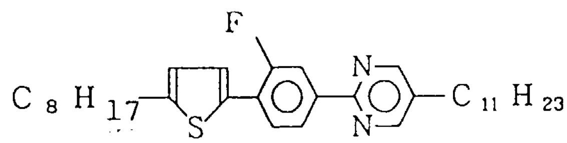 | 2 |

Composition K 93

A ferroelectric liquid crystal device was prepared in the same manner as in Example 3 except that the above liquid crystal composition N was used, and the device was subjected to measurement of optical response time and observation of a switching state, etc.

In the liquid crystal device, a monodomain with a good and uniform alignment characteristic was observed.

The results of the measurement are shown below.

| | 10°C | 25°C | 40°C |
|---|---|---|---|
| Response time (μsec) | 562 | 303 | 170 |

Results Of The Invention

As described hereinabove, the present invention, provides a mesomorphic compound which can be used in a liquid crystal composition to attain a good switching characteristic and a decreased temperature dependence of response speed. The present invention also provides a liquid crystal display device and apparatus utilizing the liquid crystal device which show good display characteristics in combination with a light source and a drive circuit.

A mesomorphic compound represented by the following formula [I]:

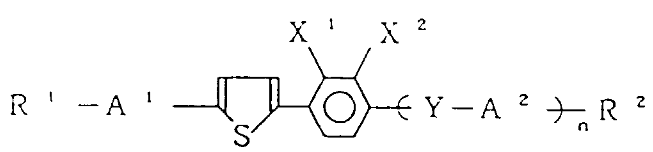 [ I ]

wherein $R_1$ and $R_2$ respectively denote a straight chain or branch chain alkyl group having 1-18 carbon atoms, wherein $-CH_2-$ in the alkyl group may be substituted by

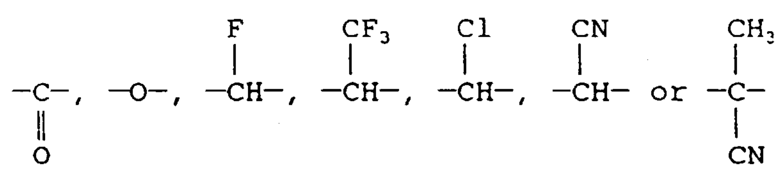
or

on condition that hetero atoms are not adjacent each other, $R^2$ may be hydrogen atom, halogen atom, cyano group and trifluoromethyl group; n is 0 or 1, with the proviso that $A^1$ denotes a single bond,

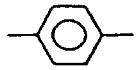 , 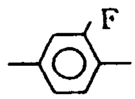 or 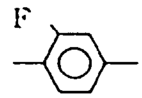

when n is 0, $A^1$ denotes a single bond when n is 1; $A^2$ denotes any one of

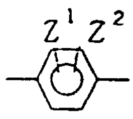 , 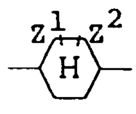 , 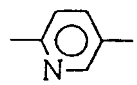 , 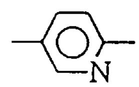 and 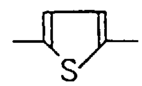

; and $X^1$, $X^2$, $Z^1$ and $Z^2$ denote independently any one of hydrogen atom, halogen atom, cyano group and trifluoromethyl group, with the proviso that $X^1$, $X^2$, $Z^1$ and $Z^2$ may not all be hydrogen atoms; Y denotes any one of

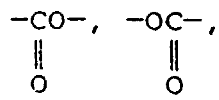

$-CH_2O-$, $-OCH_2-$ and a single bond.

## Claims

**1.** A mesomorphic compound represented by the following formula [I] :

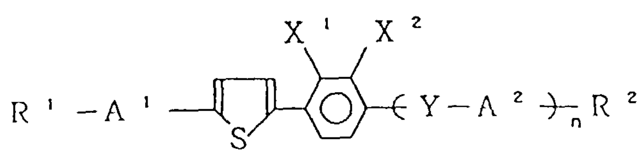

( I )

wherein $R^1$ and $R^2$ respectively denote a straight chain or branch chain alkyl group having 1-18 carbon atoms, wherein $-CH_2-$ in the alkyl group may be substituted by

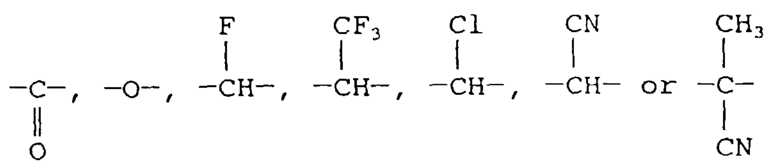

on condition that hetero atoms are not adjacent each other, $R^2$ may be replaced by hydrogen atom, halogen atom, cyano group or trifluoromethyl group; n is 0 or 1, with the proviso that (1) $A^1$ denotes a single bond,

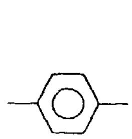 , 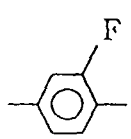 or 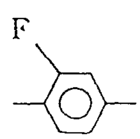

when n is 0, (2) $A^1$ denotes a single bond when n is 1; $A^2$ denotes any one of

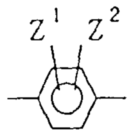 , 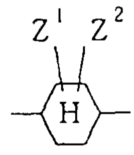 , 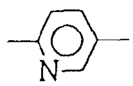 , 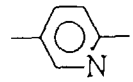 and 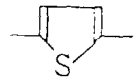

$X^1$, $X^2$, $Z^1$ and $Z^2$ denote independently any one of hydrogen atom, halogen atom, cyano group and trifluoromethyl group, with the proviso that $X^1$, $X^2$, $Z^1$ and $Z^2$ may not all be hydrogen atoms; Y denotes any one of

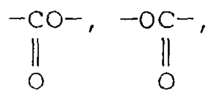

$-CH_2O-$, $-OCH_2-$ and a single bond.

2. A mesomorphic compound according to Claim 1, wherein $R^1$ denotes any one of the following groups (i)-(v):

(i)

$$-Y\{CH_2\}_nCH_3$$

wherein Y denotes any one of a single bond,

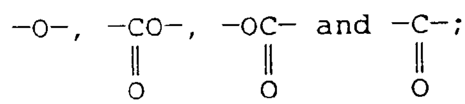

n is an integer of 0-17, preferably 4-16;

(ii)

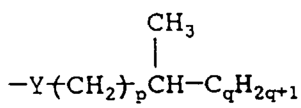

(optically active or inactive) wherein Y denotes any one of a single bond,

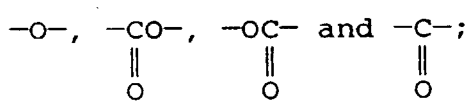

p is an integer of 0-7; q is an integer of 1-10;

(iii)

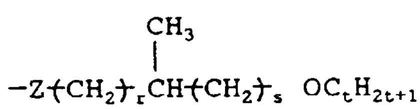

(optically active or inactive) wherein Z denotes any one of

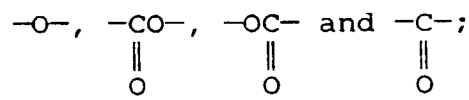

r is an integer of 0-7; s is an integer of 0 or 1; t is an integer of 1-14;
(iv)

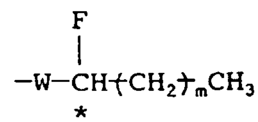

wherein W denotes any one of

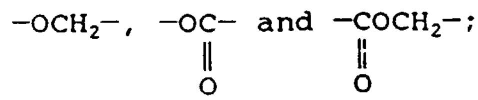

m is an integer of 0-14; and
(v)

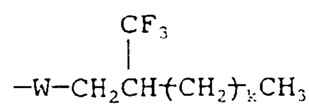

wherein w denotes any one of

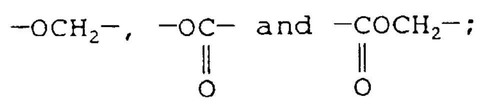

k is an integer of 0-12.

**3.** A mesomorphic compound according to Claim 1 wherein $R^2$ denotes any one of the following groups (i)-(v), hydrogen atom, halogen atom, cyano group and trifluromethyl group:

(i)

$$-Y\{CH_2\}_nCH_3$$

wherein Y denotes any one of a single bond,

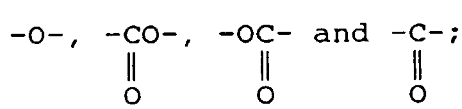

n is an integer of 0-17, preferably 4-16;
(ii)

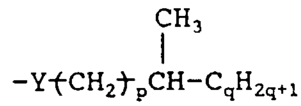

wherein Y denotes any one of a single bond,

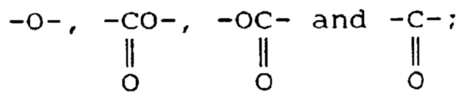

p is an integer of 0-7; q is an integer of 1-10 (optically active or inactive);

(iii)

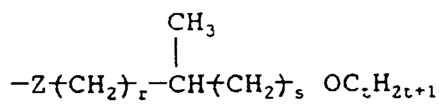

wherein Z denotes any one of

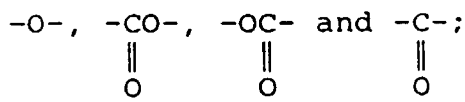

r is an integer of 0-7; s is an integer of 0 or 1; t is an integer of 1-14 (optically active or inactive);

(iv)

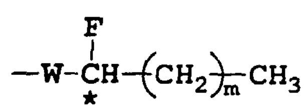

wherein W denotes any one of

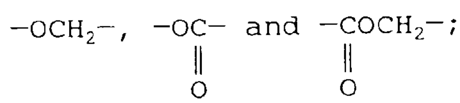

m is an integer of 0-14; and

(v)

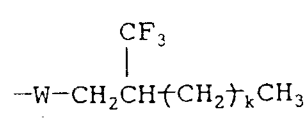

wherein W denotes any one of

$-OCH_2-$, 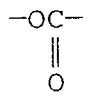 and 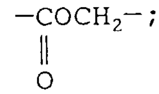;

k is an integer of 0-12.

4. A mesomorphic compound according to Claim 1, which is represented by the following Formulae (Ia)-(Id):

(Ia) 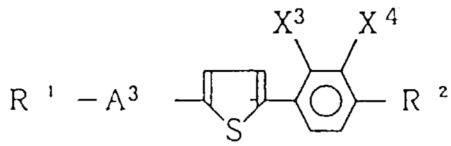

(Ib) 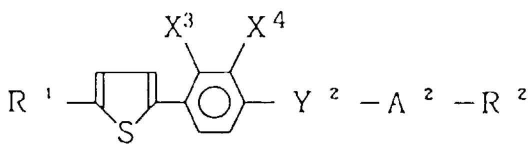

(Ic) 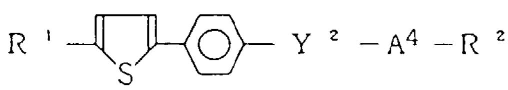

(Id) 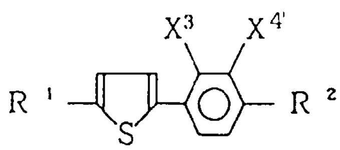

wherein $R^1$ and $R^2$ respectively denote a straight chain or branch chain alkyl group having 1-18 carbon atoms, wherein $-CH_2-$ in the alkyl group may be substituted by

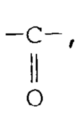, $-O-$, 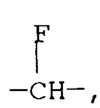, 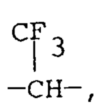, 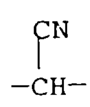, 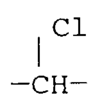 or 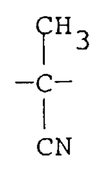

on condition that hetero atoms are not adjacent each other, $R^2$ may be replaced by hydrogen atom, halogen atom, cyano group or trifuloromethyl group; $A^2$ denotes any one of

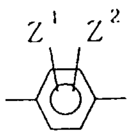 , 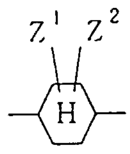 , 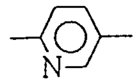 , 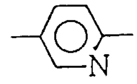 and 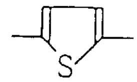

$X^1$, $X^2$, $Z^1$ and $Z^2$ denote independently any one of hydrogen atom, halogen atom, cyano group and trifluoromethyl group, with the proviso that $X^1$, $X^2$, $Z^1$ and $Z^2$ may not all be hydrogen atom; Y denotes any one of

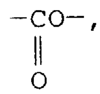 , 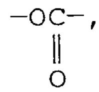 ,

$-CH_2O-$, $-OCH_2-$
and a single bond.
$A^3$ denotes

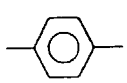 , 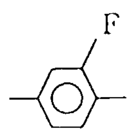 or 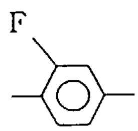

; $A^4$ denotes

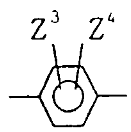 , 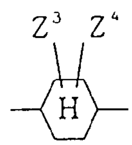

; $X^3$ and $X^4$ denote fluorine atom, cyano group, trifluoromethyl group or hydrogen atom, preferably fluorine atom (with the proviso that both $X^3$ and $X^4$ are not hydrogen atoms);
$Y^2$ denotes

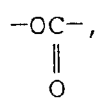 ,

$-OCH_2-$
or a single bond, preferably

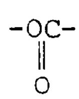

or a single bond; $Z^3$ and $Z^4$ denote fluorine atom, cyano group, trifluoromethyl group or hydrogen atom, preferably fluorine atom, trifluoromethyl group or hydrogen atom, with the proviso that both $Z^3$ and $Z^4$ are not hydrogen atoms.

**5.** A mesomorphic compound according to Claim 4, wherein $R^1$ denotes any one of the following groups (i)-(v):

(i)

$$-Y\{CH_2\}_nCH_3$$

wherein Y denotes any one of a single bond,

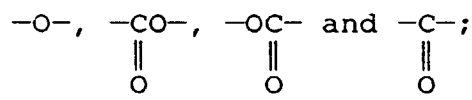

n is an integer of 0-17, preferably 4-16;
(ii)

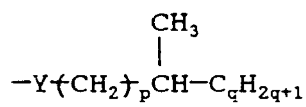

(optically active or inactive) wherein Y denotes any one of a single bond,

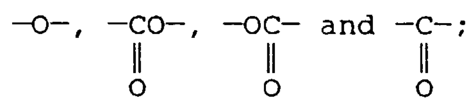

p is an integer of 0-7; q is an integer of 1-10;
(iii)

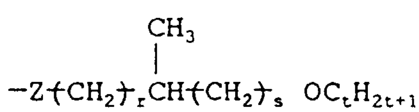

(optically active or inactive) wherein Z denotes any one of

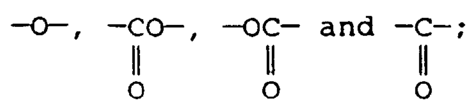

r is an integer of 0-7; s is an integer of 0 or 1; t is an integer of 1-14;
(iv)

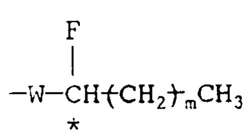

wherein W denotes any one of

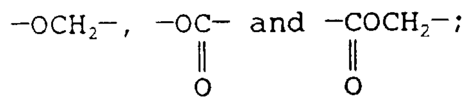

m is an integer of 0-14; and
(v)

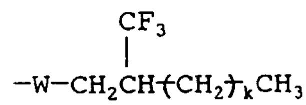

wherein w denotes any one of

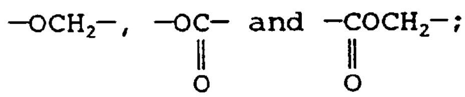

k is an integer of 0-12.

**6.** A mesomorphic compound according to Claim 4, wherein $R^2$ denotes any one of the following groups (i)-(v), hydrogen atom, halogen atom, cyano group or trifluromethyl group:

(i)

$$-Y(CH_2)_nCH_3$$

wherein Y denotes any one of a single bond,

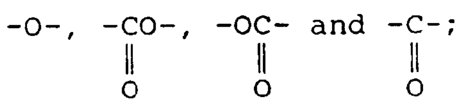

n is an integer of 0-17, preferably 4-16;
(ii)

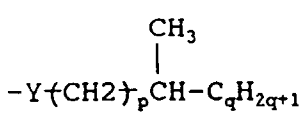

wherein Y denotes any one of a single bond,

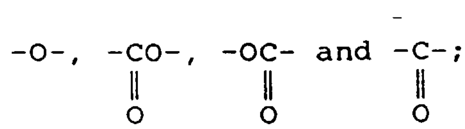

p is an integer of 0-7; q is an integer of 1-10 (optically active or inactive);
(iii)

$$-Z\!-\!(CH_2)_r\!-\!\overset{\overset{\displaystyle CH_3}{|}}{C}H\!-\!(CH_2)_s\!-\!OC_tH_{2t+1}$$

wherein Z denotes any one of

$$-O-,\quad -\underset{\underset{\displaystyle O}{\|}}{C}O-,\quad -O\underset{\underset{\displaystyle O}{\|}}{C}-\quad \text{and}\quad -\underset{\underset{\displaystyle O}{\|}}{C}-;$$

r is an integer of 0-7; s is an integer of 0 or 1; t is an integer of 1-14 (optically active or inactive);
(iv)

$$-W-\underset{*}{\overset{\overset{\displaystyle F}{|}}{C}}H\!-\!(CH_2)_m CH_3$$

wherein W denotes any one of

$$-OCH_2-,\quad -O\underset{\underset{\displaystyle O}{\|}}{C}-\quad \text{and}\quad -\underset{\underset{\displaystyle O}{\|}}{C}OCH_2-;$$

m is an integer of 0-14; and
(v)

$$-W-CH_2\overset{\overset{\displaystyle CF_3}{|}}{C}H\!-\!(CH_2)_k CH_3$$

wherein w denotes any one of

$$-OCH_2-,\quad -O\underset{\underset{\displaystyle O}{\|}}{C}-\quad \text{and}\quad -\underset{\underset{\displaystyle O}{\|}}{C}OCH_2-;$$

k is an integer of 0-12.

**7.** A liquid crystal composition comprising 1-80% by weight of one of a mesomorphic ocmpound of Claim 1-6 and a second mesomorphic compound in appropriate portions.

**8.** A liquid crystal composition according to Claim 7, which contains 1-60% by weight of the mesomorphic compound of claims 1 to 6.

**9.** A liquid crystal composition according to Claim 8, which contains 1-40% by weight of the mesomorphic compound of claims 1 to 6.

**10.** A liquid crystal composition according to Claim 7, wherein the second mesomorphic compound is selected from

the group consisting of the following Formulae (II) - (XI):

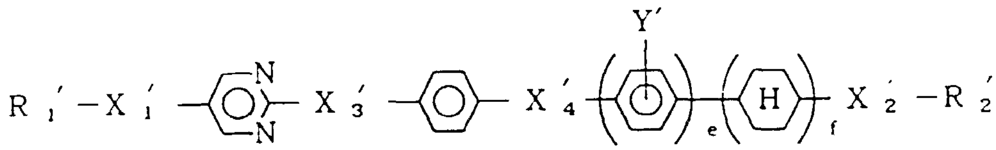

(II)

wherein e denotes 0 or 1 and f denotes 0 or 1 with proviso that e + f = 0 or 1; Y' denotes H, halogen, $CH_3$ or $CF_3$; $X_1$' and $X_2$' denote a single bond,

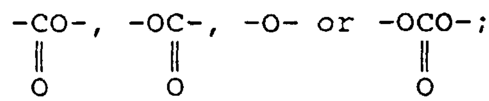

and $X_3$' and $X_4$' denote a single bond,

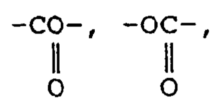

$-OCH_2-$ or $-CH_2O-$.

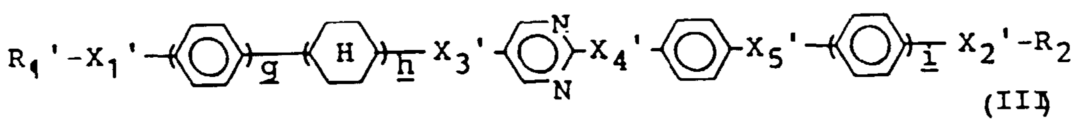

(III)

wherein g and h denote 0 or 1 with the proviso that g + h = 1; i denotes 0 or 1; $X_1$' and $X_2$' denote a single bond,

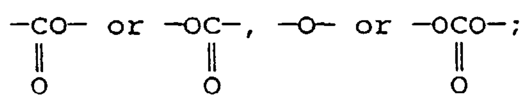

and $X_3$', $X_4$', and $X_5$' denote a single bond,

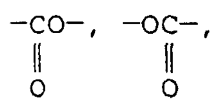

$-CH_2O-$ or $-OCH_2-$.

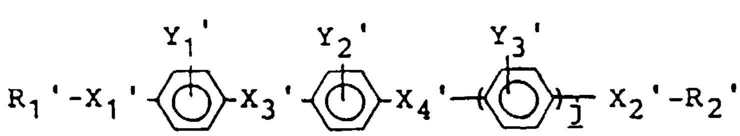

( )(IV)

wherein j denotes 0 or 1; $Y_1'$, $Y_2'$, and $Y_3'$ denote H, halogen, $CH_3$ or $CF_3$; $X_1'$ and $X_2'$ denote a single bond,

$$-\underset{\underset{O}{\|}}{C}O-,\ -O\underset{\underset{O}{\|}}{C}-,\ -O-\ \text{and}\ -O\underset{\underset{O}{\|}}{C}O-;$$

and
$X_3'$ and $X_4'$ denote a single bond,

$$-\underset{\underset{O}{\|}}{C}O-,\ -O\underset{\underset{O}{\|}}{C}-,\ -CH_2O-,\ -OCH_2-,\ -CH_2CH_2-,\ -\underset{\underset{O}{\|}}{C}S-,\ -S\underset{\underset{O}{\|}}{C}-,$$

$$-(CH_2)_2\underset{\underset{O}{\|}}{C}S-,\ -(CH_2)_2\underset{\underset{O}{\|}}{C}O-,\ -CH{=}CH-\underset{\underset{O}{\|}}{C}O-\ \text{or}\ -O-.$$

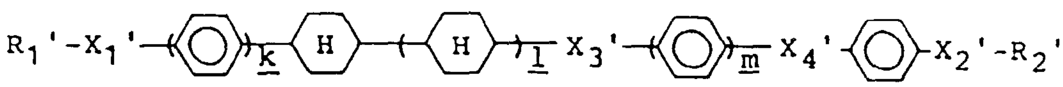

(V)

wherein k, l, and m denote 0 or 1 with the proviso that k + l + m = 0, 1 or 2; $X_1'$ and $X_2'$ denote a single bond,

$$-\underset{\underset{O}{\|}}{C}O-\quad -O\underset{\underset{O}{\|}}{C}-,\ -O-\ \text{or}\ -O\underset{\underset{O}{\|}}{C}O-;$$

and $X_3'$ and $X_4'$ denote a single bond,

$$-\underset{\underset{O}{\|}}{C}O-,\ -O\underset{\underset{O}{\|}}{C}-,$$

$-CH_2O-$ or $-OCH_2-$.

Herein, $R_1'$ and $R_2'$ denote a linear or branched alkyl group having 1 - 18 carbon atoms in wich alkylgroup one or two or more non-neighboring methylene groups can be replaced by -CHX- (wherein X is halogen) and in wich alkylgroup further one or two or more non-neighboring methylene groups other than those directly connected to $X_1'$ or $X_2'$ can be replaced by at least one species of

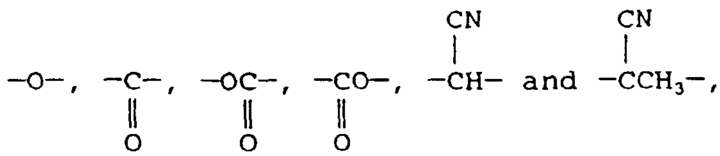

and

with the proviso that $R_1'$ and $R_2'$ are not connected to a ring structure when $R_1'$ and $R_2'$ denote a halogenated alkyl group containing one methylene group replaced by

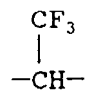

or -CHX- (wherein X is halogen).

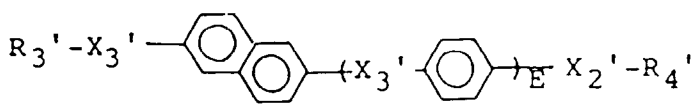

(VI )

wherein E denotes 0 or 1; $X_2'$ denotes a single bond,

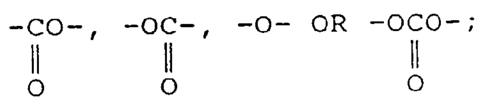

OR

and
$X_3'$ denotes a single bond,

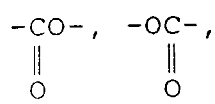

$CH_2O$- or -$OCH_2$-.

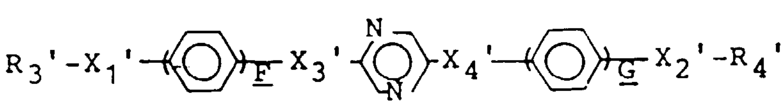

(VII )

wherein F and G denote 0 or 1; $X_1'$ and $X_2'$ denote a single bond,

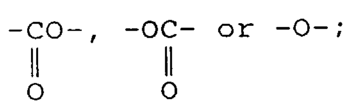

or

and $X_3$' and $X_4$' denote a single bond,

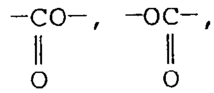

$-CH_2O-$ or $-OCH_2-$.

Herein, $R_3$' and $R_4$' denote a linear or branched alkyl group having 1 - 18 carbon atoms in which alkylgroup one or two or more non-neighboring methylene groups can be replaced by -CHX- (wherein X is halogen) and in which alkylgroup further one or two or more non-neighboring methylene groups other than those directly connected to $X_1$' or $X_2$' can be replaced by at least one species of

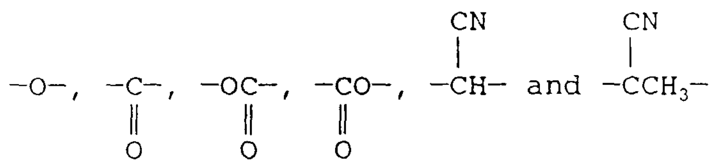

with proviso that $R_3$' and $R_4$' do not connect to a ring structure when $R_3$' and $R_4$' denote a halogenated alkyl group containing one methylene group replaced with -CHX- (wherein X is halogen).

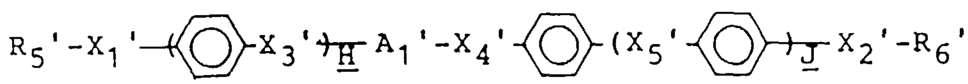

(VIII)

wherein H and J denote 0 or 1 with proviso that H + J = 0 or 1; $X_1$' and $X_2$' denote a single bond,

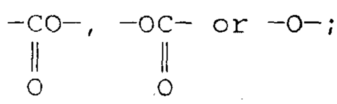

$A^1$' denotes

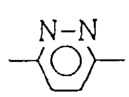

,

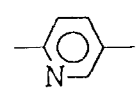

or

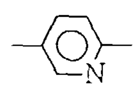

; and $X_3$', $X_4$' and $X_5$' denote a single bond,

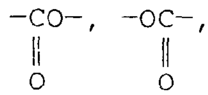

$-CH_2O-$ or $-OCH_2-$.

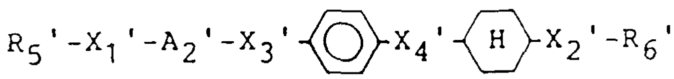

(IX)

wherein $X_1'$ and $X_2'$ denote a single bond,

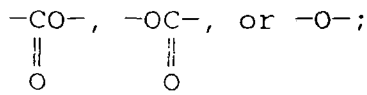

$A_2'$ denotes;

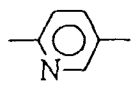

or

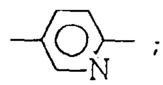

; and $X_3'$ and $X_4'$ denote a single bond,

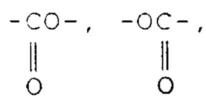

$-CH_2O-$ or $-OCH_2-$.

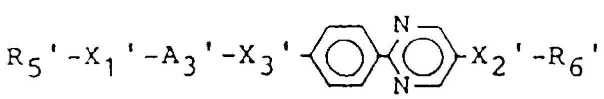

(X)

wherein $X_1'$ and $X_2'$ denote a single bond,

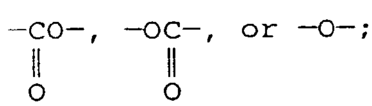

$A_3'$ denotes

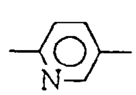

or

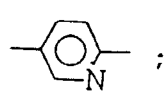

; and $X_3$' denotes a single bond,

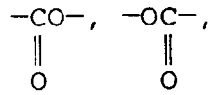

$-CH_2O-$ or $-OCH_2-$.

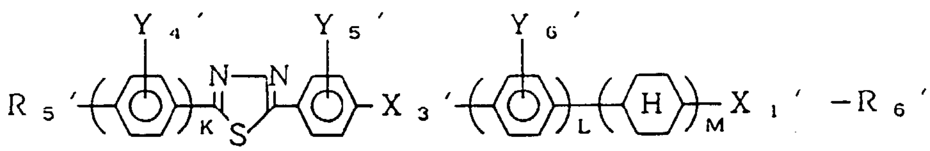

(XI)

wherein K, L and M independently denote 0 or 1 with proviso that K + L + M = O or 1; $Y_4$', $Y_5$' and $Y_6$' denote H or F; $X_1$' denotes a single bond,

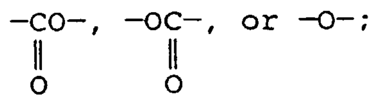

or

$X_3$' denotes a single bond,

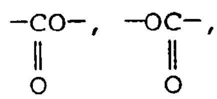

$-CH_2O-$ or $-OCH_2-$.

Herein, $R_5$' and $R_6$' denote a linear or branched alkyl group having 1 - 18 carbon atoms (in which alkylgroup) one or two or more non-neighboring methylene groups other than those directly connected to $X_1$' or $X_2$' can be replaced by at least one species of

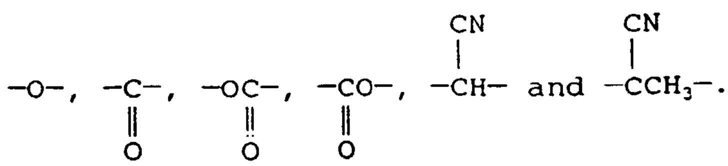

and

**11.** A liquid crystal composition according to Claim 10, wherein the second mesomorphic compound is selected from the group consisting of the following Formulae (IIa-d), (III a-c), (IVa,b) (Va-f), (VIa,b), (VIIa,b), (VIIIa-c), (IXa,b), (Xa-g) and (XIa-d):

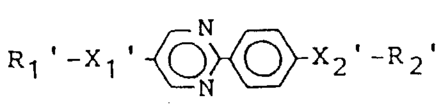

(II a),

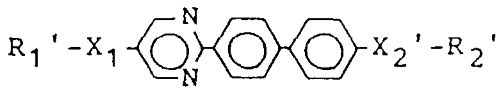

(II b),

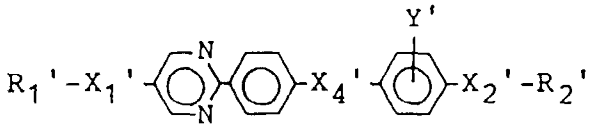

(II c),

and

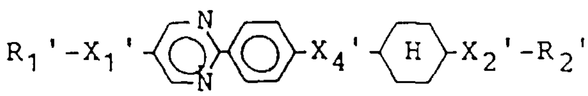

(II d).

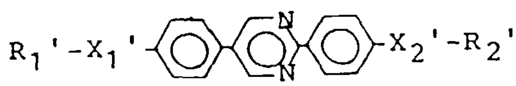

(III a),

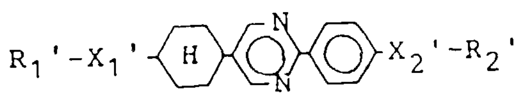

(III b),

and

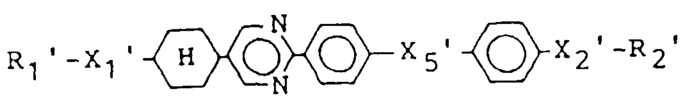

(III c).

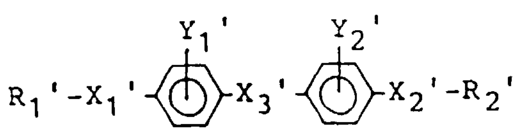

(IV a),

and

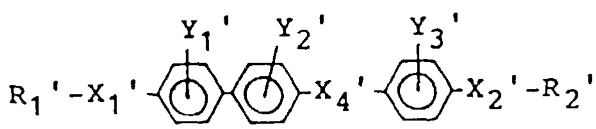

(IV b).

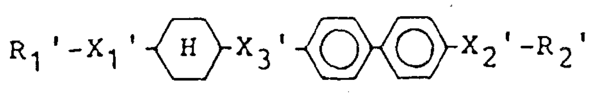

(V a),

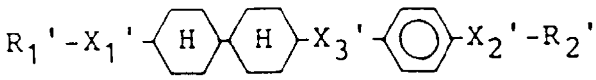

(V b),

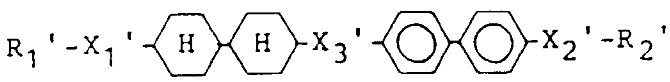

(V c),

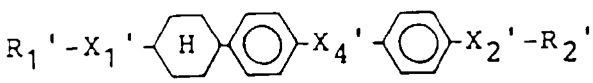

(V d),

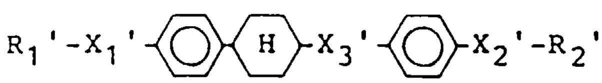

(V e),

and

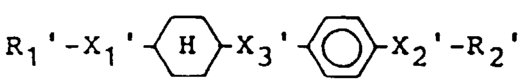

(V f).

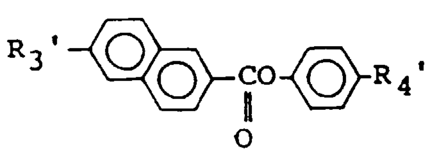

(VI a),

and

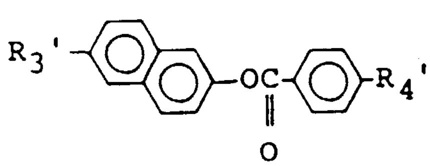

(VI b).

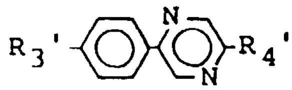

(VII a),

and

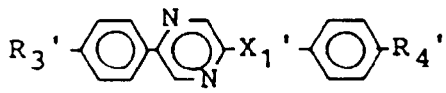

(VII b).

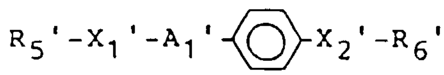

(VIII a),

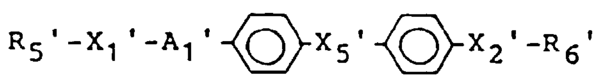

(VIII b),

and

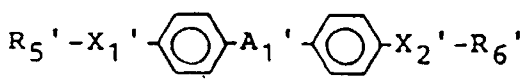

(VIII c).

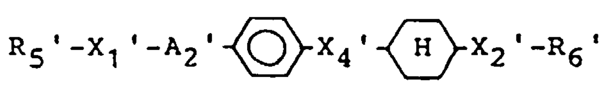

(IX a),

and

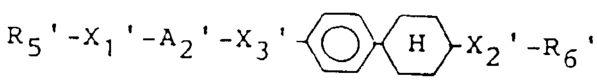

(IX b).

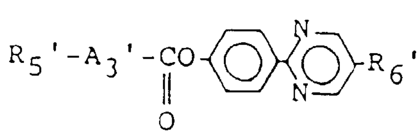

(X a),

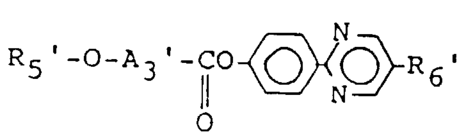

(X b),

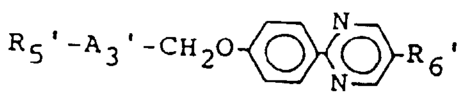

(X c),

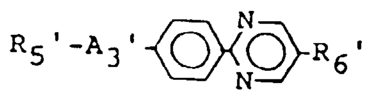

(X d),

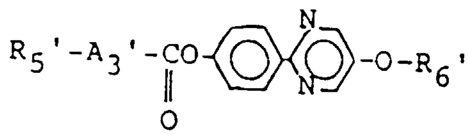

(X e),

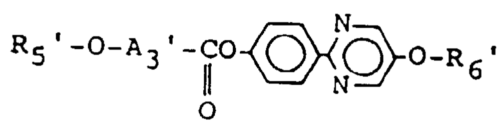

(X f),

and

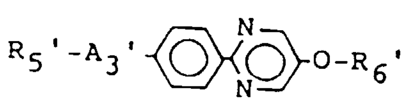

(Xg).

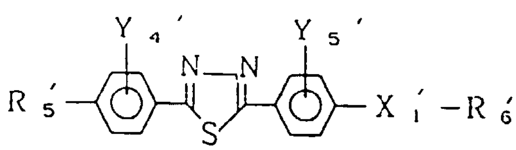

(XI a)

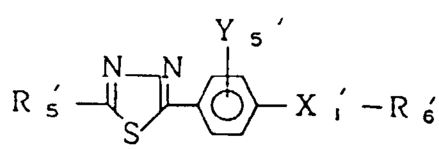

(XI b)

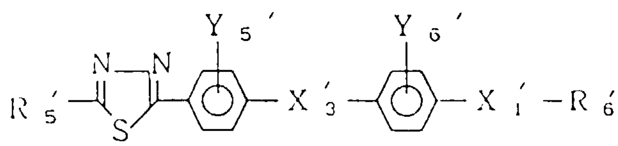

(XI c)

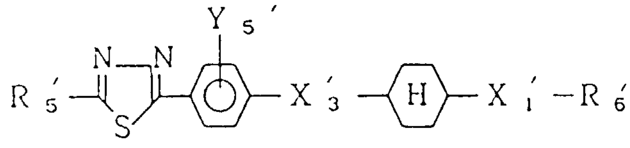

(XI d)

**12.** A liquid crystal composition according to Claim 11, wherein (a) $R_1$' and $R_2$' denote any one of the following groups (i)-(ix), (b) $R_3$' and $R_4$' denote any one of the following groups (i)-(v), (viii) or (ix) and (c) $R_5$' and $R_6$' denote any one of the following groups (i)-(iii), (v), (viii) or (ix):

i) a linear alkyl group having 1 - 15 carbon atoms;

ii)

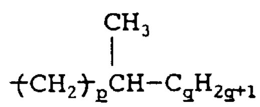

(optically active or inactive); wherein p denotes an integer of O - 5 and g denotes an integer of 1 - 11;

iii)

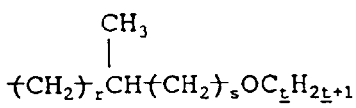

(optically active or inactive) wherein r denotes an integer of 0 - 6, s denotes 0 or 1, and t denotes an integer of 1 - 14;

iv)

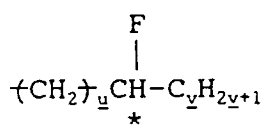

wherein u denotes 0 or 1 and v denotes an integer of 1 - 16;

(v)

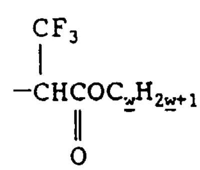

(optically active or inactive) wherein w denotes an integer of 1 - 15;

vi)

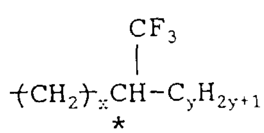

wherein X denotes an integer of 0 - 2 and y denotes an integer of 1 - 15;

vii)

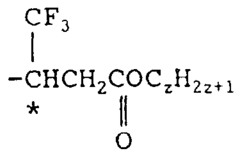

wherein z denotes an integer of 1 - 15;

viii)

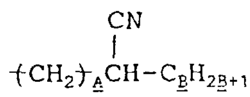

(optically active or inactive) wherein A denotes an integer of 0 - 2 and B denotes an integer of 1 - 15; and

ix)

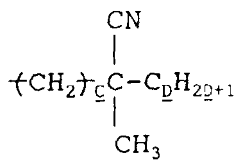

(optically active or inactive) wherein C denotes an integer of 0 - 2 and D denotes an integer of 1 - 15.

**13.** A liquid crystal composition according to Claim 10, wherein the second mesomorphic compound is selected from the group consisting of the following Formulae (IIaa-dc), (IIIaa-cb), (IVaa-bf), (Vaa-fa), (VIIaa-bb), (VIIIaa-cc), (IXaa-bb), (XIaa-db):

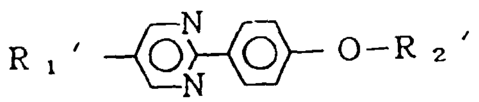

(IIaa) ,

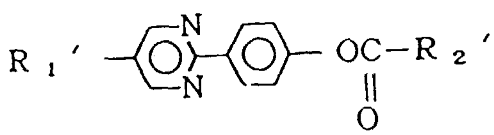

(IIab) ,

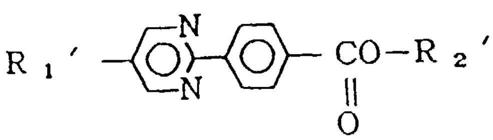

(IIac)

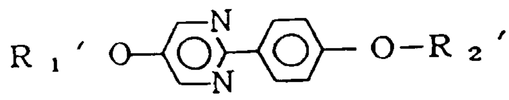

(II ad)

,

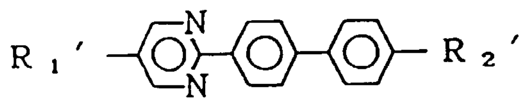

(II ba)

,

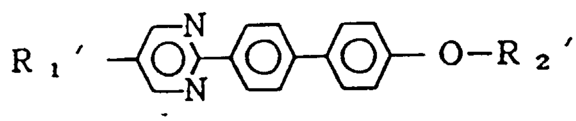

(II bb)

,

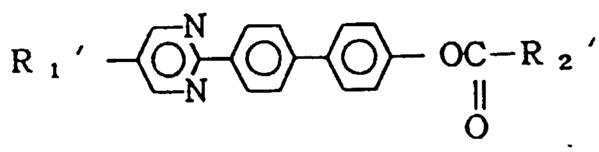

(II bc)

,

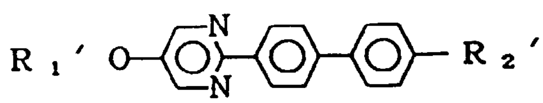

(II bd)

,

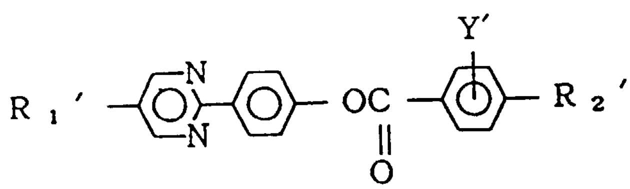

(II ca)

,

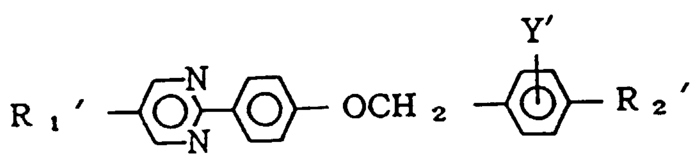

(II cb) ,

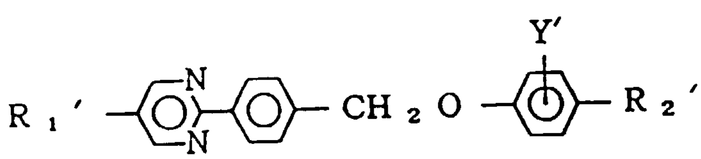

(II cc) ,

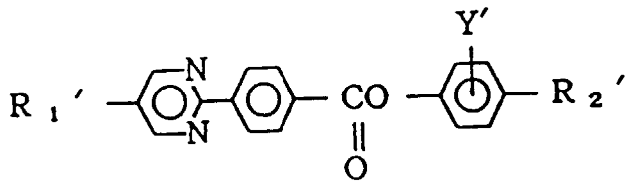

(IIcd)

,

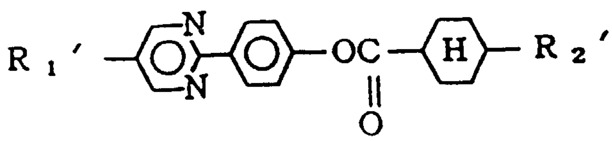

(IIda)

,

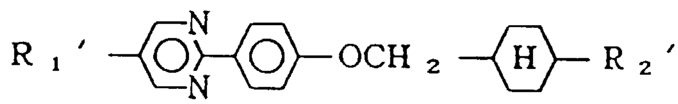

(IIdb),

and

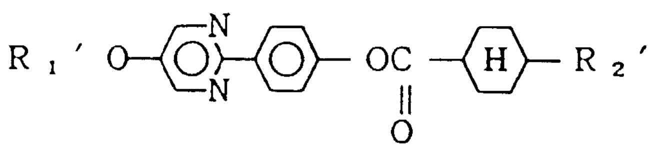

(IIdc)

.

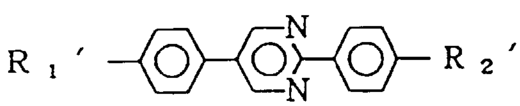

(IIIaa)

,

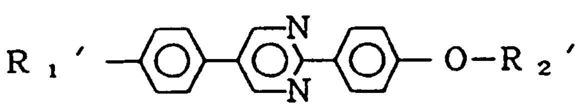

(IIIab)

,

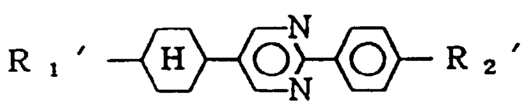

(IIIba)

,

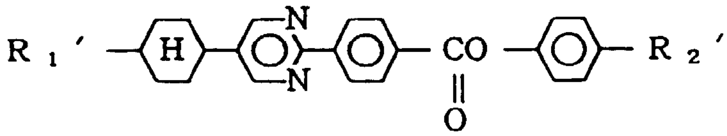

(IIIca)

,

and

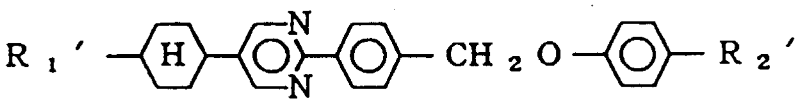

(IIIcb)

.

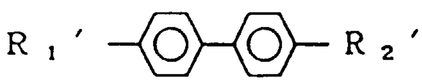

(IVaa)

,

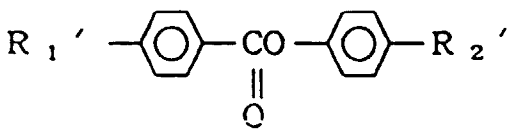

(IVab)

,

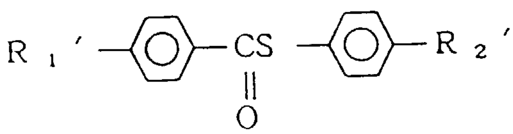

(VIac)

,

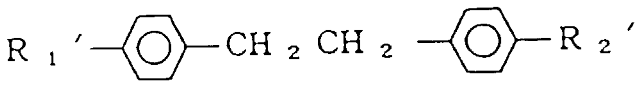

(IVad)

,

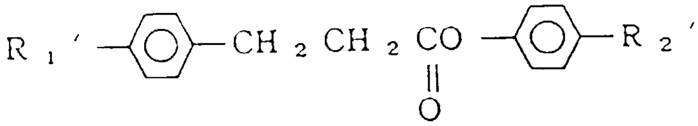

(IVae)

,

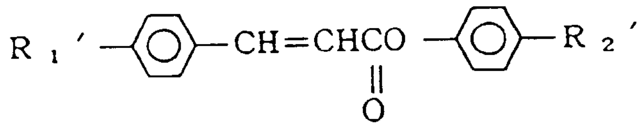

(IVaf)

,

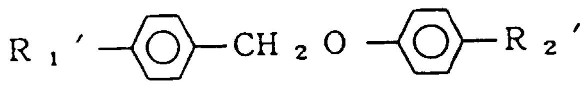

(IVag)

,

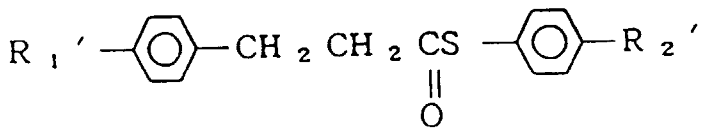

(IVah)

,

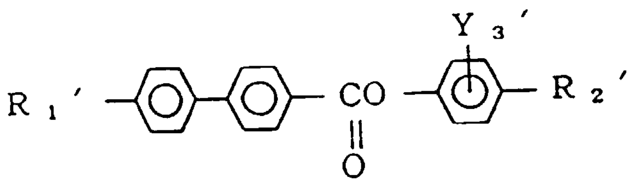

(IVba)

,

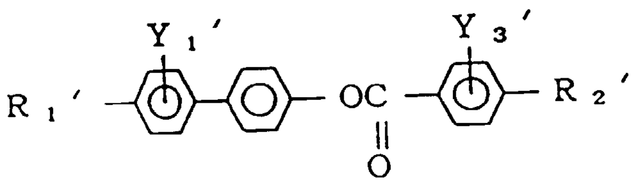

(IVbb)

,

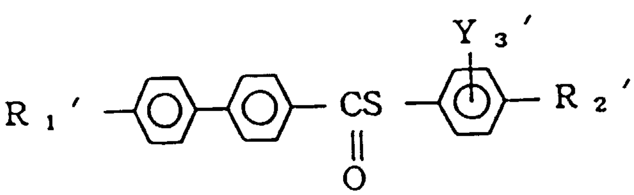

(IVbc)

,

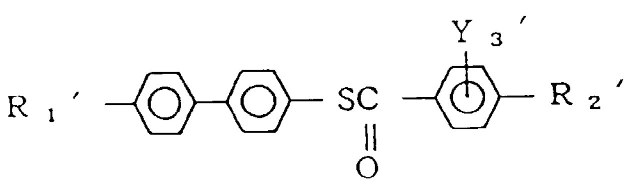

(IVbd)

,

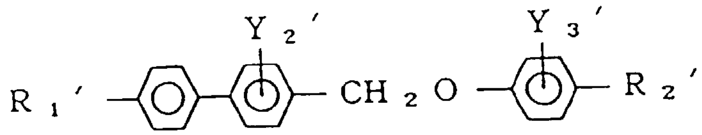

(IV be) ,

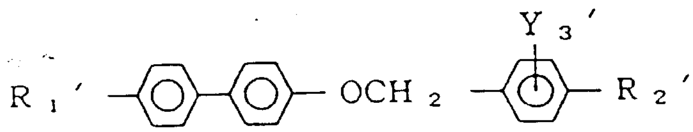

(IV bf)

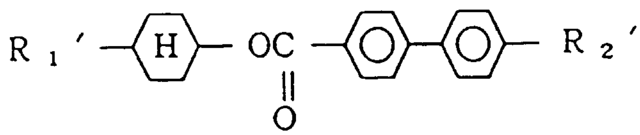

(V aa) ,

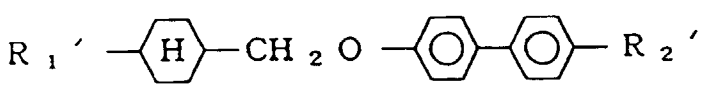

(V ab) ,

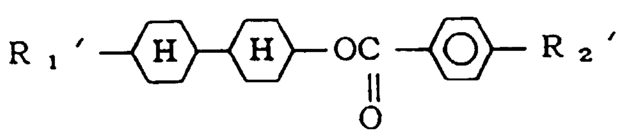

(V ba) ,

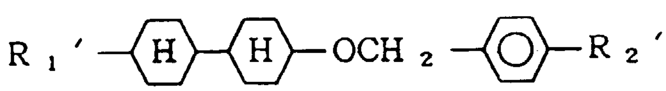

(V bb) ,

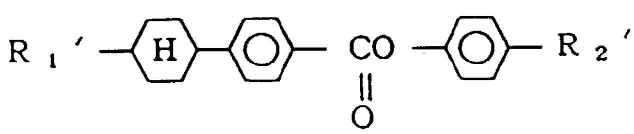

(V da) ,

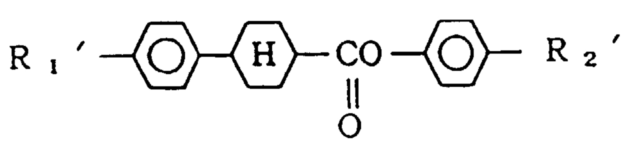

(V ea) ,

and

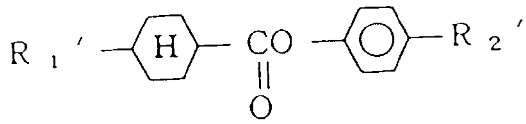

(V fa)

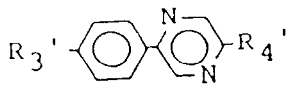

(VII aa),

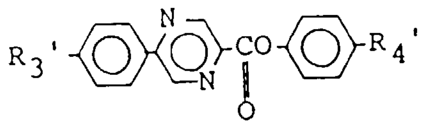

(VII ba),

and

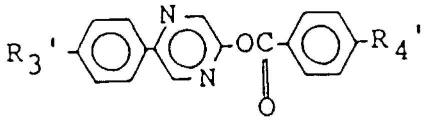

(VII bb).

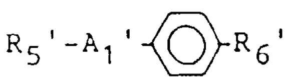

(VIIIaa),

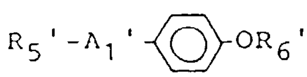

(VIIIab),

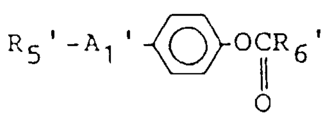

(VIIIac),

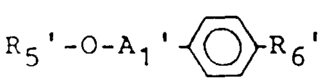

(VIIIad),

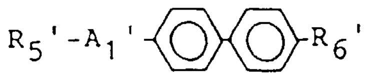

(VIIIba),

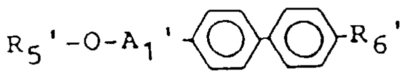

(VIIIbb),

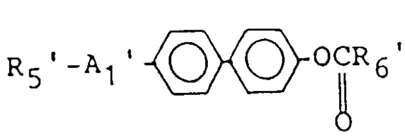

(VIIIbc),

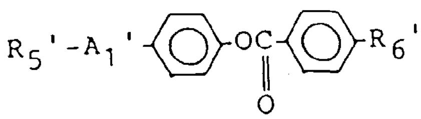

(VIIIbd),

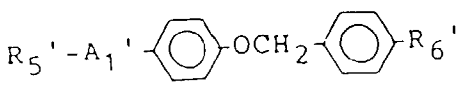

(VIIIbe),

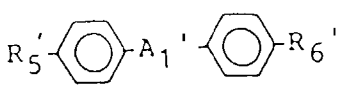

(VIIIca),

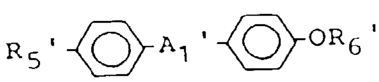

(VIIIcb),

and

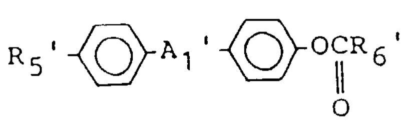

(VIIIcc),

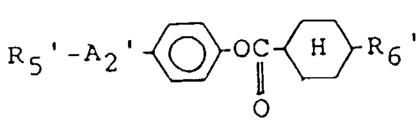

(IX aa),

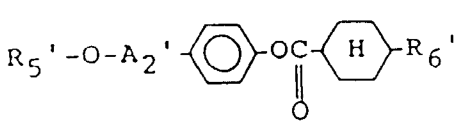

(IX ab),

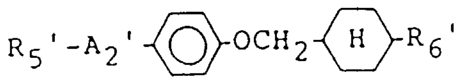

(IX ac),

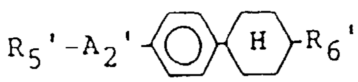

(IX ba),

and

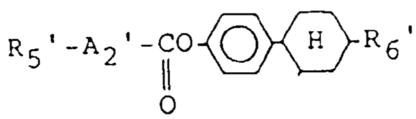

(IX bb).

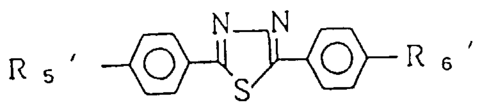

(XI aa)

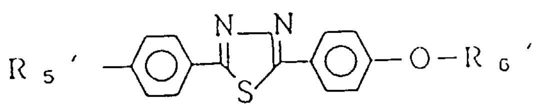

(XI ab)

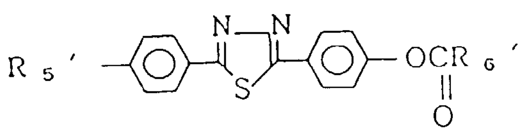

(XI ac)

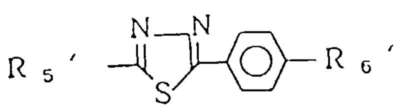

(XI ba)

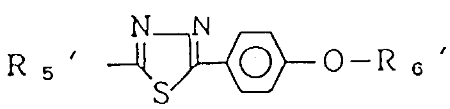

(XI bb)

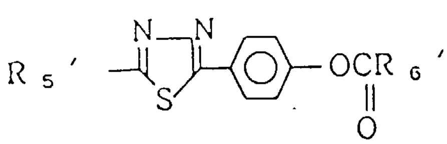

(XI bc)

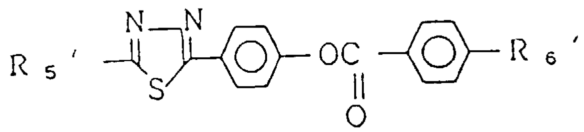

(XI ca)

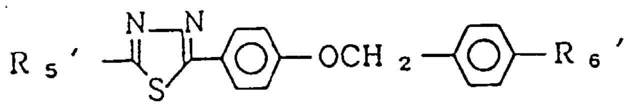

(XI cb)

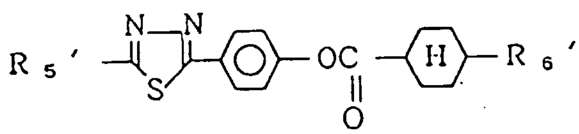

(XI da)

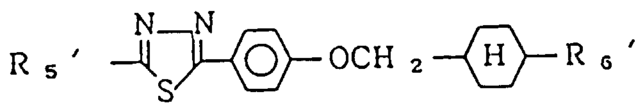

(XI db)

**14.** A cell comprising a pair of base plates having opposed electrodes and a mesomorphic compound according to Claim 1-6 disposed therebetween.

**15.** A liquid crystal device comprising a cell of Claim 14 and an alignment control layer.

**16.** A liquid crystal apparatus comprising a device of Claim 15 and a circuit for driving a liquid crystal.

**17.** A cell comprising a pair of base plates having opposed electrodes and a liquid crystal composition according to Claim 7 disposed therebetween.

**18.** A cell according to Claim 17, wherein the composition contains 1-60% by weight of the mesomorphic compound of claims 1 to 6.

**19.** A cell according to Claim 18, wherein the composition contains 1-40% by weight of the mesomorphic compound of claims 1 to 6.

**20.** A cell according to Claim 18, wherein the second mesomorphic compound is selected from the group consisting of the following Formulae (II)-(XI):

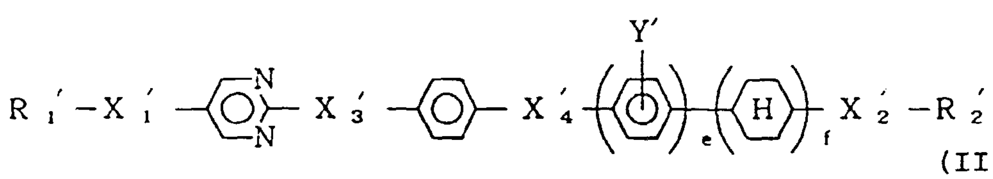

(II)

wherein e denotes 0 to 1 and f denotes 0 or 1 with proviso that e + f = 0 or 1; Y' denotes H, halogen, $CH_3$ or $CF_3$; $X_1$' and $X_2$' denote a single bond,

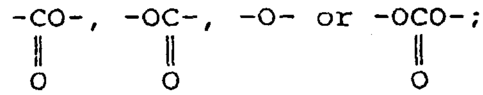

and $X_3$' and $X_4$' denote a single bond,

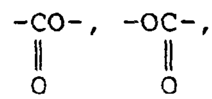

$-OCH_2-$ or $-CH_2O-$.

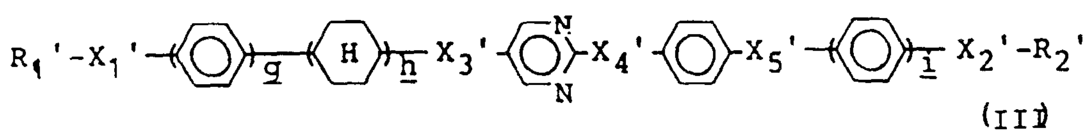

(III)

wherein g and h denote 0 or 1 with the proviso that g + h = 1; i denotes 0 or 1; $X_1$' and $X_2$' denote a single bond,

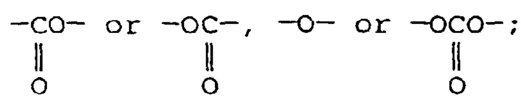

and $X_3$', $X_4$', and $X_5$' denote a single bond,

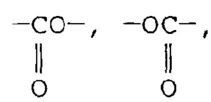

$-CH_2O-$ or $-OCH_2-$.

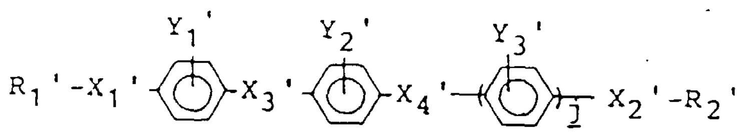

(IV)

wherein j denotes 0 or 1; $Y_1$', $Y_2$', and $Y_3$' denote H, halogen, $CH_3$ or $CF_3$; $X_1$' and $X_2$' denote a single bond,

$$-\underset{\underset{O}{\|}}{C}O-,\quad -O\underset{\underset{O}{\|}}{C}-,\quad -O-\text{ and }-O\underset{\underset{O}{\|}}{C}O-;$$

and $X_3$' and $X_4$' denote a single bond,

$$-\underset{\underset{O}{\|}}{C}O-,\quad -O\underset{\underset{O}{\|}}{C}-,\quad -CH_2O-,\quad -OCH_2-,\quad -CH_2CH_2-,\quad -\underset{\underset{O}{\|}}{C}S-,\quad -S\underset{\underset{O}{\|}}{C}-,$$

$$-(CH_2)_2\underset{\underset{O}{\|}}{C}S-,\quad -(CH_2)_2\underset{\underset{O}{\|}}{C}O-,\quad -CH{=}CH-\underset{\underset{O}{\|}}{C}O-\text{ or }-O-.$$

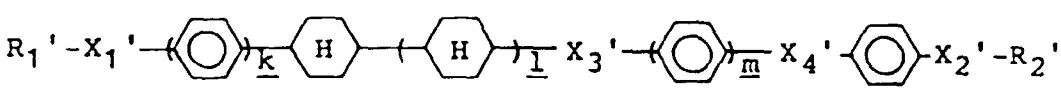

(V)

wherein k, l, and m denote 0 or 1 with the proviso that k + l + m = 0, 1 or 2; $X_1$' and $X_2$' denote a single bond,

$$-\underset{\underset{O}{\|}}{C}O-,\quad -O\underset{\underset{O}{\|}}{C}-,\quad -O-\text{ or }-O\underset{\underset{O}{\|}}{C}O-;$$

and $X_3$' and $X_4$' denote a single bond,

$$-\underset{\underset{O}{\|}}{C}O-,\quad -O\underset{\underset{O}{\|}}{C}-,$$

$-CH_2O-$ or $-OCH_2-$.

Herein, $R_1$' and $R_2$' denote a linear or branched alkyl group having 1 - 18 carbon atoms in which alkylgroup one or two or more non-neighboring methylene groups can be replaced by -CHX- (wherein X is halogen) and in which alkylgroup further one or two or more non-neighboring methylene groups other than those directly connected to $X_1$' or $X_2$' can be replaced by at least one species of

$$-O-,\quad -\underset{\underset{O}{\|}}{C}-,\quad -O\underset{\underset{O}{\|}}{C}-,\quad -\underset{\underset{O}{\|}}{C}O-,\quad -\overset{\overset{CN}{|}}{C}H-\text{ and }-\overset{\overset{CN}{|}}{C}CH_3-,$$

with the proviso that $R_1$' and $R_2$' are not connected to a ring structure when $R_1$' and $R_2$' denote a halogenated alkyl group containing one methylene group replaced by

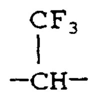 or $-CHX-$

(wherein X is halogen).

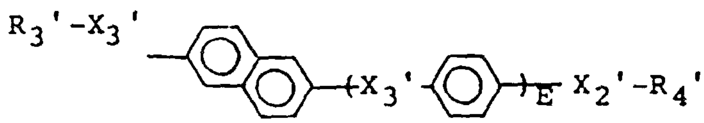 (VI)

wherein E denotes 0 or 1; ' $X_2$' denotes a single bond,

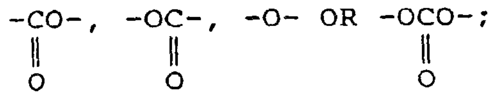

and $X_3$' denotes a single bond,

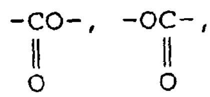

$CH_2O$- or -$OCH_2$-.

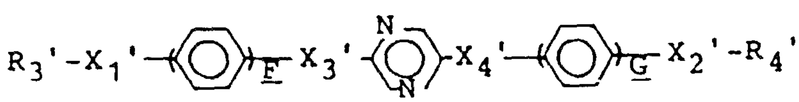

(VII)

wherein F and G denote 0 or 1; $X_1$' and $X_2$' denote a single bond,

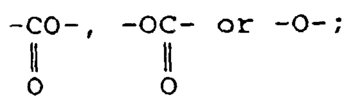

and $X_3$' and $X_4$' denote a single bond,

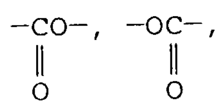

-$CH_2O$- or -$OCH_2$-.

Herein, $R_3$' and $R_4$' denote a linear or branched alkyl group having 1 - 18 carbon atoms in which alkylgroup

one or two or more non-neighboring methylene groups can be replaced by -CHX- (wherein X is halogen) and in which alkylgroup further one or two or more non-neighboring methylene groups other than those directly connected to $X_1$' or $X_2$' can be replaced by at least one species of

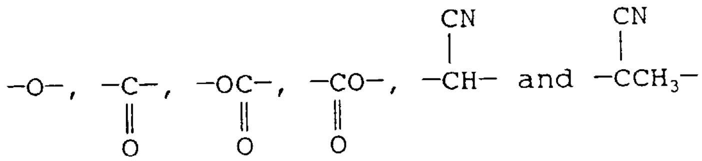

and

with the proviso that $R_3$' and $R_4$' are not connected to a ring structure when $R_3$' and $R_4$' denote a halogenated alkyl group containing one methylene group replaced by -CHX- (wherein X is halogen).

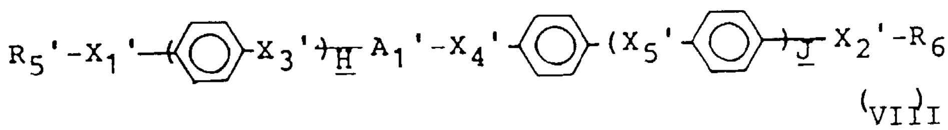

(VIII)

wherein H and J denote 0 or 1 with proviso that H + J = 0 or 1; $X_1$' and $X_2$' denote a single bond,

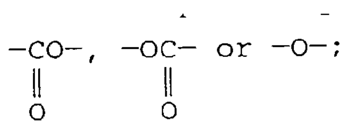

or

$A^{1}$' denotes

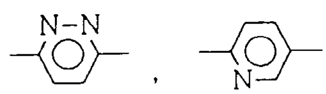

or

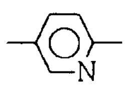

; and $X_3$', $X_4$' and $X_5$' denote a single bond,

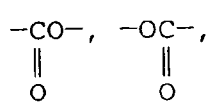

$-CH_2O-$ or $-OCH_2-$.

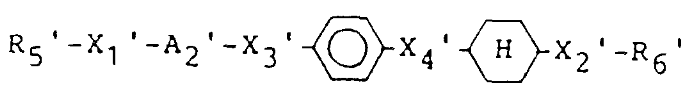

(IX)

wherein $X_1$' and $X_2$' denote a single bond,

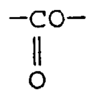, 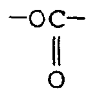, or -O-;

$A_2$' denotes;

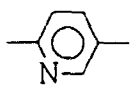 or 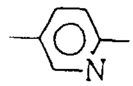

; and $X_3$' and $X_4$' denote a single bond,

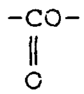, 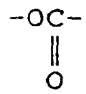,

$-CH_2O-$ or $-OCH_2-$.

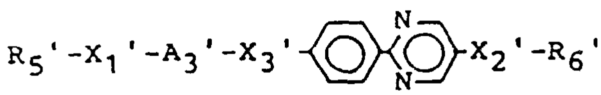 (X)

wherein $X_1$' and $X_2$' denote a single bond,

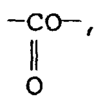, 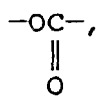,

or -O-; $A_3$' denotes

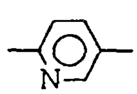 or 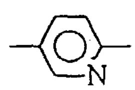

; and $X_3$' denotes a single bond,

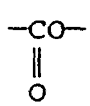, 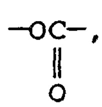,

$-CH_2O-$ or $-OCH_2-$.

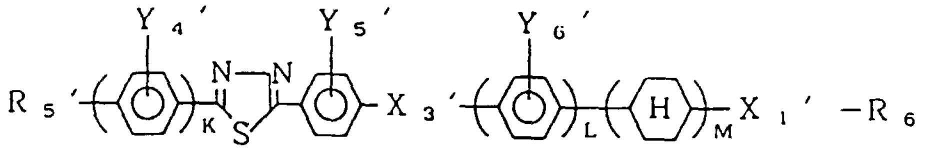

(XI)

wherein K, L and M independently denote 0 or 1 with proviso that K + L + M = 0 or 1; $Y_4$', $Y_5$' and $Y_6$' denote H or F; $X_1$' denotes a single bond,

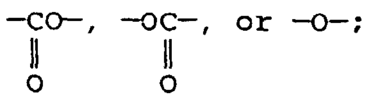

$X_3$' denotes a single bond,

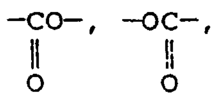

$-CH_2O-$ or $-OCH_2-$.

Herein, $R_5$' and $R_6$' denote a linear or branched alkyl group having 1 - 18 carbon atoms in which alkylgroup one or two or more non-neighboring methylene groups other than those directly connected to $X_1$' or $X_2$' can be replaced by at least one species of

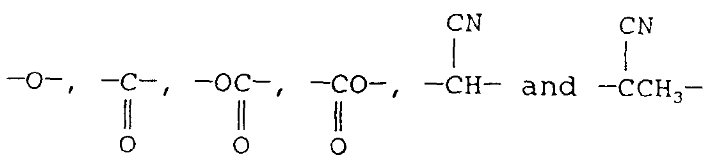

and

**21.** A cell according to claim 20, wherein the second mesomorphic compound is selected from the group consisting of the following Formulae (IIa-d), (IIIa-c), (IVa,b) (Va-f), (VIa,b), (VIIa,b), (VIIIa-c), (IXa,b), (Xa-g) and (XIa-d):

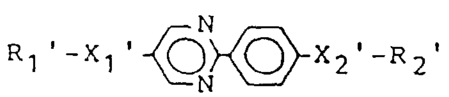

(II a),

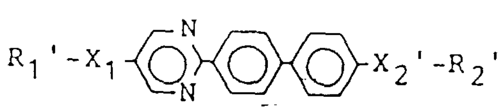

(II b),

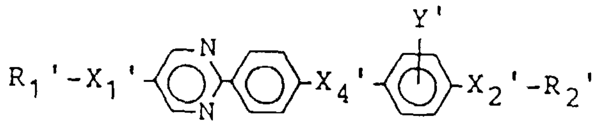

(II c),

and

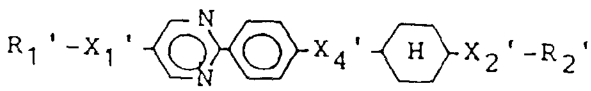

(II d).

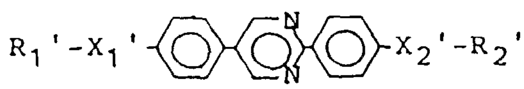

(III a),

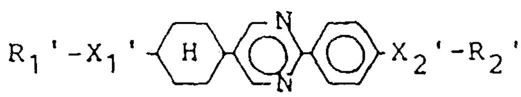

(III b),

and

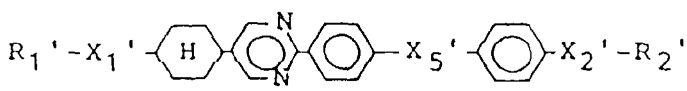

(III c).

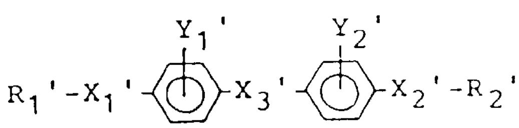

($IV_a$),

and

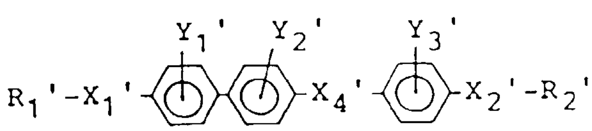

($IV_b$).

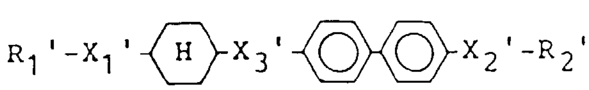

(V a),

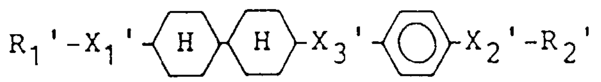

(V b),

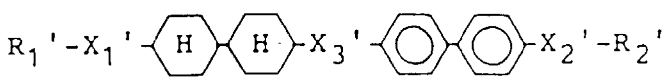

(V c),

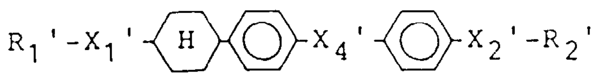

(V d),

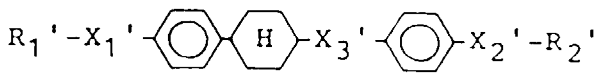

(V e),

and

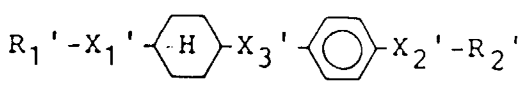

(V f).

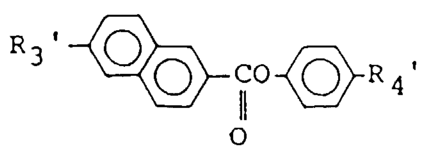

(VI a),

and

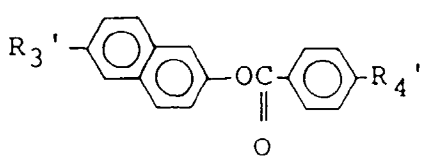

(VI b).

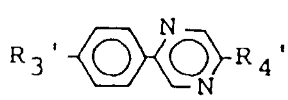

(VII a),

and

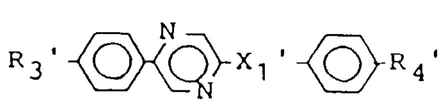

(VII b).

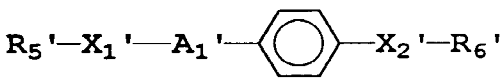

(VIIIa),

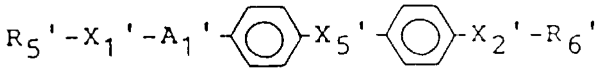

(VIIIb),

and

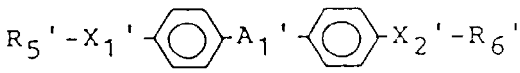

(VIIIc).

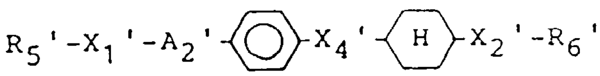

(X a),

and

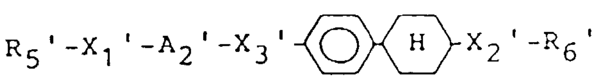

(IX b).

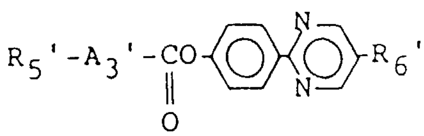

(IX a),

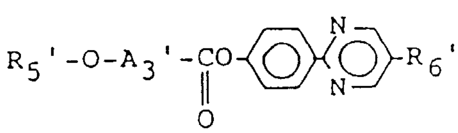

(X b),

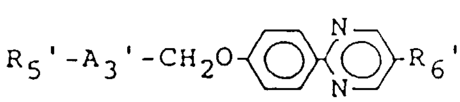

(X c),

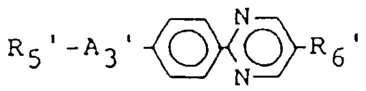

(X d),

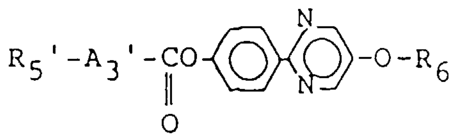

(X e),

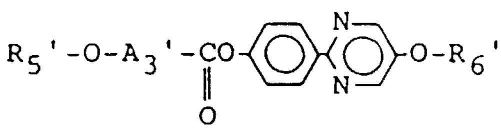

(X f),

and

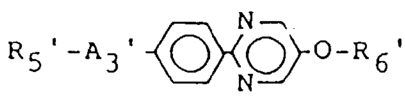

(X g).

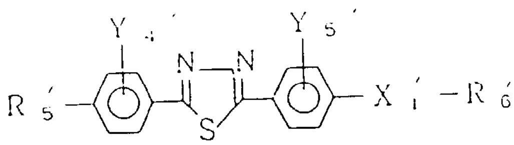

(XI a)

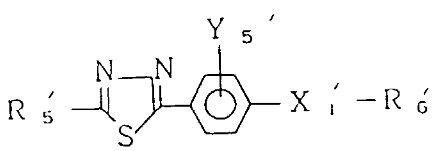

(XI b)

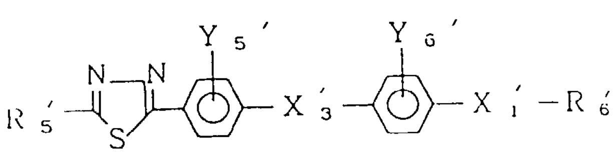

(XI c)

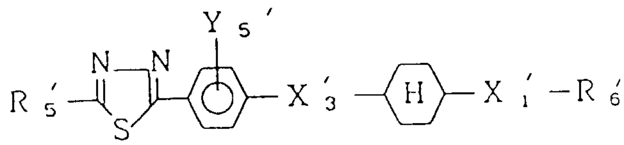

(XI d)

22. A cell according to claim 20, wherein the second mesomorphic compound is selected from the group consisting of the following Formulae (IIaa-dc), (IIIaa-cb), (IVaa-bf), (Vaa-fa) , (VIIaa-bb), (VIIIaa-cc), (IXaa-bb), (XIaa-db) :

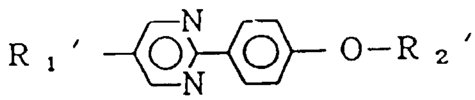

(II aa)

,

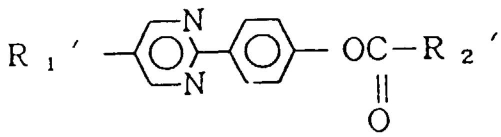

(II ab)

,

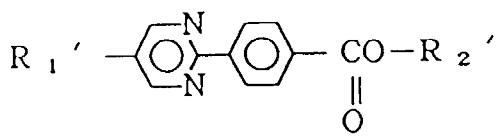

(II ac)

,

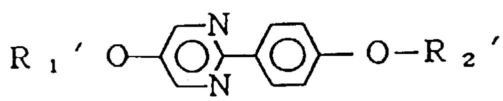

(II ad)

,

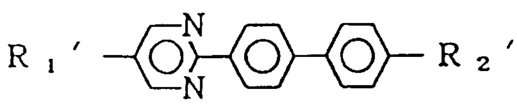

(II ba)

,

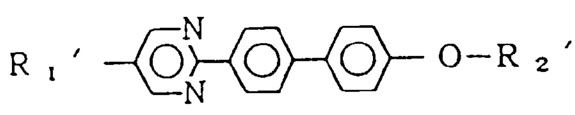

(IIbb)

,

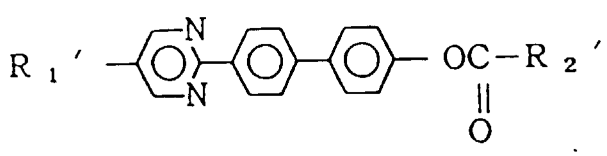

(II bc)

,

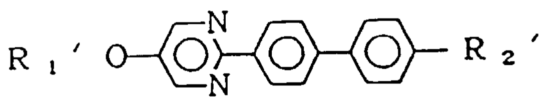

(IIbd) ,

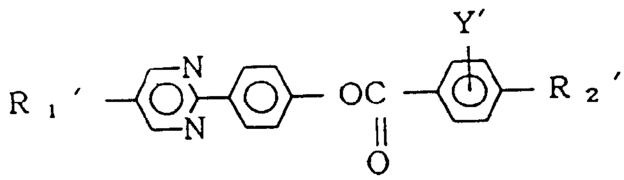

(IIca) ,

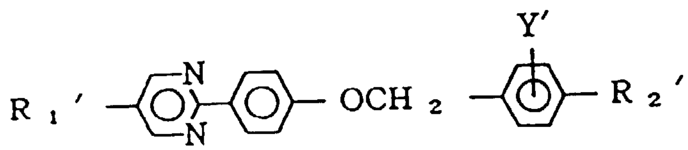

(IIcb) ,

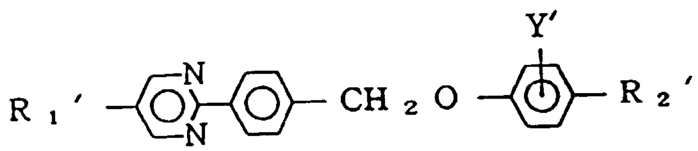

(IIcc) ,

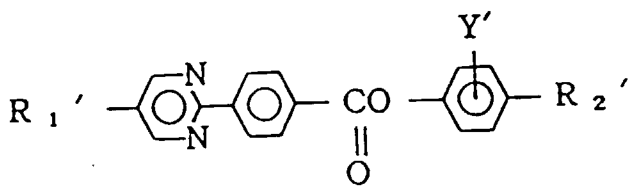

(IIcd) ,

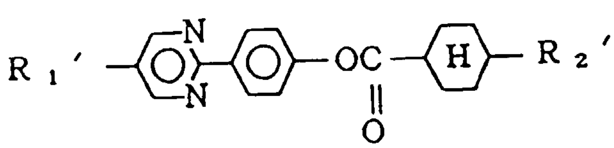

(IIda) ,

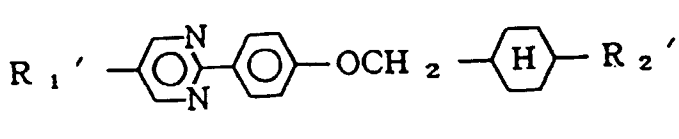

(IIdb) ,

and

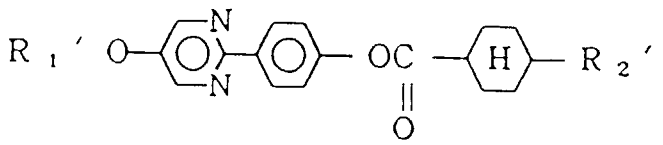

(IIdc)

.

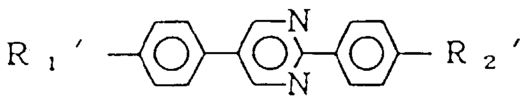

(IIIaa)

,

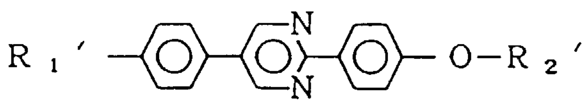

(IIIab)

,

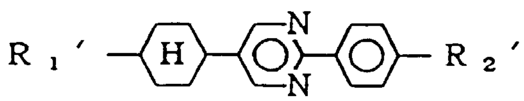

(IIIba)

,

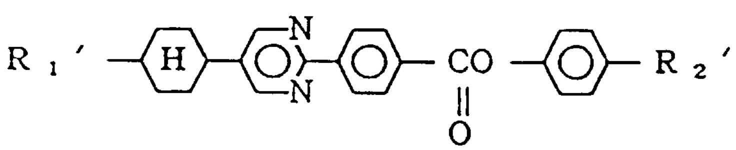

(IIIca)

,

and

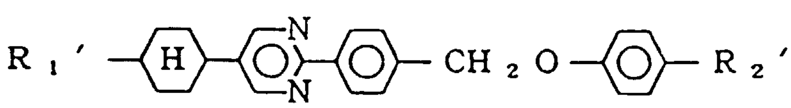

(IIIcb)

.

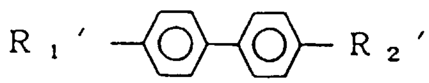

(IVaa)

,

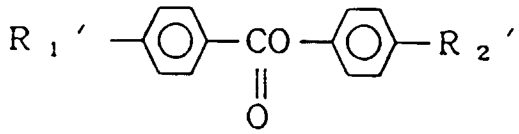

(IVab)

,

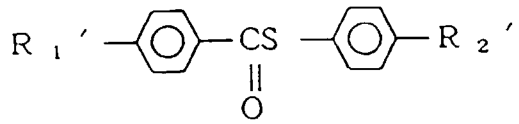

(IVac)

,

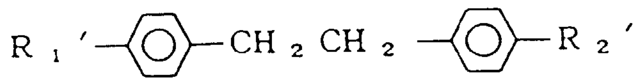

(IVad)

,

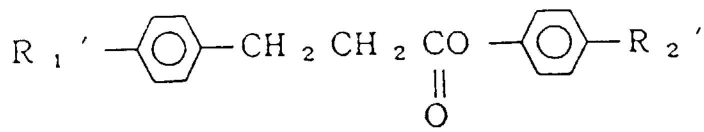

(IVae)

,

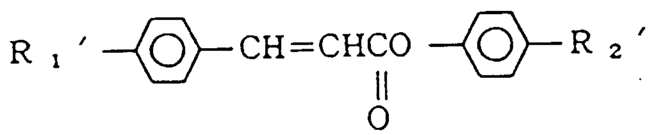

(IVaf)

,

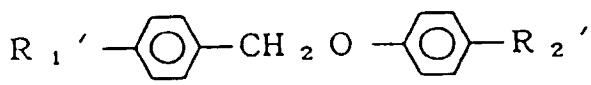

(IVag)

,

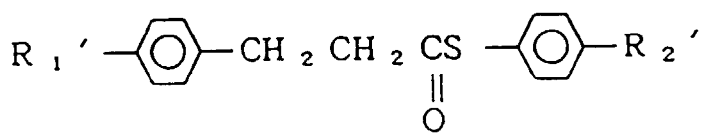

(IVah)

,

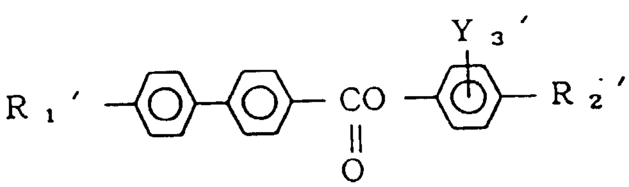

(IVba)

,

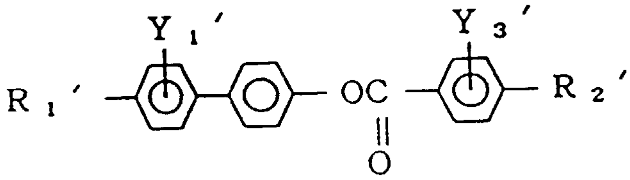

(IVbb) ,

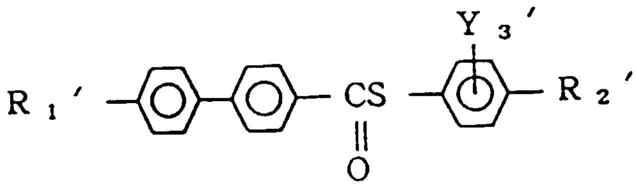

(IVbc) ,

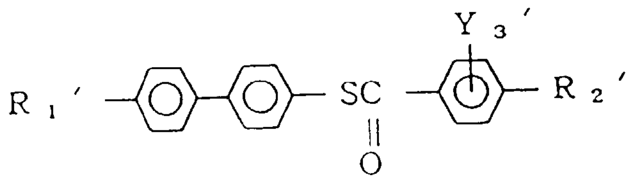

(IVbd) ,

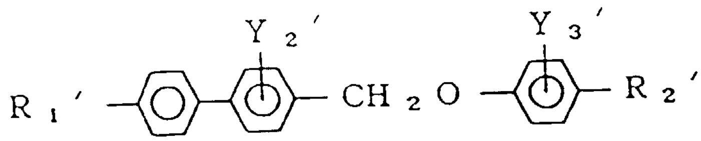

(IVbe) ,

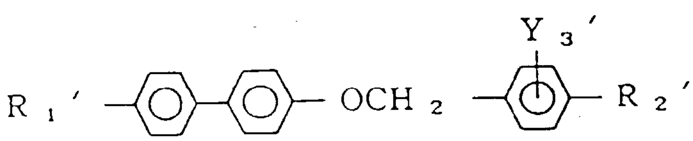

(IVbf) ,

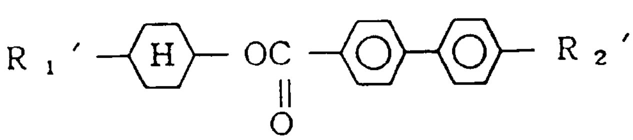

(Vaa) ,

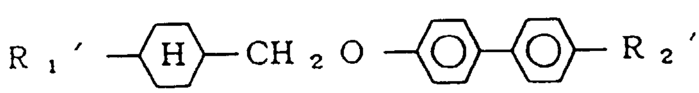

(Vab) ,

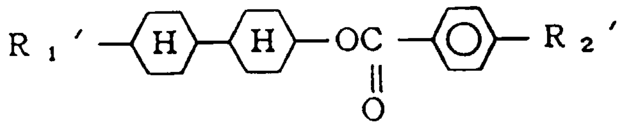

(Vba),

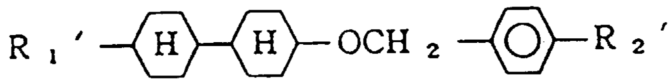

(Vbb),

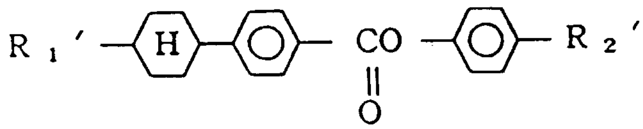

(Vda),

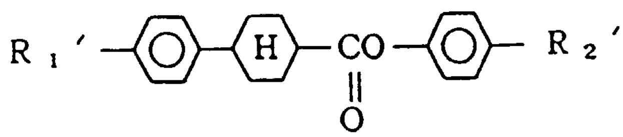

(Vea),

and

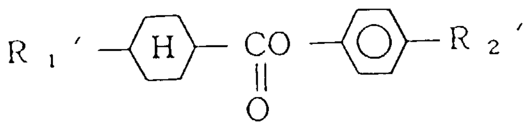

(Vfa).

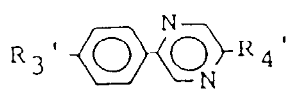

(VIIaa),

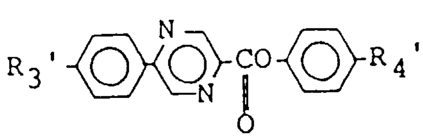

(VIIba),

and

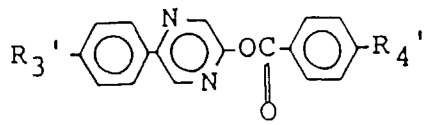

(VII bb).

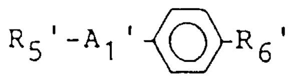

(VIIIaa),

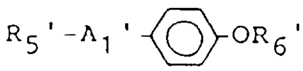

(VIIIab),

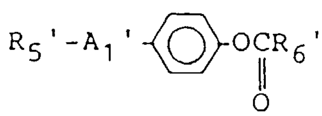

(VIIIac),

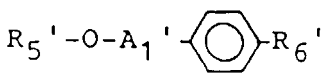

(VIIIad),

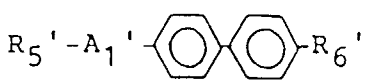

(VIIIba),

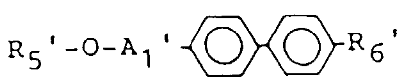

(VIIIbb),

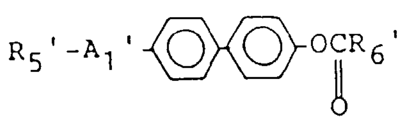

(VIIIbc),

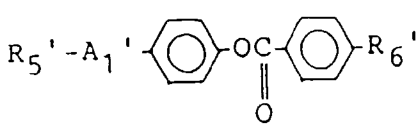

(VIIIbd),

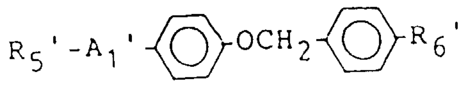

(VIIIbe),

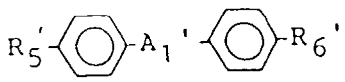

(VIIIca),

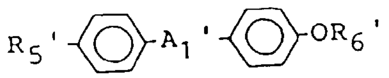

(VIIIcb),

and

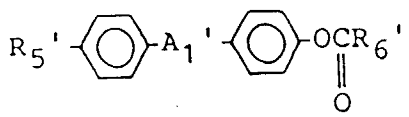

(VIIIcc).

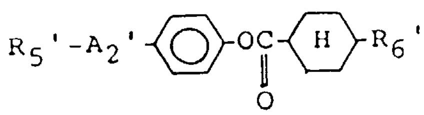

(IXaa)

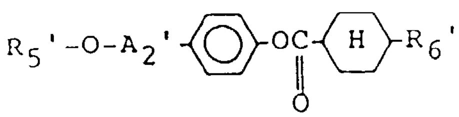

(IXab),

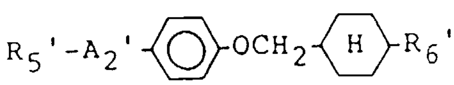

(IXac),

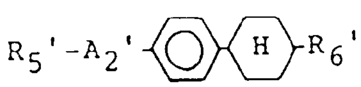

(IXba),

and

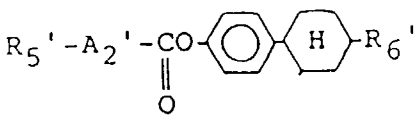

(IXbb).

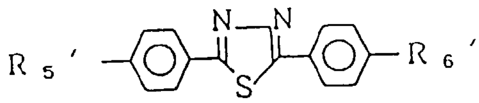

(XIaa),

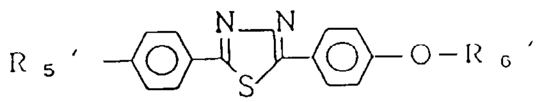

(XIab)

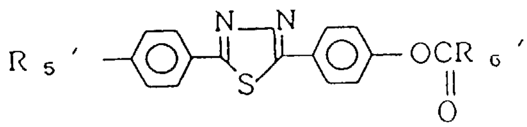

(XIac)

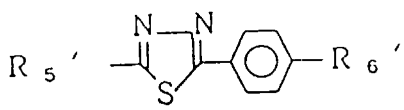

(XIba)

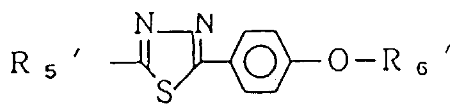

(XIbb)

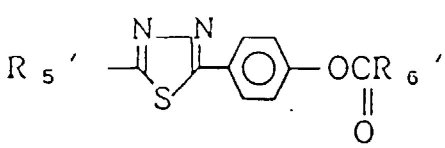

(XIbc)

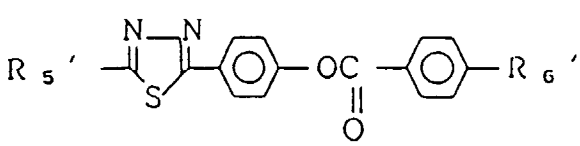

(XIca)

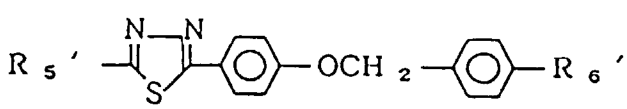

(XIcb)

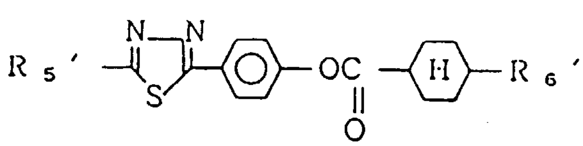

(XIda)

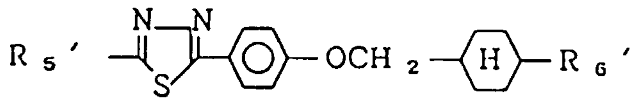

(XIdb)

**23.** A liquid crystal device comprising a cell of Claim 17 and an alignment control layer.

**24.** A liquid crystal apparatus comprising a device of Claim 23 and a circuit for driving a liquid crystal.

**Patentansprüche**

**1.** Mesomorphe Verbindung, die durch die folgende Formel (I) wiedergegeben wird:

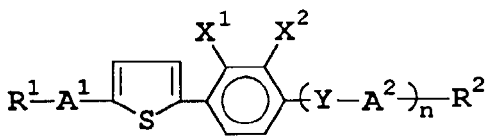

(I),

worin $R^1$ und $R^2$ jeweils eine geradkettige oder verzweigtkettige Alkylgruppe mit 1 bis 18 Kohlenstoffatomen bezeichnen, wobei in der Alkylgruppe $-CH_2-$ durch

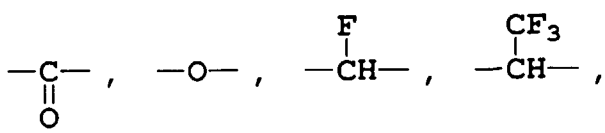

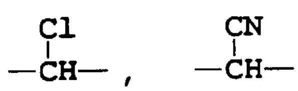

oder

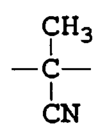

ersetzt sein kann, unter der Bedingung, daß Heteroatome nicht nebeneinander liegen, $R^2$ durch Wasserstoffatom, Halogenatom, Cyangruppe oder Trifluormethylgruppe ersetzt sein kann; n 0 oder 1 ist, unter der Bedingung, daß (1) $A^1$ eine Einfachbindung,

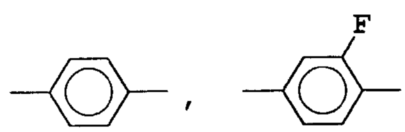

oder

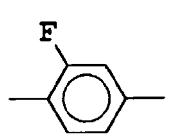

bezeichnet, wenn n 0 ist, und (2) $A^1$ eine Einfachbindung bezeichnet, wenn n 1 ist; $A^2$ irgendeines von

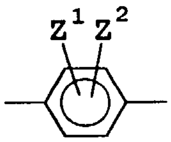, 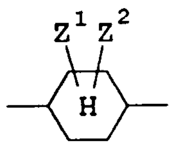, 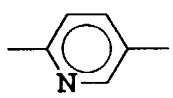, 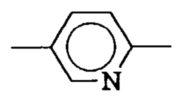 und 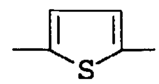

bezeichnet; $X^1$, $X^2$, $Z^1$ und $Z^2$ unabhängig irgendeines von Wasserstoffatom, Halogenatom, Cyangruppe und Trifluormethylgruppe bezeichnen, unter der Bedingung, daß $X^1$, $X^2$, $Z^1$ und $Z^2$ nicht alle Wasserstoffatome sein können; und Y irgendeines von

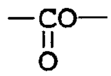, 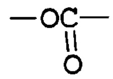,

$-CH_2O-$, $-OCH_2-$ und einer Einfachbindung bezeichnet.

**2.** Mesomorphe Verbindung nach Anspruch 1, bei der $R^1$ irgendeine der folgenden Gruppen (i) bis (v) bezeichnet:

(i)

$$-Y-(CH_2)_n-CH_3 \quad ,$$

worin Y irgendeines von einer Einfachbindung,

—O— , 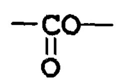,

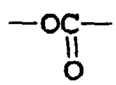 und 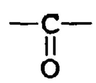

bezeichnet und n eine ganze Zahl von 0 bis 17 und vorzugsweise 4 bis 16 ist;

(ii)

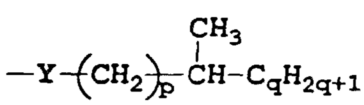

(optisch aktiv oder inaktiv), worin Y irgendeines von einer Einfachbindung,

—O— , 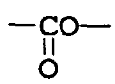,

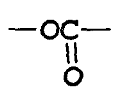 und 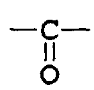

bezeichnet; p eine ganze Zahl von 0 bis 7 ist und q eine ganze Zahl von 1 bis 10 ist;

(iii)

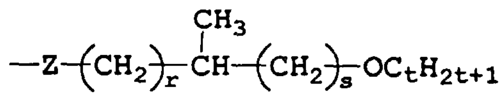

(optisch aktiv oder inaktiv), worin Z irgendeines von

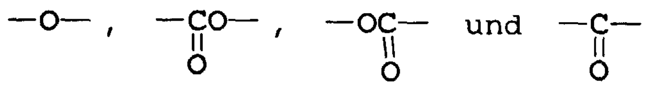

bezeichnet; r eine ganze Zahl von 0 bis 7 ist; s eine ganze Zahl von 0 oder 1 ist und t eine ganze Zahl von 1 bis 14 ist;

(iv)

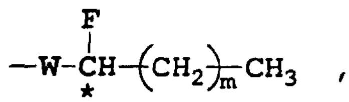

worin W irgendeines von

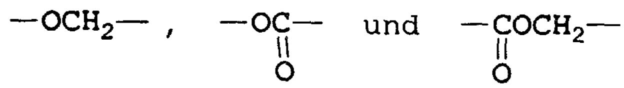

bezeichnet und m eine ganze Zahl von 0 bis 14 ist, und

(v)

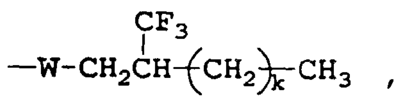

worin W irgendeines von

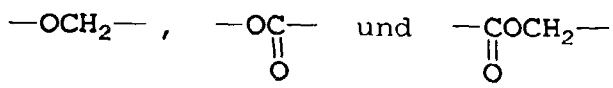

bezeichnet und k eine ganze Zahl von 0 bis 12 ist.

**3.** Mesomorphe Verbindung nach Anspruch 1, bei der $R^2$ irgendeines von den folgenden Gruppen (i) bis (v), Wasserstoffatom, Halogenatom, Cyangruppe und Trifluormethylgruppe bezeichnet:

(i)

$-Y-(CH_2)_n-CH_3$ ,

worin Y irgendeines von einer Einfachbindung,

$-O-$ , 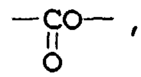

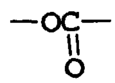 und 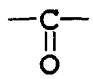

bezeichnet und n eine ganze Zahl von 0 bis 17 und vorzugsweise 4 bis 16 ist;
(ii)

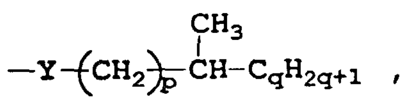

worin Y irgendeines von einer Einfachbindung, -O-,

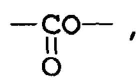

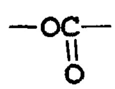 und 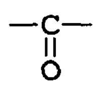

bezeichnet; p eine ganze Zahl von 0 bis 7 ist und q eine ganze Zahl von 1 bis 10 ist (optisch aktiv oder inaktiv);
(iii)

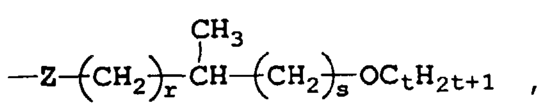

worin Z irgendeines von

$-O-$ , 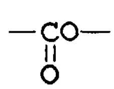 , 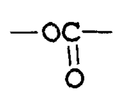 und 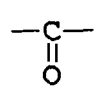

bezeichnet; r eine ganze Zahl von 0 bis 7 ist; s eine ganze Zahl von 0 oder 1 ist und t eine ganze Zahl von 1 bis 14 ist (optisch aktiv oder inaktiv);
(iv)

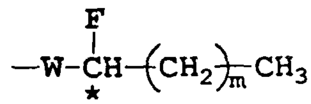

worin W irgendeines von

$-OCH_2-$ , 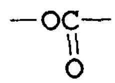 und 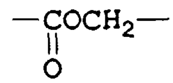

bezeichnet und m eine ganze Zahl von 0 bis 14 ist, und

(v)

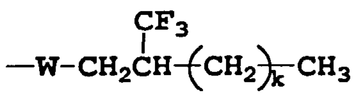

worin W irgendeines von

$-OCH_2-$ , 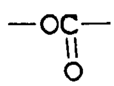 und 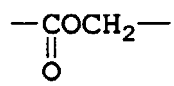

bezeichnet und k eine ganze Zahl von 0 bis 12 ist.

**4.** Mesomorphe Verbindung nach Anspruch 1, die durch die folgenden Formeln (Ia) bis (Id) wiedergegeben wird:

(Ia) 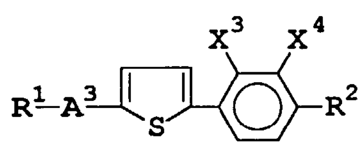

(Ib) 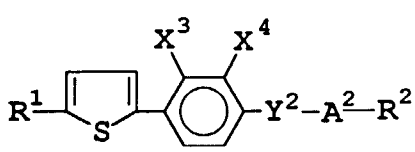

(Ic) 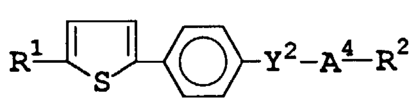

(Id) 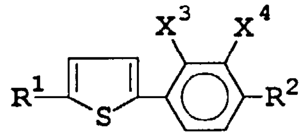

worin $R^1$ und $R^2$ jeweils eine geradkettige oder verzweigtkettige Alkylgruppe mit 1 bis 18 Kohlenstoffatomen bezeichnen, wobei in der Alkylgruppe $-CH_2-$ durch

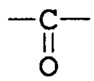 , —O— , 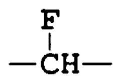 , 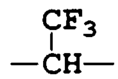 ,

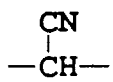 , 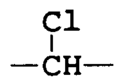 oder 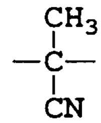

ersetzt sein kann, unter der Bedingung, daß Heteroatome nicht nebeneinander liegen, $R^2$ durch Wasserstoffatom, Halogenatom, Cyangruppe oder Trifluormethylgruppe ersetzt sein kann; $A^2$ irgendeines von

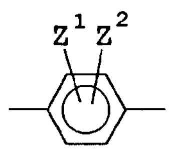 ,

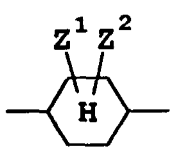 , 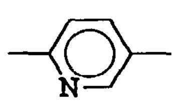 , 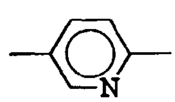 und 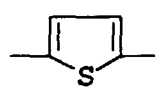

bezeichnet; $X^1$, $X^2$, $Z^1$ und $Z^2$ unabhängig irgendeines von Wasserstoffatom, Halogenatom, Cyangruppe und Trifluormethylgruppe bezeichnen, unter der Bedingung, daß $X^1$, $X^2$, $Z^1$ und $Z^2$ nicht alle Wasserstoffatome sein können; Y irgendeines von

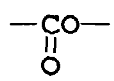 , 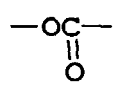 ,

$-CH_2O-$, $-OCH_2-$ und einer Einfachbindung bezeichnet; $A^3$

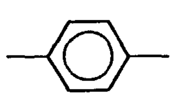 , 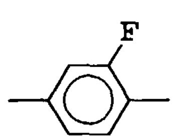 oder 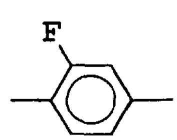

bezeichnet; $A^4$

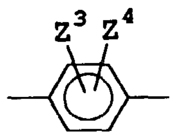 oder 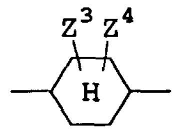

bezeichnet; $X^3$ und $X^4$ Fluoratom, Cyangruppe, Trifluormethylgruppe oder Wasserstoffatom und vorzugsweise Fluoratom bezeichnen (unter der Bedingung, daß $X^3$ und $X^4$ nicht beide Wasserstoffatome sind); $Y^2$

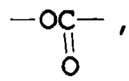

$-OCH_2-$ oder eine Einfachbindung und vorzugsweise

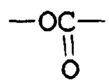

oder eine Einfachbindung bezeichnet und $Z^3$ und $Z^4$ Fluoratom, Cyangruppe, Trifluormethylgruppe oder Wasserstoffatom und vorzugsweise Fluoratom, Trifluormethylgruppe oder Wasserstoffatom bezeichnen, unter der Bedingung, daß $Z^3$ und $Z^4$ nicht beide Wasserstoffatome sind.

**5.** Mesomorphe Verbindung nach Anspruch 4, bei der $R^1$ irgendeine der folgenden Gruppen (i) bis (v) bezeichnet:

(i)

$$-Y\!-\!(CH_2)_n\!-\!CH_3 \quad ,$$

worin Y irgendeines von einer Einfachbindung,

$-O-$ , 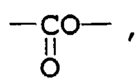

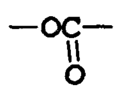 und 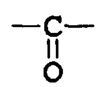

bezeichnet und n eine ganze Zahl von 0 bis 17 und vorzugsweise 4 bis 16 ist;

(ii)

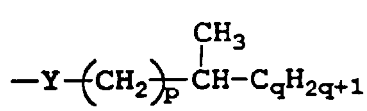

(optisch aktiv oder inaktiv), worin Y irgendeines von einer Einfachbindung,

$-O-$ , 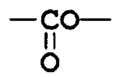 ,

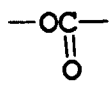 und 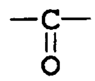

bezeichnet; p eine ganze Zahl von 0 bis 7 ist und q eine ganze Zahl von 1 bis 10 ist;
(iii)

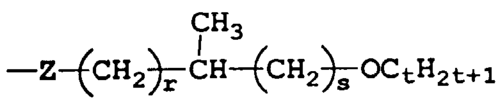

(optisch aktiv oder inaktiv), worin Z irgendeines von

$-O-$ , 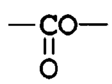 , 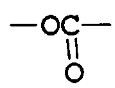 und 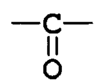

bezeichnet; r eine ganze Zahl von 0 bis 7 ist; s eine ganze Zahl von 0 oder 1 ist und t eine ganze Zahl von 1 bis 14 ist;
(iv)

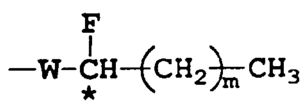 ,

worin W irgendeines von

$-OCH_2-$ , 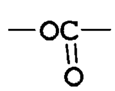 und 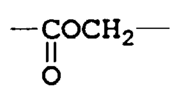

bezeichnet und m eine ganze Zahl von 0 bis 14 ist, und
(v)

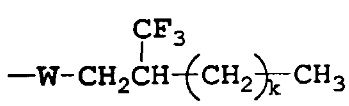 ,

worin W irgendeines von

$-OCH_2-$ , 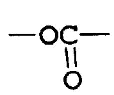 und 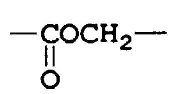

bezeichnet und k eine ganze Zahl von 0 bis 12 ist.

6. Mesomorphe Verbindung nach Anspruch 4, bei der $R^2$ irgendeines von den folgenden Gruppen (i) bis (v), Wasserstoffatom, Halogenatom, Cyangruppe oder Trifluormethylgruppe bezeichnet:

(i)

$$-Y-(CH_2)_n-CH_3 \quad ,$$

worin Y irgendeines von einer Einfachbindung,

—O— , 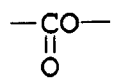 ,

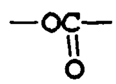 und 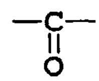

bezeichnet und n eine ganze Zahl von 0 bis 17 und vorzugsweise 4 bis 16 ist;
(ii)

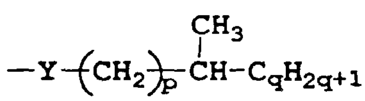 ,

worin Y irgendeines von einer Einfachbindung,

—O— , 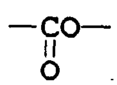 ,

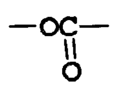 und 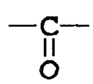

bezeichnet; p eine ganze Zahl von 0 bis 7 ist und q eine ganze Zahl von 1 bis 10 ist (optisch aktiv oder inaktiv);
(iii)

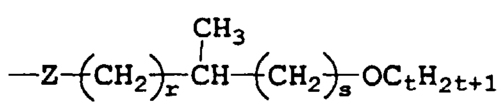 ,

worin Z irgendeines von

$-O-$ , 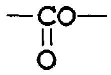 , 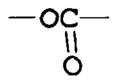 und 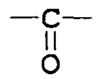

bezeichnet; r eine ganze Zahl von 0 bis 7 ist; s eine ganze Zahl von 0 oder 1 ist und t eine ganze Zahl von 1 bis 14 ist (optisch aktiv oder inaktiv);

(iv)

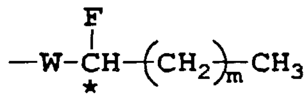 ,

worin W irgendeines von

$-OCH_2-$ , 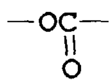 und 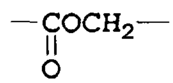

bezeichnet und m eine ganze Zahl von 0 bis 14 ist, und

(v)

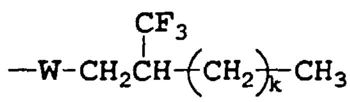 ,

worin W irgendeines von

$-OCH_2-$ , 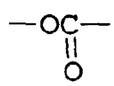 und 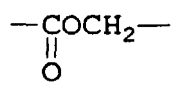

bezeichnet und k eine ganze Zahl von 0 bis 12 ist.

**7.** Flüssigkristallmischung, die 1 bis 80 Masse% von einer einer mesomorphen Verbindung nach Ansprüchen 1 bis 6 und eine zweite mesomorphe Verbindung in geeigneten Anteilen umfaßt.

**8.** Flüssigkristallmischung nach Anspruch 7, die 1 bis 60 Masse% der mesomorphen Verbindung nach Ansprüchen 1 bis 6 enthält.

**9.** Flüssigkristallmischung nach Anspruch 8, die 1 bis 40 Masse% der mesomorphen Verbindung nach Ansprüchen 1 bis 6 enthält.

**10.** Flüssigkristallmischung nach Anspruch 7, bei der die zweite mesomorphe Verbindung aus der Gruppe ausgewählt ist, die aus den folgenden Formeln (II) bis (XI) besteht:

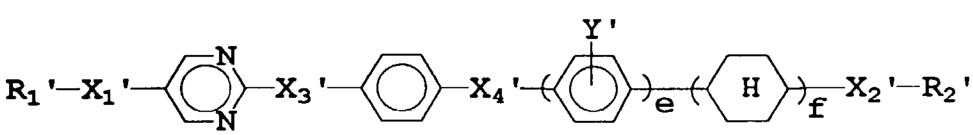 (II),

worin e 0 oder 1 bezeichnet und f 0 oder 1 bezeichnet, unter der Bedingung, daß e + f = 0 oder 1; Y' H, Halogen, $CH_3$ oder $CF_3$ bezeichnet; $X_1$' und $X_2$' eine Einfachbindung,

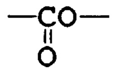 ,

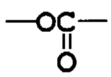 , —O— oder 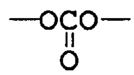

bezeichnen und $X_3$' und $X_4$' eine Einfachbindung,

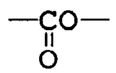 , 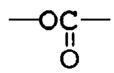 ,

$-OCH_2-$ oder $-CH_2O-$ bezeichnen;

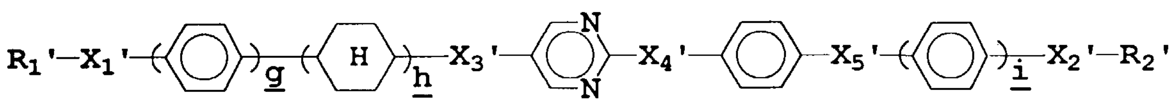

(III),

worin g und h 0 oder 1 bezeichnen, unter der Bedingung, daß g + h = 1; i 0 oder 1 bezeichnet; $X_1$' und $X_2$' eine Einfachbindung,

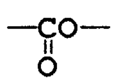 oder 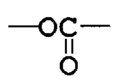 , —O— oder 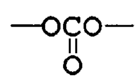

bezeichnen und $X_3$', $X_4$' und $X_5$' eine Einfachbindung,

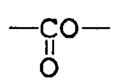 , 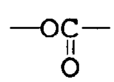 ,

$-CH_2O-$ oder $-OCH_2-$ bezeichnen;

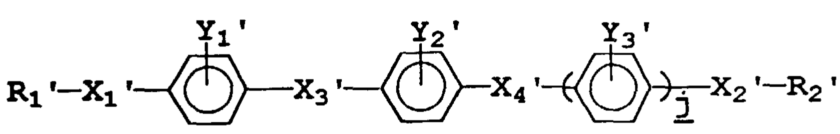 (IV),

worin j 0 oder 1 bezeichnet; $Y_1$', $Y_2$' und $Y_3$' H, Halogen, $CH_3$ oder $CF_3$ bezeichnen; $X_1$' und $X_2$' eine Einfachbindung,

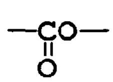 ,

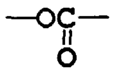 , —O— und 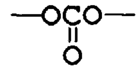

bezeichnen und $X_3$' und $X_4$' eine Einfachbindung,

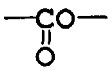 , 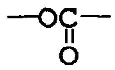 , $—CH_2O—$ , $—OCH_2—$ , $—CH_2CH_2—$ ,

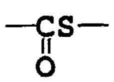 , 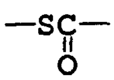 , 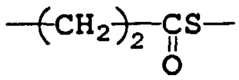 , 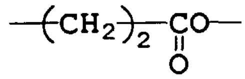 , 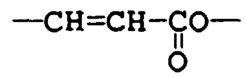

oder -O- bezeichnen;

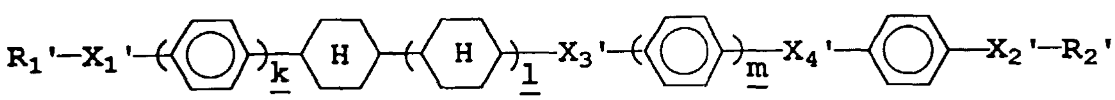

(V) ,

worin k, l und m 0 oder 1 bezeichnen, unter der Bedingung, daß k + l + m = 0, 1 oder 2; $X_1$' und $X_2$' eine Einfachbindung,

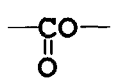 , 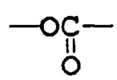 , —O— oder 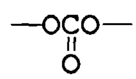

bezeichnen und $X_3$' und $X_4$' eine Einfachbindung,

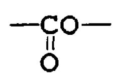 , 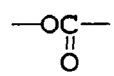 ,

$-CH_2O-$ oder $-OCH_2-$ bezeichnen;
wobei $R_1$' und $R_2$' eine lineare oder verzweigte Alkylgruppe mit 1 bis 18 Kohlenstoffatomen bezeichnen, wobei in dieser Alkylgruppe eine Methylengruppe oder zwei oder mehr nicht benachbarte Methylengruppen durch -CHX- (worin X Halogen ist) ersetzt sein können und wobei in dieser Alkylgruppe ferner eine Methylengruppe oder zwei oder mehr nicht benachbarte Methylengruppen, die von denen, die direkt an $X_1$' oder $X_2$' gebunden sind, verschieden sind, durch mindestens eine Spezies von -O-,

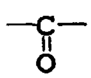 , 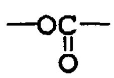 , 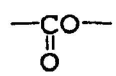 , 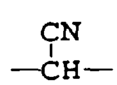 und 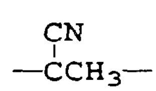

ersetzt sein können, unter der Bedingung, daß $R_1$' und $R_2$' nicht an eine Ringstruktur gebunden sind, wenn $R_1$' und $R_2$' eine halogenierte Alkylgruppe bezeichnen, die *eine* durch

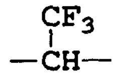

oder -CHX- (worin X Halogen ist) ersetzte Methylengruppe enthält;

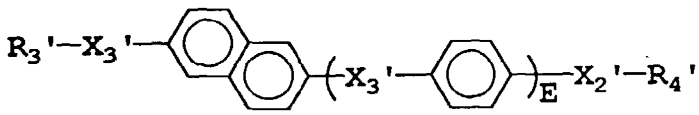

(VI),

worin E 0 oder 1 bezeichnet; $X_2$' eine Einfachbindung,

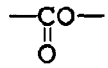 ,

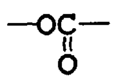 , —O— oder 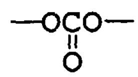

bezeichnet und $X_3$' eine Einfachbindung,

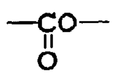 , 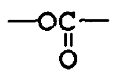 ,

-$CH_2O$- oder -$OCH_2$- bezeichnet;

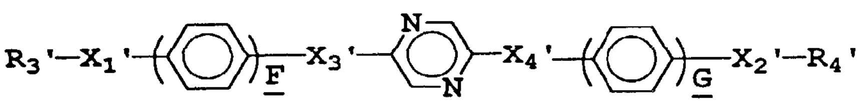

(VII),

worin F und G 0 oder 1 bezeichnen; $X_1$' und $X_2$' eine Einfachbindung,

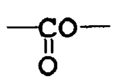 , 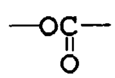

oder -O- bezeichnen und $X_3$' und $X_4$' eine Einfachbindung,

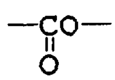 , 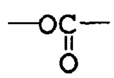 ,

-$CH_2O$- oder -$OCH_2$- bezeichnen;
wobei $R_3$' und $R_4$' eine lineare oder verzweigte Alkylgruppe mit 1 bis 18 Kohlenstoffatomen bezeichnen, wobei in dieser Alkylgruppe eine Methylengruppe oder zwei oder mehr nicht benachbarte Methylengruppen durch -CHX- (worin X Halogen ist) ersetzt sein können und wobei in dieser Alkylgruppe ferner eine Methylengruppe oder zwei

oder mehr nicht benachbarte Methylengruppen, die von denen, die direkt an $X_1$' oder $X_2$' gebunden sind, verschiedenen sind, durch mindestens eine Spezies von -O-,

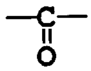 , 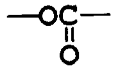 , 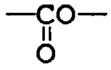 , 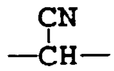 und 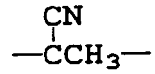

ersetzt sein können, unter der Bedingung, daß $R_3$' und $R_4$' nicht an eine Ringstruktur gebunden sind, wenn $R_3$' und $R_4$' eine halogenierte Alkylgruppe bezeichnen, die *eine* durch -CHX- (worin X Halogen ist) ersetzte Methylengruppe enthält;

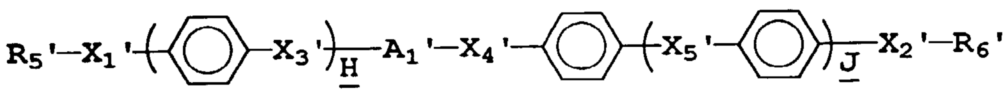 (VIII),

worin H und J 0 oder 1 bezeichnen, unter der Bedingung, daß H + J = 0 oder 1; $X_1$' und $X_2$' eine Einfachbindung,

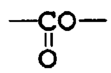 ,

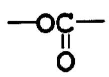

oder -O- bezeichnen; $A_1$'

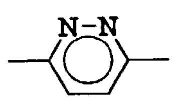 , 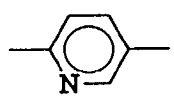

oder

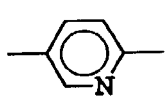

bezeichnet und $X_3$', $X_4$' und $X_5$' eine Einfachbindung,

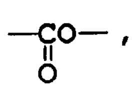 , 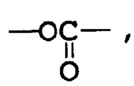 ,

-$CH_2O$- oder -$OCH_2$- bezeichnen;

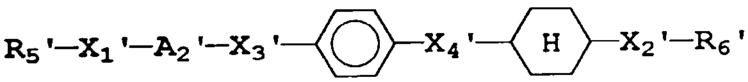 (IX),

worin $X_1$' und $X_2$' eine Einfachbindung,

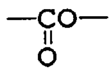 , 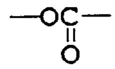

oder -O- bezeichnen; $A_2$'

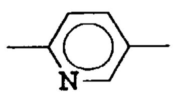 oder 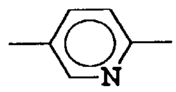

bezeichnet und $X_3$' und $X_4$' eine Einfachbindung,

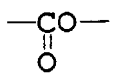 , 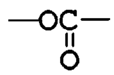 ,

$-CH_2O-$ oder $-OCH_2-$ bezeichnen;

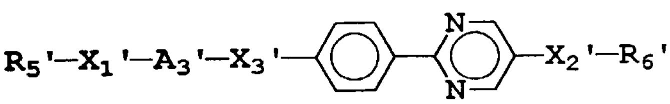 (X),

worin $X_1$' und $X_2$' eine Einfachbindung,

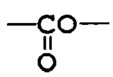 , 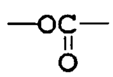

oder -O- bezeichnen; $A_3$'

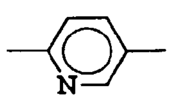 oder 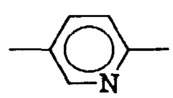

bezeichnet und $X_3$' eine Einfachbindung,

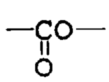 , 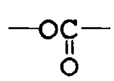 ,

$-CH_2O-$ oder $-OCH_2-$ bezeichnet;

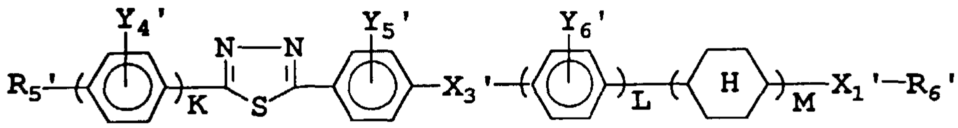 (XI),

worin K, L und M unabhängig 0 oder 1 bezeichnen, unter der Bedingung, daß K + L + M = 0 oder 1; $Y_4$', $Y_5$' und $Y_6$' H oder F bezeichnen; $X_1$' eine Einfachbindung,

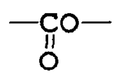 , 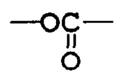

oder -O- bezeichnet und $X_3$' eine Einfachbindung,

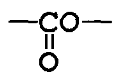 , 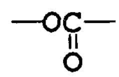 ,

$-CH_2O-$ oder $-OCH_2-$ bezeichnet;
wobei $R_5$' und $R_6$' eine lineare oder verzweigte Alkylgruppe mit 1 bis 18 Kohlenstoffatomen bezeichnen, wobei in dieser Alkylgruppe eine Methylengruppe oder zwei oder mehr nicht benachbarte Methylengruppen, die von denen, die direkt an $X_1$' oder $X_2$' gebunden sind, verschieden sind, durch mindestens eine Spezies von -O-,

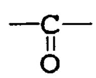 , 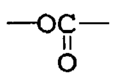 , 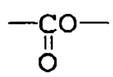 , 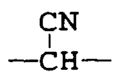 und 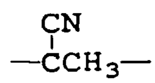

ersetzt sein können.

11. Flüssigkristallmischung nach Anspruch 10, bei der die zweite mesomorphe Verbindung aus der Gruppe ausgewählt ist, die aus den folgenden Formeln (IIa bis d), (IIIa bis c), (IVa und b), (Va bis f), (VIa und b), (VIIa und b), (VIIIa bis c), (IXa und b), (Xa bis g) und (XIa bis d) besteht:

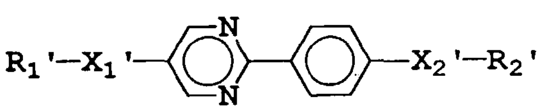 (IIa),

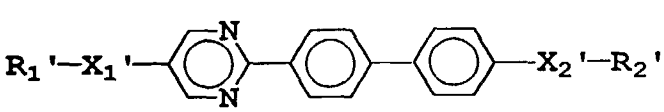 (IIb),

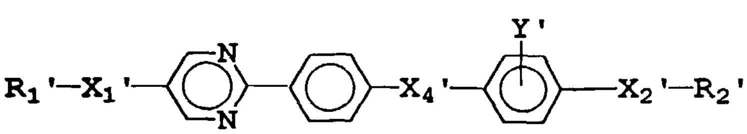 (IIc)

und

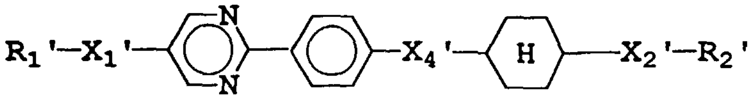

(IId);

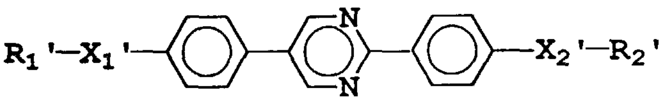

(IIIa),

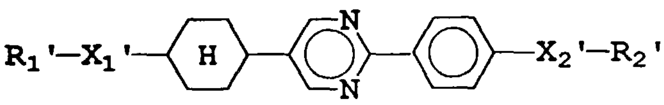

(IIIb)

und

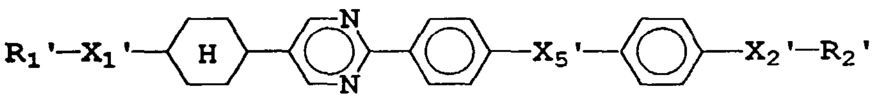

(IIIc);

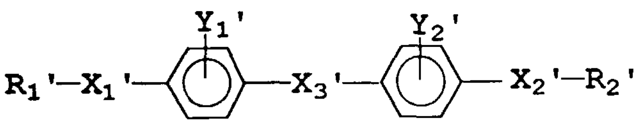

(IVa)

und

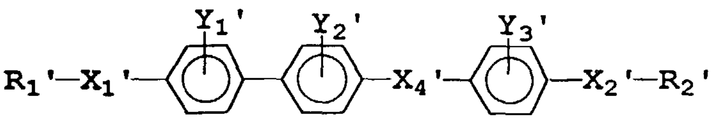

(IVb);

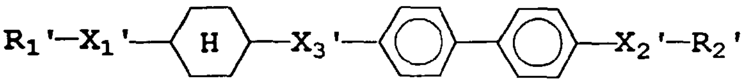

(Va),

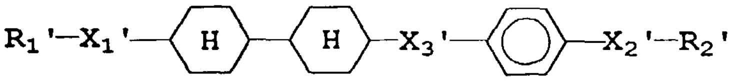

(Vb),

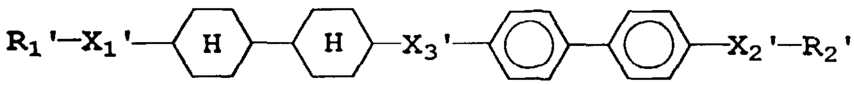

(Vc),

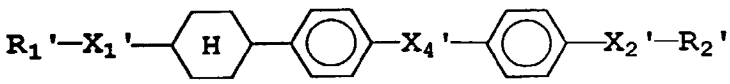

(Vd),

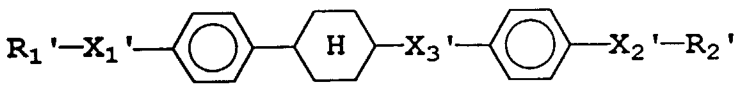

(Ve)

und

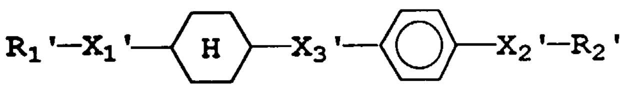

(Vf);

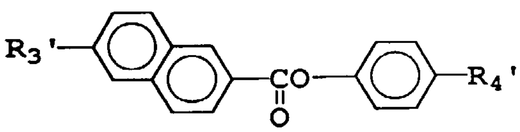

(VIa)

und

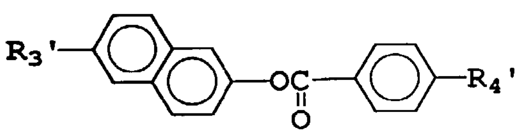

(VIb);

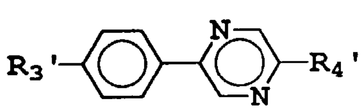

(VIIa)

und

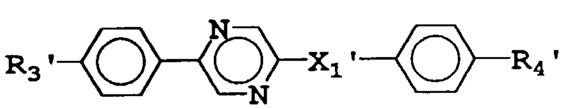

(VIIb);

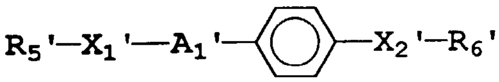

(VIIIa),

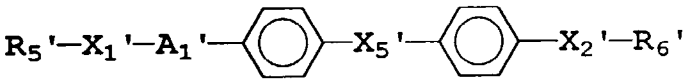

(VIIIb)

und

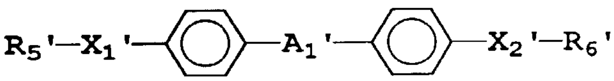

(VIIIc);

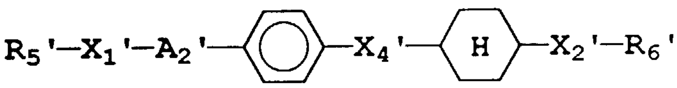

(IXa)

und

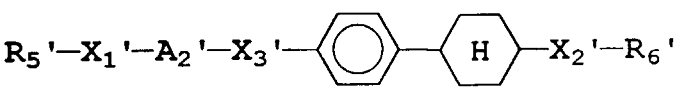

(IXb);

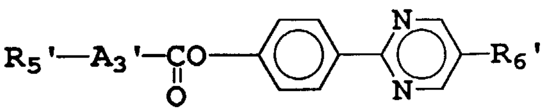

(Xa),

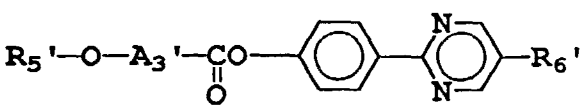

(Xb),

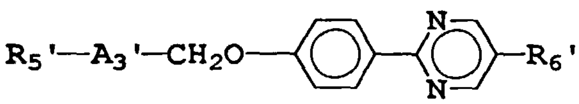

(Xc),

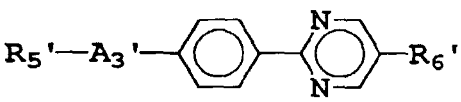

(Xd),

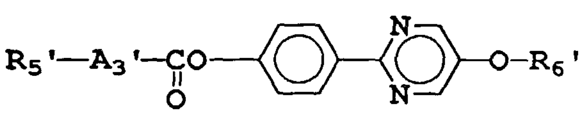

(Xe),

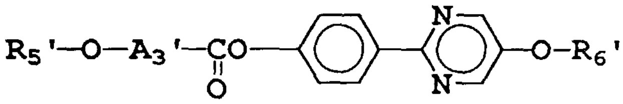

(Xf)

und

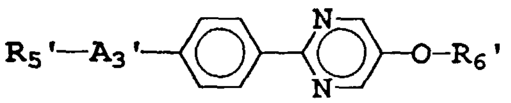

(Xg);

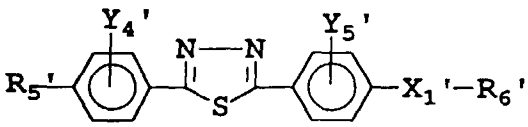

(XIa),

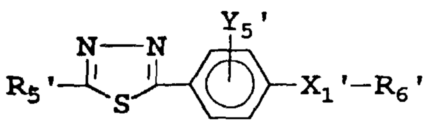

(XIb),

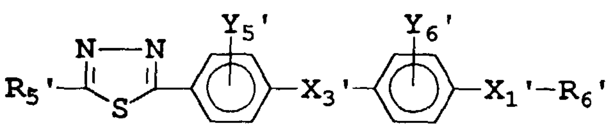

(XIc)

und

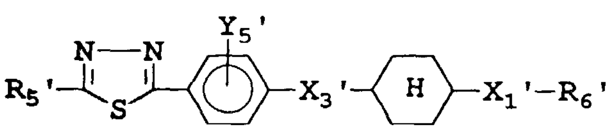

(XId).

**12.** Flüssigkristallmischung nach Anspruch 11, bei der (a) $R_1$' und $R_2$' irgendeine der folgenden Gruppen (i) bis (ix) bezeichnen, (b) $R_3$'und $R_4$' irgendeine der folgenden Gruppen (i) bis (v), (viii) oder (ix) bezeichnen und (c) $R_5$' und $R_6$' irgendeine der folgenden Gruppen (i) bis (iii), (v), (viii) oder (ix) bezeichnen:

i) eine lineare Alkylgruppe mit 1 bis 15 Kohlenstoffatomen;

ii)

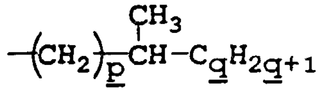

(optisch aktiv oder inaktiv), worin p eine ganze Zahl von 0 bis 5 bezeichnet und q eine ganze Zahl von 1 bis 11 bezeichnet;

iii)

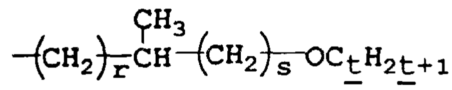

(optisch aktiv oder inaktiv), worin r eine ganze Zahl von 0 bis 6 bezeichnet, s 0 oder 1 bezeichnet und t eine ganze Zahl von 1 bis 14 bezeichnet;

iv)

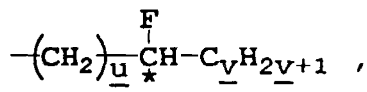

worin u 0 oder 1 bezeichnet und v eine ganze Zahl von 1 bis 16 bezeichnet;

v)

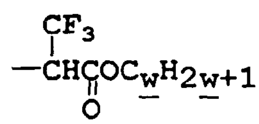

(optisch aktiv oder inaktiv), worin w eine ganze Zahl von 1 bis 15 bezeichnet;

vi)

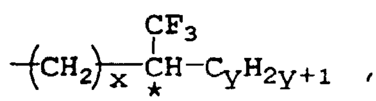

worin x eine ganze Zahl von 0 bis 2 bezeichnet und y eine ganze Zahl von 1 bis 15 bezeichnet;

vii)

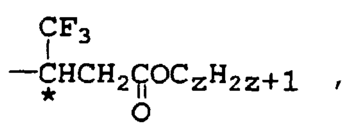

worin z eine ganze Zahl von 1 bis 15 bezeichnet;

viii)

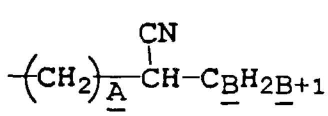

(optisch aktiv oder inaktiv), worin A eine ganze Zahl von 0 bis 2 bezeichnet und B eine ganze Zahl von 1 bis 15 bezeichnet; und

ix)

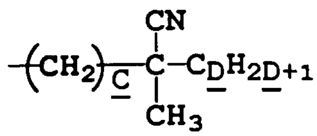

(optisch aktiv oder inaktiv), worin C eine ganze Zahl von 0 bis 2 bezeichnet und D eine ganze Zahl von 1 bis 15 bezeichnet.

**13.** Flüssigkristallmischung nach Anspruch 10, bei der die zweite mesomorphe Verbindung aus der Gruppe ausgewählt ist, die aus den folgenden Formeln (IIaa bis dc), (IIIaa bis cb), (IVaa bis bf), (Vaa bis fa), (VIIaa bis bb), (VIIIaa bis cc), (IXaa bis bb) und (XIaa bis db) besteht:

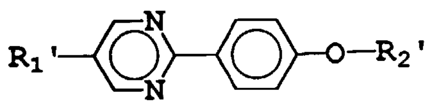

(IIaa),

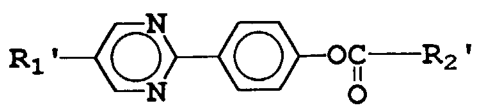

(IIab),

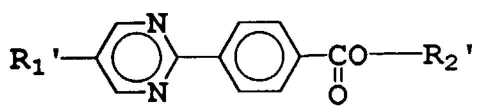

(IIac),

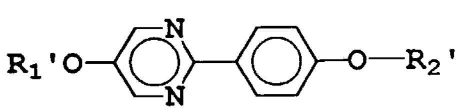

(IIad),

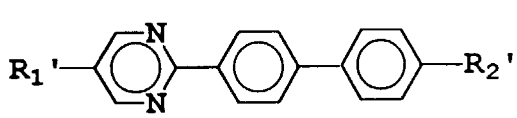

(IIba),

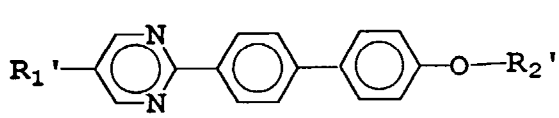

(IIbb),

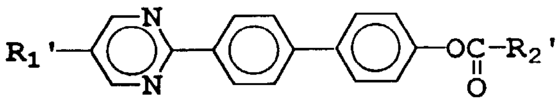

(IIbc),

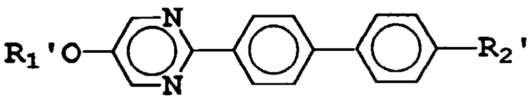

(IIbd),

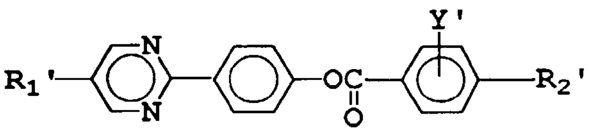

(IIca),

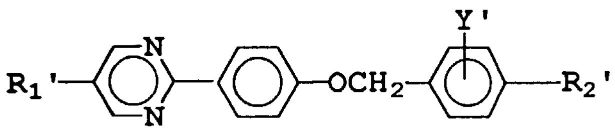

(IIcb),

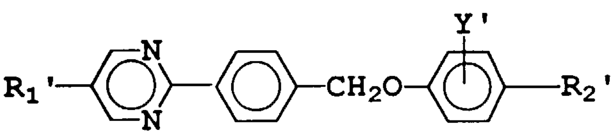

(IIcc),

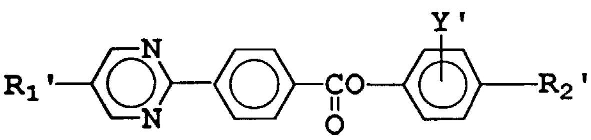

(IIcd),

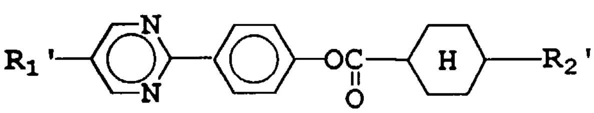

(IIda),

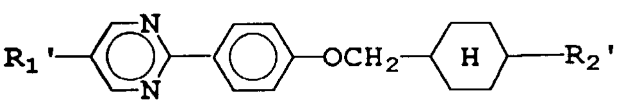

(IIdb)

und

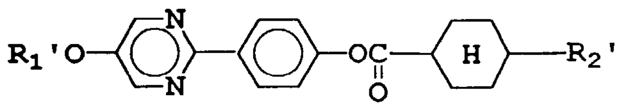

(IIdc);

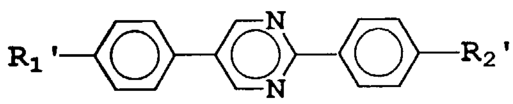

(IIIaa),

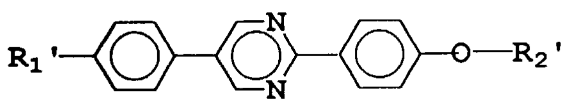

(IIIab),

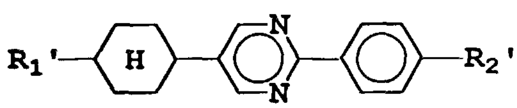

(IIIba),

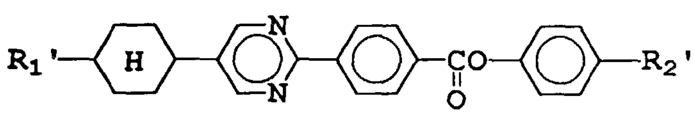

(IIIca)

und

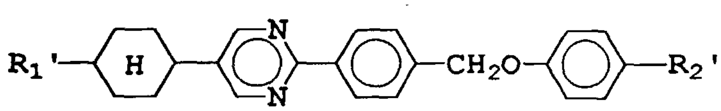

(IIIcb);

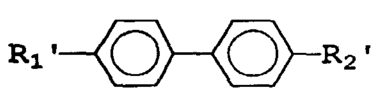

(IVaa),

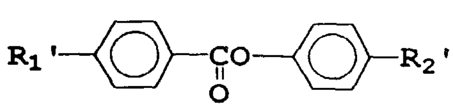

(IVab),

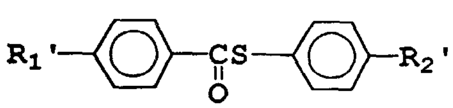

(IVac),

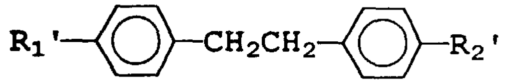

(IVad),

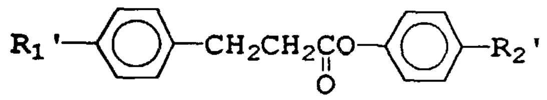

(IVae),

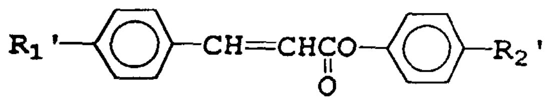

(IVaf),

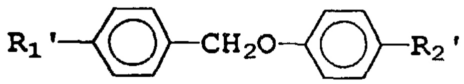

(IVag),

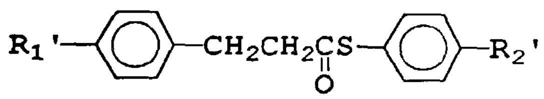

(IVah),

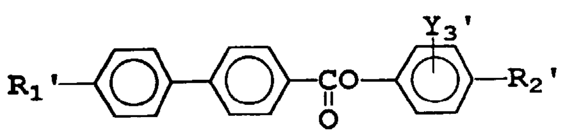

(IVba),

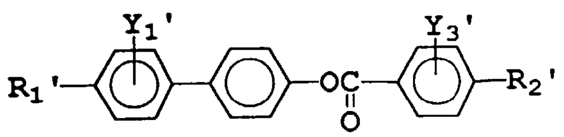

(IVbb),

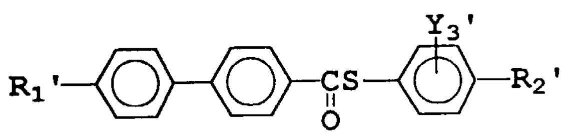

(IVbc),

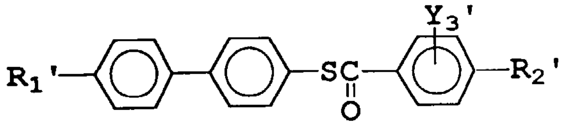

(IVbd),

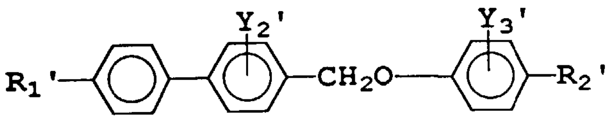

(IVbe)

und

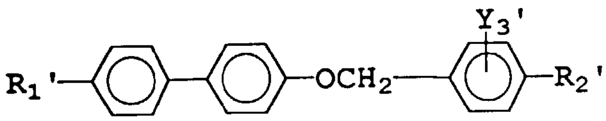

(IVbf);

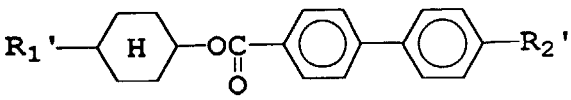

(Vaa),

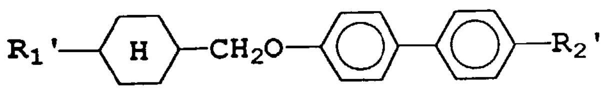

(Vab),

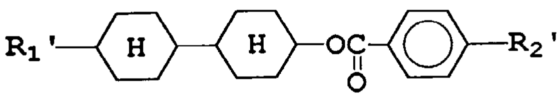

(Vba),

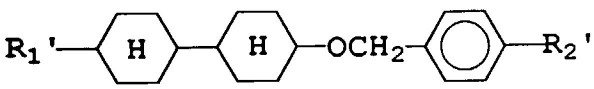

(Vbb),

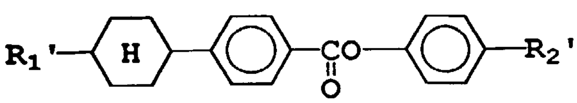

(Vda),

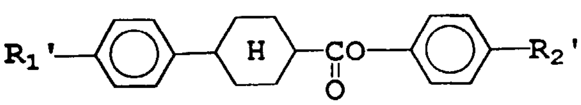

(Vea)

und

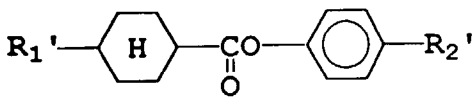

(Vfa);

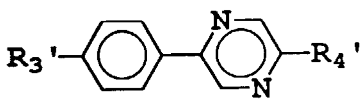

(VIIaa),

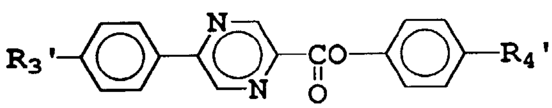

(VIIba)

und

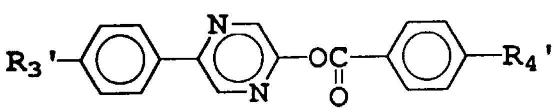

(VIIbb);

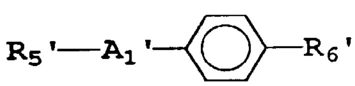

(VIIIaa),

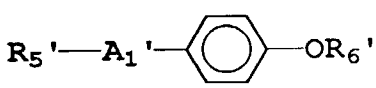

(VIIIab),

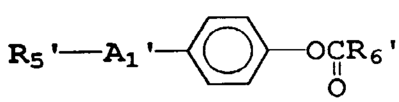

(VIIIac),

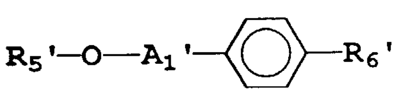

(VIIIad),

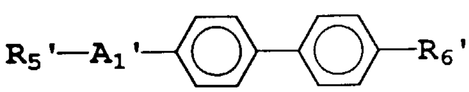

(VIIIba),

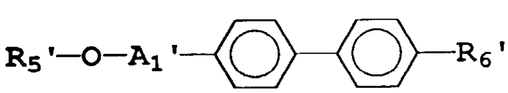

(VIIIbb),

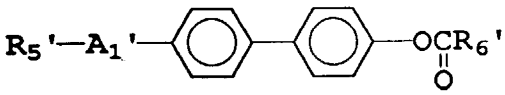

(VIIIbc),

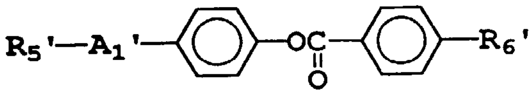

(VIIIbd),

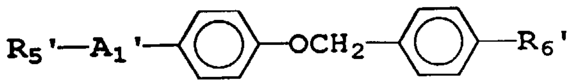

(VIIIbe),

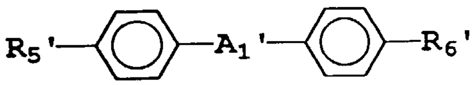

(VIIIca),

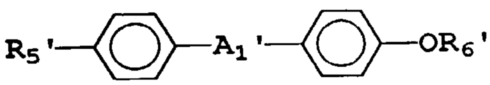

(VIIIcb)

und

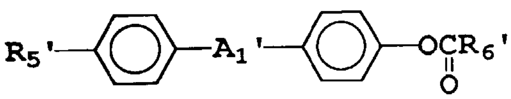

(VIIIcc);

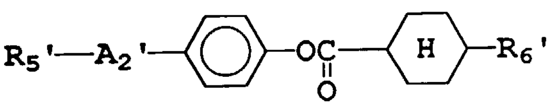

(IXaa),

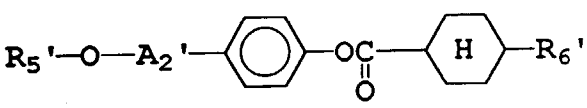

(IXab),

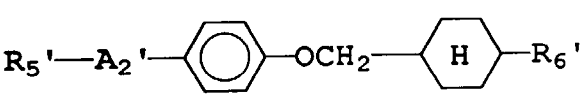

(IXac),

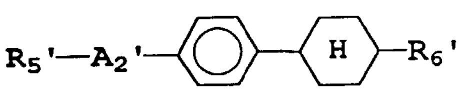

(IXba)

und

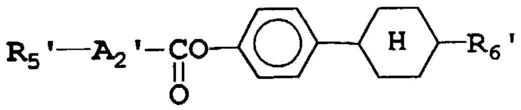

(IXbb);

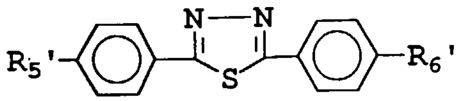

(XIaa),

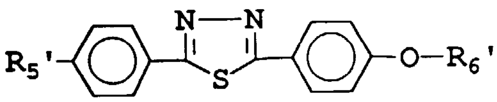

(XIab),

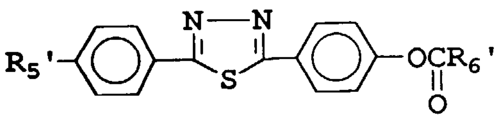

(XIac),

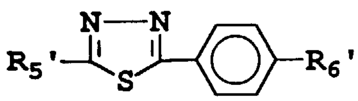

(XIba),

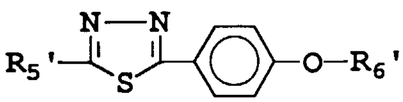

(XIbb),

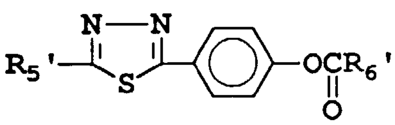

(XIbc),

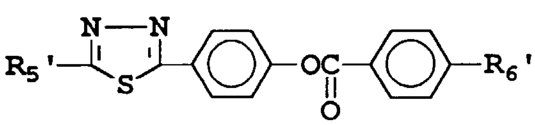

(XIca),

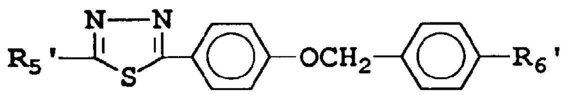

(XIcb),

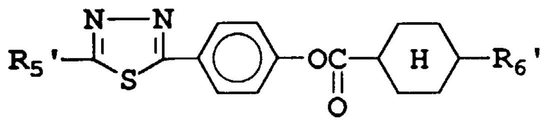

(XIda)

und

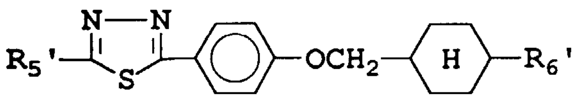

(XIdb).

**14.** Zelle, die ein Paar Grundplatten mit gegenüberliegenden Elektroden und eine dazwischen angeordnete mesomorphe Verbindung nach Ansprüchen 1 bis 6 umfaßt.

**15.** Flüssigkristallvorrichtung, die eine Zelle nach Anspruch 14 und eine Ausrichtungseinstellungsschicht umfaßt.

**16.** Flüssigkristallgerät, das eine Vorrichtung nach Anspruch 15 und eine Schaltung zur Ansteuerung eines Flüssigkristalls umfaßt.

**17.** Zelle, die ein Paar Grundplatten mit gegenüberliegenden Elektroden und eine dazwischen angeordnete Flüssigkristallmischung nach Anspruch 7 umfaßt.

**18.** Zelle nach Anspruch 17, bei der die Mischung 1 bis 60 Masse% der mesomorphen Verbindung nach Ansprüchen 1 bis 6 enthält.

**19.** Zelle nach Anspruch 18, bei der die Mischung 1 bis 40 Masse% der mesomorphen Verbindung nach Ansprüchen 1 bis 6 enthält.

**20.** Zelle nach Anspruch 18, bei der die zweite mesomorphe Verbindung aus der Gruppe ausgewählt ist, die aus den folgenden Formeln (II) bis (XI) besteht:

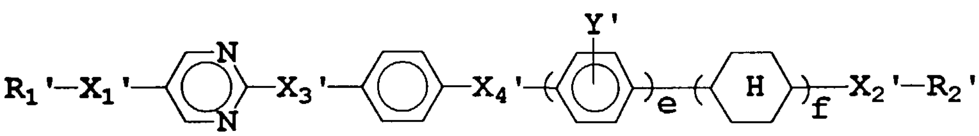

(II),

worin e 0 oder 1 bezeichnet und f 0 oder 1 bezeichnet, unter der Bedingung, daß e + f = 0 oder 1; Y' H, Halogen, $CH_3$ oder $CF_3$ bezeichnet; $X_1$' und $X_2$' eine Einfachbindung,

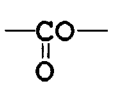

,

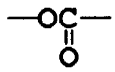 , —O— oder 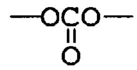

bezeichnen und $X_3$' und $X_4$' eine Einfachbindung,

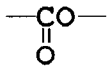 , 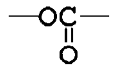 ,

-$OCH_2$- oder -$CH_2O$- bezeichnen;

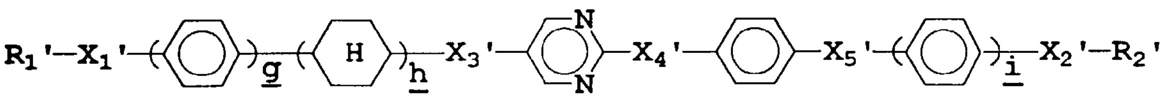

(III),

worin g und h 0 oder 1 bezeichnen, unter der Bedingung, daß g + h = 1; i 0 oder 1 bezeichnet; $X_1$' und $X_2$' eine Einfachbindung,

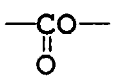 oder 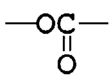 , —O— oder 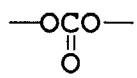

bezeichnen und $X_3$', $X_4$' und $X_5$' eine Einfachbindung,

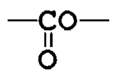 , 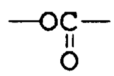 ,

-$CH_2O$- oder -$OCH_2$- bezeichnen;

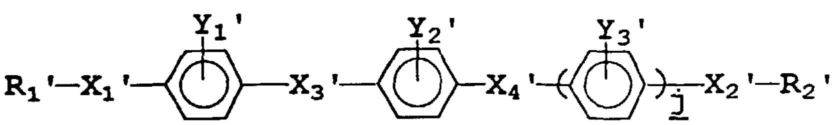

(IV),

worin j 0 oder 1 bezeichnet; $Y_1$', $Y_2$' und $Y_3$' H, Halogen, $CH_3$ oder $CF_3$ bezeichnen; $X_1$' und $X_2$' eine Einfachbindung,

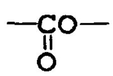 ,

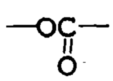 , —O— und 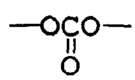

bezeichnen und $X_3$' und $X_4$' eine Einfachbindung,

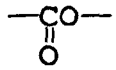, 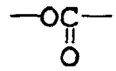,

$-CH_2O-$, $-OCH_2-$, $-CH_2CH_2-$,

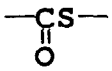, 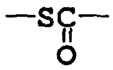, 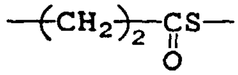, 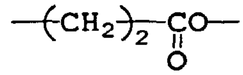, 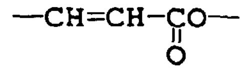

oder -O- bezeichnen;

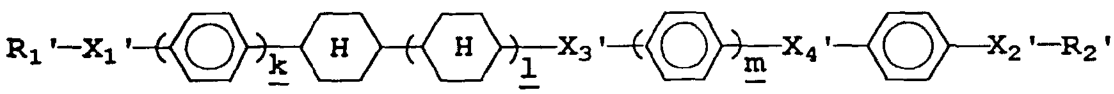

(V),

worin k, l und m 0 oder 1 bezeichnen, unter der Bedingung, daß k + l + m = 0, 1 oder 2; $X_1$' und $X_2$' eine Einfachbindung,

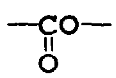, 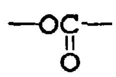, —O— oder 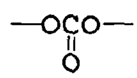

bezeichnen und $X_3$' und $X_4$' eine Einfachbindung,

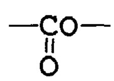, 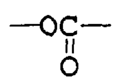,

$-CH_2O-$ oder $-OCH_2-$ bezeichnen;
wobei $R_1$' und $R_2$' eine lineare oder verzweigte Alkylgruppe mit 1 bis 18 Kohlenstoffatomen bezeichnen, wobei in dieser Alkylgruppe eine Methylengruppe oder zwei oder mehr nicht benachbarte Methylengruppen durch -CHX- (worin X Halogen ist) ersetzt sein können und wobei in dieser Alkylgruppe ferner eine Methylengruppe oder zwei oder mehr nicht benachbarte Methylengruppen, die von denen, die direkt an $X_1$' oder $X_2$' gebunden sind, verschieden sind, durch mindestens eine Spezies von -O-,

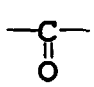, 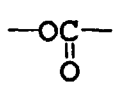, 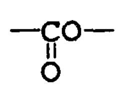, 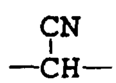 und 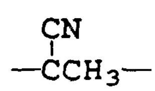

ersetzt sein können, unter der Bedingung, daß $R_1$' und $R_2$' nicht an eine Ringstruktur gebunden sind, wenn $R_1$' und $R_2$' eine halogenierte Alkylgruppe bezeichnen, die *eine* durch

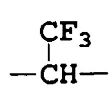

oder -CHX- (worin X Halogen ist) ersetzte Methylengruppe enthält;

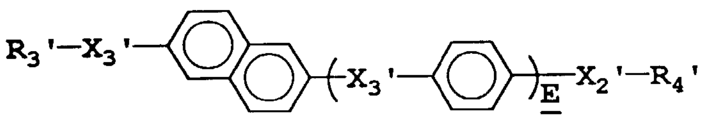 (VI),

worin E 0 oder 1 bezeichnet; $X_2$' eine Einfachbindung,

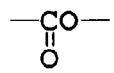 ,

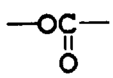 , $-O-$ oder 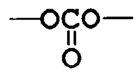

bezeichnet und $X_3$' eine Einfachbindung,

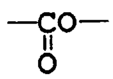 , 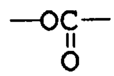 ,

$-CH_2O-$ oder $-OCH_2-$ bezeichnet;

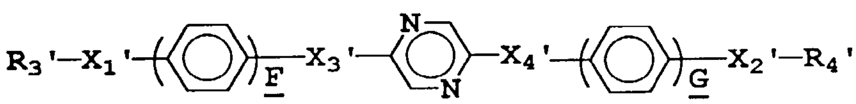 (VII),

worin F und G 0 oder 1 bezeichnen; $X_1$' und $X_2$' eine Einfachbindung,

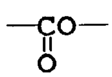 , 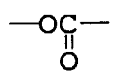

oder -O- bezeichnen und $X_3$' und $X_4$' eine Einfachbindung,

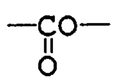 , 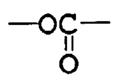 ,

$-CH_2O-$ oder $-OCH_2-$ bezeichnen;
wobei $R_3$' und $R_4$' eine lineare oder verzweigte Alkylgruppe mit 1 bis 18 Kohlenstoffatomen bezeichnen, wobei in dieser Alkylgruppe eine Methylengruppe oder zwei oder mehr nicht benachbarte Methylengruppen durch -CHX- (worin X Halogen ist) ersetzt sein können und wobei in dieser Alkylgruppe ferner eine Methylengruppe oder zwei oder mehr nicht benachbarte Methylengruppen, die von denen, die direkt an $X_1$' oder $X_2$' gebunden sind, verschieden sind, durch mindestens eine Spezies von -O-,

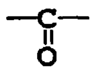 , 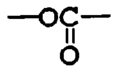 , 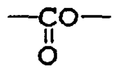 , 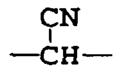 und 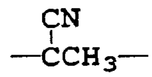

ersetzt sein können, unter der Bedingung, daß $R_3$' und $R_4$' nicht an eine Ringstruktur gebunden sind, wenn $R_3$' und $R_4$' eine halogenierte Alkylgruppe bezeichnen, die *eine* durch -CHX- (worin X Halogen ist) ersetzte Methylengruppe enthält;

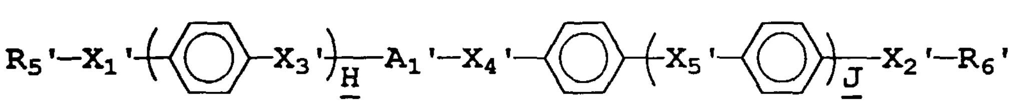 (VIII),

worin H und J 0 oder 1 bezeichnen, unter der Bedingung, daß H + J = 0 oder 1; $X_1$' und $X_2$' eine Einfachbindung,

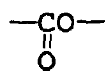 ,

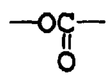

oder -O- bezeichnen; $A_1$'

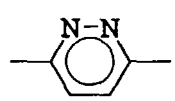 , 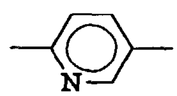

oder

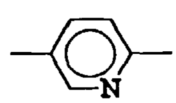

bezeichnet und $X_3$', $X_4$' und $X_5$' eine Einfachbindung,

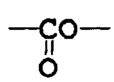 , 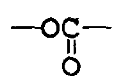 ,

-$CH_2$O- oder -O$CH_2$- bezeichnen;

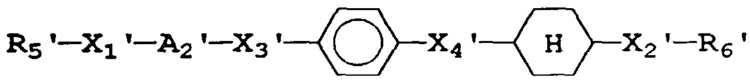 (IX),

worin $X_1$' und $X_2$' eine Einfachbindung,

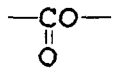 , 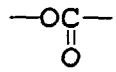

oder -O- bezeichnen; $A_2$'

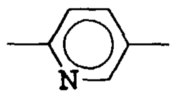 oder 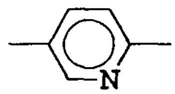

bezeichnet und $X_3$' und $X_4$' eine Einfachbindung,

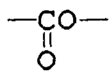 , 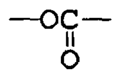 ,

$-CH_2O-$ oder $-OCH_2-$ bezeichnen;

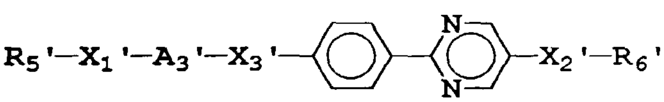 (X),

worin $X_1$' und $X_2$' eine Einfachbindung,

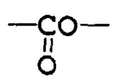 , 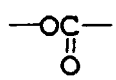

oder -O- bezeichnen; $A_3$'

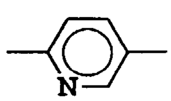 oder 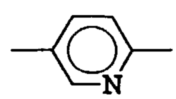

bezeichnet und $X_3$' eine Einfachbindung,

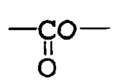 , 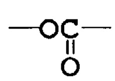 ,

-$CH_2O$- oder -$OCH_2$- bezeichnet;

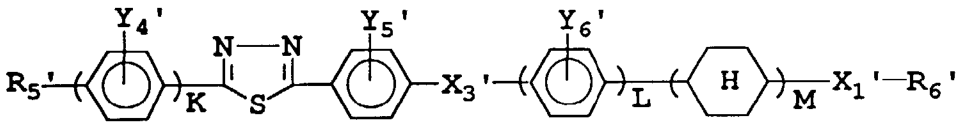 (XI),

worin K, L und M unabhängig 0 oder 1 bezeichnen, unter der Bedingung, daß K + L + M = 0 oder 1; $Y_4$', $Y_5$' und $Y_6$' H oder F bezeichnen; $X_1$' eine Einfachbindung,

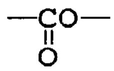 , 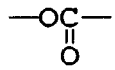

oder -O- bezeichnet und $X_3$' eine Einfachbindung,

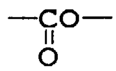 , 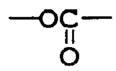 ,

-$CH_2O$- oder -$OCH_2$- bezeichnet;
wobei $R_5$' und $R_6$' eine lineare oder verzweigte Alkylgruppe mit 1 bis 18 Kohlenstoffatomen bezeichnen, wobei in dieser Alkylgruppe eine Methylengruppe oder zwei oder mehr nicht benachbarte Methylengruppen, die von denen, die direkt an $X_1$' oder $X_2$' gebunden sind, verschieden sind, durch mindestens eine Spezies von -O-,

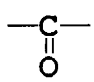 , 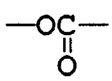 , 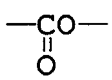 , 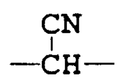 und 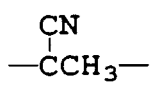

ersetzt sein können.

**21.** Zelle nach Anspruch 20, bei der die zweite mesomorphe Verbindung aus der Gruppe ausgewählt ist, die aus den folgenden Formeln (IIa bis d), (IIIa bis c), (IVa und b), (Va bis f), (VIa und b), (VIIa und b), (VIIIa bis c), (IXa und b), (Xa bis g) und (XIa bis d) besteht:

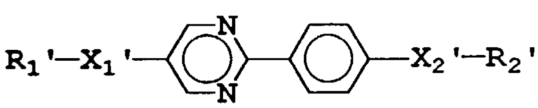 (IIa),

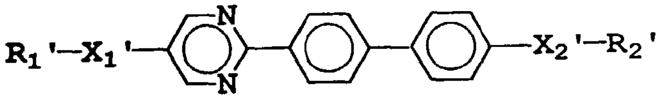 (IIb),

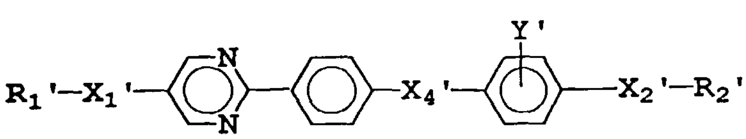 (IIc)

und

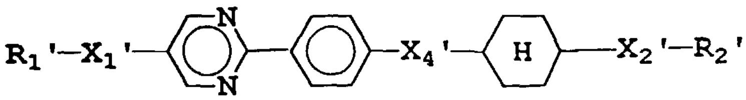

(IId);

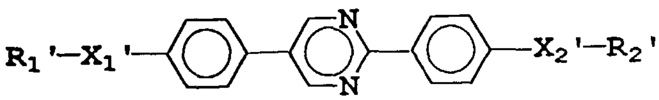

(IIIa),

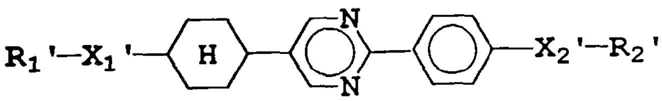

(IIIb)

und

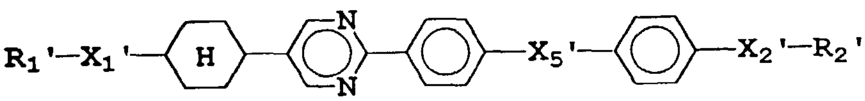

(IIIc);

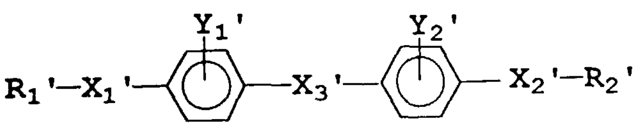

(IVa)

und

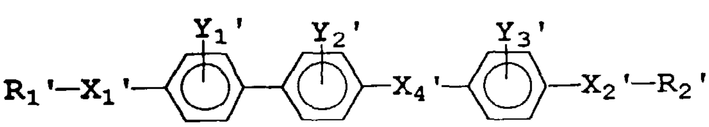

(IVb);

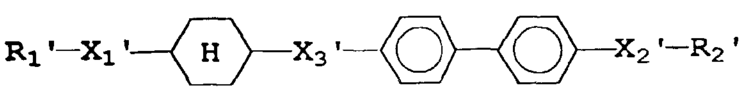

(Va),

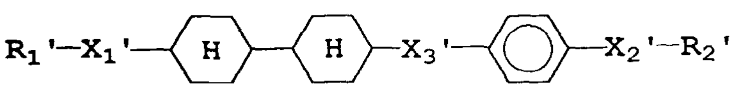

(Vb),

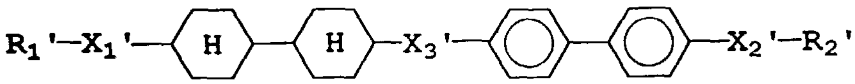

(Vc),

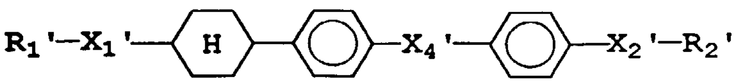

(Vd),

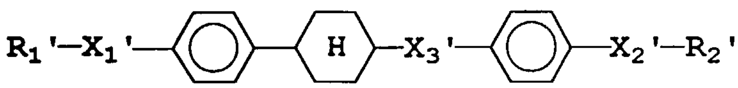

(Ve)

und

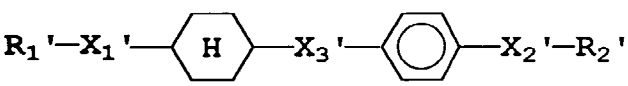

(Vf);

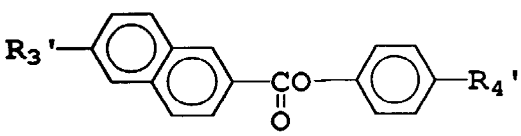

(VIa)

und

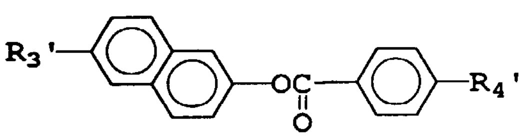

(VIb);

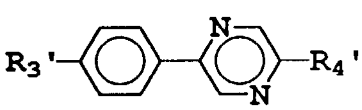

(VIIa)

und

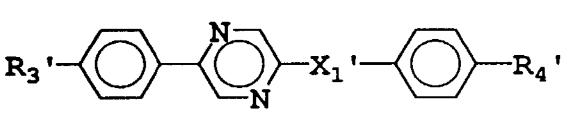

(VIIb);

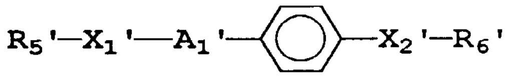

(VIIIa),

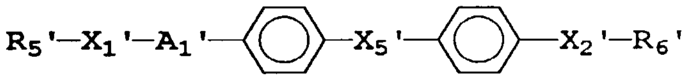

(VIIIb)

und

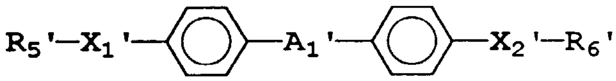

(VIIIc);

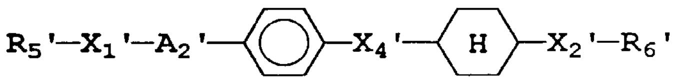

(IXa)

und

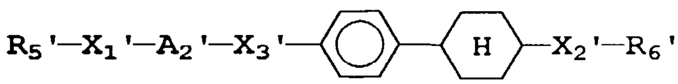

(IXb);

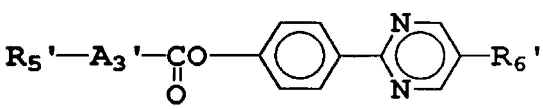

(Xa),

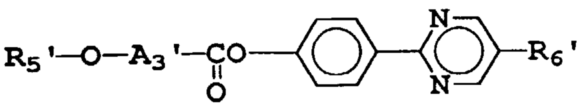

(Xb),

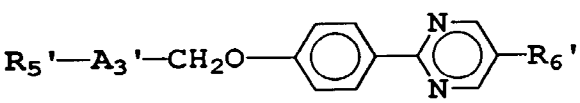

(Xc),

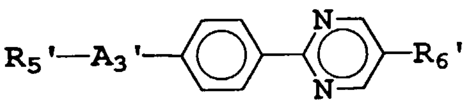

(Xd),

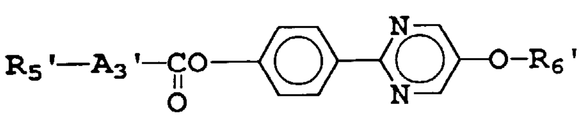

(Xe),

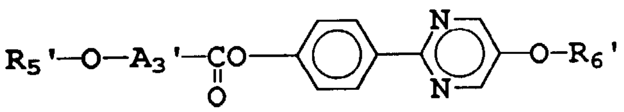

(Xf)

und

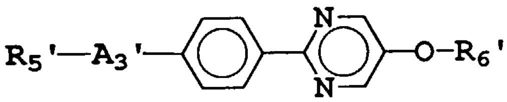

(Xg);

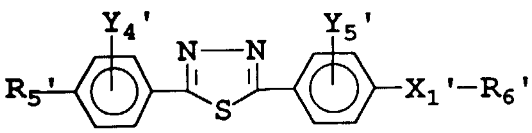

(XIa),

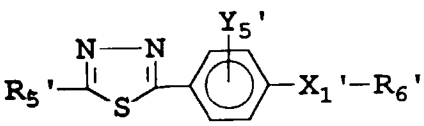

(XIb),

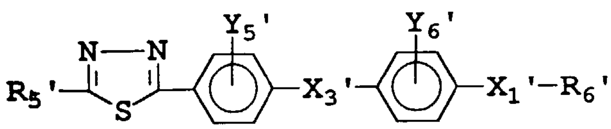

(XIc)

und

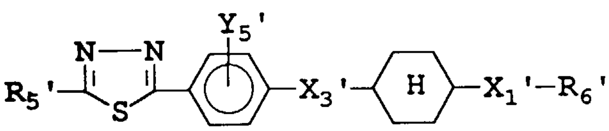

(XId).

**22.** Zelle nach Anspruch 20, bei der die zweite mesomorphe Verbindung aus der Gruppe ausgewählt ist, die aus den folgenden Formeln (IIaa bis dc), (IIIaa bis cb), (IVaa bis bf), (Vaa bis fa), (VIIaa bis bb), (VIIIaa bis cc), (IXaa bis bb) und (XIaa bis db) besteht:

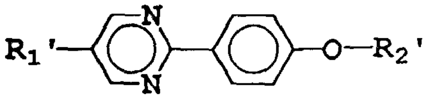

(IIaa),

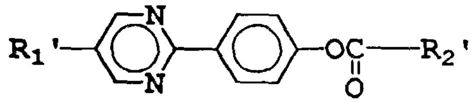 (IIab),

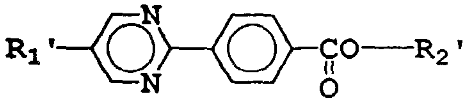 (IIac),

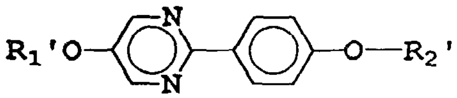 (IIad),

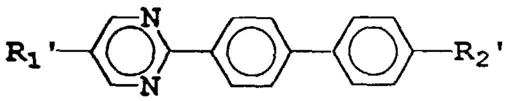 (IIba),

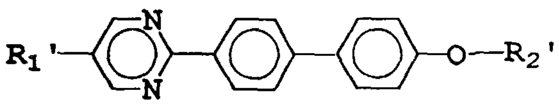 (IIbb),

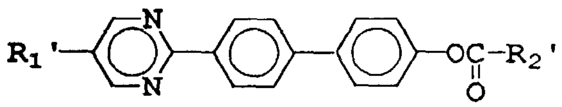 (IIbc),

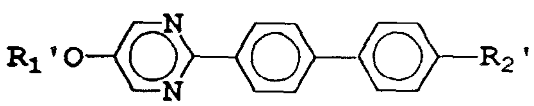 (IIbd),

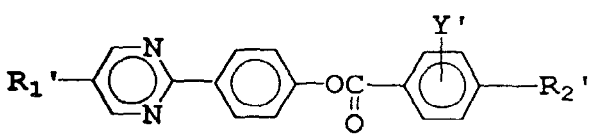 (IIca),

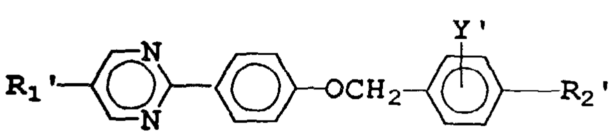 (IIcb),

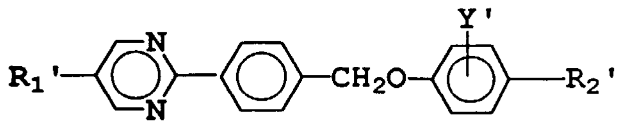

(IIcc),

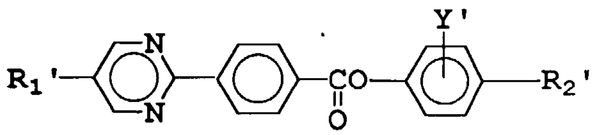

(IIcd),

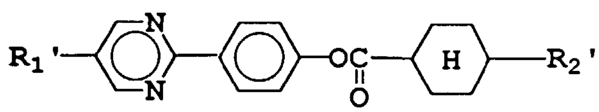

(IIda),

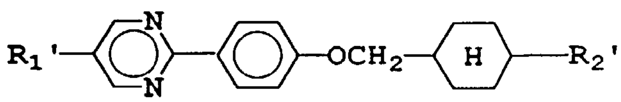

(IIdb)

und

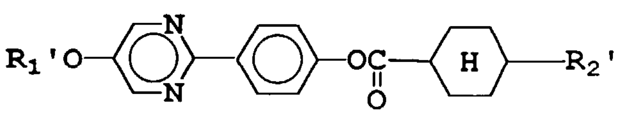

(IIdc);

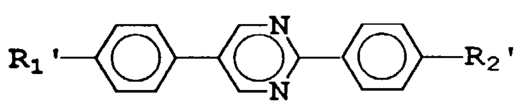

(IIIaa),

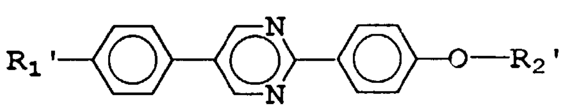

(IIIab),

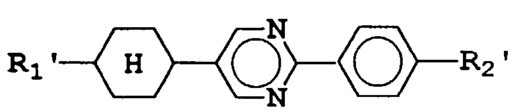

(IIIba),

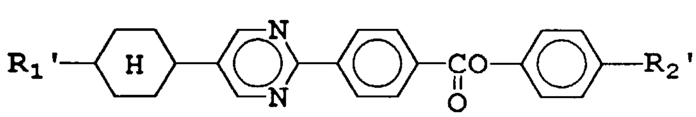

(IIIca)

und

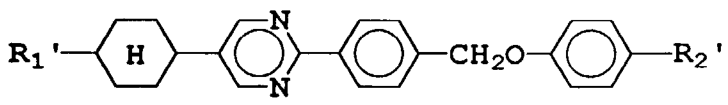

(IIIcb);

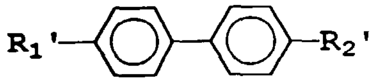

(IVaa),

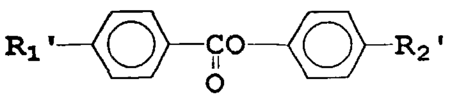

(IVab),

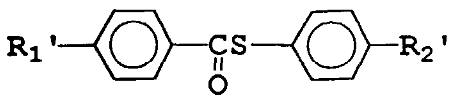

(IVac),

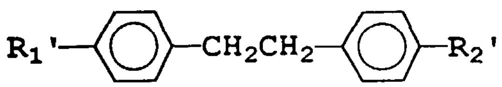

(IVad),

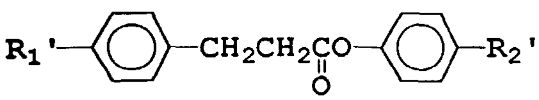

(IVae),

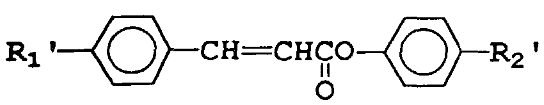

(IVaf),

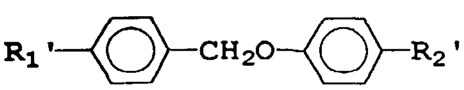

(IVag),

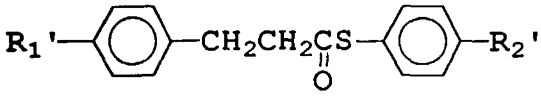

(IVah),

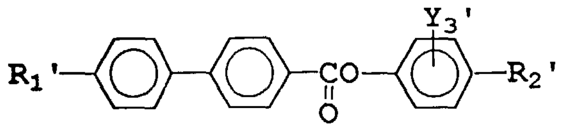
(IVba),

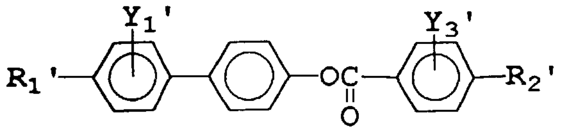
(IVbb),

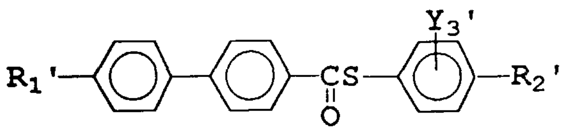
(IVbc),

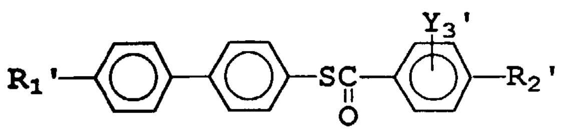
(IVbd),

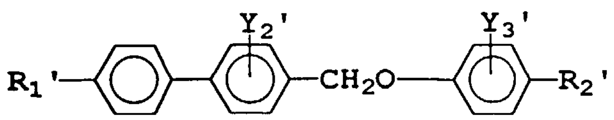
(IVbe)

und

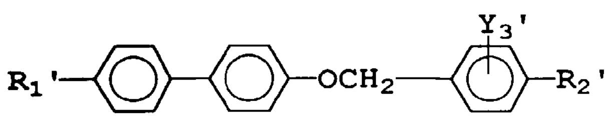
(IVbf);

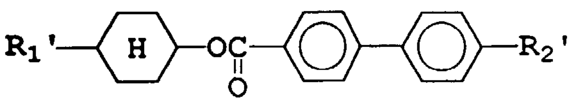
(Vaa),

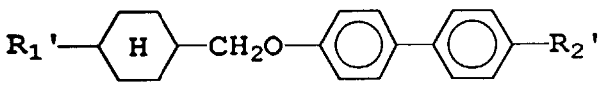
(Vab),

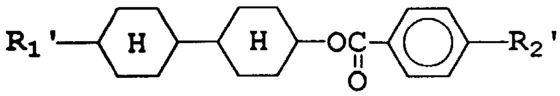

(Vba),

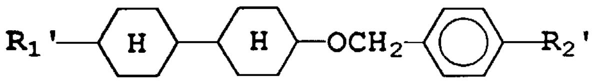

(Vbb),

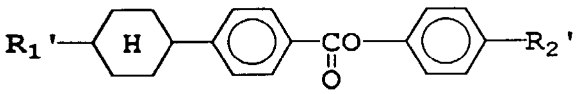

(Vda),

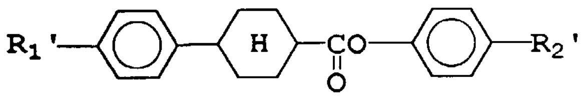

(Vea)

und

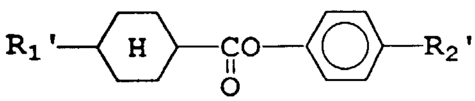

(Vfa);

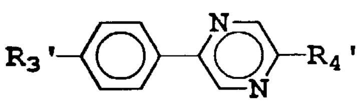

(VIIaa),

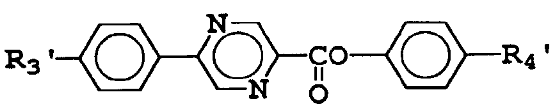

(VIIba)

und

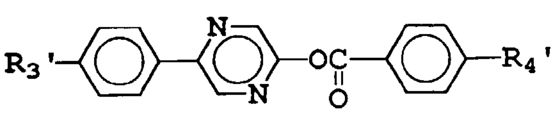

(VIIbb);

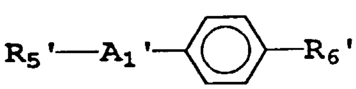

(VIIIaa),

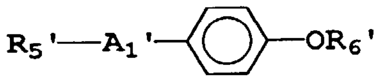

(VIIIab),

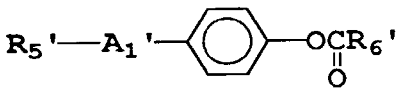

(VIIIac),

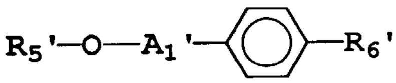

(VIIIad),

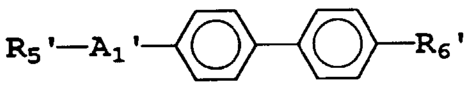

(VIIIba),

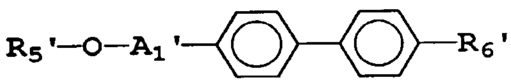

(VIIIbb),

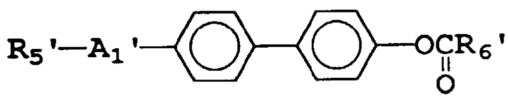

(VIIIbc),

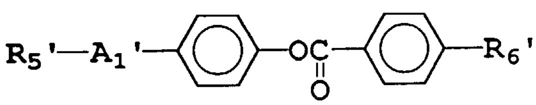

(VIIIbd),

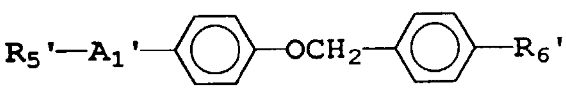

(VIIIbe),

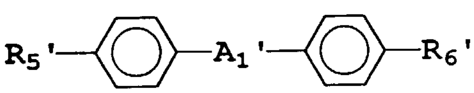

(VIIIca),

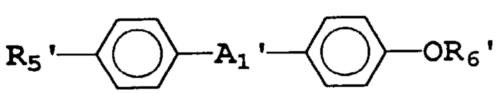

(VIIIcb)

und

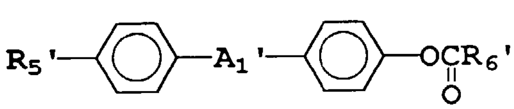

(VIIIcc);

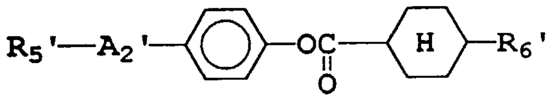

(IXaa),

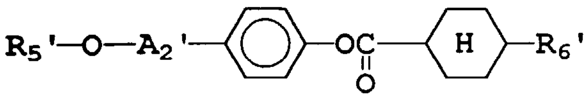

(IXab),

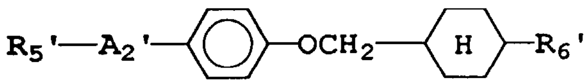

(IXac),

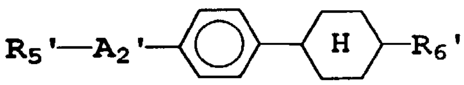

(IXba)

und

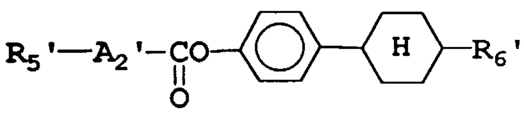

(IXbb);

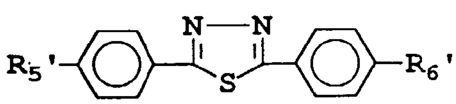

(XIaa),

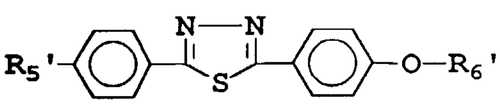

(XIab),

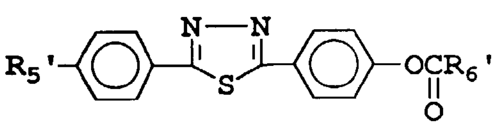

(XIac),

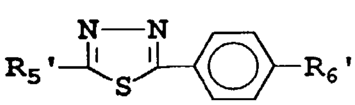

(XIba),

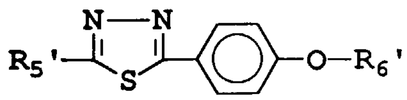

(XIbb),

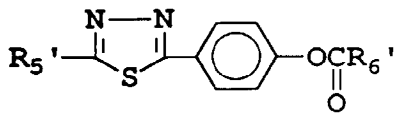

(XIbc),

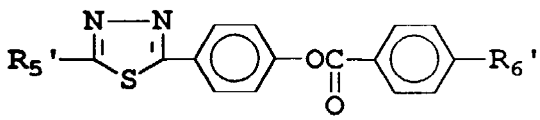

(XIca),

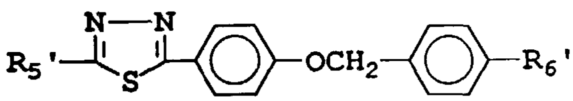

(XIcb),

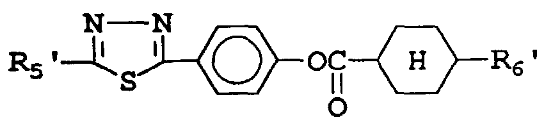

(XIda)

und

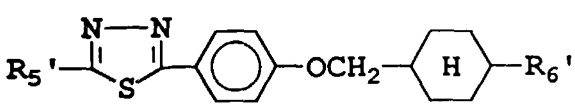

(XIdb).

**23.** Flüssigkristallvorrichtung, die eine Zelle nach Anspruch 17 und eine Ausrichtungseinstellungsschicht umfaßt.

**24.** Flüssigkristallgerät, das eine Vorrichtung nach Anspruch 23 und eine Schaltung zur Ansteuerung eines Flüssigkristalls umfaßt.

## Revendications

**1.** Composé mésomorphe représenté par la formule [I] suivante :

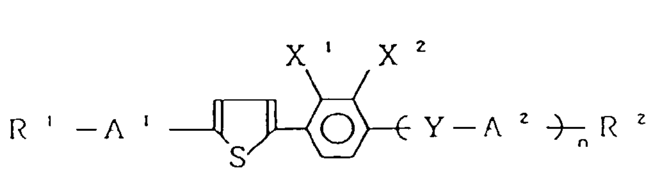

[ I ]

dans laquelle $R^1$ et $R^2$ désignent respectivement un groupe alkyle à chaîne droite ou à chaîne ramifiée ayant 1 à 18 atomes de carbone dont un groupe $-CH_2-$ peut être remplacé par

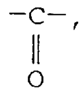, -O-, 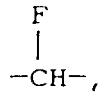, 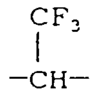, 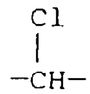, 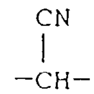 ou 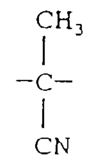

à condition qu'il n'y ait pas contiguïté entre des hétéroatomes, $R^2$ peut être remplacé par un atome d'hydrogène, un atome d'halogène, un groupe cyano ou un groupe trifluorométhyle ; n a la valeur 0 ou 1, sous réserve (1) que $A^1$ désigne une liaison simple, un groupe

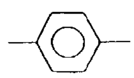, 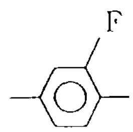 ou 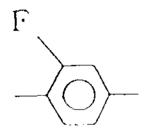.

lorsque n est égal à 0, (2) que $A^1$ désigne une liaison simple lorsque n est égal à 1 ; $A^2$ est l'un quelconque des groupes

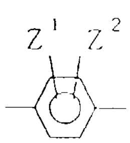, 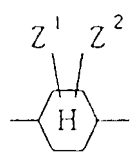, 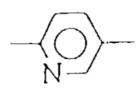, 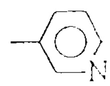 et 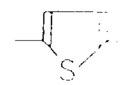

$X^1$, $X^2$, $Z^1$ et $Z^2$ désignent indépendamment l'un quelconque d'un atome d'hydrogène, d'un atome d'halogène, d'un groupe cyano et d'un groupe trifluorométhyle, sous réserve que $X^1$, $X^2$, $Z^1$ et $Z^2$ ne représentent pas tous des atomes d'hydrogène ; Y désigne l'un quelconque de

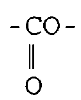, 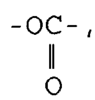,

$-CH_2O-$, $-OCH_2-$ et d'une liaison simple.

**2.** Composé mésomorphe suivant la revendication 1, dans lequel $R^1$ désigne l'un quelconque des groupes (i) à (v) suivants :

(i)

$$-Y\{CH_2\}_nCH_3$$

où Y désigne l'un quelconque d'une liaison simple et des groupes

-O-, 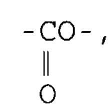, 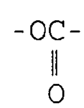 et 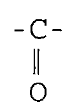 ;

n est un nombre entier de 0 à 17, de préférence de 4 à 16 ;

(ii)

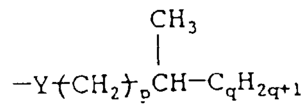

(optiquement actif ou inactif) où Y désigne l'un quelconque d'une liaison simple et des groupes

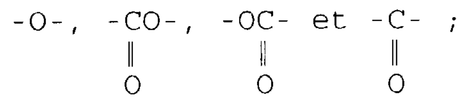

p est un nombre entier de 0 à 7 ; q est un nombre entier de 1 à 10 ;
(iii)

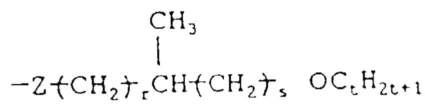

(optiquement actif ou inactif) où Z désigne l'un quelconque des groupes

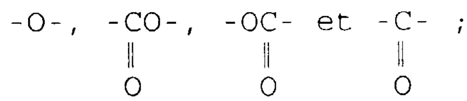

r est un nombre entier de 0 à 7 ; s est le nombre entier 0 ou 1 ; t est un nombre entier de 1 à 14 ;
(iv)

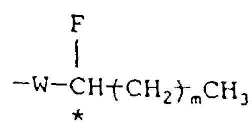

où W désigne l'un quelconque des groupes

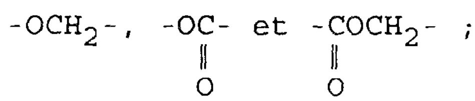

m est un nombre entier de 0 à 14 ; et
(v)

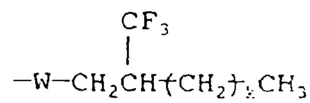

où w désigne l'un quelconque des groupes

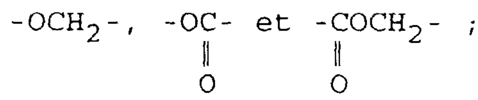

k est un nombre entier de 0 à 12.

**3.** Composé mésomorphe suivant la revendication 1, dans lequel $R^2$ désigne l'un quelconque des groupes (i) à (v) suivants, d'un atome d'hydrogène, d'un atome d'halogène, d'un groupe cyano et d'un groupe trifluorométhyle :

(i)

$$-Y\{CH_2\}_nCH_3$$

où Y désigne l'un quelconque d'une liaison simple et des groupes

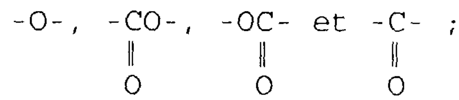

n est un nombre entier de 0 à 17, de préférence de 4 à 16 ;
(ii)

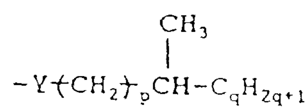

où Y désigne l'un quelconque d'une liaison simple et des groupes

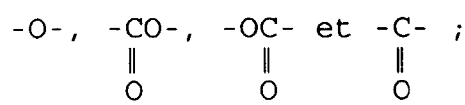

p est un nombre entier de 0 à 7 ; q est un nombre entier de 1 à 10 (optiquement actif ou inactif) ;
(iii)

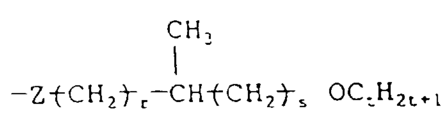

où Z désigne l'un quelconque des groupes

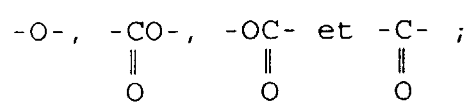

r est un nombre entier de 0 à 7 ; s est le nombre entier 0 ou 1 ; t est un nombre entier de 1 à 14 (optiquement actif ou inactif) ;

(iv)

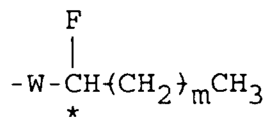

où W désigne l'un quelconque des groupes

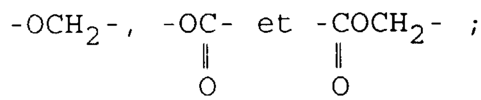

m est un nombre entier de 0 à 14 ; et
(v)

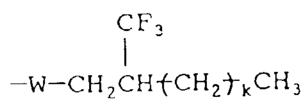

où W désigne l'un quelconque des groupes

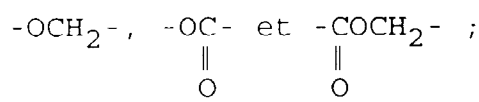

k est un nombre entier de 0 à 12.

**4.** Composé mésomorphe suivant la revendication 1, qui est représenté par les formules (Ia)-(Id) suivantes :

(Ia) 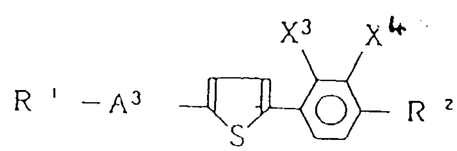

(Ib) 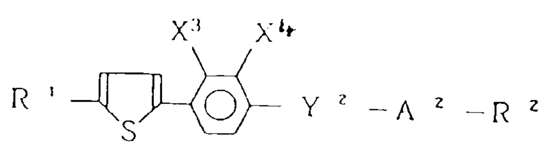

(Ic) 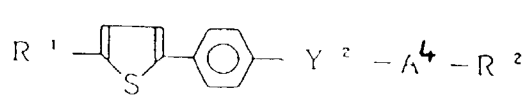

(Id) 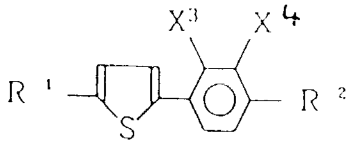

dans lesquelles $R^1$ et $R^2$ désignent respectivement un groupe alkyle à chaîne droite ou à chaîne ramifiée ayant 1 à 18 atomes de carbone, groupe alkyle dans lequel un groupe $-CH_2-$ peut être remplacé par

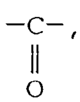, -O-, 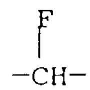, 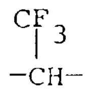, 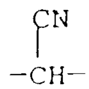, 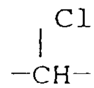 ou 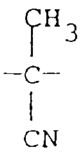

à condition qu'il n'y ait pas contiguïté entre des hétéroatomes, $R^2$ peut être remplacé par un atome d'hydrogène, un atome d'halogène, un groupe cyano ou un groupe trifluorométhyle ; $A^2$ désigne l'un quelconque des groupes

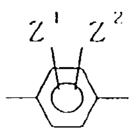, 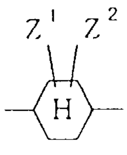, 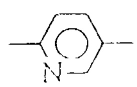, 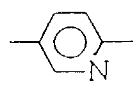 et 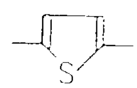

$X^1$, $X^2$, $Z^1$ et $Z^2$ désignent indépendamment l'un quelconque d'un atome d'hydrogène, d'un atome d'halogène, d'un groupe cyano et d'un groupe trifluorométhyle, sous réserve que $X^1$, $X^2$, $Z^1$ et $Z^2$ ne puissent pas tous être un atome d'hydrogène ; Y désigne l'un quelconque des groupes

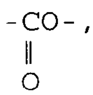, 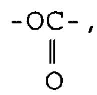,

$-CH_2O-$, $-OCH_2-$
et d'une liaison simple.
$A^3$ représente un groupe

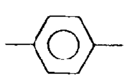, 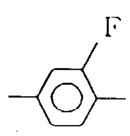 ou 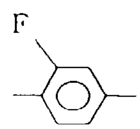

$A^4$ représente un groupe

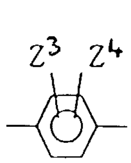, 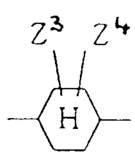

$X^3$ et $X^4$ désignent un atome de fluor, un groupe cyano, un groupe trifluorométhyle ou un atome d'hydrogène, de préférence un atome de fluor (sous réserve que $X^3$ et $X^4$ ne soient pas tous deux des atomes d'hydrogène) ;
$Y^2$ représente

$$-O\underset{\underset{O}{\|}}{C}-,\quad -OCH_2-$$

ou une liaison simple, de préférence un groupe

$$-O\underset{\underset{O}{\|}}{C}-$$

ou une liaison simple ; $Z^3$ et $Z^4$ désignent un atome de fluor, un groupe cyano, un groupe trifluorométhyle ou un atome d'hydrogène, de préférence un atome de fluor ou un groupe trifluorométhyle ou un atome d'hydrogène, sous réserve que $Z^3$ et $Z^4$ ne soient pas tous deux des atomes d'hydrogène.

**5.** Composé mésomorphe suivant la revendication 4, dans lequel $R^1$ désigne l'un quelconque des groupes (i) à (v) suivants :

(i)

$$-Y(CH_2)_nCH_3$$

où Y représente l'un quelconque d'une liaison simple et des groupes

$$-O-,\quad -\underset{\underset{O}{\|}}{C}O-,\quad -O\underset{\underset{O}{\|}}{C}-\ \text{et}\ -\underset{\underset{O}{\|}}{C}-\ ;$$

n est un nombre entier de 0 à 17, de préférence de 4 à 16 ;
(ii)

$$-Y(CH_2)_p\overset{\overset{CH_3}{|}}{C}H-C_qH_{2q+1}$$

(optiquement actif ou inactif) où Y désigne l'un quelconque d'une liaison simple et des groupes

$$-O-,\quad -\underset{\underset{O}{\|}}{C}O-,\quad -O\underset{\underset{O}{\|}}{C}-\ \text{et}\ -\underset{\underset{O}{\|}}{C}-\ ;$$

p est un nombre entier de 0 à 7 ; q est un nombre entier de 1 à 10 ;
(iii)

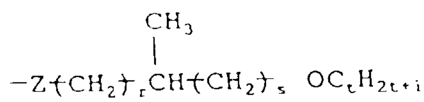

(optiquement actif ou inactif) où Z désigne l'un quelconque des groupes

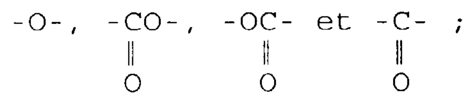

r est un nombre entier de 0 à 7 ; s est le nombre entier 0 ou 1 ; t est un nombre entier de 1 à 14 ;

(iv)

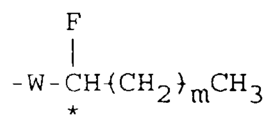

où W désigne l'un quelconque des groupes

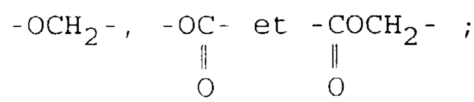

m est un nombre entier de 0 à 14 ; et

(v)

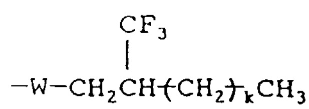

où W désigne l'un quelconque des groupes

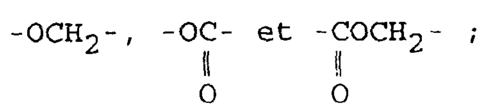

k est un nombre entier de 0 à 12.

**6.** Composé mésomorphe suivant la revendication 4, dans lequel $R^2$ désigne l'un quelconque des groupes (i) à (v) suivants, d'un atome d'hydrogène, d'un atome d'halogène, d'un groupe cyano ou d'un groupe trifluorométhyle :

(i)

$$-Y\{CH_2\}_nCH_3$$

où Y désigne l'un quelconque d'une liaison simple et des groupes

$$-O-,\quad -\underset{\underset{O}{\|}}{C}O-,\quad -O\underset{\underset{O}{\|}}{C}-\quad et\quad -\underset{\underset{O}{\|}}{C}-\quad ;$$

n est un nombre entier de 0 à 17, de préférence de 4 à 16 ;

(ii)

$$-Y-(CH2)_p-\overset{\overset{CH_3}{|}}{C}H-C_qH_{2q+1}$$

où Y désigne l'un quelconque d'une liaison simple et des groupes

$$-O-,\quad -\underset{\underset{O}{\|}}{C}O-,\quad -O\underset{\underset{O}{\|}}{C}-\quad et\quad -\underset{\underset{O}{\|}}{C}-\quad ;$$

p est un nombre entier de 0 à 7 ; q est un nombre entier de 1 à 10 (optiquement actif ou inactif) ;

(iii)

$$-Z-(CH_2)_r-\overset{\overset{CH_3}{|}}{C}H-(CH_2)_s-OC_tH_{2t+1}$$

où Z désigne l'un quelconque des groupes

$$-O-,\quad -\underset{\underset{O}{\|}}{C}O-,\quad -O\underset{\underset{O}{\|}}{C}-\quad et\quad -\underset{\underset{O}{\|}}{C}-\quad ;$$

r est un nombre entier de 0 à 7 ; s est le nombre entier 0 ou 1 ; t est un nombre entier de 1 à 14 (optiquement actif ou inactif) ;

(iv)

$$-W-\underset{*}{\overset{\overset{F}{|}}{C}}H-(CH_2)_m-CH_3$$

où W désigne l'un quelconque des groupes

$$-OCH_2-,\quad -O\underset{\underset{O}{\|}}{C}-\quad et\quad -\underset{\underset{O}{\|}}{C}OCH_2-\quad ;$$

m est un nombre entier de 0 à 14 ; et

(v)

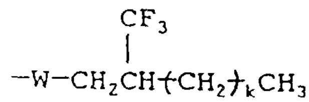

où W désigne l'un quelconque des groupes

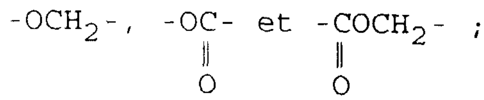

k est un nombre entier de 0 à 12.

7. Composition à cristal liquide, comprenant 1 à 80 % en poids de l'un des composés mésomorphes suivant les revendications 1 à 6 et un second composé mésomorphe dans des proportions appropriées.

8. Composition à cristal liquide suivant la revendication 7, qui contient 1 à 60 % en poids du composé mésomorphe suivant les revendications 1 à 6.

9. Composition à cristal liquide suivant la revendication 8, qui contient 1 à 40 % en poids du composé mésomorphe suivant les revendications 1 à 6.

10. Composition à cristal liquide suivant la revendication 7, dans laquelle le second composé mésomorphe est choisi dans le groupe consistant en composés de formules (II) - (XI) suivantes :

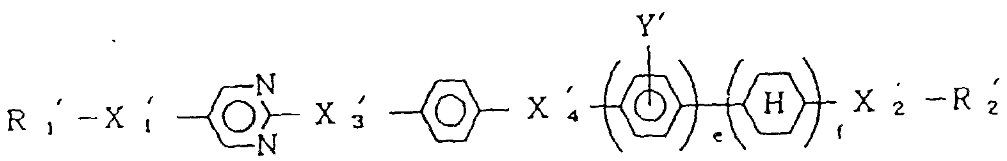

(II)

où e a la valeur 0 ou 1 et f a la valeur O ou 1 sous réserve que la somme e + f soit égale à 0 ou 1 ; Y' représente H, un halogène, un groupe $CH_3$ ou $CF_3$ ; $X_1$' et $X_2$' désignent une liaison simple, un groupe

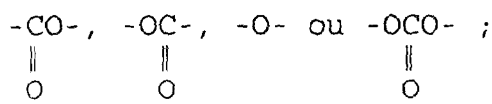

et $X_3$' et $X_4$' désignent une liaison simple, un groupe

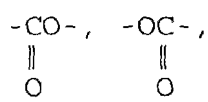

$-OCH_2-$ ou $-CH_2O-$.

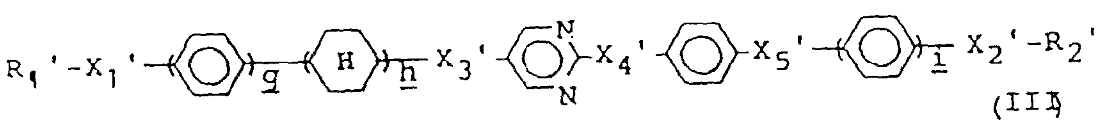

(III)

où g et h ont la valeur 0 ou 1 sous réserve que la somme g + h soit égal à 1 ; i a la valeur 0 ou 1 ; $X_1$' et $X_2$' désignent une liaison simple, un groupe

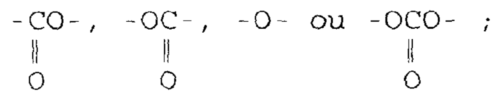

et $X_3$', $X_4$' et $X_5$' désignent une liaison simple, un groupe

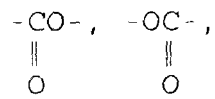

$-CH_2O-$ ou $-OCH_2-$

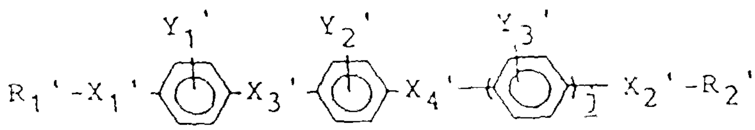

(IV)

où j a la valeur 0 ou 1 ; $Y_1$', $Y_2$' et $Y_3$' représentent H, un halogène, un groupe $CH_3$ ou $CF_3$ . $X_1$' et $X_2$' désignent une liaison simple, un groupe

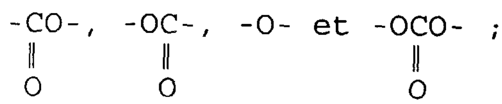

et

$X_3$' et $X_4$' désignent une liaison simple, un groupe

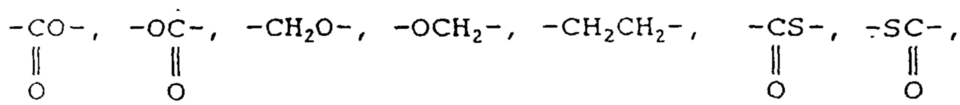

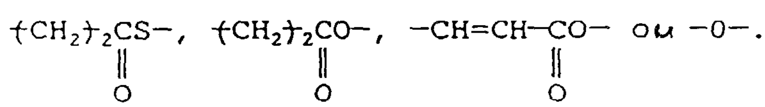

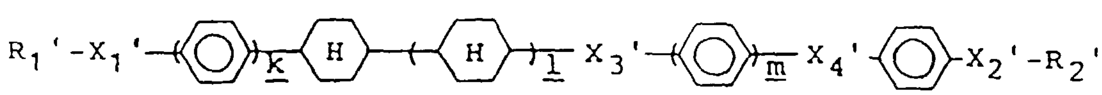

(V )

où k, l et m ont la valeur 0 ou 1 sous réserve que la somme k + l + m soit égale à 0, 1 ou 2 ; $X_1$' et $X_2$' désignent

une liaison simple, un groupe

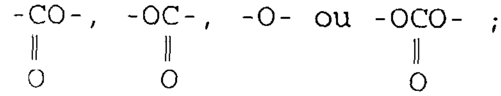

et $X_3$' et $X_4$' désignent une liaison simple, un groupe

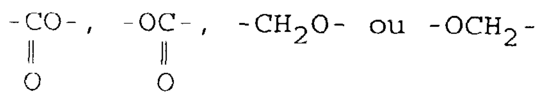

$R_1$' et $R_2$' désignent un groupe alkyle linéaire ou ramifié ayant 1 à 18 atomes de carbone, groupe alkyle dans lequel un ou deux ou plus de deux groupes méthylène non voisins peuvent être remplacés par un groupe -CHX- (où X est un halogène) et groupe alkyle dans lequel, en outre, un ou deux ou plus de deux groupes méthylène non voisins autres que ceux qui sont directement liés à $X_1$' ou $X_2$' peuvent être remplacés par au moins l'un des groupes

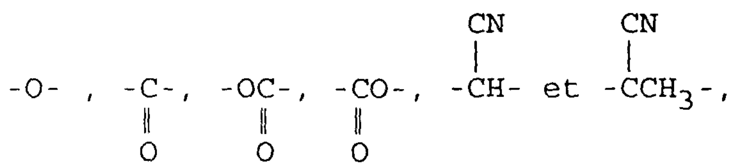

sous réserve que $R_1$' et $R_2$' ne soient pas liés à une structure cyclique lorsque $R_1$' et $R_2$' désignent un groupe alkyle halogéné contenant un groupe méthylène remplacé par

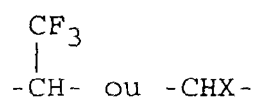

(où X est un halogène) ;

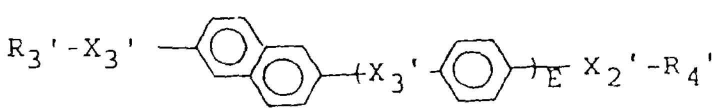 (VI)

où E a la valeur 0 ou 1 ; $X_2$' désigne une liaison simple, un groupe

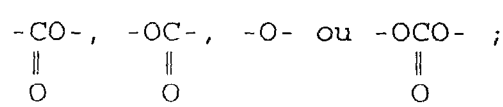

et $X_3$' désigne une liaison simple, un groupe

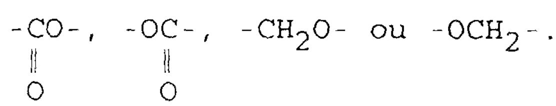

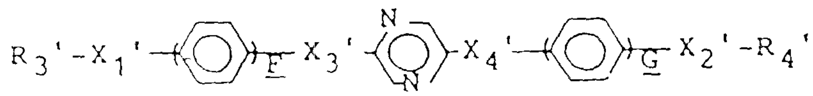

(VII)

où F et G ont la valeur 0 ou 1 ; $X_1$' et $X_2$' désignent une liaison simple, un groupe

$$-\underset{\underset{O}{\|}}{C}O-,\quad -O\underset{\underset{O}{\|}}{C}-\quad \text{ou}\quad -O-\ ;$$

et $X_3$' et $X_4$' désignent une liaison simple, un groupe

$$-\underset{\underset{O}{\|}}{C}O-,\quad -O\underset{\underset{O}{\|}}{C}-,\quad -CH_2O-\quad \text{ou}\quad -OCH_2-.$$

$R_3$' et $R_4$' désignent un groupe alkyle linéaire ou ramifié ayant 1 à 18 atomes de carbone, groupe alkyle dans lequel un ou deux ou plus de deux groupes méthylène non voisins peuvent être remplacés par un groupe -CHX- (où X est un halogène) et groupe alkyle dans lequel, en outre, un ou deux ou plus de deux groupes méthylène non voisins autres que ceux qui sont directement liés à $X_1$' ou $X_2$' peuvent être remplacés par l'un au moins des groupes

$$-O-\ ,\quad -\underset{\underset{O}{\|}}{C}-,\quad -O\underset{\underset{O}{\|}}{C}-,\quad -\underset{\underset{O}{\|}}{C}O-,\quad -\overset{\overset{CN}{|}}{C}H-\quad \text{et}\quad -\overset{\overset{CN}{|}}{C}CH_3-,$$

sous réserve que $R_3$' et $R_4$' ne soient pas liés à une structure cyclique lorsque $R_3$' et $R_4$' désignent un groupe alkyle halogéné contenant un groupe méthylène remplacé par un groupe -CHX- (où X est un halogène) ;

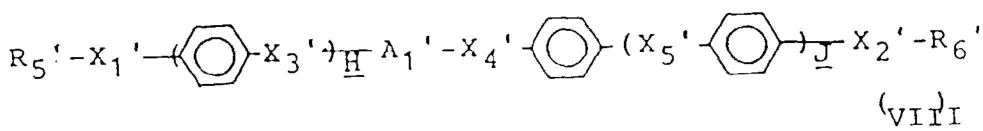

(VIII)

où H et J ont la valeur 0 ou 1 sous réserve que la somme H + J soit égale à 0 ou 1 ; $X_1$' et $X_2$' représentent une liaison simple, un groupe

$$-\underset{\underset{O}{\|}}{C}O-,\quad -O\underset{\underset{O}{\|}}{C}-\quad \text{ou}\quad -O-\ ;$$

$A_1$' est un groupe

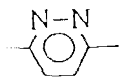 , 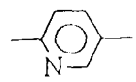 ou 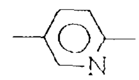

et $X_3'$, $X_4'$ et $X_5'$ désignent une liaison simple, un groupe

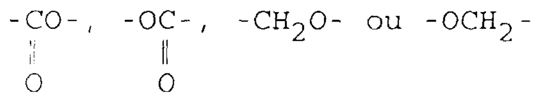

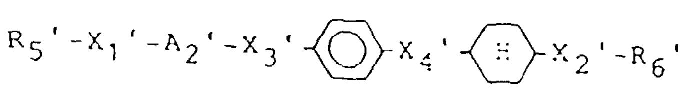 (IX)

où $X_1'$ et $X_2'$ désignent une liaison simple, un groupe

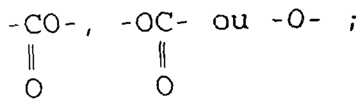

$A_2'$ désigne un groupe

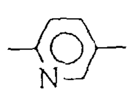 ou 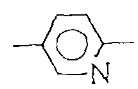

et $X_3'$ et $X_4'$ désignent une liaison simple, un groupe

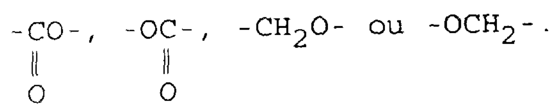

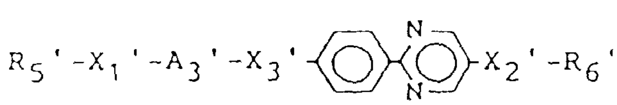 (X)

où $X_1'$ et $X_2'$ désignent une liaison simple, un groupe

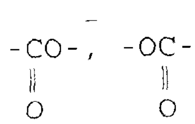

ou -O- ; $A_3'$ désigne un groupe

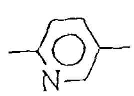 ou 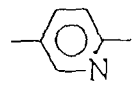

et $X_3'$ désigne une liaison simple, un groupe

$$-\underset{\underset{O}{\|}}{C}O-,\quad -O\underset{\underset{O}{\|}}{C}-,\quad -CH_2O-\ \text{ou}\ -OCH_2-.$$

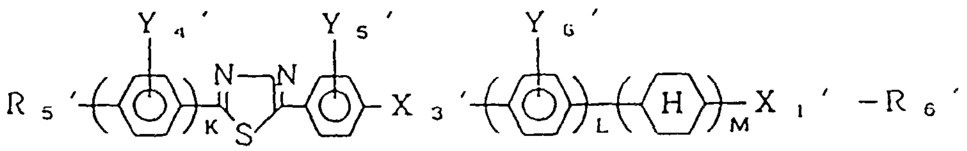 (XI)

où K, L et M ont indépendamment la valeur 0 ou 1 sous réserve que la somme K + L + M soit égale à 0 ou 1 ; $Y_4'$, $Y_5'$ et $Y_6'$ représentent H ou F ; $X_1'$ désigne une liaison simple, un groupe

$$-\underset{\underset{O}{\|}}{C}O-,\quad -O\underset{\underset{O}{\|}}{C}-,$$

ou -O- ; $X_3'$ est une liaison simple, un groupe

$$-\underset{\underset{O}{\|}}{C}O-,\quad -O\underset{\underset{O}{\|}}{C}-,\quad -CH_2O-\ \text{ou}\ -OCH_2-.$$

$R_5'$ et $R_6'$ désignent un groupe alkyle linéaire ou ramifié ayant 1 à 18 atomes de carbone, groupe alkyle dans lequel un ou deux ou plus de deux groupes méthylène non voisins autres que ceux qui sont directement liés à $X_1'$ ou $X_2'$ peuvent être remplacés par l'un au moins des groupes

$$-O-,\quad -\underset{\underset{O}{\|}}{C}-,\quad -O\underset{\underset{O}{\|}}{C}-,\quad -\underset{\underset{O}{\|}}{C}O-,\quad -\overset{\overset{CN}{|}}{C}H-\ \text{et}\ -\overset{\overset{CN}{|}}{C}CH_3-,$$

**11.** Composition à cristal liquide suivant la revendication 10, dans laquelle le second composé mésomorphe est choisi dans le groupe consistant en les composés de formules (IIa-d), (IIIa-c), (IVa,b), (Va-f), (VIa,b), (VIIa,b), (VIIIa-c), (IXa,b), (Xa-g) et (XIa-d) suivantes :

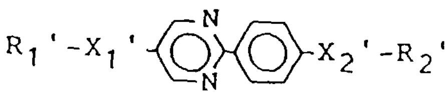

(II a),

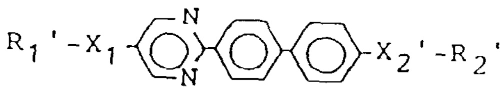

(II b),

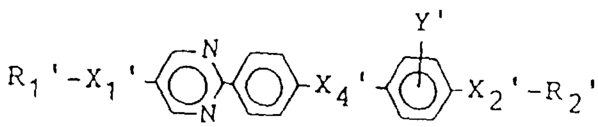

(II c),

et

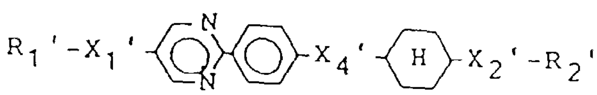

(II d).

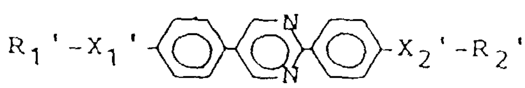

(III a),

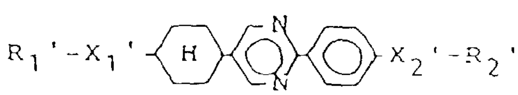

(III b),

et

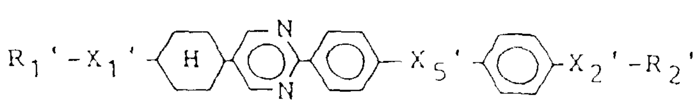

(III c).

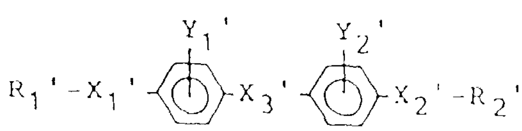

($IV_a$),

et

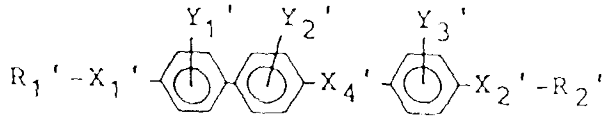

(IV b).

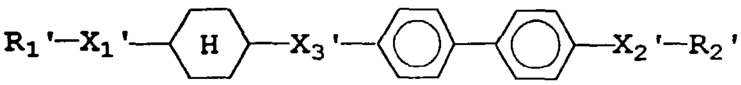

(Va),

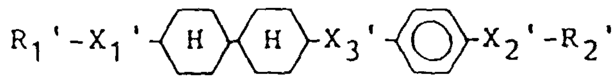

(V b),

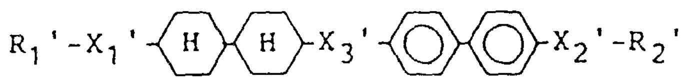

(V c),

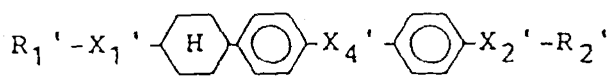

(V d),

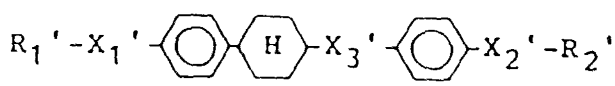

(V e),

et

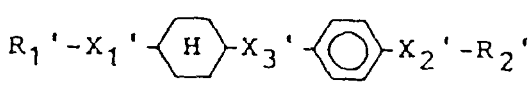

(V f).

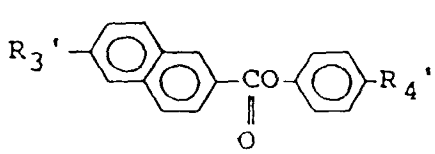

(VI a),

et

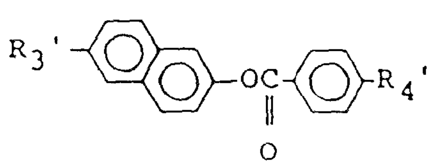

(VI b).

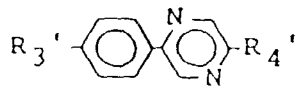

(VII a),

et

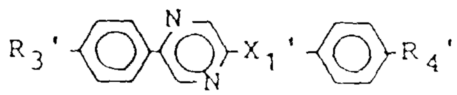

(VII b)

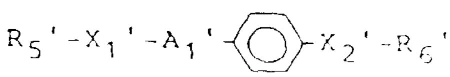

(VIII a),

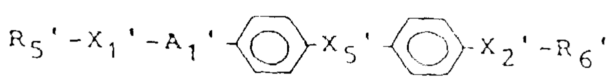

(VIII b),

et

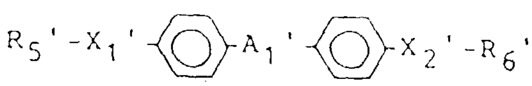

(VIII c)

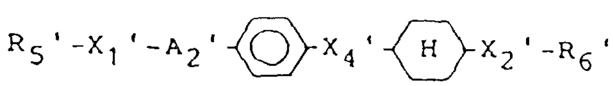

(IX a),

et

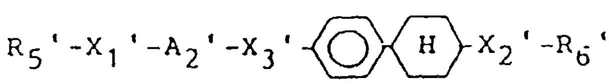

(IX b).

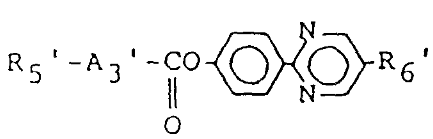

(X a),

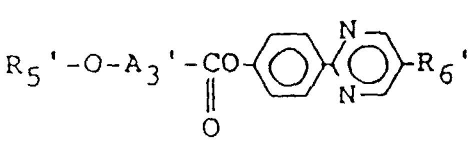

(X b),

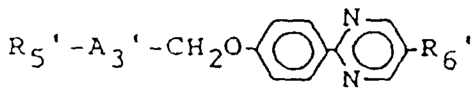

(X c),

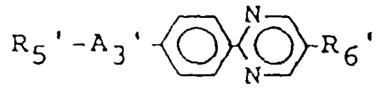

(X d),

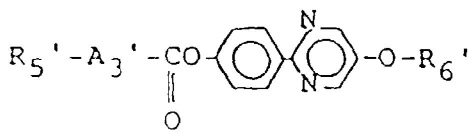

(X e),

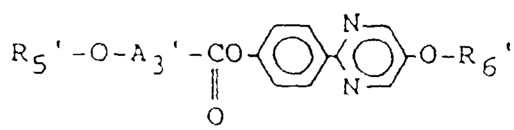

(X f),

et

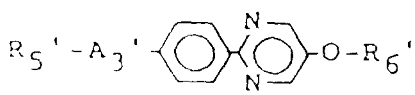

(Xg).

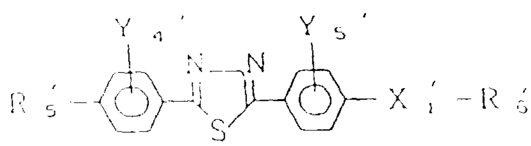

(XI a)

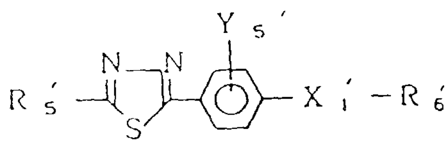

(XI b)

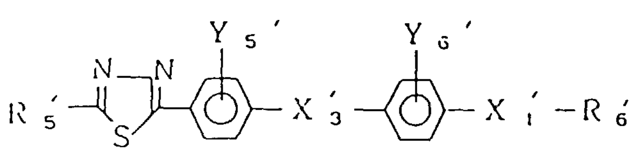

(XI c)

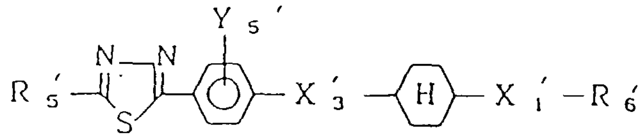

(XId)

**12.** Composition à cristal liquide suivant la revendication 11, dans laquelle (a) $R_1$' et $R_2$' désignent l'un quelconque des groupes (i) à (ix) suivants, (b) $R_3$' et $R_4$' désignent l'un quelconque des groupes (i) à (v), (viii) ou (ix) suivants et (c) $R_5$' et $R_6$' désignent l'un quelconque des groupes (i) à (iii), (vi, (viii) ou (ix) suivants :

i) un groupe alkyle linéaire ayant 1 à 15 atomes de carbone ;

ii) groupe

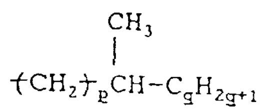

(optiquement actif ou inactif) dans lequel <u>p</u> désigne un nombre entier de 0 à 5 et <u>q</u> désigne un nombre entier de 1 à 11 ;

iii) groupe

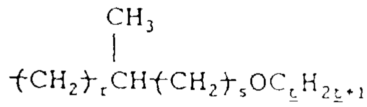

(optiquement actif ou inactif) dans lequel <u>r</u> désigne un nombre entier de 0 à 6, <u>s</u> a la valeur 0 ou 1 et <u>t</u> désigne un nombre entier de 1 à 14 ;

iv) groupe

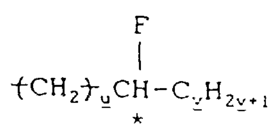

dans lequel <u>u</u> a la valeur 0 ou 1 et <u>v</u> désigne un nombre entier de 1 à 16 ;

v)

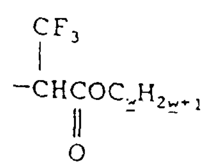

(optiquement actif ou inactif) où <u>w</u> désigne un nombre entier de 1 à 15 ;

vi) groupe

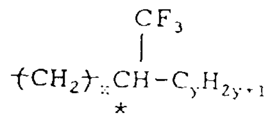

dans lequel X désigne un nombre entier de 0 à 2 et y désigne un nombre entier de 1 à 15 ;

vii) groupe

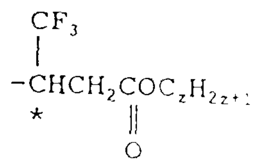

dans lequel z désigne un nombre entier de 1 à 15 ;

viii) groupe

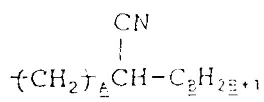

(optiquement actif ou inactif) dans lequel A désigne un nombre entier de 0 à 2 et B désigne un nombre entier de 1 à 15 ; et

ix) groupe

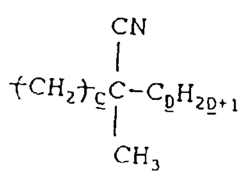

(optiquement actif ou inactif) dans lequel C désigne un nombre entier de 0 à 2 et D désigne un nombre entier de 1 à 15.

**13.** Composition à cristal liquide suivant la revendication 10, dans laquelle le second composé mésomorphe est choisi dans le groupe consistant en composés des formules (IIaa-dc), (IIIaa-cb), (Ivaa-bf), (Vaa-fa), (VIIaa-bb), (VIIIaa-cc), (IXaa-bb), (XIaa-db) suivantes :

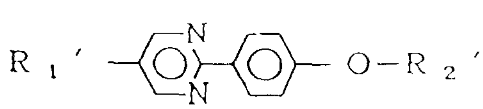

(IIaa) ,

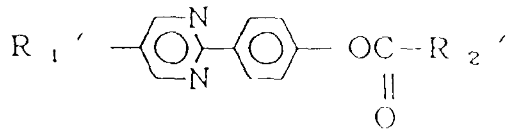

(IIab)

,

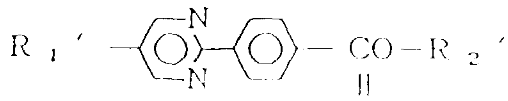

(IIac)

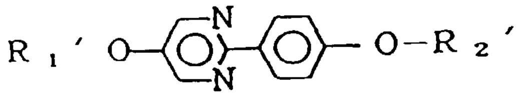

(IIad)

,

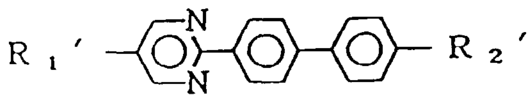

(IIba)

,

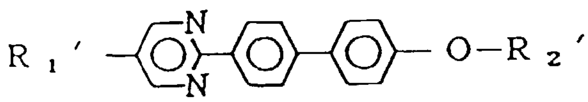

(IIbb)

,

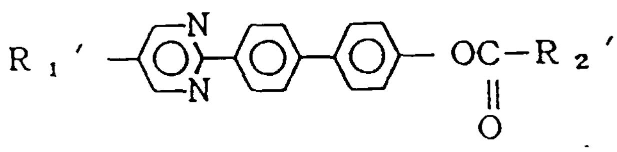

(IIbc)

,

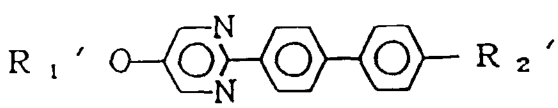

(IIbd)

,

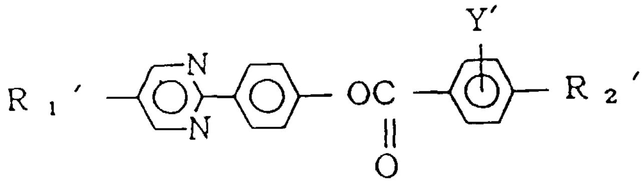

(IIca)

,

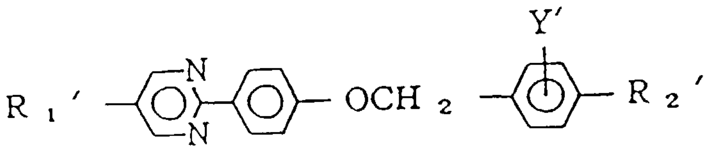

(IIcb) ,

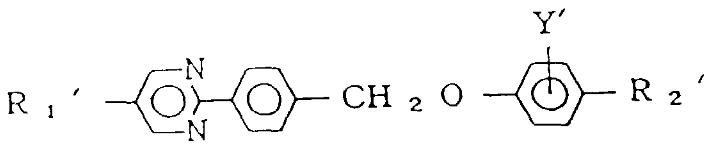

(IIcc) ,

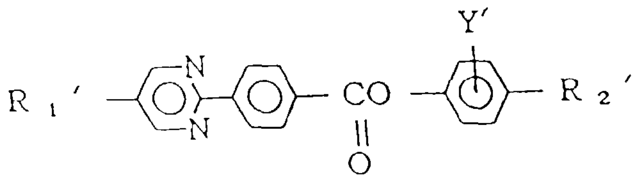

(IIcd) ,

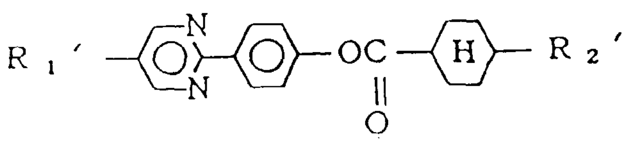

(IIda) ,

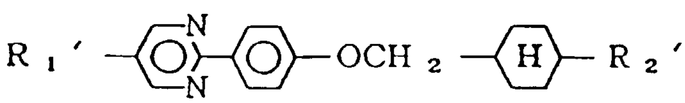

(IIdb) ,

et

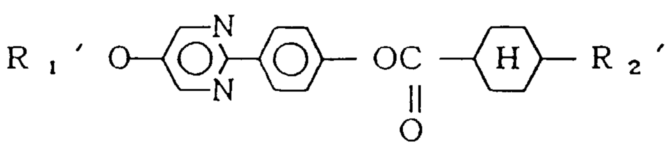

(IIdc) .

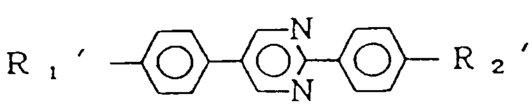

(IIIaa) ,

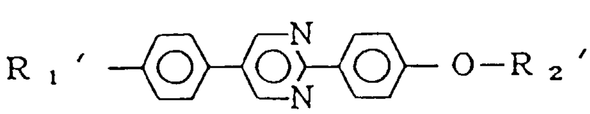

(IIIab) ,

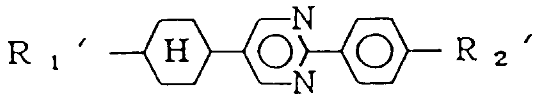 (IIIba) ,

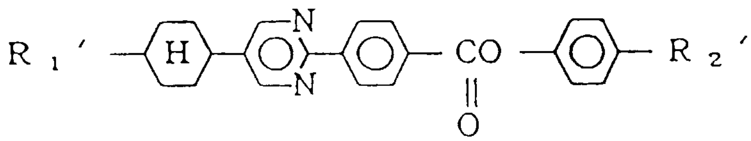 (IIIca) ,

et

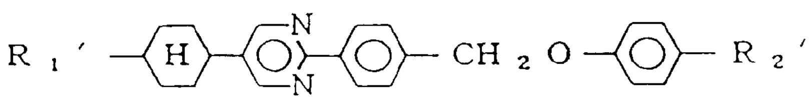 (IIIcb) .

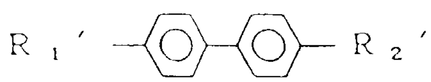 (IVaa) ,

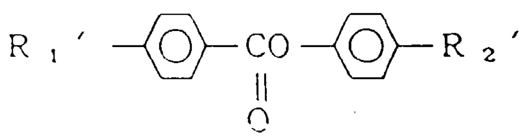 (IVab) ,

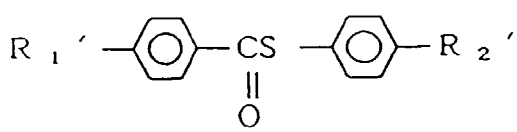 (VIac) ,

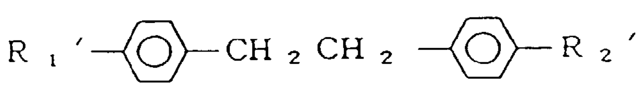 (IVad) ,

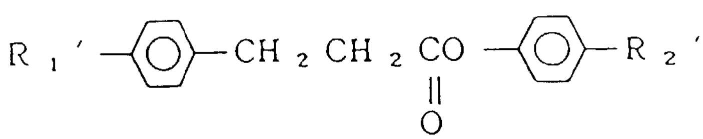 (IVae) ,

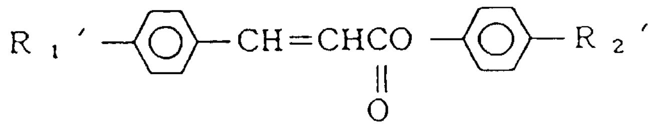

(IVaf)

,

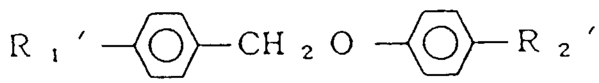

(IVag)

,

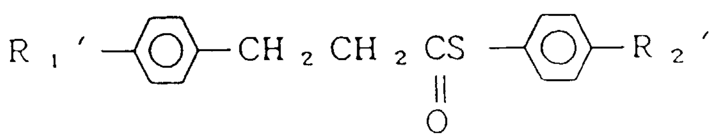

(IVah)

,

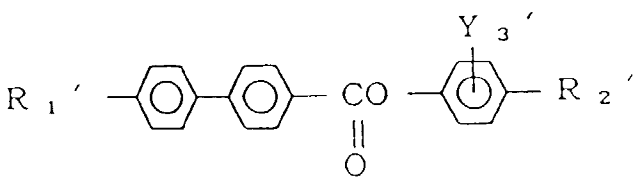

(IVba)

,

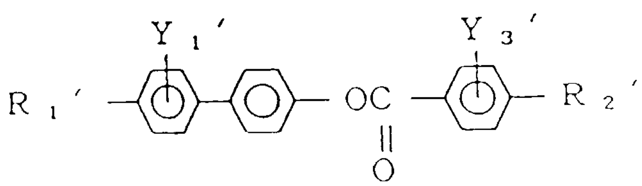

(IVbb)

,

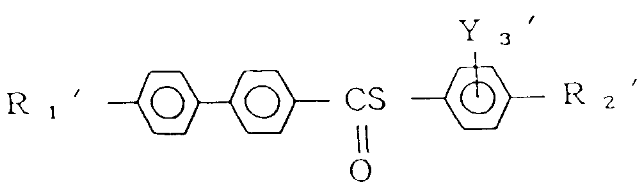

(IVbc)

,

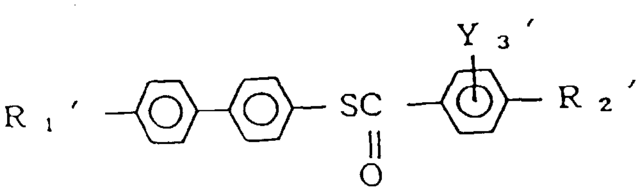

(IVbd)

,

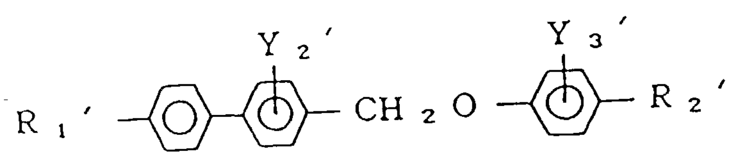

(IVbe)

,

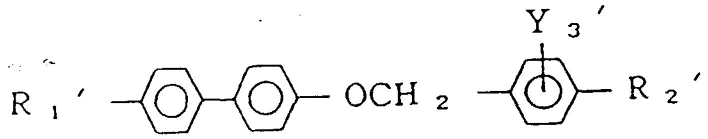 (IV bf)

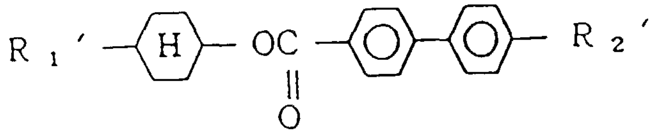 (V aa) ,

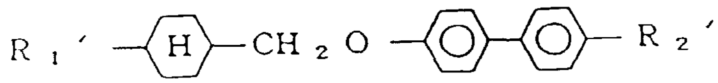 (V ab) ,

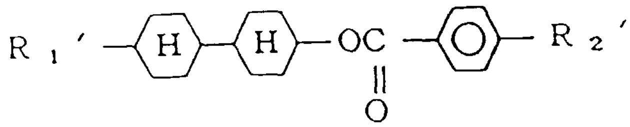 (V ba) ,

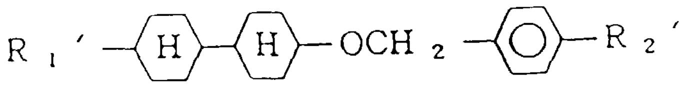 (V bb) ,

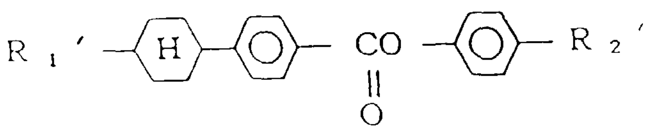 (V da) ,

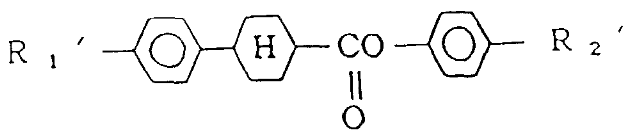 (V ea) ,

et

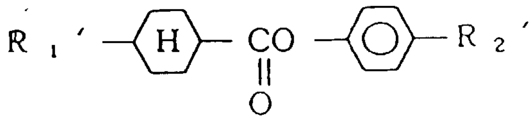

(V fa)

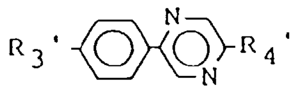

(VII aa),

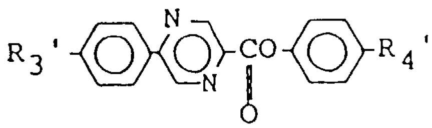

(VII ba),

et

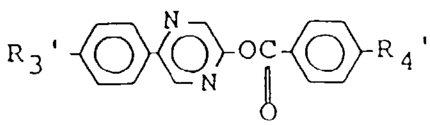

(VII bb).

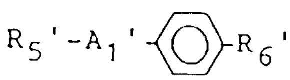

(VIIIaa),

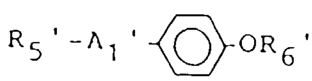

(VIIIab),

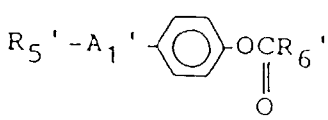

(VIIIac),

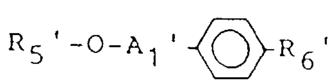

(VIIIad),

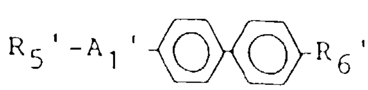

(VIIIba),

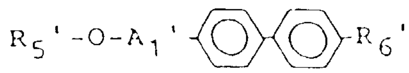

(VIIIbb)

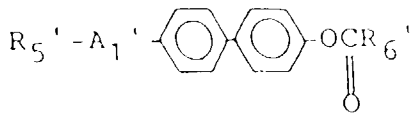

(VIIIbc),

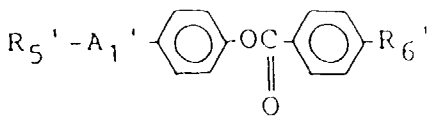

(VIIIbd),

,

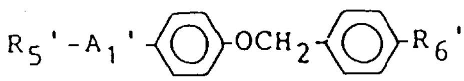

(VIIIbe)

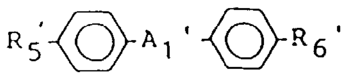

(VIIIca)

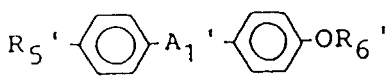

(VIIIcb)

et

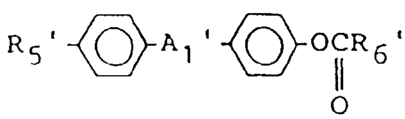

(VIIIcc)

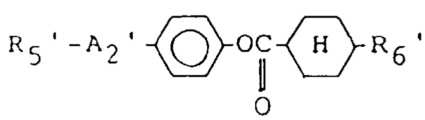

(IXaa)

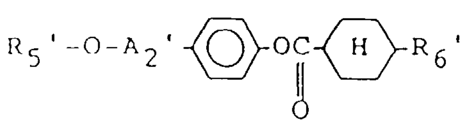

(IXab)

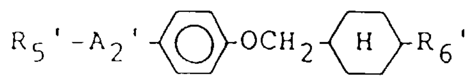

(IXac)

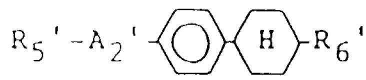

(IXba)

et

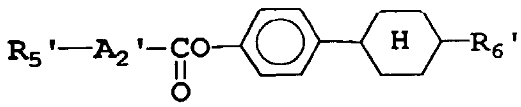

(IXbb)

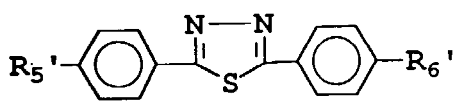

(XIaa)

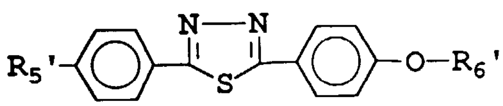

(XIab)

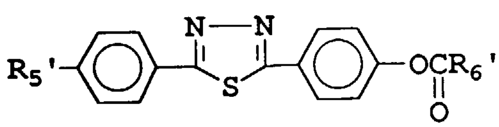

(XIac)

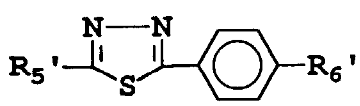

(XIba),

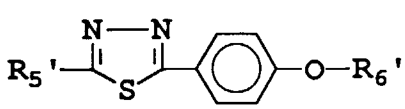

(XIbb),

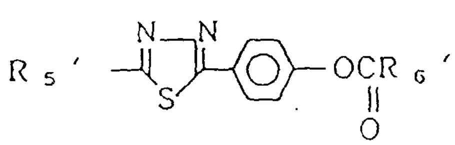

(XI bc)

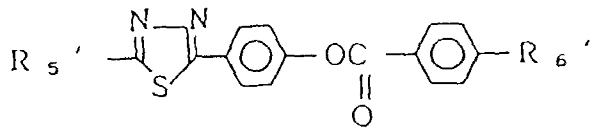

(XI ca)

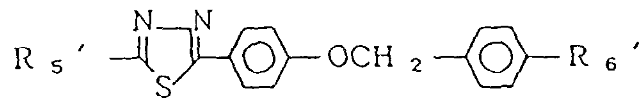

(XI cb)

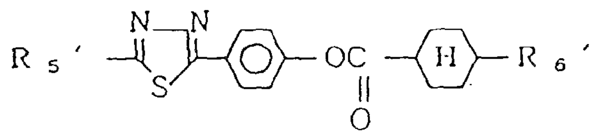

(XI da)

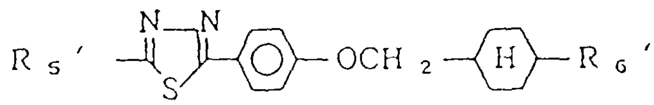

(XI db)

**14.** Cellule comprenant une paire de plaques de base ayant des électrodes opposées et un composé mésomorphe suivant les revendications 1 à 6 disposé entre elles.

**15.** Dispositif à cristal liquide comprenant une cellule suivant la revendication 14 et une couche de réglage d'alignement.

**16.** Appareil à cristal liquide comprenant un dispositif suivant la revendication 15 et un circuit d'attaque d'un cristal liquide.

**17.** Cellule comprenant une paire de plaques de bases ayant des électrodes opposées et une composition à cristal liquide suivant la revendication 7 disposée entre elles.

**18.** Cellule suivant la revendication 17, dans laquelle la composition contient 1 à 60 % en poids du composé mésomorphe suivant les revendications 1 à 6.

**19.** Cellule suivant la revendication 18, dans laquelle la composition contient 1 à 40 % en poids du composé mésomorphe suivant les revendications 1 à 6.

**20.** Cellule suivant la revendication 18, dans laquelle le second composé mésomorphe est choisi dans le groupe consistant en composés des formules (II) à (XI) suivantes :

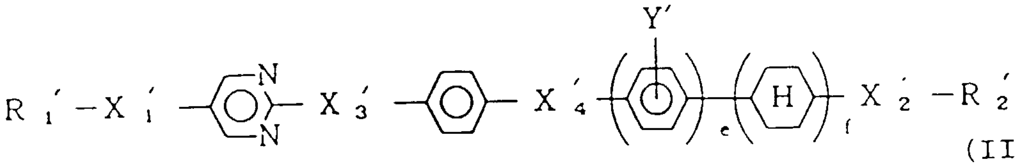

(II)

où e a la valeur 0 ou 1 et f a la valeur 0 ou 1 sous réserve que la somme e + f soit égale à 0 ou 1 ; Y' désigne H,

un halogène, un groupe $CH_3$ ou $CF_3$ ; $X_1$' et $X_2$' désignent une liaison simple, un groupe

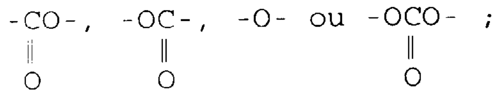

et $X_3$' et $X_4$' désignent une liaison simple, un groupe

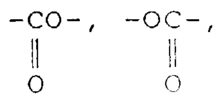

-$OCH_2$- ou -$CH_2O$-.

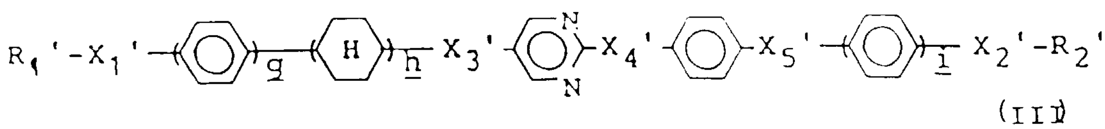

(III)

où g et h ont la valeur 0 ou 1 sous réserve que la somme g + h est égale à 1 ; i a la valeur 0 ou 1 ; $X_1$' et $X_2$' désignent une liaison simple, un groupe

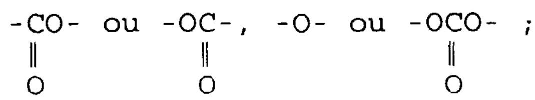

et $X_3$', $X_4$' et $X_5$' désignent une liaison simple, un groupe

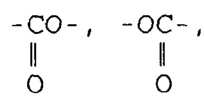

-$CH_2O$-, ou -$OCH_2$-

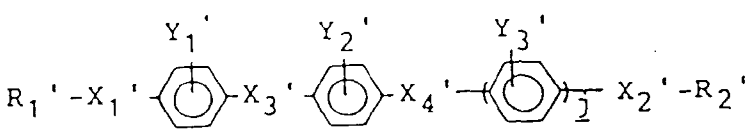

(IV)

où j a la valeur 0 ou 1 ; $Y_1$', $Y_2$' et $Y_3$' représentent H, un halogène, un groupe $CH_3$ ou $CF_3$ ; $X_1$' et $X_2$' désignent une liaison simple, un groupe

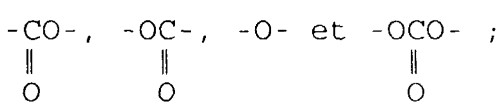

et $X_3$' et $X_4$' désignent une liaison simple, un groupe

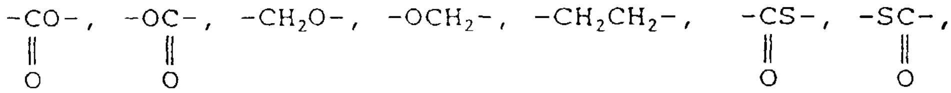

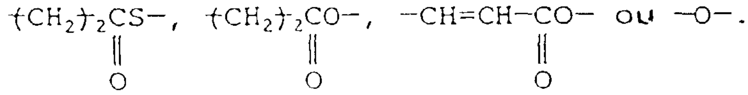

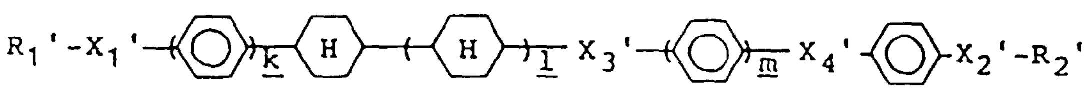

(V)

où k, l et m ont la valeur 0 ou 1 sous réserve que la somme k + l + m soit égale à 0, 1 ou 2 ; $X_1$' et $X_2$' désignent une liaison simple, un groupe

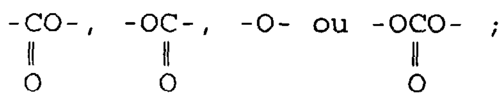

et $X_3$' et $X_4$' désignent une liaison simple, un groupe

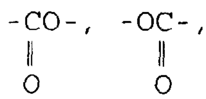

$-CH_2O-$ ou $-OCH_2-$

$R_1$' et $R_2$' désignent un groupe alkyle linéaire ou ramifié ayant 1 à 18 atomes de carbone, groupe alkyle dans lequel un ou deux ou plus de deux groupes méthylène non voisins peuvent être remplacés par un groupe -CHX- (où X est un halogène), et groupe alkyle dans lequel, en outre, un, deux ou plus de deux groupes méthylène non voisins autres que ceux qui sont liés à $X_1$' ou $X_2$' peuvent être remplacés par au moins l'un des groupes

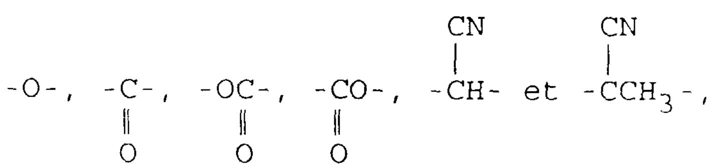

sous réserve que $R_1$' et $R_2$' ne soient pas liés à une structure cyclique lorsque $R_1$' et $R_2$' désignent un groupe alkyle halogéné contenant un groupe méthylène remplacé par

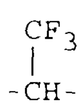

ou -CHX- (où X désigne un halogène) ;

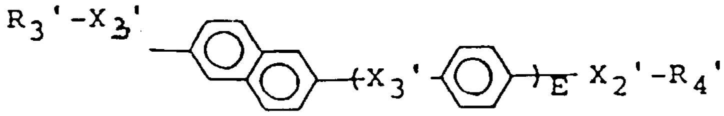

(VI)

où E a la valeur 0 ou 1 ; $X_2$' désigne une liaison simple, un groupe

$$-\underset{\underset{O}{\|}}{C}O-,\quad -O\underset{\underset{O}{\|}}{C}-,\quad -O-\ \text{ou}\ -O\underset{\underset{O}{\|}}{C}O-\ ;$$

et $X_2$' désigne une liaison simple, un groupe

$$-\underset{\underset{O}{\|}}{C}O-,\quad -O\underset{\underset{O}{\|}}{C}-,\quad -CH_2O-\ \text{ou}\ -OCH_2-$$

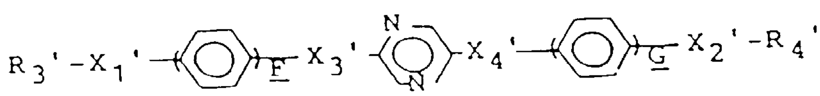

(VII)

où F et G ont la valeur 0 ou 1 ; $X_1$' et $X_2$' désignent une liaison simple, un groupe

$$-\underset{\underset{O}{\|}}{C}O-,\quad -O\underset{\underset{O}{\|}}{C}-\ \text{ou}\ -O-\ ;$$

et $X_3$' et $X_4$' désignent une liaison simple, un groupe

$$-\underset{\underset{O}{\|}}{C}O-,\quad -O\underset{\underset{O}{\|}}{C}-,\quad -CH_2O-\ \text{ou}\ -OCH_2-$$

$R_3$' et $R_4$' désignent un groupe alkyle linéaire ou ramifié ayant 1 à 18 atomes de carbone, groupe alkyle dans lequel un ou deux ou plus de deux groupes méthylène non voisins peuvent être remplacés par un groupe -CHX- (où X est un halogène) et groupe alkyle dans lequel, en outre, un ou deux ou plus de deux groupes méthylène non voisins autres que ceux qui sont directement liés à $X_1$' et $X_2$' peuvent être remplacés par au moins l'un des groupes

$$-O-,\quad -\underset{\underset{O}{\|}}{C}-,\quad -O\underset{\underset{O}{\|}}{C}-,\quad -\underset{\underset{O}{\|}}{C}O-,\quad -\overset{\overset{CN}{|}}{C}H-\ \text{et}\ -\overset{\overset{CN}{|}}{C}CH_3-,$$

sous réserve que $R_3$' et $R_4$' ne soient pas liés à une structure cyclique lorsque $R_3$' et $R_4$' désignent un groupe alkyle halogéné contenant un groupe méthylène remplacé par un groupe -CHX- (où X est un halogène) ;

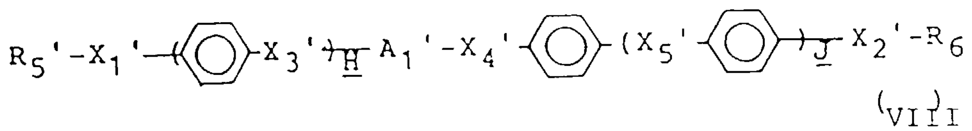

(VIII)

où H et J ont la valeur 0 ou 1 sous réserve que la somme H + J soit égale à 0 ou 1 ; $X_1$' et $X_2$' désignent une liaison simple, un groupe

$-\underset{\underset{O}{\|}}{C}O-$, $-O\underset{\underset{O}{\|}}{C}-$ ou $-O-$ ;

$A_1$' désigne un groupe

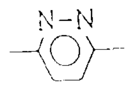, 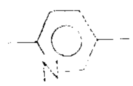 ou 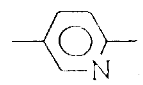

et $X_3$', $X_4$' et $X_5$' désignent une liaison simple, un groupe

$-\underset{\underset{O}{\|}}{C}O-$, $-O\underset{\underset{O}{\|}}{C}-$, $-CH_2O-$ ou $-OCH_2-$

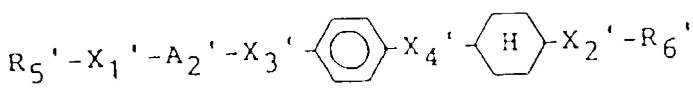

(IX)

où $X_1$' et $X_2$' désignent une liaison simple, un groupe

$-\underset{\underset{O}{\|}}{C}O-$, $-O\underset{\underset{O}{\|}}{C}-$ ou $-O-$ ;

$A_2$' désigne un groupe

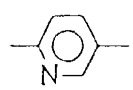

ou

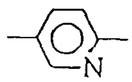

;

et $X_3$' et $X_4$' désignent une liaison simple, un groupe

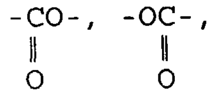

$-CH_2O-$ ou $-OCH_2-$ ;

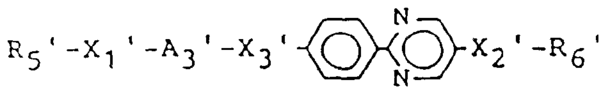

(X)

où $X_1$' et $X_2$' désignent une liaison simple, un groupe

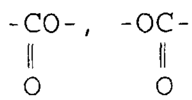

ou -O- ;

$A_3$' désigne un groupe

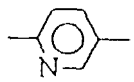

ou

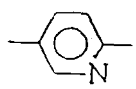

et $X_3$' désigne une liaison simple, un groupe

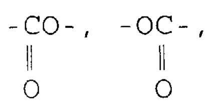

$-CH_2O-$ ou $-OCH_2-$

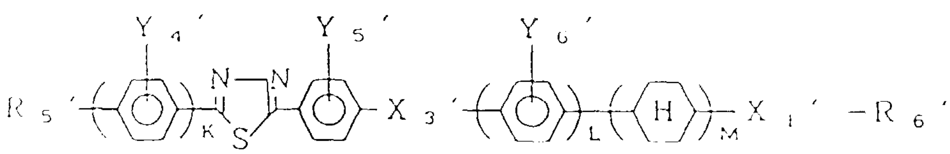

(XI)

où K, L et M ont indépendamment la valeur 0 ou 1 sous réserve que la somme K + L + M soit égal à 0 ou 1 ; $Y_4$', $Y_5$' et $Y_6$' désignent H ou F ; $X_1$' est une liaison simple, un groupe

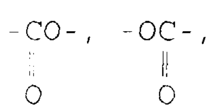

ou -O-;

$X_3$' représente une liaison simple, un groupe

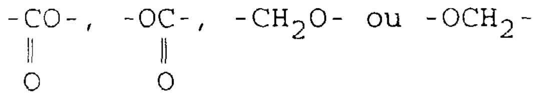

$R_5$' et $R_6$' représentent un groupe alkyle linéaire ou ramifié ayant 1 à 18 atomes de carbone, groupe alkyle dans lequel un ou deux ou plus de deux groupes méthylène non voisins autres que ceux qui sont directement liés à $X_1$' ou $X_2$' peuvent être remplacés par au moins l'un des groupes de formule

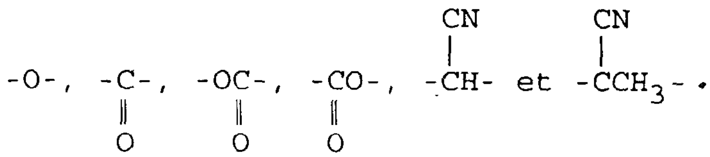

**21.** Cellule suivant la revendication 20, dans laquelle le second composé mésomorphe est choisi dans le groupe consistant en les composés de formules (IIa-d), (IIIa-c), (IVa,b), (Va-f), (VIa,b), (VIIa,b), (VIIIa-c), (IXa,b), (Xa-g) et (XIa-d) suivantes :

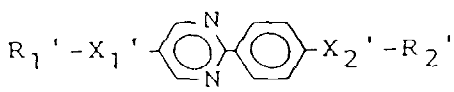 (II a),

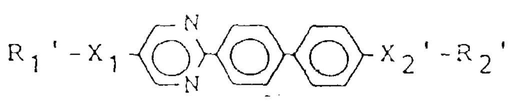 (II b),

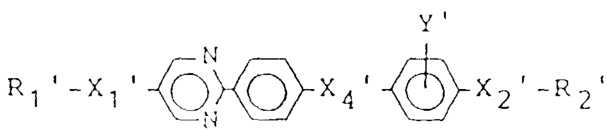 (II c),

et

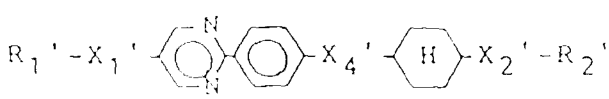 (II d).

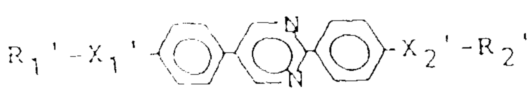 (III a),

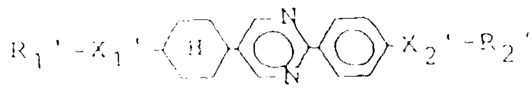

(II b),

et

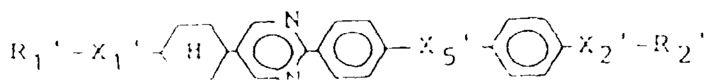

(II c).

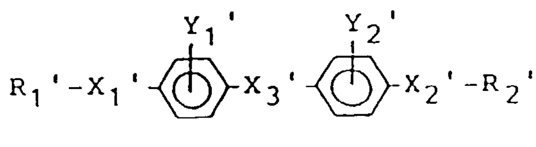

($IV_a$),

et

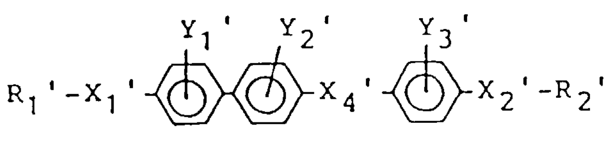

(IVb),

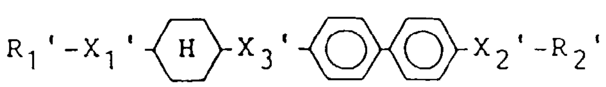

(V a),

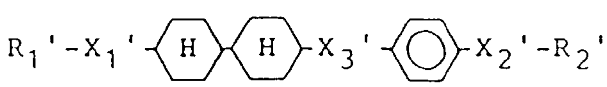

(V b),

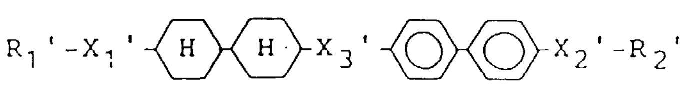

(V c),

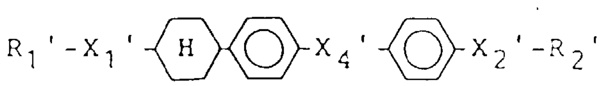

(V d),

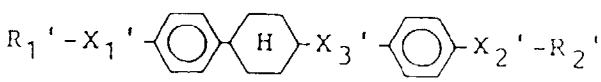

(V e),

et

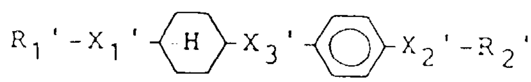

(V f).

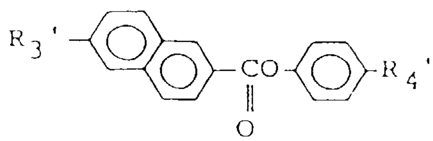

(VI a),

et

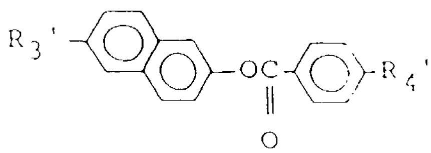

(VI b).

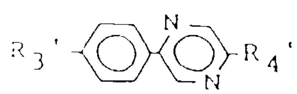

(VII a),

et

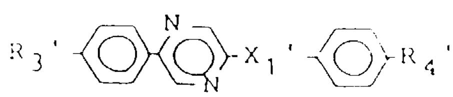

(VII b),

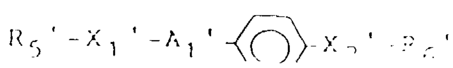

(VIII a),

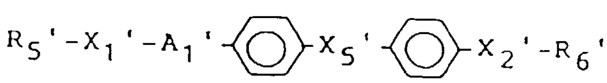

(VIII b)

et

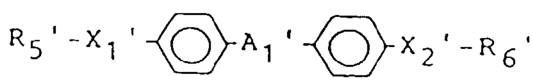

(VIII c)

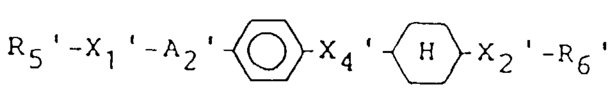

(IX a)

et

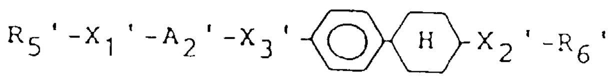

(IX b)

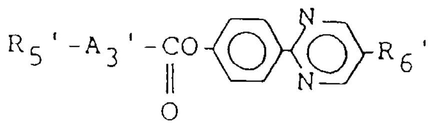

(X a),

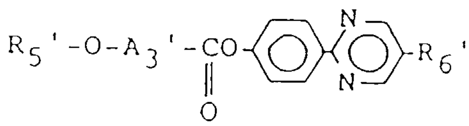

(X b),

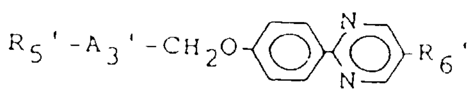

(X c),

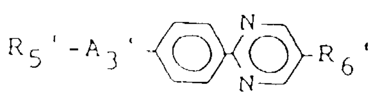

(X d),

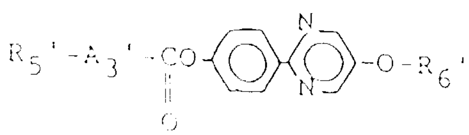

(X e),

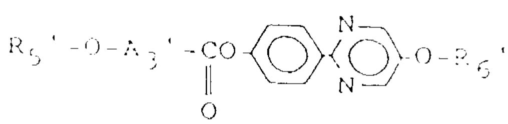

(X f),

et

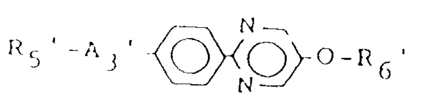

(X g).

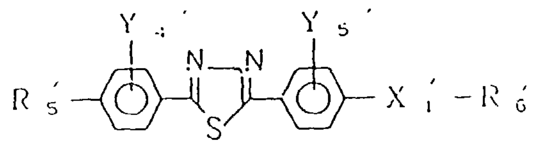

(XI a)

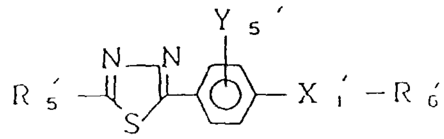

(XI b)

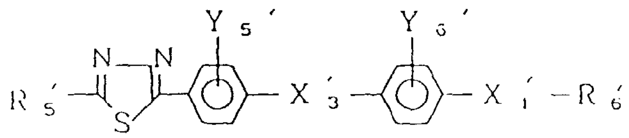

(XI c)

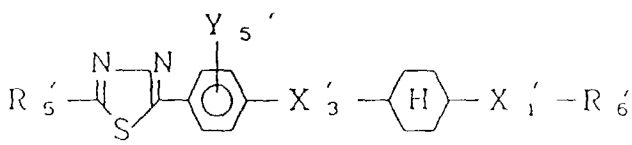

(XI d)

**22.** Cellule suivant la revendication 20, dans laquelle le second composé mésomorphe est choisi dans le groupe consistant en composés des formules (IIaa-dc), (IIIaa-cb), (IVaa-bf), (Vaa-fa), (VIIaa-bb), (VIIIaa-cc), (IXaa-bb), (XIaa-db) suivantes :

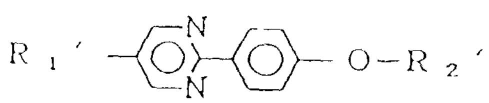

(II aa)

,

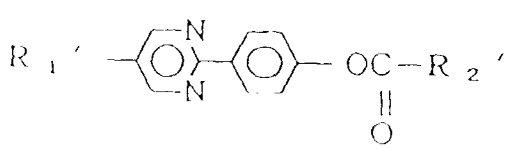

(II ab)

,

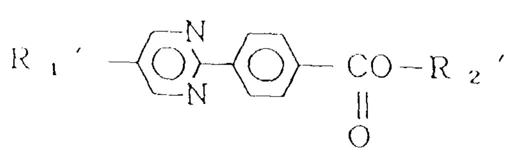

(II ac)

,

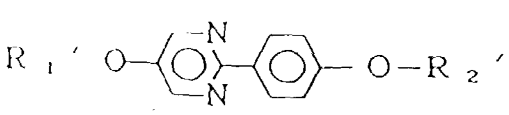

(II ad)

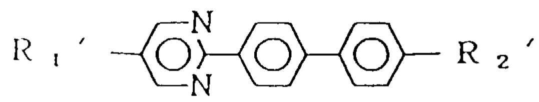

(II ba)

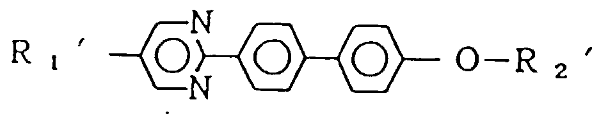

(IIbb) ,

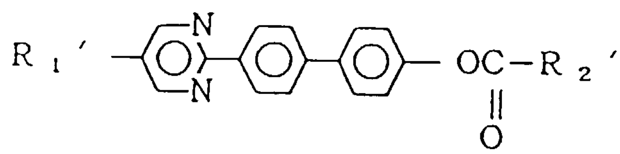

(II bc) ,

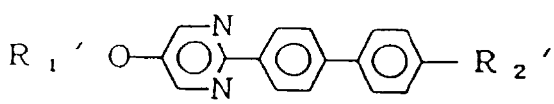

(IIbd) ,

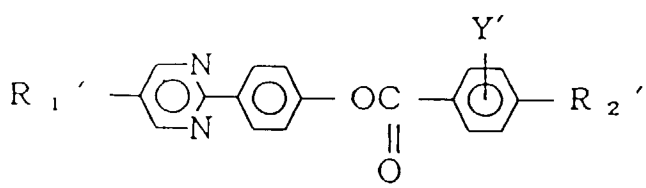

(IIca) ,

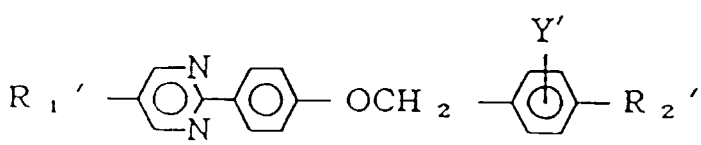

(II cb) ,

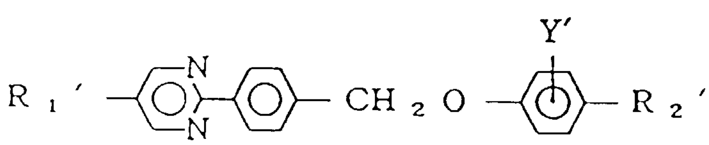

(IIcc) ,

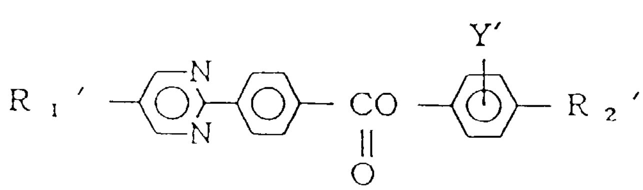

(IIcd) ,

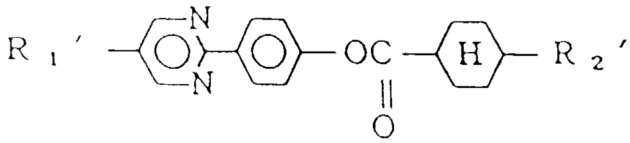

(II da)

,

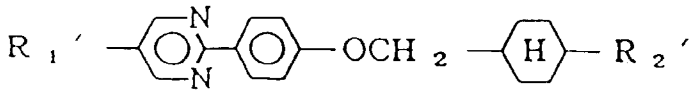

(II db) ,

et

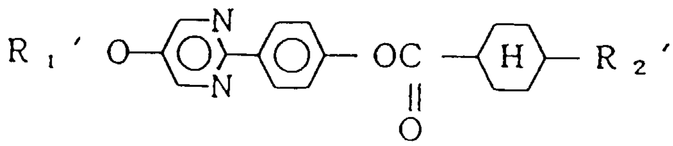

. (II dc)

.

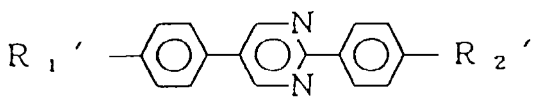

(IIIaa)

,

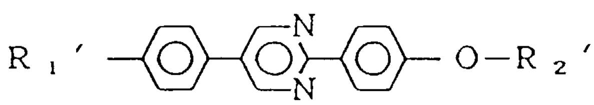

(IIIab)

,

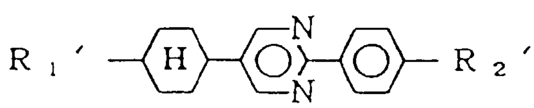

(IIIba)

,

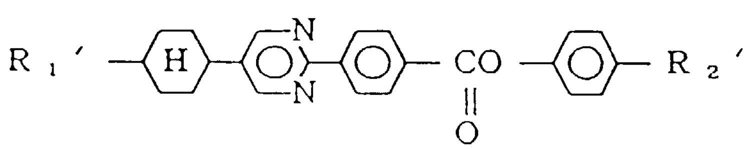

(IIIca)

,

et

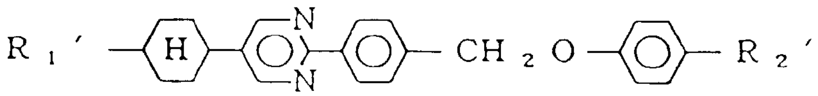

(IIIcb)

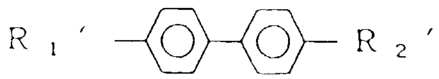

(IVaa)
,

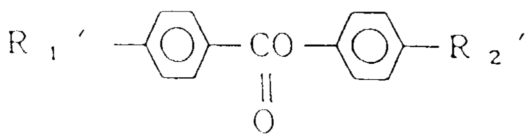

(IVab)
,

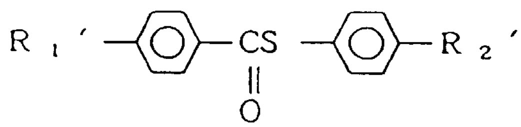

(IVac)
,

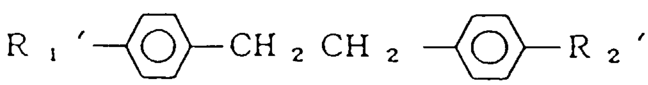

(IVad)
,

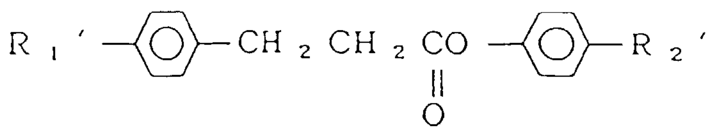

(IVae)
,

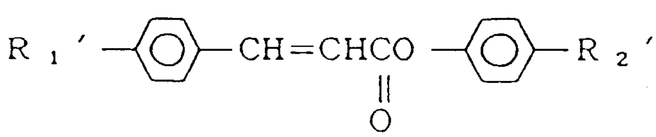

(IVaf)
,

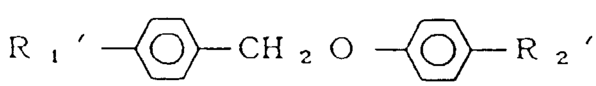

(IVag)
,

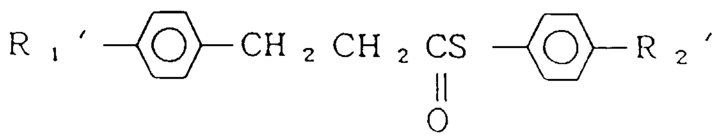

(IV ah)

,

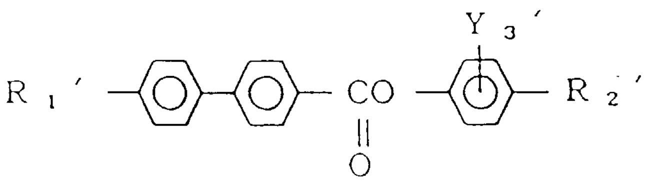

(IV ba)

,

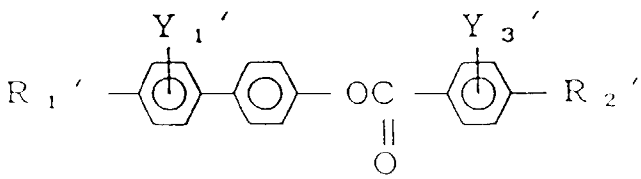

(IV bb)

,

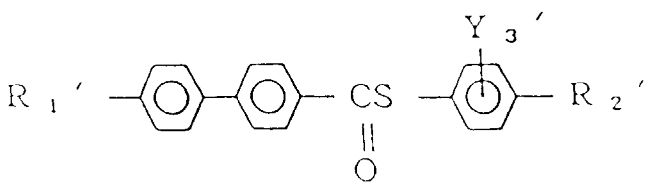

(IV bc)

,

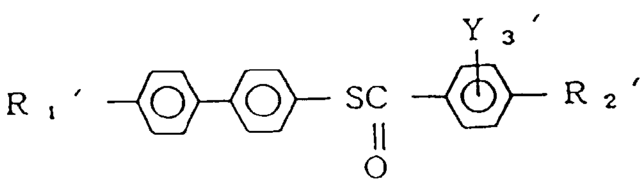

(IV bd)

,

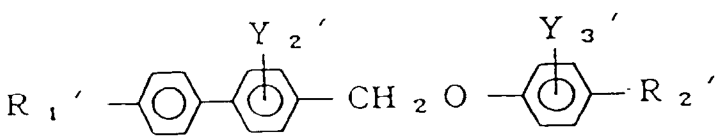

(IV be)

,

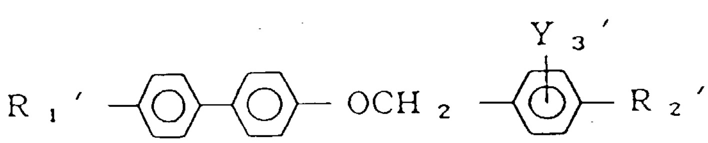

(IV bf)

.

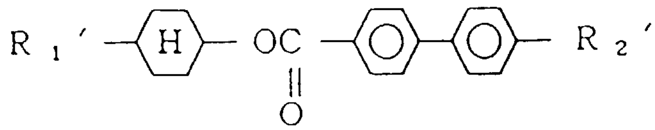

(Vaa) ,

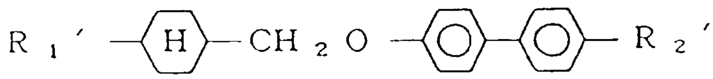

(Vab) ,

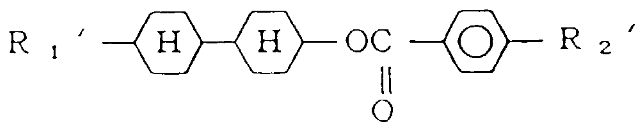

(Vba) ,

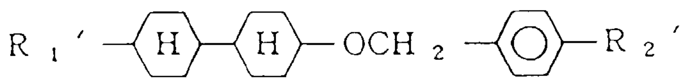

(Vbb) ,

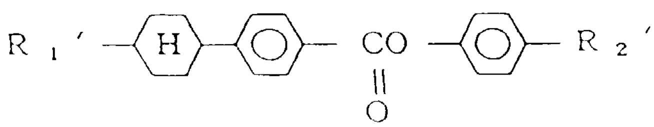

(Vda) ,

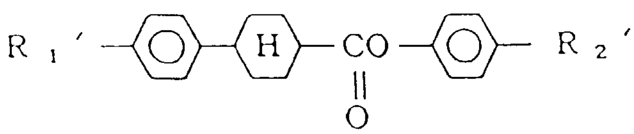

(Vea) ,

et

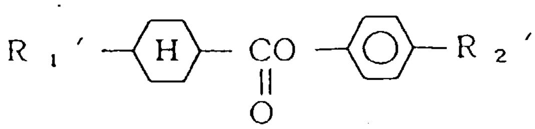

(Vfa) .

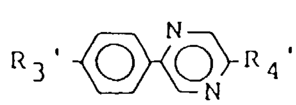

(VIIaa),

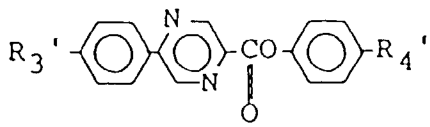

( VIIba),

et

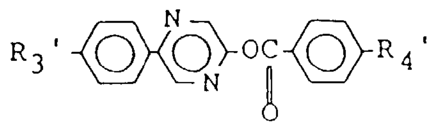

(VII bb).

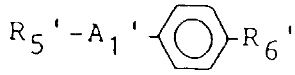

(VIIIaa),

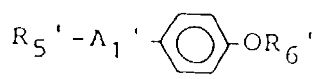

(VIIIab),

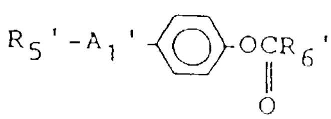

(VIIIac),

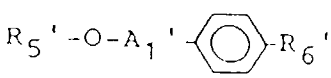

(VIIIad),

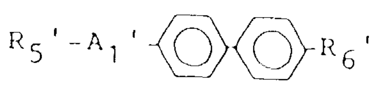

(VIIIba),

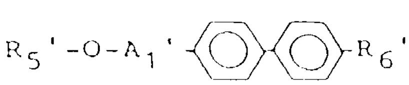

(VIIIbb),

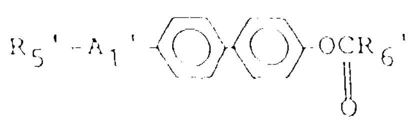

(VIIIbc),

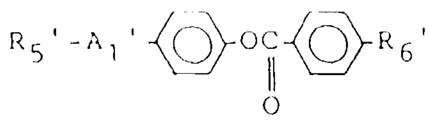

(VIIIbd),

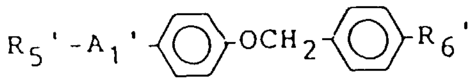

(VIIIbe) ,

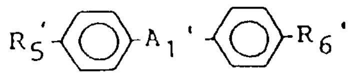

(VIIIca) ,

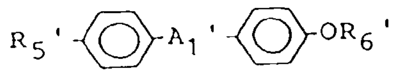

(VIIIcb)

et

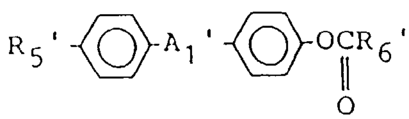

(VIIIcc)

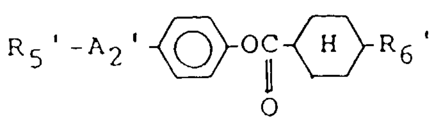

(IXaa)

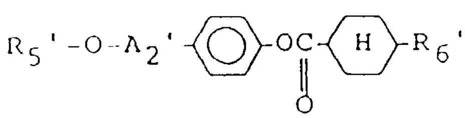

(IXab)

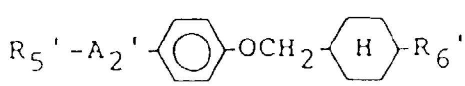

(IXac)

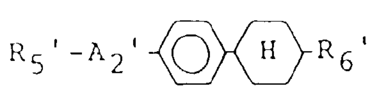

(IXba)

et

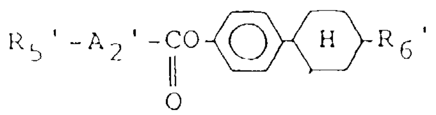

(IXbb)

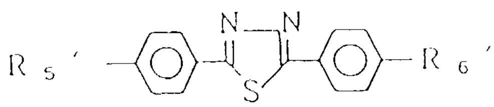

(XI aa)

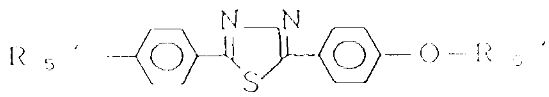

(XI ab)

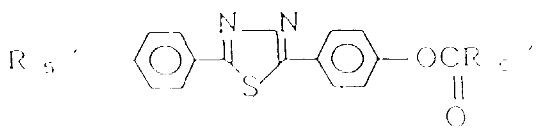

(XI ac)

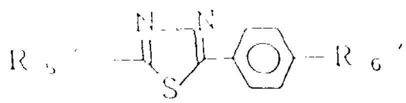

(XI ba)

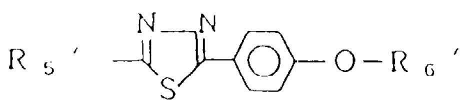

(XI bb)

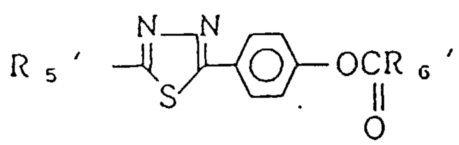

(XI bc)

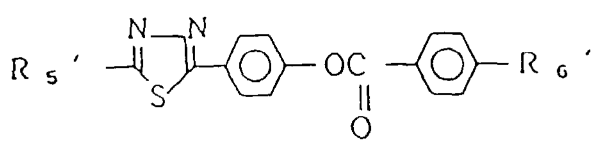

(XI ca)

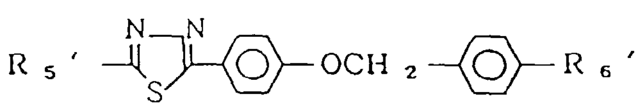

(XI cb)

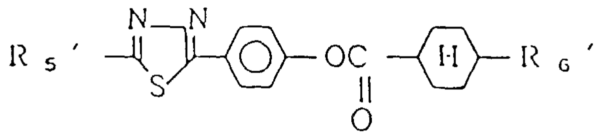

(XI d a)

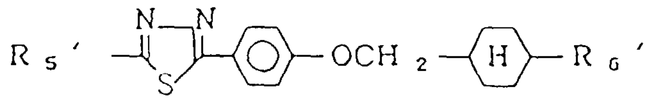

(XI d b)

**23.** Dispositif à cristaux liquides comprenant une cellule suivant la revendication 17, et une couche de réglage d'alignement.

**24.** Appareil à cristaux liquides, comprenant un dispositif suivant la revendication 23 et un circuit d'attaque d'un cristal liquide.

FIG. 1

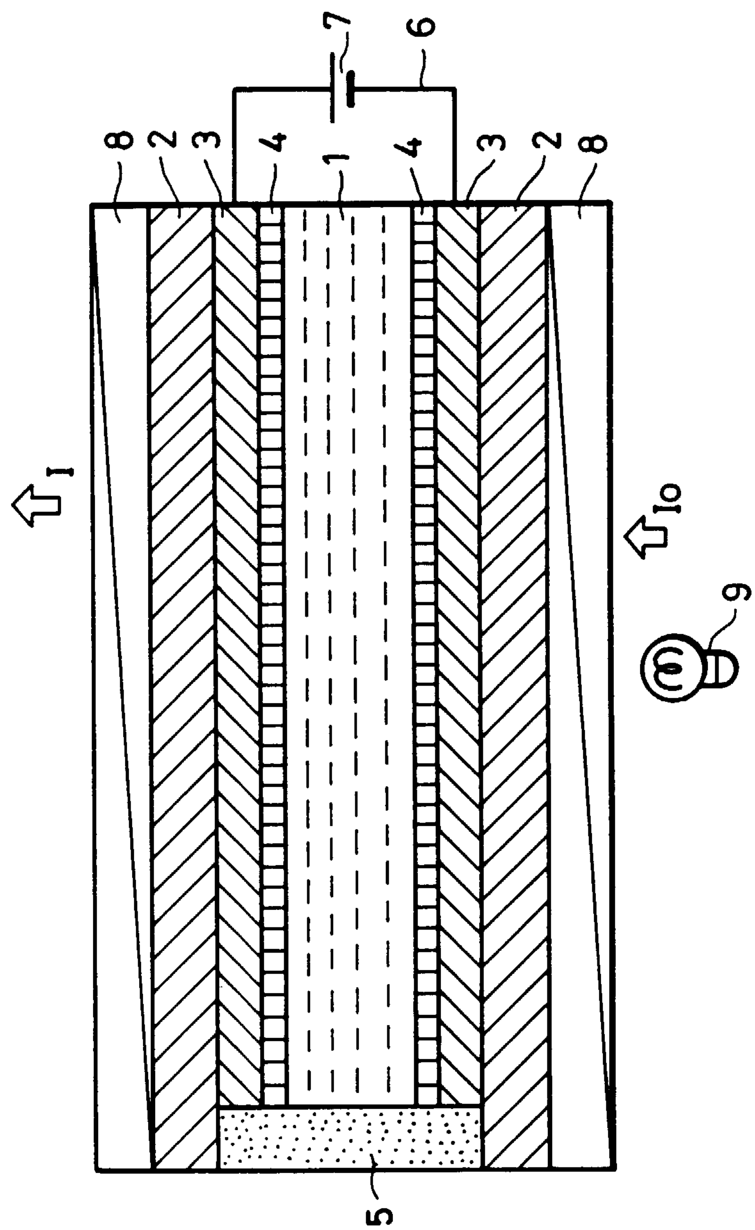

FIG. 2

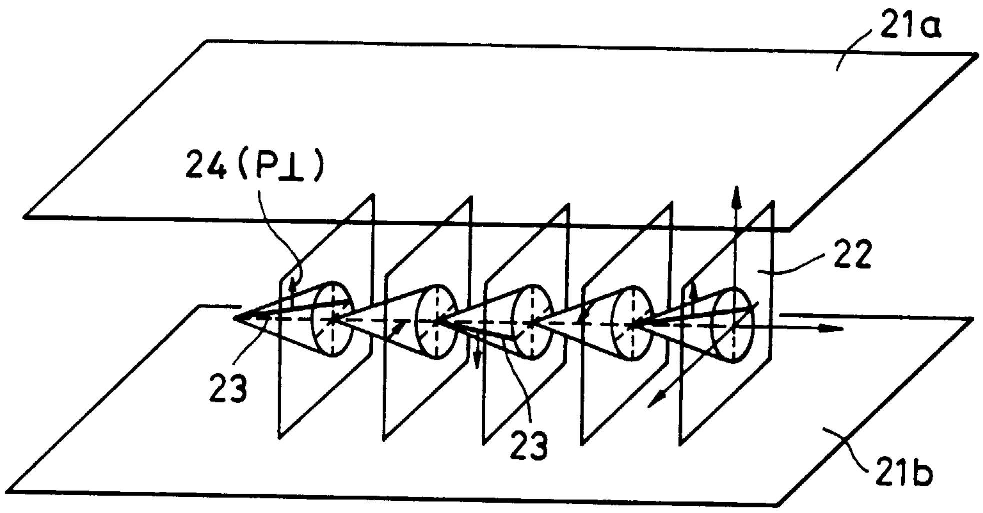


FIG. 3

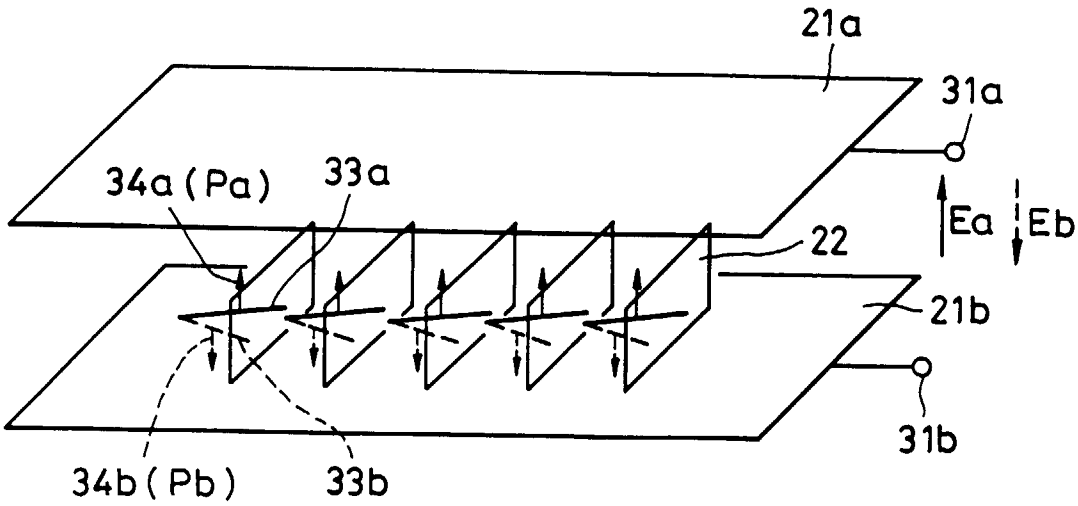

FIG. 4

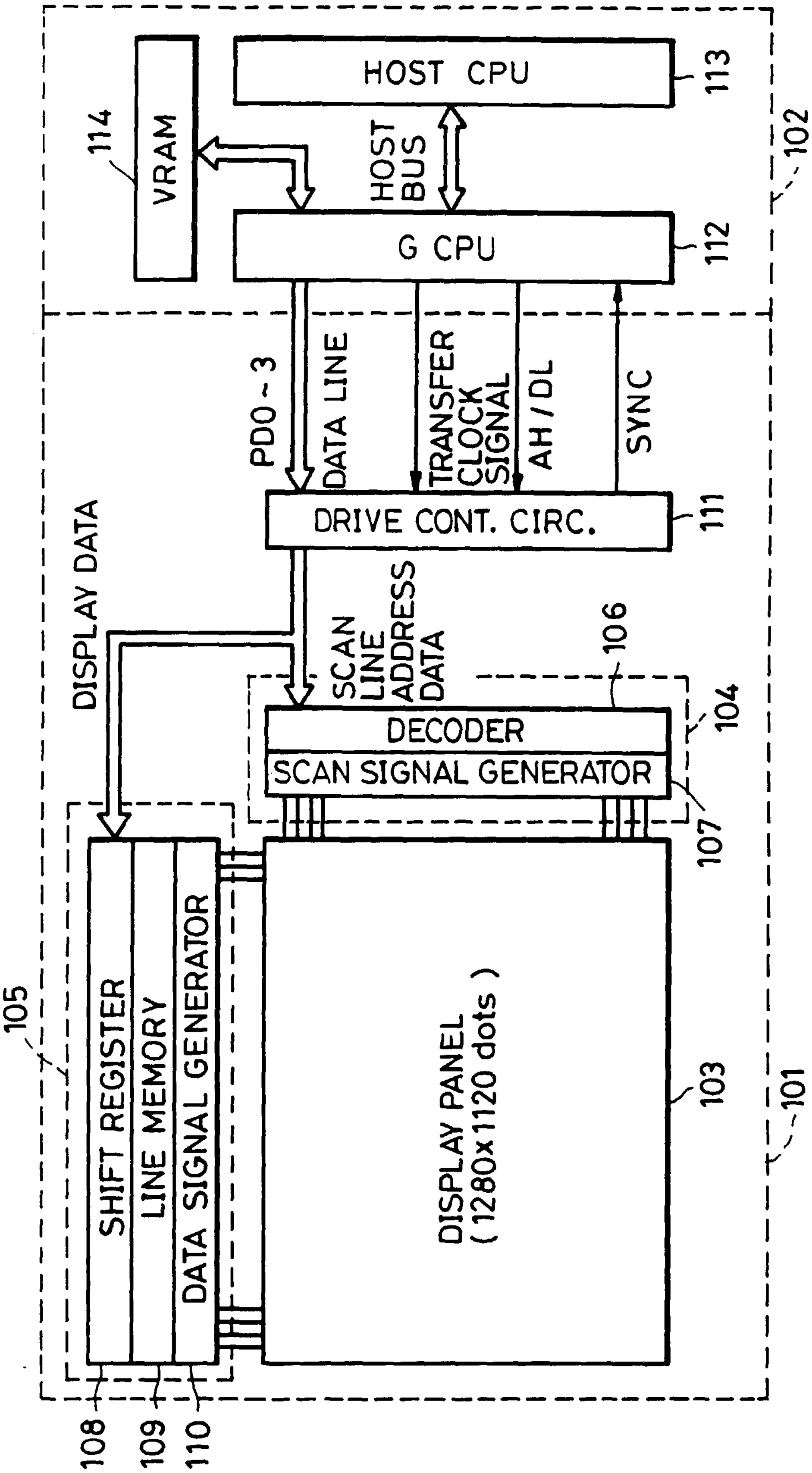
HOST CPU
113
HOST BUS
VRAM
114
G CPU
112
102
PD0 ~ 3
DATA LINE
TRANSFER CLOCK SIGNAL
AH / DL
SYNC
DRIVE CONT. CIRC.
111
DISPLAY DATA
SCAN LINE ADDRESS DATA
106
DECODER
SCAN SIGNAL GENERATOR
104
107
105
SHIFT REGISTER
LINE MEMORY
DATA SIGNAL GENERATOR
DISPLAY PANEL
( 1280x1120 dots )
103
101
108
109
110

FIG. 5

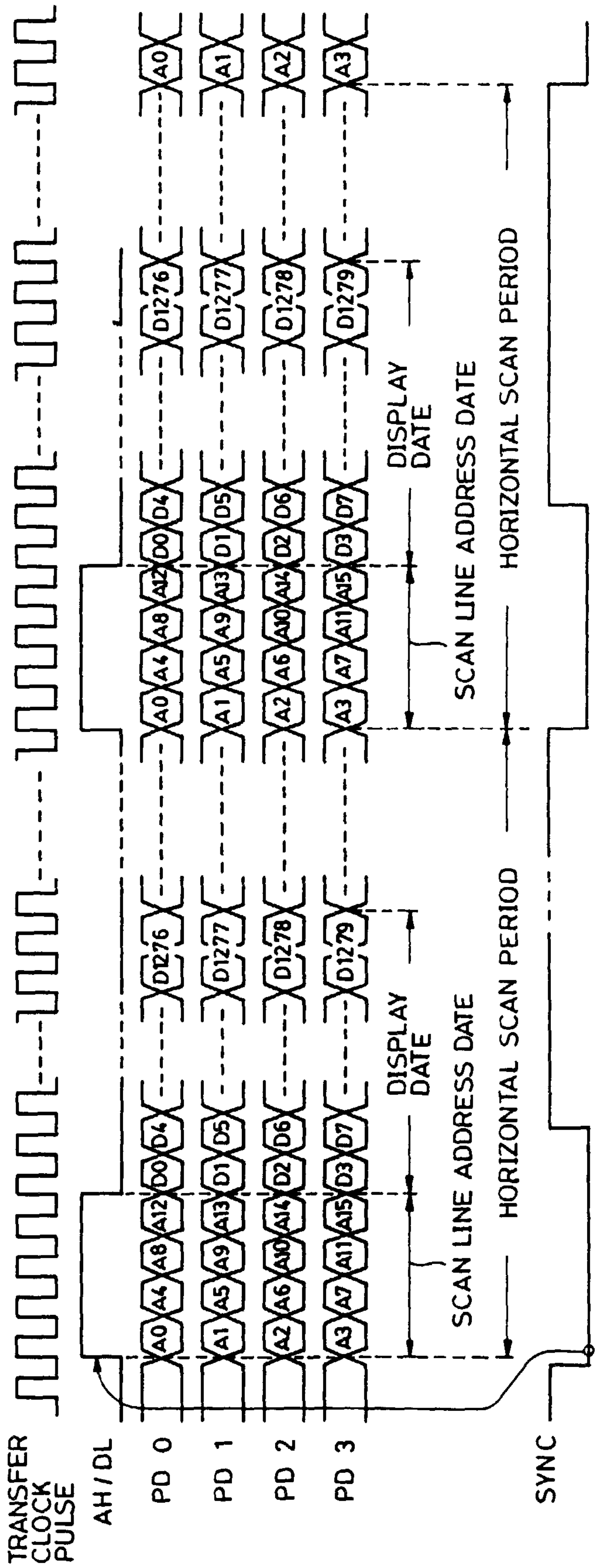
TRANSFER CLOCK PULSE
AH / DL
PD 0
PD 1
PD 2
PD 3
SYNC
A0 A4 A8 A12 D0 D4 D1276 A0
A1 A5 A9 A13 D1 D5 D1277 A1
A2 A6 A10 A14 D2 D6 D1278 A2
A3 A7 A11 A15 D3 D7 D1279 A3
SCAN LINE ADDRESS DATE
DISPLAY DATE
HORIZONTAL SCAN PERIOD